# EUROPEAN PATENT APPLICATION

(11) **EP 4 530 897 A2**
(43) Date of publication of application: **02.04.2025**
(21) Application number: 25157899.3
(22) Date of filing: 27.06.2019
(51) Int. Cl.: G06F 21/32

(54) **CONNECTED VAPORIZER DEVICE SYSTEMS**

(30) Priority: 27.06.2018 US 201862690947 P; 13.11.2018 US 201862760918 P; 17.01.2019 US 201962793889 P; 27.03.2019 US 201962824725 P
(62) Divisional of application: 19744946.5
(71) Applicant: Juul Labs, Inc., Washington DC 20004 (US)
(72) Inventor: ANDERSON, Samuel C., Washington DC, 20004 (US); ATKINS, Ariel, Washington DC, 20004 (US); BELT, Mackenzie P., Washington DC, 20004 (US); BOWEN, Adam, Washington DC, 20004 (US); BRUNO, Ariana M., Washington DC, 20004 (US); CAZZOLI, James R., Washington DC, 20004 (US); CHRISTENSEN, Steven, Washington, 20004 (US); FISHER, Joseph R., Washington DC, 20004 (US); GOLDBERG KIDON, Jonatan, Washington DC, 20004 (US); HATTON, Nicholas J., Washington DC, 20004 (US); KIM, Michelle, Washington DC, 20004 (US); MONSEES, James, Washington DC, 20004 (US); MURPHY, Andrew L., Washington DC, 20004 (US); PHELPS, Nordtrom K., Washington DC, 20004 (US); RAO, Immaneni Hiteshwar, Washington DC, 20004 (US); TURBAHN, Itai, Washington DC, 20004 (US); VEGA, Jonpaul, Washington DC, 20004 (US); WACYK, Roxolana, Washington DC, 20004 (US); YONKER, Jason B., Washington DC, 20004 (US); YOST, Casey S., Washington DC, 20004 (US); ZAKS BARRIOS, Diego D., Washington DC, 20004 (US)
(74) Representative: Thum, Bernhard

(57) **Abstract**

A vaporizer system may include a vaporizer device communicatively coupled with a user device configured to control the functions and/or features of the vaporizer device. The vaporizer device may serve as a replacement for traditional combustible cigarettes. Accordingly, the user device may be configured to collect usage data from the vaporizer device and generate recommendations to enhance and/or expedite the transition from traditional combustible cigarettes to the vaporizer device. For example, the user device may provide puff coaching to enable a more satisfying initial experience. Alternatively and/or additionally, the user device may recommend pod types and/or puff patterns that are associated with a reduction in overall intake.

## Description

### CROSS-REFERENCE TO RELATED APPLICATION

This application claims priority to U.S. Provisional Patent Application No. 62/824,725, filed on March 27, 2019 and entitled "Connected Vaporizer Device Systems," U.S. Provisional Patent Application No. 62/793,889, filed on January 17, 2019 and entitled "Connected Vaporizer Device Systems," U.S. Provisional Patent Application No. 62/760,918, filed on November 13, 2018 and entitled "Connected Vaporizer Device Systems," and U.S. Provisional Patent Application No. 62/690,947, filed June 27, 2018 and entitled "Connected Vaporizer Device Systems," the disclosures of which are incorporated herein by reference in their entirety.

This application is also related to U.S. Patent Application No. 15/605,890, filed on May 25, 2017 and entitled "Control of an Electronic Vaporizer", which claims priority to U.S. Provisional Patent Application No. 62/341,579, filed on May 25, 2016 and entitled "Control of an Electronic Vaporizer," the disclosures of which are incorporated herein by reference in their entirety.

### TECHNICAL FIELD

The devices, systems and methods described herein relate to vaporizing devices, for example electronic vaporizer devices, and to methods of using, controlling, making, etc. such devices, which may optionally include devices that include two or more parts, such as a cartridge containing a vaporizable substance and a body part that includes one or more other components. The subject matter described herein relates further to methods, techniques, devices and systems to provide guidance on how to use the vaporizer device to enable a more satisfying experience. Methods, techniques, devices and systems to provide vaporizer device inhalation or puff coaching are described below.

### BACKGROUND

Vaporizer devices are typically intended as, and usually are, an effective replacement for traditional combustible cigarettes. Smokers of traditional combustible cigarettes often turn to vaporizer devices as a substitute in an attempt to reduce consumption of traditional combustible cigarettes. Smokers that are attempting to substitute the vaporizer device for traditional combustible cigarettes need to learn how to use a vaporizer device as an effective substitute.

Vaporizer devices, which can also be referred to as vaporizers, electronic vaporizer devices or e-vaporizer devices, can be used for delivery of an aerosol (or "vapor") containing one or more active ingredients by inhalation of the aerosol by a user of the vaporizing device. For example, electronic nicotine delivery systems (ENDS), include a class of vaporizer devices that are battery powered and that may be used to simulate the experience of smoking, but without burning of tobacco or other substances.

Electronic vaporizer devices are gaining increasing popularity both for prescriptive medical use, in delivering medicaments, and for consumption of tobacco and other plant-based smokeable materials. Electronic vaporizer devices in particular may be portable, self-contained and convenient for use. Such devices can be controlled by one or more switches, buttons or the like (controls) on the vaporizer, although a number of devices that may wirelessly communicate with an external controller (e.g., smartphone) have recently become available.

Such wireless control has been primarily limited to temperature setting and other features that were already, and perhaps more conveniently, performed on the device itself. These systems may not automate or calibrate the operation of the device based on detection of the material or type of material loaded into the device. Such systems also may not typically track dosage and/or allow modification of the device based on dosing information. Further, currently described systems may not provide social interaction with other users. For example with regard to dosing, previous attempts to determine the dosage of vapor and/or an active ingredient in the vapor have been unsatisfactory. Systems that pre-determine dosage by restricting the amount of material to be delivered in a session assume, often incorrectly, that all of the material will be inhaled, and may not be adjustable for partial dosages. Such systems may also meter the amount of material, and require accurate measurement of the mass and/or volume of material being delivered for vaporization, or measure the difference between a starting mass/volume and post-delivery mass or volume. These measurements may be difficult, requiring a high level of accuracy and expense, and may result in inaccurate results. Further, current dose controlling electronic smoking devices typically control the dose delivered without a link to or actual knowledge of the actual clinical and medical needs of the user, and may not allow a controlled dose to be adjusted based on the user biometrics such as weight, age, symptoms, etc. Existing systems may also lack features that allow a user to customize usage based on their habits and goals, as well as their social needs.

In use of a vaporizer device, the user inhales an aerosol, commonly called vapor, which may be generated by a heating element that vaporizes (which generally refers to causing a liquid or solid to at least partially transition to the gas phase) a vaporizable material, which may be liquid, a solution, a solid, a wax, or any other form as may be compatible with use of a specific vaporizer device. The vaporizable material used with a vaporizer can be provided within a cartridge (e.g., a part of the vaporizer that contains the vaporizable material in a reservoir) that includes a mouthpiece (e.g., for inhalation by a user).

To receive the inhalable aerosol generated by a vaporizer device, a user may, in certain examples, activate the vaporizer device by taking a puff, by pressing a button, or by some other approach. A puff, as the term is generally used (and also used herein), refers to inhalation by the user in a manner that causes a volume of air to be drawn into the vaporizer device such that the inhalable aerosol is generated by a combination of vaporized vaporizable material with the air.

A typical approach by which a vaporizer device generates an inhalable aerosol from a vaporizable material involves heating the vaporizable material in a vaporization chamber (or a heater chamber) to cause the vaporizable material to be converted to the gas (or vapor) phase. A vaporization chamber generally refers to an area or volume in the vaporizer device within which a heat source (e.g., conductive, convective, and/or radiative) causes heating of a vaporizable material to produce a mixture of air and vaporized vaporizable to form a vapor for inhalation by a user of the vaporization device.

In some vaporizer device embodiments, the vaporizable material can be drawn out of a reservoir and into the vaporization chamber via a wicking element (a wick). Such drawing of the vaporizable material into the vaporization chamber can be due, at least in part, to capillary action provided by the wick, which pulls the vaporizable material along the wick in the direction of the vaporization chamber. However, as vaporizable material is drawn out of the reservoir, the pressure inside the reservoir is reduced, thereby creating a vacuum and acting against the capillary action. This can reduce the effectiveness of the wick to draw the vaporizable material into the vaporization chamber, thereby reducing the effectiveness of the vaporization device to vaporize a desired amount of vaporizable material, such as when a user takes a puff on the vaporizer device. Furthermore, the vacuum created in the reservoir can ultimately result in the inability to draw all of the vaporizable material into the vaporization chamber, thereby wasting vaporizable material. As such, improved vaporization devices and/or vaporization cartridges that improve upon or overcome these issues is desired.

The term vaporizer device, as used herein consistent with the current subject matter, generally refers to portable, self-contained, devices that are convenient for personal use. Typically, such devices are controlled by one or more switches, buttons, touch sensitive devices, or other user input functionality or the like (which can be referred to generally as controls) on the vaporizer, although a number of devices that may wirelessly communicate with an external controller (e.g., a smartphone, a smart watch, other wearable electronic devices, etc.) have recently become available. Control, in this context, refers generally to an ability to influence one or more of a variety of operating parameters, which may include without limitation any of causing the heater to be turned on and/or off, adjusting a minimum and/or maximum temperature to which the heater is heated during operation, various games or other interactive features that a user might access on a device, and/or other operations.

Various vaporizable materials having a variety of contents and proportions of such contents can be contained in the cartridge. Some vaporizable materials, for example, may have a smaller percentage of active ingredients per total volume of vaporizable material, such as due to regulations requiring certain active ingredient percentages. As such, a user may need to vaporize a large amount of vaporizable material (e.g., compared to the overall volume of vaporizable material that can be stored in a cartridge) to achieve a desired effect. The systems, apparatuses, and methods described herein address at least these problems and concerns.

### SUMMARY

Systems, methods, and articles of manufacture, including apparatuses and computer program products, are provided for a connected vaporizer device. In one aspect, there is provided a system that includes at least one processor and at least one memory. The at least one memory may include program code that provides operations when executed by the at least one processor. The operations may include: receiving a first usage data associated with a first user interacting a first vaporizer device; and determining, based at least on the first usage data, a first recommendation for the first user interacting with the first vaporizer device and/or a second vaporizer device.

In some variations, one or more features disclosed herein including the following features can optionally be included in any feasible combination. The first usage data may include a flavor of a vaporizable material in a cartridge inserted into the first vaporizer device, a strength of the vaporizable material, a quantity of the vaporizable material remaining in the cartridge, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs.

In some variations, the first usage data may further include a user input indicating a smoothness of a vapor drawn by the one or more puffs. The user input may include a motion and/or a sound associated with a user coughing, tapping the vaporizer device, shaking the vaporizer device, and/or moving the vaporizer device in a specific pattern.

In some variations, the first recommendation may include the flavor and/or the strength of the vaporizable material based at least on the flavor and/or the strength of the vaporizable material being associated with a lower frequency of puffs, a lower total dosage of the active ingredient delivered, and/or a longer length of time between two or more successive puffs than another flavor and/or strength of the vaporizable material.

In some variations, the first recommendation may include the timing of the one or more puffs based at least on the timing of the one or more puffs being associated with a lower frequency of puffs, a lower total dosage of the active ingredient delivered, and/or a longer length of time between two or more successive puffs than another timing of the one or more puffs.

In some variations, the first user may be determined to be similar to a second user. A second recommendation for a second user interacting with a third vaporizer device may be determined based at least on the first usage data. The first user and the second user may be determined to be similar based at least on one or more attributes associated with each of the first user and the second user, and wherein the one or more attributes include demographics, preferences, and/or cessation goals. The first user and the second user may be determined to be similar by at least applying a clustering algorithm configured to identify, based on the one or more attributes associated with each of the first user and the second user, one or more groups of similar users. The second recommendation may include a flavor of a vaporizable material in a cartridge inserted into the first vaporizer device, a strength of the vaporizable material, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs.

In some variations, the first usage data may include a first type of data having a first sampling rate and a second type of data having a second sampling rate.

In some variations, sample summarization may be performed to generate, based on a first plurality of data samples comprising the first type of data and/or a second plurality of data samples comprising the second type of data, one or more data samples having a third sampling rate that is lower than the first sampling rate and the second sampling rate. The one or more data samples having the third sampling rate may be stored in a log. The third sampling rate may be determined based at least on whether the one or more data samples comprises behavioral data or diagnostic data. The third sampling rate may be determined based at least on the first user having a goal to transition from combustible cigarettes to the vaporizer device, reduce a use of combustible cigarettes, and/or reduce a use of the vaporizer device.

In some variations, bulk summarization may be performed to generate, based on a first plurality of data samples comprising the first type of data, a metric. The metric may be generated based on the first plurality of data samples collected by a single thread. The generating of the metric may further exclude a second plurality of data samples collected by another thread. The metric may include a temperature rise time, an observed temperature, a deviation from a temperature set-point, a pressure differential, a maximum differential pressure, a minimum differential pressure, and/or an average differential pressure.

In some variations, a user interface may be generated. The user interface may be configured to display, at a user device associated with the first user, the first recommendation.

In some variations, the first recommendation may be further generated based on a usage pattern for combustible cigarettes. The usage pattern may include a brand of combustible cigarettes, a type of the combustible cigarettes, and/or a quantity of the combustible cigarettes consumed by the first user. The first recommendation may include a strength of vaporizer material in a cartridge inserted into the first vaporizer device, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs that deliver, to the first user, a same quantity of the active ingredient as the combustible cigarettes consumed by the first user.

In some variations, the first usage data may be received from a user device coupled with the first vaporizer device.

In another aspect, a method may include: receiving a first usage data associated with a first user interacting a first vaporizer device; and determining, based at least on the first usage data, a first recommendation for the first user interacting with the first vaporizer device and/or a second vaporizer device.

In some variations, one or more features disclosed herein including the following features can optionally be included in any feasible combination. The first usage data may include a flavor of a vaporizable material in a cartridge inserted into the first vaporizer device, a strength of the vaporizable material, a quantity of the vaporizable material remaining in the cartridge, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs.

In some variations, the first usage data may further include a user input indicating a smoothness of a vapor drawn by the one or more puffs. The user input may include a motion and/or a sound associated with a user coughing, tapping the vaporizer device, shaking the vaporizer device, and/or moving the vaporizer device in a specific pattern.

In some variations, the first recommendation may include the flavor and/or the strength of the vaporizable material based at least on the flavor and/or the strength of the vaporizable material being associated with a lower frequency of puffs, a lower total dosage of the active ingredient delivered, and/or a longer length of time between two or more successive puffs than another flavor and/or strength of the vaporizable material.

In some variations, the first recommendation may include the timing of the one or more puffs based at least on the timing of the one or more puffs being associated with a lower frequency of puffs, a lower total dosage of the active ingredient delivered, and/or a longer length of time between two or more successive puffs than another timing of the one or more puffs.

In some variations, the method may further include: determining, based at least on one or more attributes associated with each of the first user and a second user, that the first user is similar to the second user, the one or more attributes including demographics, preferences, and/or cessation goals; and determining, based at least on the first usage data, a second recommendation for a second user interacting with a third vaporizer device. The first user and the second user may be determined to be similar by at least applying a clustering algorithm configured to identify, based on the one or more attributes associated with each of the first user and the second user, one or more groups of similar users.

In some variations, the first recommendation may be further generated based on a usage pattern for combustible cigarettes. The usage pattern may include a brand of combustible cigarettes, a type of the combustible cigarettes, and/or a quantity of the combustible cigarettes consumed by the first user. The first recommendation may include a strength of vaporizer material in a cartridge inserted into the first vaporizer device, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs that deliver, to the first user, a same quantity of the active ingredient as the combustible cigarettes consumed by the first user.

In another aspect, there is provided a computer program product including a non-transitory computer readable medium storing instructions. The instructions may cause operations may executed by at least one data processor. The operations may include: receiving a usage data for associated with a first user interacting a first vaporizer device; and determining, based at least on the usage data, a first recommendation for the first user interacting with the first vaporizer device and/or a second vaporizer device, and/or a second recommendation for a second user interacting with a third vaporizer device.

In another aspect, there is provided a system that includes a first vaporizer device, a user device communicatively coupled with the first vaporizer device, and a remote server. The remote server may include at least one processor and at least one memory. The at least one memory may include program code that provides operations when executed by the at least one processor. The operations may include: receiving, from the user device, a usage data for associated with a first user interacting the first vaporizer device; and determining, based at least on the usage data, a first recommendation for the first user interacting with the first vaporizer device and/or a second vaporizer device, and/or a second recommendation for a second user interacting with a third vaporizer device.

In another aspect, there is provided an apparatus. The apparatus may include: means for receiving, from the user device, a usage data for associated with a first user interacting the first vaporizer device; and means for determining, based at least on the usage data, a first recommendation for the first user interacting with the first vaporizer device and/or a second vaporizer device, and/or a second recommendation for a second user interacting with a third vaporizer device.

In another aspect, there is provided a system that includes at least one processor and at least one memory. The at least one memory may include program code that provides operations when executed by the at least one processor. The operations may include: receiving a first data including one or more puff characteristics, the one or more puff characteristics determined base at least on a first puff on a vaporizer device; and determining, based at least on the first data, an adjustment to the one or more puff characteristics.

In some variations, one or more features disclosed herein including the following features can optionally be included in any feasible combination. The one or more puff characteristics may include a strength of a puff, a duration of a puff, and/or a quantity of time between two or more successive puffs.

In some variations, the one or more puff characteristics may include a mean, a median, a maximum, a minimum, a mode, and/or a range of one or more characteristics associated with the first puff and a second puff on the vaporizer device.

In some variations, the adjustment may be further determined based on a difference between the one or more puff characteristics and one or more optimal puff characteristics. An indication of the difference between the one or more puff characteristics and the one or more optimal puff characteristics may be output to a user. The indication may be output to the user by at least generating a graphic user interface configured to display the indication. The indication may be output to the user using one or more light emitting diodes (LEDs), sounds, and/or haptic feedback.

In some variations, the one or more optimal puff characteristics may be determined based at least on a flavor, a concentration, and/or a quantity of vaporizable material remaining in a cartridge inserted in the vaporizer device. The flavor, the concentration, and/or the quantity of vaporizable material remaining in the cartridge may be determined by at least reading an identifier associated with the cartridge. The identifier may be encoded in a pattern and/or a circuit.

In some variations, a second data including a user feedback associated with at least the first puff may be received. The adjustment to the one or more puff characteristics may be further determined based on the second data. The user feedback may include a user input indicating a smoothness of a vapor drawn by the first puff. A user interface configured to receive, from a user, the user input indicating the smoothness of the vapor drawn by the first puff may be generated. The user input may include a motion associated with a user coughing, tapping the vaporizer device, shaking the vaporizer device, and/or moving the vaporizer device in a specific pattern. The user input may include a sound associated with a user coughing, tapping the vaporizer device, shaking the vaporizer device, and/or moving the vaporizer device in a specific pattern.

In some variations, a user interface configured to display, to a user, the adjustment to the one or more puff characteristics may be generated.

In some variations, the first data may be received from the vaporizer device via a wireless communication link.

In another aspect, there is provided a method. The method may include: receiving a first data including one or more puff characteristics, the one or more puff characteristics determined base at least on a first puff on a vaporizer device; and determining, based at least on the first data, an adjustment to the one or more puff characteristics.

In some variations, one or more features disclosed herein including the following features can optionally be included in any feasible combination. The one or more puff characteristics may include a strength of a puff, a duration of a puff, and/or a quantity of time between two or more successive puffs.

In some variations, the one or more puff characteristics may include a mean, a median, a maximum, a minimum, a mode, and/or a range of one or more characteristics associated with the first puff and a second puff on the vaporizer device.

In some variations, the adjustment may be further determined based on a difference between the one or more puff characteristics and one or more optimal puff characteristics. The method may further include outputting, to a user, an indication of the difference between the one or more puff characteristics and the one or more optimal puff characteristics. The indication may be output to the user by at least generating a graphic user interface configured to display the indication. The indication may be output to the user using one or more light emitting diodes (LEDs), sounds, and/or haptic feedback.

In some variations, the one or more optimal puff characteristics may be determined based at least on a flavor, a concentration, and/or a quantity of vaporizable material remaining in a cartridge inserted in the vaporizer device. The method may further include determining the flavor, the concentration, and/or the quantity of vaporizable material remaining in the cartridge by at least reading an identifier associated with the cartridge. The identifier may be encoded in a pattern and/or a circuit.

In some variations, the method may further include: receiving a second data including a user feedback associated with at least the first puff; and determining, further based on the second data, the adjustment to the one or more puff characteristics. The user feedback may include a user input indicating a smoothness of a vapor drawn by the first puff. The user input may include a motion associated with a user coughing, tapping the vaporizer device, shaking the vaporizer device, and/or moving the vaporizer device in a specific pattern. The user input may include a sound associated with a user coughing, tapping the vaporizer device, shaking the vaporizer device, and/or moving the vaporizer device in a specific pattern.

In some variations, the method may further include generating a user interface configured to display, to a user, the adjustment to the one or more puff characteristics.

In some variations, the first data may be received from the vaporizer device via a wireless communication link.

In another aspect, there is provided a computer program product including a non-transitory computer readable medium storing instructions. The instructions may cause operations may executed by at least one data processor. The operations may include: receiving a data including one or more puff characteristics, the one or more puff characteristics determined base at least one or more puffs on the vaporizer device; and determining, based at least on the data, an adjustment to the one or more puff characteristics.

In another aspect, there is provided a system that includes a vaporizer device, a user device communicatively coupled with the vaporizer device, and a remote server. The remote server may include at least one processor and at least one memory. The at least one memory may include program code that provides operations when executed by the at least one processor. The operations may include: receiving a data including one or more puff characteristics, the one or more puff characteristics determined base at least one or more puffs on the vaporizer device; and determining, based at least on the data, an adjustment to the one or more puff characteristics.

In another aspect, there is provided an apparatus. The apparatus may include: means for receiving a data including one or more puff characteristics, the one or more puff characteristics determined base at least one or more puffs on the vaporizer device; and means for determining, based at least on the data, an adjustment to the one or more puff characteristics.

In another aspect, there is provided a system that includes at least one processor and at least one memory. The at least one memory may include program code that provides operations when executed by the at least one processor. The operations may include: capturing a first image of an identification document of a user; capturing a second image of the user; and unlocking, in response to a match between the first image and the second image, a vaporizer device, the unlocking of the vaporizer device includes enabling one or more functionalities of the vaporizer device that are disabled while the vaporizer device is in a locked state.

In some variations, one or more features disclosed herein including the following features can optionally be included in any feasible combination. An insertion of a cartridge may be detected at the vaporizer device. In response to the insertion of the cartridge, a user interface configured to display, to the first user, a prompt to capture the first image and/or the second image may be generated.

In some variations, the user interface may be further generated in response to determining that the cartridge contains a controlled substance. The cartridge may be determined to contain the controlled substance by at least reading an identifier associated with the cartridge. The identifier may be encoded in a pattern and/or a circuit.

In some variations, whether the vaporizer device is associated with another user may be determined. The vaporizer device may be unlocked further in response to the vaporizer device not being associated with another user. In response to the vaporizer device not being associated with another user, the vaporizer device may be linked to the user by at least creating an association between a device identifier of the vaporizer device and a user identifier of the user. Data received from the vaporizer device may be anonymized by at least being associated with the device identifier of the vaporizer device but not the user identifier of the user.

In some variations, whether the user is associated with a threshold quantity of activated vaporizer devices may be determined. The vaporizer device may be unlocked further in response to the user not being associated with the threshold quantity of activated vaporizer devices.

In some variations, the first image and the second image may be received from a user device coupled with the vaporizer device. The unlocking of the vaporizer device may include sending, to the user device, a private key for unlocking the vaporizer device.

In some variations, the one or more functionalities of the vaporizer device may include a vaporization of a vaporizable material in a cartridge inserted in the vaporizer device.

In some variations, the unlocking of the vaporizer device may further prevent the vaporizer device from entering a locked state when the vaporizer device and/or a user device communicatively with the vaporizer device are determined to be in one or more specified zones. The one or more specified zones may be defined by a range of a wireless beacon and/or a geo-fence.

In some variations, whether an age indicated by the identification document of the user exceeds a threshold value may be determined. The vaporizer device may be unlocked further in response to the age indicated by the identification document of the user exceeding the threshold value. The threshold value may be determined based at least on a location of the vaporizer device and/or a user device communicatively coupled with the vaporizer device.

In some variations, the matching may be performed at a remote server. The unlocking may be triggered in response to receiving, from the remote server, an indication of the match between the first image and the second image.

In another aspect, there is provided a method. The method may include: capturing a first image of an identification document of a user; capturing a second image of the user; and unlocking, in response to a match between the first image and the second image, a vaporizer device, the unlocking of the vaporizer device includes enabling one or more functionalities of the vaporizer device that are disabled while the vaporizer device is in a locked state.

In some variations, the method may further include: detecting, at the vaporizer device, an insertion of a cartridge; and in response to the insertion of the cartridge, generating a user interface configured to display, to the first user, a prompt to capture the first image and/or the second image. The user interface may be further generated in response to determining that the cartridge contains a controlled substance. The cartridge may be determined to contain the controlled substance by at least reading an identifier associated with the cartridge. The identifier may be encoded in a pattern and/or a circuit.

In some variations, the method may further include determining whether the vaporizer device is associated with another user; and unlocking the vaporizer device further in response the vaporizer device not being associated with another user. In response to the vaporizer device not being associated with another user, the vaporizer device may be linked to the user by at least creating an association between a device identifier of the vaporizer device and a user identifier of the user. Data received from the vaporizer device may be anonymized by at least being associated with the device identifier of the vaporizer device but not the user identifier of the user.

In some variations, the method may further include: determining whether the user is associated with a threshold quantity of activated vaporizer devices; and unlocking the vaporizer device further in response to the user not being associated with the threshold quantity of activated vaporizer devices.

In some variations, the first image and the second image may be received from a user device coupled with the vaporizer device. The unlocking of the vaporizer device may include sending, to the user device a private key for unlocking the vaporizer device.

In some variations, the one or more functionalities of the vaporizer device may include a vaporization of a vaporizable material in a cartridge inserted in the vaporizer device.

In some variations, the unlocking of the vaporizer device may further prevent the vaporizer device from entering a locked state when the vaporizer device and/or a user device communicatively with the vaporizer device are in one or more specified zones. The one or more specified zones may be defined by a range of a wireless beacon and/or a geo-fence.

In some variations, the method may further include: determining whether an age indicated by the identification document of the user exceeds a threshold value; and unlocking the vaporizer device further in response to the age indicated by the identification document of the user exceeding the threshold value. The threshold value may be determined based at least on a location of the vaporizer device and/or a user device communicatively coupled with the vaporizer device.

In some variations, the matching may be performed at a remote server. The unlocking may be triggered in response to receiving, from the remote server, an indication of the match between the first image and the second image.

In another aspect, there is provided a computer program product including a non-transitory computer readable medium storing instructions. The instructions may cause operations may executed by at least one data processor. The operations may include: capturing a first image of an identification document of a user; capturing a second image of the user; and unlocking, in response to a match between the first image and the second image, a vaporizer device, the unlocking of the vaporizer device includes enabling one or more functionalities of the vaporizer device that are disabled while the vaporizer device is in a locked state.

In some variations, there is provided a system that includes a vaporizer device, a remote server, and a user device communicatively coupled with the vaporizer device. The user device may include at least one processor and at least one memory. The at least one memory may include program code that provides operations when executed by the at least one processor. The operations may include: capturing a first image of an identification document of a user; capturing a second image of the user; and in response to receiving, from the remote server, an indication of a match between the first image and the second image, unlocking the vaporizer device, the unlocking of the vaporizer device includes enabling one or more functionalities of the vaporizer device that are disabled while the vaporizer device is in a locked state.

In some variations, there is provided an apparatus. The apparatus may include: means for capturing a first image of an identification document of a user; means for capturing a second image of the user; and means for unlocking, in response to a match between the first image and the second image, a vaporizer device, the unlocking of the vaporizer device includes enabling one or more functionalities of the vaporizer device that are disabled while the vaporizer device is in a locked state.

In another aspect, there is provided a system that includes at least one processor and at least one memory. The at least one memory may include program code that provides operations when executed by the at least one processor. The operations may include: determining whether a vaporizer device is within a communication range; in response to determining that the vaporizer device is within the communication range, triggering, at the vaporizer device, one or more outputs.

In some variations, one or more features disclosed herein including the following features can optionally be included in any feasible combination. The vaporizer device may be determined to be within the communication range based at least on one or more beacon messages advertised by the vaporizer device.

In some variations, the one or more outputs may include an audio indicator, a visual indicator, and/or a haptic indicator.

In some variations, in response to determining that the vaporizer device is outside of the communication range, a user interface displaying a last location where the vaporizer device is determined to be within the communication range may be generated. The user interface may display a map including an indication of the last location where the vaporizer device is determined to be within the communication range.

In another aspect, there is provided a method. The method may include: determining whether a vaporizer device is within a communication range; in response to determining that the vaporizer device is within the communication range, triggering, at the vaporizer device, one or more outputs.

In some variations, one or more features disclosed herein including the following features can optionally be included in any feasible combination. The vaporizer device may be determined to be within the communication range based at least on one or more beacon messages advertised by the vaporizer device.

In some variations, the one or more outputs may include an audio indicator, a visual indicator, and/or a haptic indicator.

In some variations, the method may further include in response to determining that the vaporizer device is outside of the communication range, generating a user interface displaying a last location where the vaporizer device is determined to be within the communication range. The user interface may display a map including an indication of the last location where the vaporizer device is determined to be within the communication range.

In another aspect, there is provided a computer program product including a non-transitory computer readable medium storing instructions. The instructions may cause operations may executed by at least one data processor. The operations may include: determining whether a vaporizer device is within a communication range; in response to determining that the vaporizer device is within the communication range, triggering, at the vaporizer device, one or more outputs.

In another aspect, there is provided a system that includes a vaporizer device and a user device communicatively coupled with the vaporizer device. The user device may include at least one processor and at least one memory. The at least one memory may include program code that provides operations when executed by the at least one processor. The operations may include: determining whether the vaporizer device is within a communication range of the user device; in response to determining that the vaporizer device is within the communication range of the user device, triggering, at the vaporizer device, one or more outputs.

In another aspect, there is provided an apparatus. The apparatus may include: means for determining whether a vaporizer device is within a communication range; means for responding to determining that the vaporizer device is within the communication range by at least triggering, at the vaporizer device, one or more outputs.

In another aspect, there is provided an apparatus. The apparatus may include: a receptacle configured to receive a vaporizer device; a first coupling configured to secure the vaporizer device inside the receptacle to a user device; and a second coupling configured to provide a data connection between the vaporizer device inside the receptacle and the user device.

In some variations, one or more features disclosed herein including the following features can optionally be included in any feasible combination. The first coupling may secure the vaporizer device inside the receptacle to a perimeter, a front surface, and/or a back surface of the user device.

In some variations, the first coupling may include a friction-fit coupling, a snap-fit coupling, a magnetic coupling, and/or an adhesive coupling.

In some variations, the second coupling may provide access to a serial port and/or a parallel port on the user device.

In some variations, the second coupling may include an adaptor configured to allow a first type of port on the vaporizer device to couple with a second type of port on the user device.

In some variations, the second coupling may include a pin connector and/or a universal serial bus (USB) port.

In some variations, the receptacle may include one or more retention mechanisms configured to retain the vaporizer device inside the receptacle. The one or more retention mechanisms may include snap-fit, friction-fit, a magnet, and/or an adhesive.

In another aspect, there is provided an apparatus. The apparatus may include: means for receiving a vaporizer device; means for securing the vaporizer device inside the receiving means to a user device; and means for providing a data connection between the vaporizer device inside the receiving means and the user device.

Aspects of the current subject matter relate to management of operation (e.g., one or more settings or operation parameters of a vaporizer). In some aspects, a cartridge may be coupled to a vaporizer body. The cartridge may include a vaporizable material and a heater as well as an identifier, which may optionally be a cartridge memory. The vaporizer body may include a controller, which may exchange data (e.g., via one or two way communication) with the identifier. This exchange of data may optionally occur via a same circuit over which electrical power from a power source of the vaporizer body is delivered to the heater of the cartridge.

In another aspect, a vaporizer system can include a device in communication with a vaporizer. The device may execute software or other instructions that result in an application usable to obtain information from a vaporizer, optionally over a wireless communication channel. In addition, the application may relay commends to a controller of the vaporizer to affect one or more operations of the vaporizer.

Implementations of the current subject matter can include, but are not limited to, methods consistent with the descriptions provided herein as well as articles that comprise a tangibly embodied machine-readable medium operable to cause one or more machines (e.g., computers, etc.) to result in operations implementing one or more of the described features. Similarly, computer systems are also described that may include one or more processors and one or more memories coupled to the one or more processors. A memory, which can include a non-transitory computer-readable or machine-readable storage medium, may include, encode, store, or the like one or more programs that cause one or more processors to perform one or more of the operations described herein. Computer implemented methods consistent with one or more implementations of the current subject matter can be implemented by one or more data processors residing in a single computing system or multiple computing systems. Such multiple computing systems can be connected and can exchange data and/or commands or other instructions or the like via one or more connections, including but not limited to a connection over a network (e.g., the Internet, a wireless wide area network, a local area network, a wide area network, a wired network, or the like), via a direct connection between one or more of the multiple computing systems, etc.

In certain aspects of the current subject matter, challenges associated with the presence of liquid vaporizable materials in or near certain susceptible components of an electronic vaporizer device may be addressed by inclusion of one or more of the features described herein or comparable/equivalent approaches as would be understood by one of ordinary skill in the art. Aspects of the current subject matter relate to methods and system for managing airflow in a vaporizer device. In one aspect, a method of manufacturing a vaporizer cartridge is described.

In some variations one or more of the following features may optionally be included in any feasible combination. The airflow control feature can include a fluid passageway extending between the reservoir chamber and the airflow passageway. The diameter of the fluid passageway may be sized to allow a surface tension of the vaporizable material to prevent passage of fluid along the fluid passageway when the reservoir pressure is approximately the same as a second pressure along the airflow passageway. The diameter may be sized to allow the surface tension to be disrupted when the reservoir pressure is less than the second pressure along the airflow passageway thereby allowing a volume of air to pass through the airflow control feature and into the reservoir.

In some implementations of the current subject matter, the airflow control feature may include a check valve or a duck bill valve. The airflow control feature may include a coating including a venting material extending over an opening of the fluid passageway. The coating may include a polytetrafluoroethylene (PTFE) material. The airflow control feature may include one or more of a septum, a valve, and a pump. The airflow control feature may include a vent passageway extending along at least one side of a wick housing containing the vaporization chamber, and the vent passageway may extend between the reservoir and the vaporization chamber. The airflow control feature may include a vent passageway extending through a wick housing containing the vaporization chamber, and the vent passageway may extend between the reservoir and the vaporization chamber.

In some implementations of the current subject matter, the cartridge may further include a pressure sensor configured to sense a pressure along the airflow passageway. The cartridge may further include a secondary passageway configured to draw air through a part of the cartridge, and the secondary passageway may be configured to merge with the airflow passageway downstream from the vaporization chamber. The cartridge may further include a pressure sensing passageway that extends between an outlet of the cartridge and a pressure sensor, and the pressure sensing passageway may be separate from the airflow passageway.

The cartridge may further include an inlet positioned along a first side of the cartridge and an outlet positioned along a second side of the cartridge. The airflow pathway may extend between the inlet and outlet, and the inlet and outlet may be positioned along the first side and second side, respectively, such that the inlet and outlet are open when the cartridge is inserted in a vaporizer device body in a first position and are closed when the cartridge is inserted in the vaporizer device body in a second position. The wicking element may include a flat configuration including at least one pair of opposing sides that extend parallel to each other.

In another interrelated aspect of the current subject matter, a method includes allowing airflow to pass through a vaporization chamber of a vaporizer device thereby combining the airflow with an aerosol formed in the vaporization chamber. The aerosol may be formed by vaporizing a vaporizable material drawn from a porous wick extending between the vaporization chamber and a reservoir containing the vaporizable material. The method may further include drawing the vaporizable material along the porous wick from the reservoir to the vaporization chamber thereby creating a first pressure in the reservoir that is less than a second pressure in an area outside of the reservoir. In addition, the method may include disrupting a surface tension of a vaporizable material along a vent passageway extending between the reservoir and the area outside of the reservoir thereby allowing a volume of air to pass into the reservoir from the vent passageway. Additionally, the method may include increasing the first pressure in the reservoir such that the first pressure is approximately equal to the second pressure.

In some implementations of the current subject matter, the method may further include preventing, as a result of the first pressure being approximately equal to the second pressure, the passage of fluid along the vent passageway. The preventing may be controlled by the fluid tension of the vaporizable fluid. The vaporizable fluid may include at least one of the vaporizable material and air. The airflow control feature may include a vent passageway extending through a wick housing that contains the vaporization chamber. The airflow control feature may include a fluid passageway extending between a reservoir chamber and an airflow passageway.

In another interrelated aspect of the current subject matter, a vaporizer cartridge for coupling to a vaporizer body to form a vaporizer device is described. The cartridge may include a reservoir housing defining a reservoir chamber for containing a vaporizable material and a mouthpiece coupled to the reservoir housing. The cartridge may further include an air tube assembly, which may include a wick housing portion configured to position a wicking element and a heating element in a vaporization chamber for vaporizing the vaporization material in the vaporization chamber. The air tube assembly may further include a tubing portion including a part of an airflow pathway that extends through the vaporization chamber and the mouthpiece thereby allowing vaporized vaporizable material to be inhaled by a user. Additionally, the cartridge may further include a filter housing portion configured to position a filter adjacent the mouthpiece.

In some implementations of the current subject matter, the air tube assembly may be made out of a single molded part. The tubing portion may be made out of metal. The filter housing and the wick housing may be made out of a plastic material.

The details of one or more variations of the subject matter described herein are set forth in the accompanying drawings and the description below. Other features and advantages of the subject matter described herein will be apparent from the description and drawings, and from the claims. While certain features of the currently disclosed subject matter are described for illustrative purposes in relation to electronic vaporizer devices, it should be readily understood that such features are not intended to be limiting. The claims that follow this disclosure are intended to define the scope of the protected subject matter.

### BRIEF DESCRIPTION OF THE DRAWINGS

The accompanying drawings, which are incorporated in and constitute a part of this specification, show certain aspects of the subject matter disclosed herein and, together with the description, help explain some of the principles associated with the disclosed implementations. In the drawings:
FIG. 1A illustrates an example of a vaporizer device consistent with implementations of the current subject matter;
FIGs. 1B, 1C, 1D and 1E illustrate example variations of a vaporizer device and cartridge assembly consistent with implementations of the current subject matter;
FIG. 2 illustrates an proportional-integral-derivative controller for a vaporizer device that may be adapted for detection of a cartridge using a cartridge identification circuit consistent with implementations of the current subject matter;
FIG. 3 illustrates communication between a vaporizer device, a user device, and a server consistent with implementations of the current subject matter;
FIG. 4 illustrates a functional block diagram of a user device for implementing features consistent with the described subject matter, in accordance with some example implementations;
FIG. 5 illustrates an example of a user interface for an application that may be used with a vaporizer device consistent with implementations of the current subject matter;
FIG. 6 illustrates an example of a user interface for an application that may be used with a vaporizer device consistent with implementations of the current subject matter;
FIG. 7 illustrates an example of a user interface for an application that may be used with a vaporizer device consistent with implementations of the current subject matter;
FIG. 8 illustrates an example of a user interface for an application that may be used with a vaporizer device consistent with implementations of the current subject matter;
FIGs. 9A-9F illustrate examples of user interfaces for use with a vaporizer or an application affiliated with the vaporizer consistent with implementations of the current subject matter;
FIG. 10 illustrate an example of a user interface for an application for use with a vaporizer including a menu of commands consistent with implementations of the current subject matter;
FIG. 11 illustrates an example of a user interface that may be used as part of an application interface consistent with implementations of the current subject matter;
FIG. 12 illustrate an example of a user interface showing a user information dashboard consistent with implementations of the current subject matter;
FIG. 13 illustrates examples of user interfaces for controlling operation of an associated vaporizer consistent with implementations of the current subject matter;
FIG. 14 illustrates an example of a user interface consistent with implementations of the current subject matter;
FIG. 15 illustrates an example of a user interface for customizing the application and/or vaporizer consistent with implementations of the current subject matter;
FIG. 16 illustrates an example of a user interface consistent with implementations of the current subject matter;
FIG. 17 illustrates an example of a user interfaces that may be presented by an application consistent with implementations of the current subject matter;
FIG. 18 illustrates an example of a user interface that may be used to guide a user through operation of a vaporizer and/or an associated application consistent with implementations of the current subject matter;
FIG. 19 illustrates an example of a user interface that may be used to instruct a user on controlling the vaporizer using an application consistent with implementations of the current subject matter;
FIG. 20 illustrates an example user interface for programming/recording a use profile consistent with implementations of the current subject matter;
FIG. 21 illustrates an example of a user interface using an application consistent with implementations of the current subject matter;
FIG. 22 illustrates an example of a user interface that may be used consistent with implementations of the current subject matter;
FIG. 23 illustrates an example of a user interface using an application consistent with implementations of the current subject matter;
FIG. 24 illustrates an example of a user interface using an application consistent with implementations of the current subject matter;
FIG. 25 illustrates an example of a user interface using an application consistent with implementations of the current subject matter;
FIG. 26 illustrates an example of a user interface using an application consistent with implementations of the current subject matter;
FIG. 27 illustrates an example of a user interface using an application consistent with implementations of the current subject matter;
FIG. 28 illustrates an example of a user interface using an application consistent with implementations of the current subject matter;
FIG. 29 illustrates an example of a user interface using an application consistent with implementations of the current subject matter;
FIG. 30 illustrates an example of a user interface using an application consistent with implementations of the current subject matter;
FIG. 31 illustrates an example of a user interface using an application consistent with implementations of the current subject matter;
FIG. 32 illustrates an example of a user interface consistent with implementations of the current subject matter;
FIG. 33 illustrates an example of a user interface consistent with implementations of the current subject matter;
FIG. 34 illustrates an example of a user interface consistent with implementations of the current subject matter;
FIG. 35 illustrates an example of a user interface consistent with implementations of the current subject matter;
FIG. 36 illustrates an example of a user interface consistent with implementations of the current subject matter;
FIG. 37 illustrates an example of a user interface consistent with implementations of the current subject matter;
FIG. 38 illustrates an example of a user interface consistent with implementations of the current subject matter;
FIG. 39 illustrates an example of a user interface consistent with implementations of the current subject matter;
FIG. 40 illustrates an example of a user interface consistent with implementations of the current subject matter;
FIG. 41 illustrates an example of a user interface consistent with implementations of the current subject matter;
FIG. 42 illustrates an example of a user interface consistent with implementations of the current subject matter;
FIG. 43 illustrates an example of a user interface consistent with implementations of the current subject matter;
FIG. 44 illustrates an example of a user interface consistent with implementations of the current subject matter;
FIG. 45 illustrates an example of a user interface consistent with implementations of the current subject matter;
FIG. 46 illustrates an example of a user interface consistent with implementations of the current subject matter;
FIG. 47 illustrates an example of a user interface consistent with implementations of the current subject matter;
FIG. 48 illustrates an example of a user interface consistent with implementations of the current subject matter;
FIG. 49 illustrates an example of a user interface consistent with implementations of the current subject matter;
FIG. 50 illustrates an example of a user interface consistent with implementations of the current subject matter;
FIG. 51 illustrates an example of a user interface consistent with implementations of the current subject matter;
FIG. 52 illustrates an example of a user interface consistent with implementations of the current subject matter;
FIG. 53 illustrates an example of a user interface consistent with implementations of the current subject matter;
FIG. 54 illustrates an example of a user interface consistent with implementations of the current subject matter;
FIG. 55 illustrates an example of a user interface consistent with implementations of the current subject matter;
FIG. 56 illustrates an example of a user interface consistent with implementations of the current subject matter;
FIG. 57 illustrates an example of a user interface consistent with implementations of the current subject matter;
FIG. 58 illustrates an example of a user interface consistent with implementations of the current subject matter;
FIG. 59 illustrates an example of a user interface consistent with implementations of the current subject matter;
FIG. 60 illustrates an example of a user interface consistent with implementations of the current subject matter;
FIG. 61 illustrates an example of a user interface consistent with implementations of the current subject matter;
FIG. 62 illustrates an example of a user interface consistent with implementations of the current subject matter;
FIG. 63 illustrates an example of a user interface consistent with implementations of the current subject matter;
FIG. 64 illustrates an example of a user interface consistent with implementations of the current subject matter;
FIG. 65 illustrates an example of a user interface consistent with implementations of the current subject matter;
FIG. 66 illustrates an example of a user interface consistent with implementations of the current subject matter;
FIG. 67 illustrates an example of a user interface consistent with implementations of the current subject matter;
FIG. 68 illustrates an example of a user interface consistent with implementations of the current subject matter;
FIG. 69 illustrates an example of a user interface consistent with implementations of the current subject matter;
FIG. 70 illustrates an example of a user interface consistent with implementations of the current subject matter;
FIG. 71 illustrates an example of a user interface consistent with implementations of the current subject matter;
FIG. 72 illustrates an example of a user interface consistent with implementations of the current subject matter;
FIG. 73 illustrates an example of a user interface consistent with implementations of the current subject matter;
FIG. 74 illustrates an example of a user interface consistent with implementations of the current subject matter;
FIG. 75 illustrates an example of a user interface consistent with implementations of the current subject matter;
FIG. 76 illustrates an example of a user interface consistent with implementations of the current subject matter;
FIG. 77 illustrates an example of a user interface consistent with implementations of the current subject matter;
FIG. 78 illustrates an example of a user interface consistent with implementations of the current subject matter;
FIG. 79 illustrates an example of a user interface consistent with implementations of the current subject matter;
FIG. 80 illustrates an example of a user interface consistent with implementations of the current subject matter;
FIG. 81 illustrates an exemplary method consistent with implementations of the current subject matter;
FIGs. 82A and 82B illustrate exemplary methods consistent with implementations of the current subject matter;
FIG. 83 illustrates an exemplary method consistent with implementations of the current subject matter;
FIG. 84 illustrates a block diagram of an activation system for a vaporizer device;
FIG. 85 shows a process flow diagram illustrating aspects of a method having one or more features consistent with implementations of the current subject matter;
FIGs. 86A-86C illustrate an example of a dock consistent with implementations of the current subject matter;
FIGs. 87A-87C illustrate another example of a dock consistent with implementations of the current subject matter;
FIGs**.** 88A-88D illustrate an example of an activation system consistent with implementations of the current subject matter;
FIGs. 89A-89D illustrate an example of an activation system consistent with implementations of the current subject matter;
FIGs. 90A-90D illustrate an example of an activation system consistent with implementations of the current subject matter;
FIGs. 91A-91D illustrate an example of an activation system consistent with implementations of the current subject matter;
FIGs. 92A-92D illustrate an example of an activation system consistent with implementations of the current subject matter;
FIGs. 93A-93D illustrate an example of an activation system consistent with implementations of the current subject matter;
FIGs. 94A-94D illustrate an example of an activation system consistent with implementations of the current subject matter;
FIG. 95 illustrates an example of a vaporizer device having a 5-pin connector consistent with implementations of the current subject matter;
FIG. 96 depicts a flowchart illustrating an initial setup process for a vaporizer device consistent with implementations of the current subject matter;
FIG. 97 depicts a flowchart illustrating a process for pairing a vaporizer device to a user device consistent with implementations of the current subject matter;
FIG. 98 depicts a flowchart illustrating a process for locating a retailer consistent with implementations of the current subject matter;
FIG. 99 depicts a flowchart illustrating an in-store activation process consistent with implementations of the current subject matter;
FIG. 100 depicts a flowchart illustrating a process for age verifying a user consistent with implementations of the current subject matter;
FIG. 101 depicts an example of a user interface consistent with implementations of the current subject matter;
FIG. 102 depicts a table illustrating examples of data fields included in a pod identifier consistent with implementations of the current subject matter;
FIG. 103A depicts an example of a user interface consistent with implementations of the current subject matter;
FIG. 103B depicts an example of a user interface consistent with implementations of the current subject matter;
FIG. 103C depicts an example of a user interface consistent with implementations of the current subject matter;
FIG. 103D depicts an example of a user interface consistent with implementations of the current subject matter;
FIG. 103E depicts an example of a user interface consistent with implementations of the current subject matter;
FIG. 103F depicts an example of a user interface consistent with implementations of the current subject matter; and
FIG. 103G depicts an example of a user interface consistent with implementations of the current subject matter.

When practical, similar reference numbers denote similar structures, features, or elements.

### DETAILED DESCRIPTION

Implementations of the current subject matter includes methods, apparatuses, articles of manufacture, and systems relating to vaporizing of one or more materials for inhalation by a user. Example implementations include vaporizer devices and systems including vaporizer devices. The term "vaporizer" is used generically in the following description and claims to refer to any of a self-contained apparatus, an apparatus that includes two or more separable parts (e.g., a vaporizer body that includes a battery and other hardware and a cartridge that includes a vaporizable material). A "vaporizer system" as used in this document may include one or more components, such as a device in communication (e.g., wirelessly or over a wired connection) with a vaporizer and optionally also the vaporizer itself. A vaporizer or one or more components of a vaporizer system consistent with implementations of the current subject matter may be configured for user control and operation.

Vaporizer devices, which can also be referred to as vaporizers, electronic vaporizer devices or e-vaporizer devices, can be used for delivery of an aerosol (or "vapor") containing one or more active ingredients by inhalation of the aerosol by a user of the vaporizing device. For example, electronic nicotine delivery systems (ENDS), include a class of vaporizer devices that are battery powered and that may be used to simulate the experience of smoking, but without burning of tobacco or other substances. In general, such vaporizers are hand-held devices that heat (by convection, conduction, radiation, or some combination thereof) a vaporizable material to provide an inhalable dose of the material. The vaporizable material used with a vaporizer may be provided within a cartridge (e.g., a part of the vaporizer that contains the vaporizable material in a reservoir) or other container and that can be refillable when empty or disposable in favor a new cartridge containing additional vaporizable material of a same or different type. A vaporizer may be a cartridge-using vaporizer, a cartridge-less vaporizer, or a multi-use vaporizer capable of use with or without a cartridge. For example, a multi-use vaporizer may include a heating chamber (e.g., an oven) configured to receive a vaporizable material directly in the heating chamber and also to receive a cartridge having a reservoir or the like for holding the vaporizable material. In various implementations, a vaporizer may be configured for use with liquid vaporizable material (e.g., a carrier solution in which an active and/or inactive ingredient(s) are suspended or held in solution or a liquid form of the vaporizable material itself) or a solid vaporizable material. A solid vaporizable material may include a plant material that emits some part of the plant material as the vaporizable material (e.g., such that some part of the plant material remains as waste after the vaporizable material is emitted for inhalation by a user) or optionally can be a solid form of the vaporizable material itself such that all of the solid material can eventually be vaporized for inhalation. A liquid vaporizable material can likewise be capable of being completely vaporized or can include some part of the liquid material that remains after all of the material suitable for inhalation has been consumed.

Consistent with some implementations of the current subject matter, a vaporizer and/or vaporizer system may be configured to identify a vaporizable material to be vaporized, and to adjust the operation of the vaporizer accordingly. For example, a vaporizer may be adapted to receive a cartridge or other pre-loaded container holding a vaporizable material (e.g., the vaporizable material a solution of nicotine, cannabis, and/or another active ingredient) and to identify and/or determine information about the vaporizable material and/or the cartridge or other pre-loaded container, such as one or more of: a type of vaporizable material, a concentration of vaporizable material in a solution or other non-pure form of a vaporizable material that is contained in a reservoir or other container of the cartridge, an amount (e.g., a mass, volume, etc.) of vaporizable material in a reservoir or other container of the cartridge, a configuration of the cartridge (e.g., what specific components or types of components such as a heater power or configuration, one or more electrical properties, etc. are present in the cartridge), a lot number of the cartridge, a date of manufacture of the cartridge, an expiration date after which the cartridge should not be used, a manufacture or fill date for the cartridge, or the like.

A vaporizer consistent with implementations of the current subject matter may be configured to connect (e.g., wirelessly connect or over a wired connection) to a communication device (or optionally devices) in communication with the vaporizer. Such a device can be a component of a vaporizer system as discussed above, and can include first communication hardware, which can establish a wireless communication channel with second communication hardware of the vaporizer. For example, a device used as part of a vaporizer system may include a general-purpose computing device (e.g., a smartphone, a tablet, a personal computer, some other portable device such as a smartwatch, or the like) that executes software to produce a user interface for enabling a user of the device to interact with a vaporizer. In other implementations of the current subject matter, such a device used as part of a vaporizer system can be a dedicated piece of hardware such as a remote control or other wireless or wired device having one or more physical or soft (e.g., configurable on a screen or other display device and selectable via user interaction with a touch-sensitive screen or some other input device like a mouse, pointer, trackball, cursor buttons, or the like) interface controls.

A device that is part of a vaporizer system as defined above can be used for any of one or more functions, such as controlling dosing (e.g., dose monitoring, dose setting, dose limiting, user tracking, etc.), obtaining locational information (e.g., location of other users, retailer/commercial venue locations, vaping locations, relative or absolute location of the vaporizer itself, etc.), vaporizer personalization (e.g., naming the vaporizer, locking/password protecting the vaporizer, adjusting one or more parental controls, associating the vaporizer with a user group, registering the vaporizer with a manufacturer or warranty maintenance organization, etc.), engaging in social activities (e.g., games, social media communications, interacting with one or more groups, etc.) with other users, or the like.

In some implementations of the current subject matter, a vaporizer can include functionality for communicating with a cartridge containing a vaporizable material. The vaporizer may also be in communication with a device that is part of a vaporizer system, although this is not required. The vaporizer, whether under control of or otherwise in communication with a device that is part of a vaporizer system or as a standalone unit separate from a vaporizer system can be configured such that operation of the vaporizer can be modified, controlled, etc. based on one or more parameters that are received from the cartridge or are accessed from a database or other information source based on the identification of the cartridge.

For example, a vaporizer consistent with implementations of the current subject matter can be configured to recognize a cartridge and recite (and in some cases transmit) or otherwise acquire information about the cartridge. In other words, a computing element such as a controller or the like that is associated with a vaporizer body can obtain information about the cartridge via some form of data exchange. A variety of methods of cartridge recognition by a vaporizer are within the scope of the current subject matter, including those described in more detail below. Any of the approaches described herein may be performed with or without the addition of wireless communication/connectivity also described herein, although such wireless connectivity as described herein may be advantageously applied, as will be described in greater detail below.

Implementations of the current subject matter also include methods of using a vaporizer and/or a vaporizer system for functions such as determining and/or controlling a dose, amount, or the like of one or more chemical species of the vaporizable material or of the vaporizable material itself.

Implementations of the current subject matter include devices relating to vaporizing of one or more materials for inhalation by a user. The term "vaporizer" is used generically in the following description to refer to a vaporizer device. Examples of vaporizers consistent with implementations of the current subject matter include electronic vaporizers, e-vaporizer devices, electronic nicotine delivery systems (ENDS) or the like. Such vaporizers are generally portable, hand-held devices that heat a vaporizable material to provide an inhalable dose of the material. The vaporizable material used with a vaporizer may optionally be provided within a cartridge (e.g., a part of the vaporizer that contains the vaporizable material in a reservoir) or other container and that can be refillable when empty or disposable in favor of a new cartridge containing additional vaporizable material of a same or different type. A vaporizer may be a cartridge-using vaporizer, a cartridge-less vaporizer, or a multi-use vaporizer capable of use with or without a cartridge. For example, a multi-use vaporizer may include a heating chamber (e.g., an oven) configured to receive a vaporizable material directly in the heating chamber and also to receive a cartridge or other replaceable device having a reservoir, a volume, or the like for at least partially containing a usable amount of vaporizable material. In various implementations, a vaporizer may be configured for use with liquid vaporizable material (e.g., a carrier solution in which an active and/or inactive ingredient(s) are suspended or held in solution or a neat liquid form of the vaporizable material itself) or a solid vaporizable material. A solid vaporizable material may include a plant material that emits some part of the plant material as the vaporizable material (e.g., such that some part of the plant material remains as waste after the vaporizable material is emitted for inhalation by a user) or optionally can be a solid form of the vaporizable material itself (e.g., a "wax") such that all of the solid material can eventually be vaporized for inhalation. A liquid vaporizable material can likewise be capable of being completely vaporized or can include some part of the liquid material that remains after all of the material suitable for inhalation has been consumed.

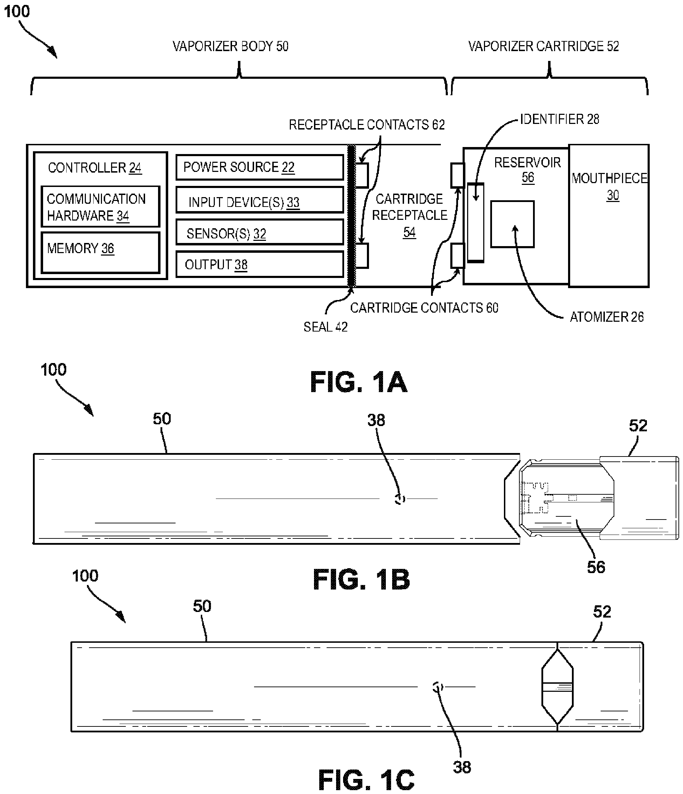

Referring to the block diagram of FIG. 1A, a vaporizer device 100 typically includes a power source 22 (such as a battery which may be a rechargeable battery), and a controller 24 (e.g., a processor, circuitry, etc. capable of executing logic) for controlling delivery of heat to an atomizer 26 to cause a vaporizable material to be converted from a condensed form (e.g., a solid, a liquid, a solution, a suspension, a part of an at least partially unprocessed plant material, etc.) to the gas phase. The controller 24 may be part of one or more printed circuit boards (PCBs) consistent with certain implementations of the current subject matter. After conversion of the vaporizable material to the gas phase, and depending on the type of vaporizer, the physical and chemical properties of the vaporizable material, and/or other factors, at least some of the gas-phase vaporizable material may condense to form particulate matter in at least a partial local equilibrium with the gas phase as part of an aerosol, which can form some or all of an inhalable dose provided by the vaporizer device 100 for a given puff or draw on the vaporizer. It will be understood that the interplay between gas and condensed phases in an aerosol generated by a vaporizer can be complex and dynamic, as factors such as ambient temperature, relative humidity, chemistry, flow conditions in airflow paths (both inside the vaporizer and in the airways of a human or other animal), mixing of the gas-phase or aerosol-phase vaporizable material with other air streams, etc. may affect one or more physical parameters of an aerosol. In some vaporizers, and particularly for vaporizers for delivery of more volatile vaporizable materials, the inhalable dose may exist predominantly in the gas phase (i.e. formation of condensed phase particles may be very limited).

Vaporizers for use with liquid vaporizable materials (e.g., neat liquids, suspensions, solutions, mixtures, etc.) typically include an atomizer 26 in which a wicking element (also referred to herein as a wick (not shown in FIG. 1A), which can include any material capable of causing fluid motion by capillary pressure) conveys an amount of a liquid vaporizable material to a part of the atomizer that includes a heating element (also not shown in FIG. 1A). The wicking element is generally configured to draw liquid vaporizable material from a reservoir configured to contain (and that may in use contain) the liquid vaporizable material such that the liquid vaporizable material may be vaporized by heat delivered from a heating element. The wicking element may also optionally allow air to enter the reservoir to replace the volume of liquid removed. In other words, capillary action pulls liquid vaporizable material into the wick for vaporization by the heating element (described below), and air may, in some implementations of the current subject matter, return to the reservoir through the wick to at least partially equalize pressure in the reservoir. Other approaches to allowing air back into the reservoir to equalize pressure are also within the scope of the current subject matter.

The heating element can be or include one or more of a conductive heater, a radiative heater, and a convective heater. One type of heating element is a resistive heating element, which can be constructed of or at least include a material (e.g., a metal or alloy, for example a nickel-chromium alloy, or a non-metallic resistor) configured to dissipate electrical power in the form of heat when electrical current is passed through one or more resistive segments of the heating element. In some implementations of the current subject matter, an atomizer can include a heating element that includes resistive coil or other heating element wrapped around, positioned within, integrated into a bulk shape of, pressed into thermal contact with, or otherwise arranged to deliver heat to a wicking element to cause a liquid vaporizable material drawn by the wicking element from a reservoir to be vaporized for subsequent inhalation by a user in a gas and/or a condensed (e.g., aerosol particles or droplets) phase. Other wicking element, heating element, and/or atomizer assembly configurations are also possible, as discussed further below.

Certain vaporizers may also or alternatively be configured to create an inhalable dose of gas-phase and/or aerosol-phase vaporizable material via heating of a non-liquid vaporizable material, such as for example a solid-phase vaporizable material (e.g., a wax or the like) or plant material (e.g., tobacco leaves and/or parts of tobacco leaves) containing the vaporizable material. In such vaporizers, a resistive heating element may be part of or otherwise incorporated into or in thermal contact with the walls of an oven or other heating chamber into which the non-liquid vaporizable material is placed. Alternatively, a resistive heating element or elements may be used to heat air passing through or past the non-liquid vaporizable material to cause convective heating of the non-liquid vaporizable material. In still other examples, a resistive heating element or elements may be disposed in intimate contact with plant material such that direct conductive heating of the plant material occurs from within a mass of the plant material (e.g., as opposed to only by conduction inward form walls of an oven).

The heating element may be activated (e.g., a controller, which is optionally part of a vaporizer body as discussed below, may cause current to pass from the power source through a circuit including the resistive heating element, which is optionally part of a vaporizer cartridge as discussed below), in association with a user puffing (e.g., drawing, inhaling, etc.) on a mouthpiece 30 of the vaporizer to cause air to flow from an air inlet, along an airflow path that passes an atomizer (e.g., wicking element and heating element), optionally through one or more condensation areas or chambers, to an air outlet in the mouthpiece. Incoming air passing along the airflow path passes over, through, etc. the atomizer, where gas phase vaporizable material is entrained into the air. As noted above, the entrained gas-phase vaporizable material may condense as it passes through the remainder of the airflow path such that an inhalable dose of the vaporizable material in an aerosol form can be delivered from the air outlet (e.g., in a mouthpiece 30 for inhalation by a user).

Activation of the heating element may be caused by automatic detection of the puff based on one or more of signals generated by one or more sensors 32, such as for example a pressure sensor or sensors disposed to detect pressure along the airflow path relative to ambient pressure (or optionally to measure changes in absolute pressure), one or more motion sensors of the vaporizer, one or more flow sensors of the vaporizer, a capacitive lip sensor of the vaporizer; in response to detection of interaction of a user with one or more input devices 33 (e.g., buttons or other tactile control devices of the vaporizer device 100), receipt of signals from a computing device in communication with the vaporizer; and/or via other approaches for determining that a puff is occurring or imminent.

As noted, a vaporizer consistent with implementations of the current subject matter may be configured to connect (e.g., wirelessly or via a wired connection) to a computing device (or optionally two or more devices) in communication with the vaporizer. To this end, the controller 24 may include communication hardware 34. The controller 24 may also include a memory 36. A computing device can be a component of a vaporizer system that also includes the vaporizer device 100, and can include its own communication hardware, which can establish a wireless communication channel with the communication hardware 34 of the vaporizer device 100. For example, a computing device used as part of a vaporizer system may include a general-purpose computing device (e.g., a smartphone, a tablet, a personal computer, some other portable device such as a smartwatch, or the like) that executes software to produce a user interface for enabling a user of the device to interact with a vaporizer. In other implementations of the current subject matter, such a device used as part of a vaporizer system can be a dedicated piece of hardware such as a remote control or other wireless or wired device having one or more physical or soft (e.g., configurable on a screen or other display device and selectable via user interaction with a touch-sensitive screen or some other input device like a mouse, pointer, trackball, cursor buttons, or the like) interface controls. The vaporizer can also include one or more output 38 features or devices for providing information to the user.

A computing device that is part of a vaporizer system as defined above can be used for any of one or more functions, such as controlling dosing (e.g., dose monitoring, dose setting, dose limiting, user tracking, etc.), controlling sessioning (e.g., session monitoring, session setting, session limiting, user tracking, etc.), controlling nicotine delivery (e.g., switching between nicotine and non-nicotine vaporizable material, adjusting an amount of nicotine delivered, etc.), obtaining locational information (e.g., location of other users, retailer/commercial venue locations, vaping locations, relative or absolute location of the vaporizer itself, etc.), vaporizer personalization (e.g., naming the vaporizer, locking/password protecting the vaporizer, adjusting one or more parental controls, associating the vaporizer with a user group, registering the vaporizer with a manufacturer or warranty maintenance organization, etc.), engaging in social activities (e.g., games, social media communications, interacting with one or more groups, etc.) with other users, or the like. The terms "sessioning", "session", "vaporizer session," or "vapor session," are used generically to refer to a period devoted to the use of the vaporizer. The period can include a time period, a number of doses, an amount of vaporizable material, and/or the like.

In the example in which a computing device provides signals related to activation of the resistive heating element, or in other examples of coupling of a computing device with a vaporizer for implementation of various control or other functions, the computing device executes one or more computer instructions sets to provide a user interface and underlying data handling. In one example, detection by the computing device of user interaction with one or more user interface elements can cause the computing device to signal the vaporizer device 100 to activate the heating element, either to a full operating temperature for creation of an inhalable dose of vapor/aerosol. Other functions of the vaporizer may be controlled by interaction of a user with a user interface on a computing device in communication with the vaporizer.

The temperature of a resistive heating element of a vaporizer may depend on a number of factors, including an amount of electrical power delivered to the resistive heating element and/or a duty cycle at which the electrical power is delivered, conductive heat transfer to other parts of the electronic vaporizer and/or to the environment, latent heat losses due to vaporization of a vaporizable material from the wicking element and/or the atomizer as a whole, and convective heat losses due to airflow (e.g., air moving across the heating element or the atomizer as a whole when a user inhales on the electronic vaporizer). As noted above, to reliably activate the heating element or heat the heating element to a desired temperature, a vaporizer may, in some implementations of the current subject matter, make use of signals from a pressure sensor to determine when a user is inhaling. **The** pressure sensor can be positioned in the airflow path and/or can be connected (e.g., by a passageway or other path) to an airflow path connecting an inlet for air to enter the device and an outlet via which the user inhales the resulting vapor and/or aerosol such that the pressure sensor experiences pressure changes concurrently with air passing through the vaporizer device from the air inlet to the air outlet. In some implementations of the current subject matter, the heating element may be activated in association with a user's puff, for example by automatic detection of the puff, for example by the pressure sensor detecting a pressure change in the airflow path.

Typically, the pressure sensor (as well as any other sensors 32) can be positioned on or coupled (e.g., electrically or electronically connected, either physically or via a wireless connection) to the controller 24 (e.g., a printed circuit board assembly or other type of circuit board). To take measurements accurately and maintain durability of the vaporizer, it can be beneficial to provide a resilient seal 42 to separate an airflow path from other parts of the vaporizer. **The** seal 42, which can be a gasket, may be configured to at least partially surround the pressure sensor such that connections of the pressure sensor to internal circuitry of the vaporizer are separated from a part of the pressure sensor exposed to the airflow path. In an example of a cartridge-based vaporizer, the seal 42 may also separate parts of one or more electrical connections between a vaporizer body 50 and a vaporizer cartridge 52. The vaporizer cartridge 52 may also be referred to as a pod or pod 52. Such arrangements of a seal 42 in a vaporizer device 100 can be helpful in mitigating against potentially disruptive impacts on vaporizer components resulting from interactions with environmental factors such as water in the vapor or liquid phases, other fluids such as the vaporizable material, etc. and/or to reduce escape of air from the designed airflow path in the vaporizer. Unwanted air, liquid or other fluid passing and/or contacting circuitry of the vaporizer can cause various unwanted effects, such as alter pressure readings, and/or can result in the buildup of unwanted material, such as moisture, the vaporizable material, etc. in parts of the vaporizer where they may result in poor pressure signal, degradation of the pressure sensor or other components, and/or a shorter life of the vaporizer. Leaks in the seal 42 can also result in a user inhaling air that has passed over parts of the vaporizer device containing or constructed of materials that may not be desirable to be inhaled.

A general class of vaporizers that have recently gained popularity includes a vaporizer body 50 that includes a controller 24, a power source 22 (e.g., battery), one more sensors 32, charging contacts, a seal 42, and a cartridge receptacle 54 configured to receive a vaporizer cartridge 52 for coupling with the vaporizer body through one or more of a variety of attachment structures. In some examples, vaporizer cartridge 52 includes a reservoir 56 for containing a liquid vaporizable material and a mouthpiece 30 for delivering an inhalable dose to a user. The vaporizer cartridge can include an atomizer 26 having a wicking element and a heating element, or alternatively, one or both of the wicking element and the heating element can be part of the vaporizer body. In implementations in which any part of the atomizer 26 (e.g., heating element and/or wicking element) is part of the vaporizer body, the vaporizer can be configured to supply liquid vaporizer material from a reservoir in the vaporizer cartridge to the atomizer part(s) included in the vaporizer body.

Cartridge-based configurations for vaporizers that generate an inhalable dose of a non-liquid vaporizable material via heating of a non-liquid vaporizable material are also within the scope of the current subject matter. For example, a vaporizer cartridge may include a mass of a plant material that is processed and formed to have direct contact with parts of one or more resistive heating elements, and such a vaporizer cartridge may be configured to be coupled mechanically and electrically to a vaporizer body the includes a processor, a power source, and electrical contacts for connecting to corresponding cartridge contacts for completing a circuit with the one or more resistive heating elements.

In vaporizers in which the power source 22 is part of a vaporizer body 50 and a heating element is disposed in a vaporizer cartridge 52 configured to couple with the vaporizer body 50, the vaporizer device 100 may include electrical connection features (e.g., means for completing a circuit) for completing a circuit that includes the controller 24 (e.g., a printed circuit board, a microcontroller, or the like), the power source, and the heating element. These features may include at least two contacts on a bottom surface of the vaporizer cartridge 52 (referred to herein as cartridge contacts 60) and at least two contacts disposed near a base of the cartridge receptacle (referred to herein as receptacle contacts 62) of the vaporizer device 100 such that the cartridge contacts 60 and the receptacle contacts 62 make electrical connections when the vaporizer cartridge 52 is inserted into and coupled with the cartridge receptacle 54. The circuit completed by these electrical connections can allow delivery of electrical current to the resistive heating element and may further be used for additional functions, such as for example for measuring a resistance of the resistive heating element for use in determining and/or controlling a temperature of the resistive heating element based on a thermal coefficient of resistivity of the resistive heating element, for identifying a cartridge based on one or more electrical characteristics of a resistive heating element or the other circuitry of the vaporizer cartridge, etc.

In some examples of the current subject matter, the at least two cartridge contacts and the at least two receptacle contacts can be configured to electrically connect in either of at least two orientations. In other words, one or more circuits necessary for operation of the vaporizer can be completed by insertion of a vaporizer cartridge 52 in the cartridge receptacle 54 in a first rotational orientation (around an axis along which the end of the vaporizer cartridge having the cartridge is inserted into the cartridge receptacle 54 of the vaporizer body 50) such that a first cartridge contact of the at least two cartridge contacts 60 is electrically connected to a first receptacle contact of the at least two receptacle contacts 62 and a second cartridge contact of the at least two cartridge contacts 60 is electrically connected to a second receptacle contact of the at least two receptacle contacts 62. Furthermore, the one or more circuits necessary for operation of the vaporizer can be completed by insertion of a vaporizer cartridge 52 in the cartridge receptacle 54 in a second rotational orientation such that the first cartridge contact of the at least two cartridge contacts 60 is electrically connected to the second receptacle contact of the at least two receptacle contacts 62 and the second cartridge contact of the at least two cartridge contacts 60 is electrically connected to the first receptacle contact of the at least two receptacle contacts 62. This feature of a vaporizer cartridge 52 being reversible insertable into a cartridge receptacle 54 of the vaporizer body 50 is described further below.

In one example of an attachment structure for coupling a vaporizer cartridge 52 to a vaporizer body, the vaporizer body 50 includes a detent (e.g., a dimple, protrusion, etc.) protruding inwardly from an inner surface the cartridge receptacle 54. One or more exterior surfaces of the vaporizer cartridge 52 can include corresponding recesses (not shown in FIG. 1A) that can fit and/or otherwise snap over such detents when an end of the vaporizer cartridge 52 inserted into the cartridge receptacle 54 on the vaporizer body 50. When the vaporizer cartridge 52 and the vaporizer body 50 are coupled (e.g., by insertion of an end of the vaporizer cartridge 52 into the cartridge receptacle 54 of the vaporizer body 50), the detent into the vaporizer body 50 may fit within and/or otherwise be held within the recesses of the vaporizer cartridge 52 to hold the vaporizer cartridge 52 in place when assembled. Such a detent-recess assembly can provide enough support to hold the vaporizer cartridge 52 in place to ensure good contact between the at least two cartridge contacts 60 and the at least two receptacle contacts 62, while allowing release of the vaporizer cartridge 52 from the vaporizer body 50 when a user pulls with reasonable force on the vaporizer cartridge 52 to disengage the vaporizer cartridge 52 from the cartridge receptacle 54.

Further to the discussion above about the electrical connections between a vaporizer cartridge and a vaporizer body being reversible such that at least two rotational orientations of the vaporizer cartridge in the cartridge receptacle are possible, in some vaporizers the shape of the vaporizer cartridge, or at least a shape of the end of the vaporizer cartridge that is configured for insertion into the cartridge receptacle may have rotational symmetry of at least order two. In other words, the vaporizer cartridge or at least the insertable end of the vaporizer cartridge may be symmetric upon a rotation of 180° around an axis along which the vaporizer cartridge is inserted into the cartridge receptacle. In such a configuration, the circuitry of the vaporizer may support identical operation regardless of which symmetrical orientation of the vaporizer cartridge occurs.

In some examples, the vaporizer cartridge, or at least an end of the vaporizer cartridge configured for insertion in the cartridge receptacle may have a non-circular cross section transverse to the axis along which the vaporizer cartridge is inserted into the cartridge receptacle. For example, the non-circular cross section may be approximately rectangular, approximately elliptical (e.g., have an approximately oval shape), non-rectangular but with two sets of parallel or approximately parallel opposing sides (e.g., having a parallelogram-like shape), or other shapes having rotational symmetry of at least order two. In this context, approximately having a shape, indicates that a basic likeness to the described shape is apparent, but that sides of the shape in question need not be completely linear and vertices need not be completely sharp. Rounding of both or either of edges or vertices of the cross-sectional shape is contemplated in the description of any non-circular cross section referred to herein.

The at least two cartridge contacts and the at least two receptacle contacts can take various forms. For example, one or both sets of contacts may include conductive pins, tabs, posts, receiving holes for pins or posts, or the like. Some types of contacts may include springs or other urging features to cause better physical and electrical contact between the contacts on the vaporizer cartridge and the vaporizer body. The electrical contacts may optionally be gold-plated, and/or can include other materials.

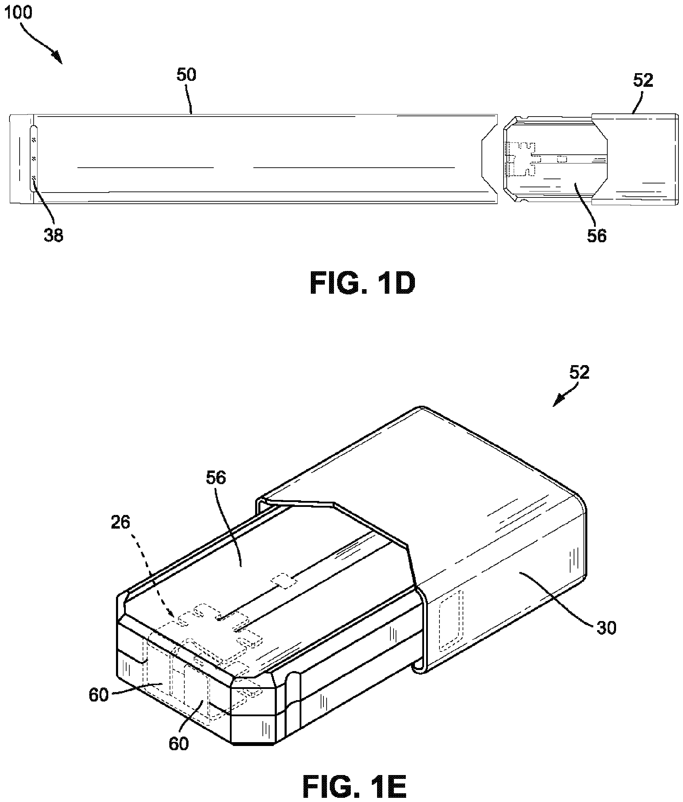

FIGs. 1A-1E illustrate example features that may be included in vaporizers consistent with implementations of the current subject matter. FIG. 1A shows a schematic view of a vaporizer device 100 that uses a cartridge 52, and FIGs. 1B-1E show views of an exemplary vaporizer device 100 with vaporizer body 50 and cartridge 52. FIGS. 1B and 1C show top views before and after connecting a cartridge 52 to a vaporizer body 50. FIG. 1D is a perspective view of the vaporizer device 100, which includes a vaporizer body 50 combined with a cartridge 52, and FIG. 1E shows a perspective view of one variation of a cartridge 52 holding a liquid vaporizable material. In general, when a vaporizer includes a cartridge (such as the cartridge 52), the cartridge 52 may include one or more reservoirs 56 of vaporizable material. Any appropriate vaporizable material may be contained within the reservoir 56 of the cartridge 52, including solutions of nicotine or other organic materials.

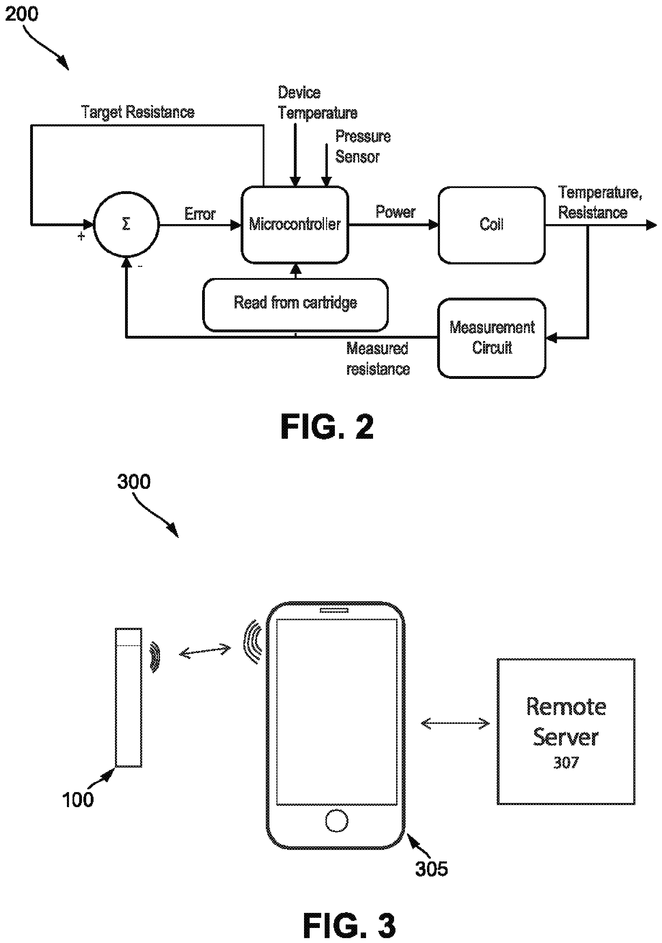

Examples of this data exchange circuit are described below, for example in reference to FIG. 2.

FIGs. 1B to 1E illustrate an example of a vaporizer device 100 with a vaporizer body 50 and cartridge 52. Vaporizer body 50 and cartridge 52 are shown unconnected in FIG. 1B and connected in FIG. 1C. FIG. 1D shows a perspective view of the combined vaporizer body 50 and cartridge 52, and FIG. 1E shows an individual cartridge 52. FIGs. 1B-1E an example including many of the features generally shown in FIG. 1A. Other configurations, including some or all of the features described herein, are also within the scope of the current subject matter.

The vaporizer device may be configured such that assembly of the device may be more manufacturable. For example, the device may require a number of operations to assemble a complete device. The manufacturing process may make use of assembly architectures that minimize the discrete number of manual line operations to increase throughput. Additionally, the device may make use of co-molded parts and other high volume production techniques to minimize parts count and reduce discrete system components. The device may also be constructed using an assembly process designed to facilitate semi-automated assembly methods making use of features that make automated assembly feasible. The assembly process may make use of techniques that result in as good as or higher first pass yield (FPY) rates making use of features that increase FPY.

The vaporizer device may be configured for battery assembly with a protection circuit module (PCM) attached to a raw cell prior to final assembly test and packing (FATP) to streamline device assembly. The PCM of a protection circuit and/or a fuel gauge may be attached to raw battery cells at the battery manufacturer or pack assemble manufacturer to increase production line safety and efficiency.

FIG. 3 shows a schematic representation 300 of communication between a vaporizer device 100, a user device 305 that wirelessly communicates with the vaporizer device 100, and a remote server 307 that may communicate directly with the vaporizer device 100 or through the user device 305. The user device 305 may be a hand-held mobile device such as a smartphone, smartwatch, tablet, etc., or a desktop or laptop computing device. As noted above, the user device 305 may optionally be a dedicated remote control device. In some aspects, the vaporizer device 100, the user device 305, and the remote server 307 may form a vaporizer system.

In general, as illustrated schematically in FIG. 3, any of the vaporizer apparatuses described herein (such as the vaporizer device 100) may remotely communicate with a remote server 307 and/or a user device 305 such as a wearable electronics device (e.g., Google Glass, smartwatch, smartwear, etc.) a smartphone, kiosk, tablet, personal computer, etc. Thus, any of these vaporizers 100 may include a communications hardware 34 that may be implemented through a communication chip (e.g., second communication hardware) in or on the vaporizer device 100. Examples of wireless chips may include a Bluetooth chip(e.g., Parani BCD 210, Texas Instruments (TI) CC2650 Bluetooth Single-Chip Solution, and/or the like), a near field communication (NFC) chip (e.g., Qualcomm's QCA1990 and/or the like) configured to enable near field communication and/or enhanced Wi-Fi or Bluetooth communication where near field communication is used for link setup. As will be described in detail below, one or more of these wireless circuits may be used for communication with or between the cartridge 52 in embodiments that are configured for reading a cartridge 52 as schematically shown in FIG. 1A. For example, NFC may be used to read an identifier 28 (as RFID tag) on the cartridge 52.

A wireless communication chip may include a Wi-Fi-enabled chip, such as TI's SimpleLink family's CC3000, that can hook the apparatus to Wi-Fi networks. In some implementations of the current subject matter, the wireless circuit comprises a subscriber identity module (SIM) card on board of the vaporizer, a Nano-SIM card, or the like (e.g., allowing 3G/4G cellular network communication). Alternative forms of communication may be used to establish two-way communication between a vaporizer device 100 and a user device 305.

Connection between the vaporizer device 100 and the user device 305 may be automatic (after an initial set-up) or may be initiated by the user through various settings or may be initiated by shaking the vaporizer device 100.

As mentioned above, any of the vaporizer apparatuses described herein that include a cartridge may be configured to recognize and/or identify the cartridge. One or more recognition/identification approaches may be used. The vaporizer may determine information about the cartridge and/or the vaporizable material held in the cartridge, such as one or more of: the type of vaporizable material (e.g., nicotine, cannabis, etc.), the concentration of vaporizable material, the amount of vaporizable material, the configuration of the cartridge (e.g., heater, electrical properties, etc.), the lot number of the cartridge, the date of manufacture of the cartridge, expiration date, etc. This information may be directly encoded on the cartridge or a reference indicator may be provided that the vaporizer (or a processor in communication with the vaporizer) may use as an index to look up some or all of this information, or a combination of reference number and directly encoded material may be provided.

In some implementations of the current subject matter, the cartridge may be recognized and/or identified by the engagement between the cartridge and the vaporizer. The cartridge may be configured to include a keyed interaction with the vaporizer. For example, the shape of cartridge may be detected by the vaporizer. For example, the cartridge may include n pins or protrusions. These pins can be detected by the vaporizer when the cartridge is inserted (e.g., by completing an electrical connection); for n pins, there are 2*ⁿ* possible combinations of markings.

The cartridge may be configured or identified based on an electrical property that the vaporizer can detect based on an electrical connection with the cartridge. For example, the vaporizer may make electrical contact through two or more electrical contacts with the heater and/or additional electrical contacts and may detect a characteristic resistance, inductance, or time response (e.g., time constant, RC time constant, LC circuit resonance, etc.).

In some implementations of the current subject matter, the cartridge may be recognized and/or identified by markings on the cartridge identified by the vaporizer. These markings may be visible or not visible to a user. For example, the cartridge may be marked with a characteristic UV, IR or other wavelength-specific ink that can be detected by the vaporizer, which may include, e.g., an emitter/detector pair specific to the marker(s). For example, markings may include an infrared-scannable barcode located on the cartridge. In some implementations of the current subject matter, the markings may be a pattern, such as a QR code, bar code, etc., that indicate information about the cartridge and/or the contents (vaporizable material) of the cartridge. The markings may be symbolic, including alphanumeric. The markings may be 'read' or detected directly by the vaporizer, which may include a camera or other optical detector, or it may be indirectly detected via communication with a second device (e.g., wearable, smartphone, etc.) having a camera or the like. For example, markings on the cartridge may be detected by a smartphone such as the user device 305; the smartphone may identify the marking using an application (e.g., software) on the smartphone to look up one or more properties from a look-up table, or it may directly communicate the marking to the vaporizer that may look up the properties, and/or it may communicate with a remote server that may look up the properties and communicate them to the vaporizer directly or through the smartphone.

In some implementations of the current subject matter, the cartridge may be recognized by RFID (Radio-Frequency identification) technology. RFID markers have been used in a wide array of applications for inventory control. Some RFID technologies use active devices which contain their own power source and others use passive RFID devices that interact with another powered device that causes the transfer of data without reliance on power at the passive device. For example, a cartridge may include one or more RFID chips or components that can be detected and read by a reader on the vaporizer to identify and receive information about the cartridge.

In some implementations of the current subject matter, the cartridge may be recognized and/or identified by communicating with a memory (e.g., EEPROM) on the cartridge through an electrical connection with the vaporizer. In implementations in which the heater is present on the cartridge, such as the exemplary vaporizer shown in FIG. 1A, it may be advantageous to use one or more of the electrical connections on the cartridge (e.g., contacts 60) that are also used to power and/or control the heater to communicate with the memory. This may be particularly challenging where the cartridge may engage with the vaporizer in more than one orientation, and/or where the heater is controlled through this same contact, and modulation of the applied/received electrical signals between the cartridge and the vaporizer may modify the control and/or temperature determination of the heater. One or more additional electrical contacts may be used in addition to those controlling the heater. In general, communication between the cartridge and the vaporizer may be one way (e.g., reading information about the cartridge and/or the vaporizable material from the cartridge by the vaporizer) or it may be two-way (e.g., reading information about the cartridge and/or the vaporizable material and writing information about the operation of the device, e.g., number of uses, duration of use, temperature settings, etc.). Information may be written to the cartridge, and this information may be used to derive other information about the cartridge, including the amount of material left in the cartridge, etc.

In general, any of the vaporizers described herein may estimate, measure and/or predict the amount of vapor and/or material (including active ingredients) in the vapor that can be delivered to a user. For example, as described in detail below, the apparatuses described herein may be used to determine and/or control dosing of the vaporizable material.

Information about the cartridge and/or a vaporizable material held in the cartridge may be particularly helpful in determining dose. For example information such as one or more of: the type of vaporizable material (e.g., nicotine, cannabis, etc.), the concentration of vaporizable material, the content of the vaporizable material, the amount of vaporizable material, the configuration of the cartridge (e.g., heater, electrical properties, etc.), the lot number of the cartridge, the date of manufacture of the cartridge, expiration date, the thermal properties of the vaporizable material, etc. may be used to accurately estimate dose. In some implementations of the current subject matter, dose and/or use information may be stored (written) on the cartridge (e.g., in a memory).

Vaporizers, vaporizer systems, and methods of using them for user-customization of device settings and drug usage based on activity patterns are also within the scope of the current subject matter. A vaporizers and/or vaporizer system consistent with the current description may allow a user to personalize a vaporizer and engage in social activities.

A vaporizer and/or vaporizer system consistent with implementations of the current subject matter may be configured to facilitate social interaction through the vaporizer. For example, a vaporizer may be configured to share usage information with others, such as third parties, e.g., health care providers, including doctors, etc. for better prescription and administration of medical treatment. A vaporizer and/or vaporizer system may also be configured to communicate with non-medical third parties (e.g., friends, colleagues, etc.), and with unknown third parties (making some or all information publically available). In some implementations of the current subject matter, the vaporizers described herein, either by themselves or in communication with one or more communications devices that are part of a vaporizer system, may identify and provide information about the operation, status or user input from the vaporizer to a public or private network. In some implementations of the current subject matter, a vaporizer and/or vaporizer system may be configured to provide one or more interactive games for use by the user and/or multiple users of different (or the same) vaporizers, including multi-player games that may be used with multiple different vaporizers. Games may be tied to the operation of the vaporizer and/or a user's manipulation of the vaporizer (e.g., based on accelerometer output, touch or lip sensing, draw detection, etc.).

A vaporizer and/or vaporizer system consistent with implementations of the current subject matter may also be configured to provide location information, possibly including one or more of information about user location in proximity to one or more of: other users (known or unknown users, specified or unspecified users, etc.), retailers, specific locations (lounges, clubs, vaporizer-friendly locations), etc. A vaporizer and/or vaporizer system may also be configured to facilitate the placing of orders based on use or operation of the vaporizer and/or vaporizer system.

A vaporizer may include a GPS capability or may access GPS information from another device in communication with the vaporizer as part of a vaporizer system.

As will be described herein in greater detail, a vaporizer may be connected to (e.g., in communication with) an additional (e.g., portable, wearable, smartphone, desktop, laptop, etc.) device, which may enable user programmable dose control, real-time usage monitoring, personalized use settings, device lockout and social features. For example, a vaporizer and/or vaporizer system may include features relating to security controls, including parental control, user age control/restriction and anti-theft control. A vaporizer and/or vaporizer system may include anti-theft and/or authentication functions that may lock or otherwise restrict use/operation of the device when stolen and/or when used with counterfeit parts, and may also be configured to allow locking (e.g., parental-lock) for child-proofing, or otherwise preventing unauthorized third party operation. An anti-counterfeiting or other lock-out feature of this type may be implemented using cartridge identifiers. For example, cartridge identifiers from a verified source or supplier can include a hash or some other verification code as part of the identifier, and the vaporizer may lock out use of the vaporizer if a cartridge lacking the necessary hash or verification code is coupled to a vaporizer body. Such a feature can be used to require that a user identity verification is entered at the device in communication with the vaporizer to cause the device to unlock use of the vaporizer. In one example, a cartridge may include an identifier that indicates that it contains a controlled substance and a user may be required by the application on the device (in response to determining this about the cartridge via identifier information received from the cartridge) to verify his or her identity (e.g., via a password entry, a biometric identity verification, etc.) and for the application to verify that the identified user is authorized for use of the controlled substance prior to being able to use the vaporizer with tat cartridge coupled to the vaporizer body. In another example, a nicotine or cannabis-containing cartridge may require user identity verification such that the application on the device only allows use of the vaporizer is a user identity is verified and the user has been registered as being above the minimum age.

In some examples, a security control may be incorporated via an application executing on a device in communication with a vaporizer. For example, an application executing on a device in communication with a vaporizer can receive an identifier of the vaporizer itself or alternatively/additionally of the cartridge and may, based on or otherwise using the identifier, determine whether a security setting is included in a user profile or other settings associated with the vaporizer or cartridge. Consistent with implementations of the current subject matter, such functionality may be entirely or partially included within the vaporizer (and/or cartridge) or they may be distributed between the vaporizer and a user interface that may be presented on an additional device that is part of a vaporizer system, such as a wearable and/or handheld device, tablet, laptop, desktop, electronic kiosk, etc., operating control logic. Control logic or other software functionality for providing these features may include a user interface, and may provide input/output and analysis capability for modulating operation of the vaporizer. Examples of the first communication hardware of the device and/or the second communication hardware of the vaporizer are described above.

### CARTRIDGE RECOGNITION.

In general, a vaporizer may include one or more techniques for cartridge recognition and/or communication, including the use of a marker (e.g., QR code, IR or US marker, etc.), mechanical and/or electronic keying, or the like. In particular described herein are methods and apparatuses for electronic cartridge recognition and communication, in which the cartridge may electronically communicate, via one-way or in some implementations of the current subject matter two-way (including duplex or multiplex) transmission of information, between a cartridge and the vaporizer so that information may be received by the vaporizer from the cartridge. This information may include information about the vaporizable material and/or the cartridge, such as one or more of: type of vaporizable material, concentration of vaporizable material, amount of vaporizable material, volume of the vaporizable material, properties of the vaporizable material (e.g., thermal properties, composition, etc.), configuration of the cartridge (e.g., heater, electrical properties, etc.), lot number, date of manufacture, expiration date, identity verification for the cartridge, and the like.

A cartridge including an identification circuit (also referred to herein as a cartridge or pod identification circuit) may be configured to communicate and transfer such information from the cartridge to the vaporizer. The cartridge identification circuit may include a memory (e.g., an EEPROM). In cartridge variations in which the heater (e.g., a resistive heating element such as a resistive coil or wire) is controlled by the application of power onto one or more (e.g., 2, 3, 4, etc.) heater electrical contacts that communicate with corresponding contacts on the vaporizer, the cartridge identification circuit may communicate with the vaporizer through the same heater electrical contacts, despite the increased complexity and potential for disruption of the heater.

A system for identifying vaporizer device cartridges (e.g., Pod identifier) may be implemented. More particularly, an identification system may utilize an identification chip, a pattern, a tag, a layering of paint applied to a cartridge, a cartridge packaging, the cartridge identification circuit, and/or the like, which may contain or convey information (e.g., electronically-stored information). The information could be read using cameras, tag readers (such as Radio-Frequency identification (RFID) technology), optical sensors, through the contacts connecting the cartridge to the vaporizer device (e.g., pogo pins), through a direct and/or wired connection, and/or via other information gathering systems. Readable or more complex rewritable memory could be utilized, depending on the implementation (e.g., based on cost). For example, the information may be used to control how the cartridge performs, convey the information to the user device, an external application, or to a server for analysis.

The vaporizer device may be configured such that inserting a cartridge/pod into the vaporizer body 50 feels the same to the user every time. For example, a consistent (device-to-device) pod retention force between the vaporizer body and the cartridge may be within a 25% tolerance range. In some aspects, the tolerance range may be greater than or less than 25%. To achieve a consistent pod retention force, a spring loaded contact design for pod interface may be designed to withstand repeated connections between the pod and the vaporizer body. **The** spring-loaded contact design may include a spring configured to provide the pod retention force consistently over time and configured to reduce instances of permanent spring deformation. The vaporizer device and/or the spring-loaded contact design may be configured to provide a tolerance stack to compensate for the extremes of receptacle contact, cartridge contact, and/or pin travel to ensure superior pod electrical signal integrity between the pod and vaporizer body. **The** vaporizer device may be configured to pass a wobble testing standard and, in conjunction with pod retention, configured to provide adequate spring force to ensure superior electrical signal integrity with pod. The vaporizer device may be configured to improve product reliability by implementing device-side wiping/cleaning action on pod-side contacts (e.g., cartridge contacts 60). For example, a wiping action may be created on the pod's contacts when a pod is inserted into the device (e.g., cartridge receptacle 54) to create better electrical connectivity. The wiping action may be accomplished by a mechanical cover or wipe included on the vaporizer body 50 and/or the pod 52. **The** mechanical cover or wipe may be configured to retract and wipe the receptacle contacts 62 and/or the cartridge contacts 60 upon insertion of the pod 52 into the device. While a mechanical wipe is described herein, computer or other wiping methods may also be implemented.

The term "pod" is used generically in the following description, as well as throughout this document, to refer to a vaporizer cartridge (e.g., a part of the vaporizer that contains the vaporizable material in a reservoir, such as cartridge 52 of FIG. 1A-1E) or other container and that can be refillable when empty or disposable in favor a new pod containing additional vaporizable material of a same or different type. For example, a multi-use vaporizer may include a heating chamber (e.g., an oven) configured to receive a pod having a reservoir or the like for holding the vaporizable material. In some implementations of the current subject matter, a vaporizer can include functionality for communicating with a pod containing a vaporizable material. The vaporizer may also be in communication with a device (e.g., a mobile phone, the user device 305, and/or the like) that is part of a vaporizer system, although this is not required. The vaporizer, whether under control of or otherwise in communication with a device that is part of a vaporizer system or as a standalone unit separate from a vaporizer system, may be configured such that operation of the vaporizer may be modified, controlled, etc. based on one or more parameters that are received from the pod or are accessed from a database or other information source (e.g., remote server 307) based on the identification of the pod. For example, a vaporizer consistent with implementations of the current subject matter can be configured to recognize a pod and identify (and in some cases transmit) or otherwise acquire information about the pod (e.g., a "Pod identifier"). In other words, a computing element, such as the controller 24 or the like, that is associated with a vaporizer body may obtain information about the pod via a of data exchange. A variety of methods of pod recognition/identification by a vaporizer are within the scope of the current subject matter. Any of the approaches described herein may be performed with or without the addition of wireless communication/connectivity, although such wireless connectivity as described herein may be advantageously applied.

The term "app" is used generically in the following description, as well as throughout this document, to refer to a user interface configured to enable a user to interact with a communication device (or optionally devices) in communication with the vaporizer. Such a device may be a component of a vaporizer system as discussed above, and can include first communication hardware, which can establish a wireless communication channel with second communication hardware of the vaporizer. For example, a user device used as part of a vaporizer system may include a general purpose computing device (e.g., a smartphone, a tablet, a personal computer, some other user device such as a smartwatch, the user device 305, and/or the like) that executes software to produce the user interface for enabling the user of the user device to interact with a vaporizer.

Consistent with some implementations of the current subject matter, a vaporizer and/or vaporizer system may be configured to determine a Pod identifier to retrieve pod information and information regarding how the pod was used (e.g., data location to track usage patterns, switching success rate of consumers in specific geolocations and specific demographics to understand areas of focus for improving switching rates). The vaporizer system may be further configured to integrate with the app to obtain more information about a consumer and the consumer's intended use (e.g., if the consumer wants to lower their nicotine consumption over time, for example, the device may be used algorithmically by lowering an amount of nicotine or an amount of vapor over time which may include different pod configurations of 5%, 3%, and/or 1.7% nicotine). The information about the consumer and/or the consumer's intended use may be determined based on user feedback. For example, the app may ask or prompt the user for answers regarding the consumer's preferences and/or intended use. The user feedback may also include learn behavior based on past usage. The information retrieved from the pod and/or the user feedback may be included in a user profile, a use profile, a device profile, and/or the like.

The vaporizer system may be configured such that the app communicates with the vaporizer device regarding how to algorithmically control vapor delivery, and/or other adjustable features. The app may provide recommendations to the consumer based on the intended use, user profile, use profile, Pod identifier, and/or like. For example, the app may provide a recommendation to a user who wants to meet a usage goal to switch from a 5% nicotine pod to a 3% nicotine pod. The vaporizer system may then validate, based at least in part on the Pod identifier of the pod, that the consumer actually did switch to the lower nicotine pod (e.g., 3% pod) before the vaporizer system enables the vaporizer device functionality, thus disallowing the consumer's continued use of the higher (e.g., 5%) pod. The vaporizer system may also be configured to deliver a same amount of vapor to a user but adjust the nicotine concentration. The vaporizer system may adjust an operating temperature of the vaporizer to alter a total particulate matter (TPM) (e.g., nicotine) delivered to a user.

The vaporizer system may also be configured to prevent consumers from refilling pods based on the Pod identifier, which may improve product safety. The vaporizer system, in response to determining a Pod identifier of a pod connected to the vaporizer, may track usage of the pod and determine if the usage is consistent with a pod that has been tampered with, refilled, reused, and/or the like. For example, the vaporizer system may determine that the usage of the pod exceeds a threshold for a number of puff that could be taken for the vaporizable material in the pod. This may indicate that the pod was refilled and the vaporizer system may disable functionality of the pod and/or vaporizer device. In other aspects, the vaporizer system may determine from the Pod identifier that the particular pod has been used with a number of vaporizer device that exceeds a threshold number of devices consistent with normal use (e.g., re-sold). The vaporizer system may also prevent use of the pod and/or vaporizer based on other information obtained from the Pod identifier and/or pod, such as a location, an age of the pod, a manufacturer identifier, a retailer identifier, a number of insertions, a number of puffs, and/or the like.

The vaporizer system may be configured for one-directional data transfer for information regarding the pod (e.g., reading data off the pod, such as manufacturing dates, and/or the like). The vaporizer system may be configured for bidirectional data transfer regarding the pod (e.g., reading and writing to/from the pod). For example, user preferences for how vapor is delivered (e.g., per a particular stock keeping unit (SKU)) may be recorded (without needing the app to control preferences), by writing the preference information to the pod. Identification of pod may also be based on a resistance of a heater coil. In some aspects, the device may measure a resistance to determine a level of nicotine and/or a flavor of the pod. For example, if a 5%, a 3%, or a 1.7% pod may be configured to use different coil resistances or discrete ranges of coil resistance for heating the different levels of nicotine pods. The pod may store this information using just a few bits of data (e.g., 3 bits). The pod may also include a larger number of bits to store more information and contain a specific format of bits to store information associated with the pod, user, vaporizer device, usage, and/or the like. In some aspects, the vaporizer system may combine the coil resistance with other pod information obtained based on the Pod identifier. The vaporizer system may also use optical or QR or emitter/detector pair in the device looking for dots in specific locations on the bottom of the pod to determine a flavor or other pod information.

Usage tracking and management may be a feature that may be beneficial to the user. The specific data gathered may help determine if changes need to be made to the device, either manually by the user, or automatically, based on specific real-time, minimum, maximum, or averages of data gathered. Vapor and nicotine levels may be helpful information to obtain. Puff start time and length may also provide the user with details on how their use of the device may vary, depending on their inhalation. The device may recognize when a user is stepping down their usage, and give more or fewer nicotine in puffs. In some aspects, the vaporizer device can communicate to a user how much they have used of their daily, weekly, or monthly allotment of puffs, nicotine, material vaporized, and/or the like. Adjustments may also be made to the device based on the time of day. For example, if the user prefers higher levels of nicotine at night, the device may be set to automatically deliver higher levels at night. Similarly, information regarding the altitude and temperature may be collected, providing similar benefits. One or more light-emitting diodes (LED) on the cartridge and/or vaporizer body may change depending on the flavor and/or cartridge used. Alternatively, these settings may be set at the server, and specific settings may be tested and implemented real-time, in-field. The information may be tracked and settings saved for the user among multiple cartridges, then passed from one cartridge to another.

The vaporizer system may also prompt the user for information regarding preferences to determine if changes should be made to the vaporizer system. For example, the user may be prompted to answer questions regarding past use (e.g., "What kind of smoker are you?", "What type of cigarettes do you smoke?", "Are you a menthol smoker/unfiltered smoker/etc.?", "How many cigarettes per day?"). Based on the user answers, there may be a different set of flavors and/or associated total particulate matter (TPM) that are most appropriate for a certain user (e.g., 20 cigarette/day vs. a menthol smoker). After gathering usage data, the system may provide recommendations based on previous smoking profiles. In some aspects, the app may periodically ask about current smoking usage.

In some implementations of the current subject matter, usage tracking may be based on a gesture with the vaporizer device (e.g., tapping the vaporizer device a specific number of times, shaking the vaporizer device for a specified duration of time, moving the vaporizer device in a specific pattern), or other user input to record data (e.g., cigarette usage, having smoked a cigarette) rather than having to enter information into the app. User input to characterize usage and satisfaction with a cessation program and/or a particular flavor/concentration during a time period may be used to improve future recommendations. For example, satisfaction or usage reviews may be combined with the flavor data and other demographic data to enhance the user profile (flavor/cessation/reduction journey) to make recommendations on flavor, strength, total particulate matter, etc. and/or combinations of the above. For example, vapor thicknesses or operating temperatures (which produce different vapor thicknesses) may be more appropriate for certain flavors.

In some implementations of the current subject matter, usage tracking may further include tracking usage relative to one or more usage limits set by the user. The user may set the usage limit by inputting, via a user interface, a value corresponding to the usage limit. To help the user determine an appropriate usage limit, the user device may output, via a user interface, one or more usage statistics associated with the user including, for example, an average daily, weekly, and/or monthly quantity of puffs. Alternatively and/or additionally, the user may indicate a goal to reduce usage, in which case the usage limit may be determined automatically based on a previous level of usage. For example, if the user puffed on the device an x quantity of times over a first unit of time (e.g., day, week, month, and/or the like), then the usage limit may be set to an *x - n* quantity of puffs for a subsequent unit of time (e.g., the next day, week, month, and/or the like).

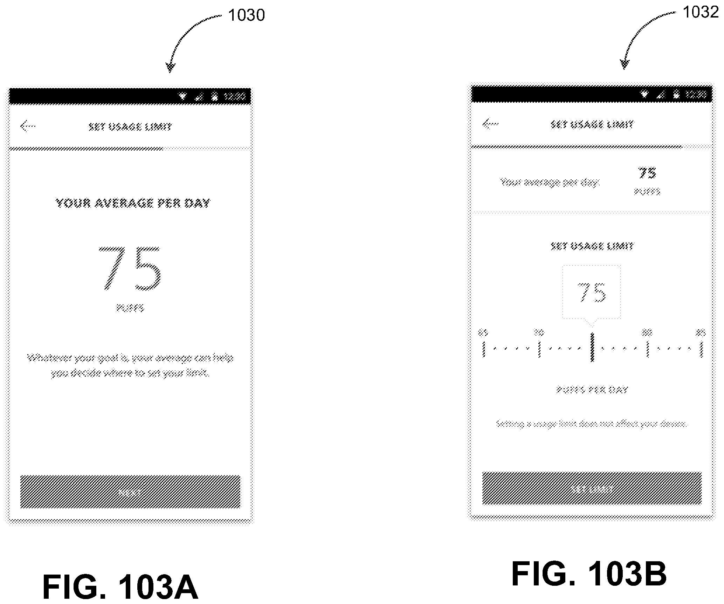

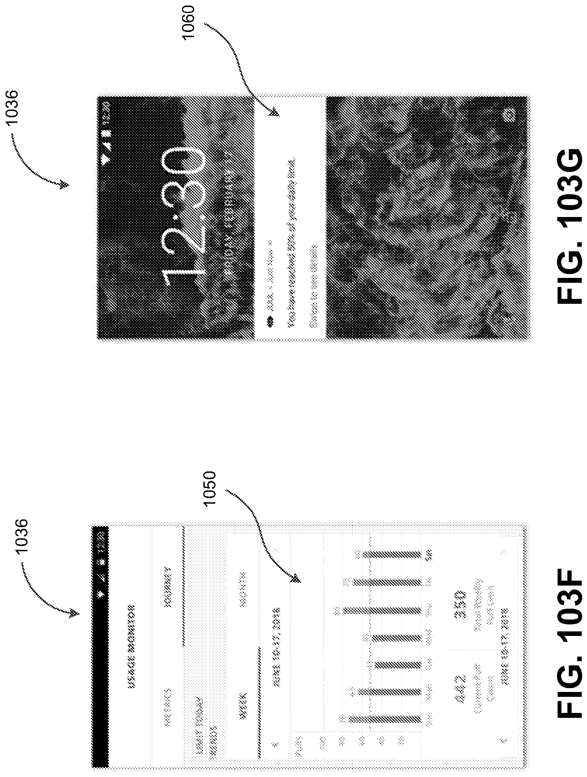

FIGS. 103A-B depict examples of user interfaces consistent with implementations of the current subject matter. Referring to FIG. 103A, the user device may display a user interface 1030, which may show one or more usage statistics associated with the user in order to facilitate the setting of a usage limit for the user. In the example shown in FIG. 103A, the user interface 1030 is showing an average daily use in terms of an average quantity of puffs taken each day. However, it should be appreciated that the user interface 1030 may also display other statistics in a same and/or different granularity including, for example, average daily, weekly, and/or monthly consumption of an active ingredient as measured in a quantity of equivalent cigarettes, weight, and/or the like.

Referring to FIG. 103B, the user device may display a user interface 1032, which may be configured to receive, from the user, an input setting the usage limit. In the example shown in FIG. 103B, the user interface 1032 may include a scrolling horizontal dial, which may be adjusted in order to increase and/or decrease the value of the usage limit. Nevertheless, it should be appreciated that the user interface 1032 may include a different element for inputting the usage limit. Moreover, usage limit may be set in terms of a variety of different quantities including for example, the quantity of puffs, the quantity of pods used, the quantity of active ingredients consumed, and/or the like.

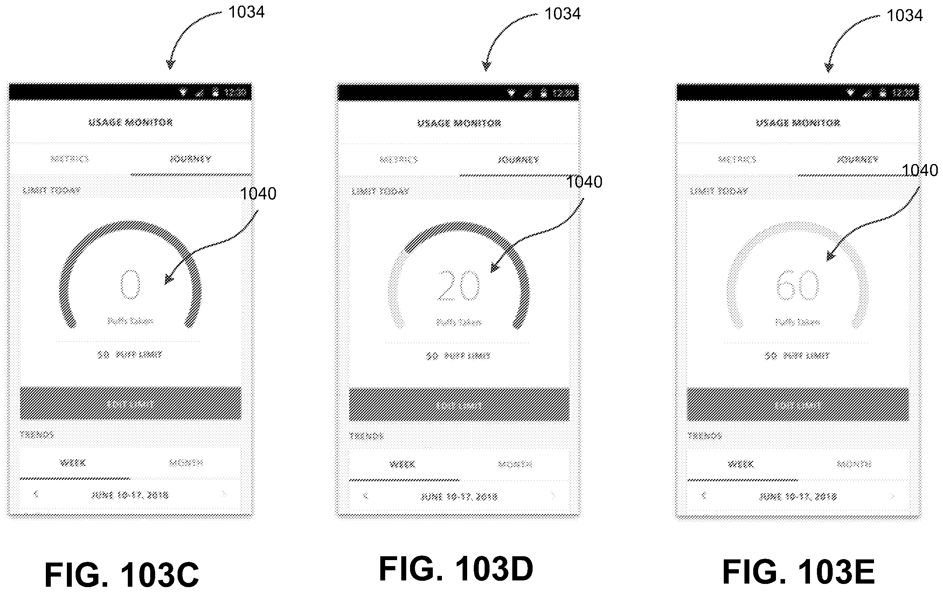

In some implementations of the current subject matter, usage tracking may further include notifying the user of the user's progress towards reaching a usage limit. FIG. 103C depicts an example of a user interface 1034, which depicts a progress meter 1040 showing that a user has taken zero puffs of the 50 puff daily limit set for the user. Referring to FIG. 103D, the progress meter 1040 may be updated to show that the user has taken 20 puffs of the 50 puff daily limit set for the user. Furthermore, as shown in FIG. 103E, the progress meter 1040 may be further updated to shown when the user has exceeded the 50 puff daily limit set for the user. It should be appreciated that the progress meter 1040 may be one type of visual representation for displaying the user's progress towards reaching a usage limit. Other types of visual representations may also be used including, for example, the bar graph 1050 shown in the example of the user interface 1036 depicted in FIG. 103F. As shown in FIG. 103F, the bar graph 1050 may display one or more usage statistics in which usage below is usage limit are shown in one manner (e.g., using a first color, symbol, and/or the like) and usage above the usage limit is shown in a different manner (e.g., using a second color, symbol, and/or the like).

FIG. 103E depicts another example of a user interface 1038 notifying the user of the user's progress towards reaching a usage limit. The user interface 1038 may include a banner 1060 that the user device displays in order to convey an alert that the user has reached a threshold proportion (e.g., 50% or a different portion) of the usage limit set for the user. It should be appreciated that the user may be able to set the threshold proportion at which the notification is triggered. Moreover, the user device may convey the alert to the user in a different manner including, for example, a visual alert (e.g., LEDs), an audio alert, a haptic alert, and/or the like. The notification may be provided by the user device and/or the vaporizer device coupled with the user device.

In some implementations of the current subject matter, the setting of a usage limit may be a tracking mechanism that does not affect the operations of the vaporizer device. For example, the vaporizer device may remain active even when the user has exceeded the usage limit set for the user. Alternatively, the operations of the vaporizer device may be contingent upon the user's progress towards reaching the usage limit set for the user. For instance, the vaporizer device may be configured to shut down for a period of time in response to the user having reached the usage limit set for the user. The vaporizer device may be configured to adjust the quantity of active ingredient delivered to the user (e.g., by modulating the total particulate matter (TPM)) based on the user's progress towards reaching the usage limit set for the user. Accordingly, the vaporizer device may deliver proportionately smaller quantity of the active ingredient as the user moves closer to exceeding the usage limit set for the user.

In some implementations of the current subject matter, the vaporizer device and/or the vaporizer system may be configured to generate, based on the usage pattern associated with a user and/or group of similar users, recommendations on intake time, intake frequency, flavor, strength, total particulate matter, and/or the like. For example, one or more groups of similar users may be identified based on similarities in individual user demographics, preferences, cessation goals, and/or the like. Groups of similar users may be identified by applying one or more clustering algorithms including, for example, k-means clustering, mean-shift clustering, fuzzy C-means clustering, expectation-maximization clustering, hierarchical clustering, and/or the like. The vaporizer device and/or the vaporizer system may generate recommendations by applying a filtering technique (e.g., collaborative filtering, content-based filtering, and/or the like) such that the recommendation for a first user may include a first type of pod (e.g., flavor, strength, total particulate matter, and/or the like) based on the first type of pod being similar to a second type of pod preferred by the first user and/or preferred by a second user who is similar to the first user.

In some implementations of the current subject matter, the vaporizer device and/or the vaporizer system may generate the recommendation for a user by at least identifying one or more correlations present within the usage pattern of the user and/or a group of similar users. For example, the vaporizer device and/or the vaporization system may identify a correlation between total intake of an active ingredient (e.g., total daily, weekly, and/or monthly intake of nicotine, cannabis, and/or the like), the type of pod (e.g., flavor, strength, total particulate matter, and/or the like), and/or a puff pattern. As used herein, "puff pattern" may include a timing of individual puffs (e.g., first puff at 10 A.M., second puff at 10:15 AM, etc.), a frequency of individual puffs (e.g., quantity of puffs per minute, hour, etc.), a dosage of individual puffs, and/or the like. Accordingly, the vaporizer device and/or the vaporizer system may generate a recommendation on the type of pod and/or a puff pattern that decreases and/or minimizes total intake.

For instance, the vaporizer device and/or the vaporizer system may recommend a first type of pod instead of a second type of pod to a user if the vaporizer device and/or the vaporizer system determines that the total intake of the user and/or group of similar users may be lower when the user and/or group of similar users uses the first type of pod than the second type of pod. The vaporizer device and/or the vaporizer system may further recommend the first user to adopt a puff pattern (e.g., timing, frequency, dosage, and/or the like) that is associated with a lower total intake. It should be appreciated that the recommendations on puff pattern may be specific to the type of pod. As such, the vaporizer device and/or the vaporizer system may respond to the use of the first type of pod (e.g., the first type of pod being inserted into the vaporizer device) by at least providing a recommendation on a puff pattern (e.g., timing, frequency, dosage, and/or the like) that reduces and/or minimizes a total intake for the first type of pod.

In some implementations of the current subject matter, the vaporizer device and/or the vaporizer system may generate a recommendation for a user based on the user's usage pattern for combustible cigarettes. For example, the user's usage pattern for combustible cigarettes may include a brand of combustible cigarettes, a type of combustible cigarettes (e.g., light, menthol, and/or the like), the quantity of combustible cigarettes consumed (e.g., quantity of combustible cigarettes used in a day, week, etc.), and/or the like. The recommendations may include a type of pod and/or a puff pattern that mimics the user's usage pattern for combustible cigarettes. For instance, the recommendation may include a certain pod strength, puff duration, puff frequency, puff strength, dosage delivered with each puff, and/or a length of time between consecutive puffs that would deliver, to the user, a same quantity of the active ingredients as the combustible cigarettes used by the user.

In some implementations of the current subject matter, the vaporizer device and/or the vaporizer system may be configured to adjust the operating parameters of the vaporizer device based on the recommendations. Adjustments corresponding to at least a portion of the recommendations may be made automatically and/or in response to a user input indicating the user accepting at least the portion of the recommendations. For example, the vaporizer device and/or the vaporizer system may identify, based at least on a pod identifier, that the user has inserted the first type of pod recommended to the user into the vaporizer device. In response to the user inserting the first type of pod recommended to the user, the vaporizer device and/or the vaporizer system may adjust the temperature of the heater in accordance with the puff pattern (e.g., timing, frequency, dosage, and/or the like) also included in the recommendation. Alternatively and/or additionally, the vaporizer device and/or the vaporizer system may adjust the total particulate matter (TPM) of an active ingredient in the vapor produced by the vaporizer device (e.g., nicotine, cannabis, etc.) based on the recommendation.

In some implementations of the current subject matter, the vaporizer device and/or the vaporizer system may be further configured to generate the recommendations based on one or more other factors including, for example, device health, battery life, and/or the like. The vaporizer device and/or the vaporizer system may also generate recommendations to accommodate periods of time during which the vaporizer device may be unavailable to the user (e.g., flight, meeting, and/or the like) by at least identifying correlations between the length of time between puffs, types of pods, and/or puff patterns. For example, the vaporizer device and/or the vaporizer system may detect an absence of puffs for an x length of time when the user and/or group of similar users uses a certain type of pod and/or puff pattern. As such, the vaporizer device and/or the vaporizer system may recommend for the user to use that type of pod and/or observe the puff pattern prior to the time period during which the vaporizer device is unavailable to the user. For instance, the vaporizer device and/or the vaporizer system may determine that the user and/or the group of similar user may not take any puffs for four hours after taking 10 puffs of a 5% strength mango flavored pod. As such, to prepare the user for a four-hour flight during which the vaporizer device is unavailable to the user, the vaporizer device and/or the vaporizer system may recommend the user to take 10 puffs of a 5% strength mango flavored pod prior to the flight.

Device information such as power output, battery voltages, and charging details (start time, length, beginning and ending battery levels, and/or the like) may also be beneficial in the user learning about their usage. Error conditions, such as a battery fault, communication, pressure sensors, light-emitting diode (LED) sensors, and battery fatigue may be tracked, to help identify issues with the device or cartridge.

A vaporizer device cartridge identification system may also have social media capabilities, where various consumption and usage information could be provided by users on various social media sites. This may be beneficial from a marketing standpoint, as "word-of-mouth" on social media is a form of free advertisement and social media is essential to individual business growth. "Golden Ticket" cartridges may alert users that they have won something specific, such as a free pack of cartridges. This "Golden Ticket" feature may also be implemented with social media capabilities, as discussed earlier.

A consumption tracking feature may identify various details about the cartridge itself, which may provide very useful information to the user, as well as, provide possibilities of increased sales. The ability to identify when a pod is near empty may provide options to automatically order new cartridges, or alert the user that new cartridges need to be ordered. This may motivate a casual user to order more cartridges, preventing the user from finishing a cartridge and forgetting to order more, or delaying in doing so, due to manually needing to buy them. Additionally, customer satisfaction surveys and/or feedback may be prompted to the user as a cartridge is being finished, which often is the best time to learn feedback about the device or specific cartridge and/or flavor. Marketing opportunities may be considered, as there may be prompts sent to the user for discounts and/or multi-packs for the same or different flavors, based on consumption.

**The** identification system for the vaporizer device cartridges may include various safety features such as counterfeit identification and/or prevention. The system may identify if a different manufacturer's cartridge is used, in which case the cartridges will not be heated, rendering them useless. This may provide insurance that consumers would not use the vaporizer with a different manufacturer's cartridge because of the availability of different flavors and/or the cartridges were less expensive. Other safety features may include anti-theft detection. The cartridge may be verified for a specific device or an external device, such that if a cartridge were stolen, the cartridge would be unable to be used with a different vaping device. Another safety feature may include the implementation of thresholds, such as the number of uses per cartridge, and/or the number of times the cartridge could be refilled, limiting the use of competitors' cartridges and/or counterfeit refilling.

Another useful implementation of the identification system may be point-of-purchase and/or cartridge tracking information. The location and/or date of when the cartridge was initially purchased, as well as vendor information, is beneficial both from a legal and safety standpoint and/or from a marketing standpoint. For example, if a cartridge is discovered in possession of someone under-age, the purchase information of the cartridge may identify whether a vendor is not performing age verification at the point-of-purchase or if the cartridges are being purchased by someone "of-age" and being provided to the minor. From a marketing standpoint, if it is determined that a high volume of cartridges are purchased from a specific vendor, marketing may adjust their strategies to improve sales. Additionally, recalls on specific batches of cartridges may be easier to track, as a notification may be provided to the user that there is a recall on the specific cartridge.

**The** cartridge identification circuit may also be configured so that the cartridge may be inserted into the vaporizer in multiple orientations without disrupting the cartridge identification circuit operation.

**In** some implementations of the current subject matter, a vaporizer may be configured to both read from and write to the memory, such as when a cartridge identification circuit is used. In this example, the vaporizer may write to the cartridge identification circuit. As mentioned above with reference to FIGS. 1A and 2, a vaporizer may include a controller that controls the application of power to the heater from the battery, to heat and therefore vaporize the vaporizable material. Any of these controllers may include a printed circuit board (PCB) and may further comprise: a microcontroller; switches; resistance measurement circuitry comprising a reference resistor or Wheatstone bridge and differential operational amplifier; and an algorithm comprising logic for control parameters. In some implementations of the current subject matter, the controller (e.g., the microcontroller, processor, etc.) cycles the switches at fixed intervals to measure the resistance of the resistive heating element relative to the reference resistor, and applies the algorithm control parameters to control the temperature of the resistive heating element. This same circuitry controlling the heater may be adapted to read and/or modify the memory in a cartridge connected through the heater electrical contracts.

**As** illustrated in the block diagram of FIG. 2, the vaporizer may utilize a proportional-integral-derivative controller or proportional-integral-derivative (PID) controller programmed to follow a particular proportional-integral-derivative control law algorithm. A proportional-integral-derivative controller calculates an "error" value as the difference between a measured process variable and a desired set point. When proportional-integral-derivative based control is enabled, power to the coil is monitored to determine whether or not acceptable vaporization is occurring. With a given airflow over the coil, more power will be required to hold the coil at a given temperature if the device is producing vapor (heat is removed from the coil to form vapor). If power required to keep the coil at the set temperature drops below a threshold, the device indicates that it cannot currently produce vapor. Under normal operating conditions, this indicates that there is not enough liquid in the wick for normal vaporization to occur.

In parallel with such a proportional-integral-derivative controller, the vaporizer controller may also monitor changes in the load of the heater contacts (electrodes) to read from the cartridge memory to identify the cartridge and receive information from the cartridge, as described above.

The printed circuit board may therefore further include logic capable of detecting a signal (change in resistance) on the heater contacts when the memory is outputting information stored in the memory. When the microcontroller is running the proportional-integral-derivative control law algorithm, in addition to detecting the difference between a set point and the coil temperature (error) to control power to the coil so that the coil reaches the set point temperature, (e.g., between 200°C and 400°C), the microcontroller may also decode a digital signal sent along the heater contracts from the cartridge, where the received signal includes information about the cartridge and/or the vaporizable material within the cartridge.

A battery or other power source may power the microcontroller (MCU). The microcontroller may turn on power to the heater for a predetermined time period (e.g., for 1 ms every 100ms) so that the voltage between a reference voltage (e.g., R_{ref} or R₂) and R_COIL may be measured by the MCU. When Q2 is off, the control law controls Q1 with PWM (pulse width modulation) to power the coil (battery discharges through Q1 and R_COIL when Q1 is on). A signal applied by the memory at the heater electrode contacts by the memory may be detected as a change in the R_{coil}. In some implementations of the current subject matter of the device, the device body further comprises at least one: second heater contact; a power switch; a pressure sensor; and an indicator light.

**In** general, the resistance of the heating element (which is the resistance between the contacts) may be an input to the microcontroller. In some cases, the resistance may be determined by the microcontroller based on a measurement from a circuit with a resistor with at least one known resistance, for example, a Wheatstone bridge. Alternatively, the resistance of the heating element may be measured with a resistive voltage divider in contact with the heating element and a resistor with a known and substantially constant resistance. The measurement of the resistance of the heating element may be amplified by an amplifier. The amplifier may be an op amp or instrumentation amplifier. The amplified signal may be substantially free of noise. In some cases, a charge time for a voltage divider between the heating element and a capacitor may be determined to calculate the resistance of the heating element. In some cases, the microcontroller may deactivate the heating element during resistance measurements. The resistance of the heating element may be a function of the temperature of the heating element such that the temperature may be directly determined from resistance measurements. The output of the memory (digital signal output) may also be determined from these resistance measurements. Determining the temperature directly from the heating element resistance measurement rather than from an additional temperature sensor may generate a more accurate measurement because unknown contact thermal resistance between the temperature sensor and the heating element is eliminated. In addition, determining the output of the memory based on the small changes (e.g., detectable using the Wheatstone bridge in circuitry in the vaporizer) may be performed without compromising the control of the heater as based on the change in thermal resistivity. The temperature measurement may be determined directly while ignoring the effect of the output of the memory; separately or in parallel this output may be digitally decoded by the microprocessor.

**The** PID control block diagram shown in FIG. 2 is an example of a resistance measurement circuit used in this PID control scheme. In FIG. 2, the block diagram includes a measurement circuit that can measure the resistance of the resistive heater (e.g., coil) and provide an analog signal to the microcontroller, a device temperature, which can be measured directly by the microcontroller and/or input into the microcontroller, and an input from a sensor (e.g., a pressure sensor, a button, or any other sensor) that may be used by the microcontroller to determine when the resistive heart should be heated, e.g., when the user is drawing on the device or when the device is scheduled to be set at a warmer temperature (e.g., a standby temperature). The measurement circuit may also decode the change in the measured electrical property (e.g., resistance) at the heater electrical contacts to determine the cartridge information.

**In** FIG. 2, a signal from the measurement circuit goes directly to the microcontroller and to a summing block. In the measurement circuit signals from the measurement circuit are fed directly to the microcontroller. The summing block in FIG. 2 is representative of the function which may be performed by the microcontroller when the device is heating; the summing block may show that error (e.g., in this case, a target resistance minus a measured resistance of the resistive heater) is used by a control algorithm to calculate the power to be applied to the coil until the next coil measurement is taken.

In the example shown, signal from the measurement circuit may also go directly to the microcontroller. The resistive heater may be used to determine a baseline resistance (also referred to herein as the resistance of the resistive hater at an ambient temperature), when the device has not been heating the resistive heater, e.g., when some time has passed since the device was last heating. Alternatively or additionally, the baseline resistance may be determined by determining when coil resistance is changing with time at a rate that is below some stability threshold. Thus, resistance measurements of the coil may be used to determine a baseline resistance for the coil at ambient temperature.

A known baseline resistance may be used to calculate a target resistance that correlates to a target rise in coil temperature. Similarly, fluctuations in this baseline resistance at the appropriate frequency corresponding to the output of the memory (EEPROM) may be decoded as information from the cartridge memory. The configuration shown in FIG. 2 represents an example of a data exchange circuit consistent with implementations of the current subject matter in which data may be passed between a cartridge memory (e.g., in implementations in which an identifier 28 of the cartridge 52 includes the cartridge memory for storing information about the cartridge 52) and a controller 24 that is part of a vaporizer body 50 to which the cartridge 52 is coupled. Such a data exchange circuit allows for data (e.g., one or more parameters of the cartridge, a vaporizable material contained within the cartridge, etc.) may be passed between the cartridge memory and a controller 24 that is part of the vaporizer body 50.

The example of FIG. 2 provides for both delivery of electrical energy from a power source 22 that is part of the vaporizer body 50 to a atomizer 26 that is part of the cartridge 52 and exchange of data between an identifier 28 on the cartridge 52 and a controller 24 that is part of the vaporizer body 50 via engagement of just two mating electrical contacts (cartridge contacts) on the cartridge 52 with respective electrical contacts (vaporizer body contacts) on the vaporizer body 50. Other implementations of a data exchange circuit for such data exchange can include the use of dedicated data circuits that are separate from power delivery circuits for passing electrical power from the power source 22 (on the vaporizer body) to the atomizer 26 (on the cartridge). However, having two separate circuits for data exchange and power delivery can increase complexity of the hardware as more than two sets of mating electrical contacts may be necessary. Implementations of the current subject matter permit use of two mating contacts on the cartridge 52 and vaporizer body 50 respectively for both data exchange and power delivery. It will be understood that the fluctuations in baseline resistance discussed above in reference to FIG. 2 represents one option for combining data exchange and power delivery via a single pair of mating electrical contacts. For example, within the scope of the current subject matter data exchanges may be encoded in a power circuit via fluctuations or modulations of one or more of frequencies, resistances (as noted above), current pulses, voltages, or the like.

The baseline (which may also be referred to as the resistance of the resistive heater at ambient temperature) may also be used to calculate the target resistance. A vaporizer temperature can be used to calculate an absolute target coil temperature as opposed to a target temperature rise. For example, the vaporizer temperature may be used to calculate an absolute target coil temperature for more precise temperature control.

The vaporizer device may be configured for reliable temperature control. For example, a tested wiggle resistance on new devices and/or new coils may be <10mOhm for 100% of unused devices. The device may be configured to have an acceptable wiggle resistance after heavy device use (spring contact abuse testing) of <20mOhm wiggle resistance on >=95% of devices before and after testing. Testing may include cyclically heating test-load pods with wet/dry cycles and pod insertion 10k cycles.

The resistance of the heating element may be a function of the temperature of the heating element (and the output of the cartridge memory in parallel with the heating coil) such that the temperature may be determined from resistance measurements, and the output of the cartridge memory may be detected by analyzing the relatively small changes in resistance within a particular frequency (time) range; these changes may be ignored or filtered out when calculating the temperature. The resistance of the heating element is roughly linear with the temperature of the heating element.

**The** same cartridge identity circuit may also be written with information about the cartridge, vaporizable material, and history of the cartridge, including, for example: the usage time and/or total power applied, etc.

Information stored on the memory (read and/or written) may be encoded, including the use of encryption, error-correction encoding (e.g., hamming code, etc.), or the like. In operation, when the cartridge is first inserted into the vaporizer body, the vaporizer microcontroller may be configured to first determine if a signal can be read off of the cartridge encoding information about the cartridge and/or identifying the cartridge as compatible with the vaporizer. Information may be read using the measurement circuit of the vaporizer. In some implementations of the current subject matter, even when a cartridge may not be read (e.g., may not include a cartridge identity circuit or is unable to read from the cartridge identity circuit) the vaporizer may use a default setting.

During operation, the vaporizer may periodically (e.g., after each puff, etc.) write to the memory in the cartridge identity circuit, if detected. Writing may be performed by the vaporizer by applying power for a predetermined timer period, to power the capacitive circuit. The vaporizer microcontroller may then apply a bit pattern on the contacts, by applying a high voltage to one of the contacts at a controlled rate that will be received by the I/O line of the memory.

**The** vaporizer may signal to the memory to request a read from the memory similar to how the device writes to memory, and may then disconnect the battery voltage applied to the heater contacts to allow the memory (e.g., EEPROM) to take control of the I/O line and use it to output data, providing a digital output (switching the I/O line low/high) transmitting an output that the vaporizer detects through the resistance measurement circuit. Typically, if the memory is transmitting, it may affect the absolute accuracy of the temperature control; the vaporizer may be configured so that the device does not heat when the memory is transmitting (outputting) and normal heating operation may not trigger the memory into transmitting data.

A cartridge identity circuit consistent with one or more implementations of the current subject matter may be integrated and/or combined into a custom chip (e.g., ASIC). Such specialized circuit may be included as the identifier (e.g., the identifier 28 shown in FIG. 1A).

Alternatively or additionally, a vaporizer may incorporate a LDS (laser direct structuring) method and resulting structure. In LDS, circuit tracks are integrated here into one or more mechanical components of the vaporizer, such as the housing of a vaporizer and/or a vaporizer body housing, as a substitute for a conventional printed circuit board. As a result, weight and fitting space can be effectively reduced. For example, the three-dimensional circuit carrier may be injection molded from a modified polymer material, allowing laser activation of circuit tracks on the surface of the circuit carrier. A laser may be used to inscribe the circuit layout directly onto the plastic component, typically right after injection molding of the component (without the need for tools or masks). The activated areas may become metallized in a chemical metallization bath in order to build conductive tracks. Other similar process may alternatively or additionally be used, such as molded interconnect device, or Midentifier, formation, in which injection molding and hot stamping are used to integrate conductive structures. Thus, any of the components described herein may comprise an LDS-doped material compatible with the LDS methods for forming the circuitry. In particular, electrical traces for the cartridge (e.g., the identifier 28 embodied as and/or within circuitry) may be formed directly on the plastic parts of the cartridge, without requiring additional PCBs.

**As** will be described in greater detail below, the information stored in the memory of a cartridge identity circuit such as those described herein may be useful for dose control (e.g., calculating and storing dosing information), as well as for security, communications and storage of operational parameters, particularly in devices including a wireless capability. However, cartridge identification may be useful even in the absence of wireless communication capabilities.

**As** discussed, the memory (e.g., an EEPROM) may store information about the vaporizable material and/or the cartridge. One example of the information that may be stored may include values related to the specific properties of the heating element, such as the nominal heater R (resistance) for the cartridge, including the heating element of the cartridge. This value may be determined and stored at the factory, at the time the device is manufactured/produced, and/or it may be done later. Storing a specific R value for each cartridge in the memory affiliated with that cartridge may be useful for the accurate temperature control for the device, including determining baseline resistance at ambient temperature, as described above. Although resistance/baseline measurement on the manufacturing line may be slightly different from the measurement the device gets for use, a baseline adjustment (determined by algorithm) may also be used. Alternatively or additionally, once a reliable baseline for a cartridge has been determined, this baseline may be related (e.g., in a remote database, on a remote server, etc.) to an identifier affiliated with the specific cartridge, so that if the cartridge is removed and reinserted, the same baseline value can also be used (as soon as the cartridge identifier is confirmed) which could be a faster check than waiting for stable baseline to be detected.

In general, storing a cartridge characteristic such as the resistance of the heater in the cartridge itself may be also useful for confirming that the connection between the vaporizer and the cartridge is good, and that the vaporizer's resistance measurement circuit is working normally. Thus, in any of the methods and apparatuses described herein, a nominal cartridge resistance may be stored in the cartridge's memory (or may be stored on a remote server/device and retrieved based on a unique cartridge identifier) and may be used to confirm that the connection between the device and pod is good, and/or that the device's resistance measurement circuit is working normally, and/or that the cartridge's resistance has not changed since the cartridge was assembled or filled.

As mentioned above, in some implementations of the current subject matter, the vaporizer may write usage information to the cartridge's memory; usage information can be used to estimate the amount of vaporizable material that has been removed from the cartridge and the amount of vaporizable material remaining. Usage information may include number of puffs/draws, the dosage delivered, or the like.

### POD IDENTIFIER TECHNICAL SPECIFICATION

By way of non-limiting example, consistent with implementations of the current subject matter as described herein, one or more embodiments may include one or more of the following basic Pod identifier device requirements: electrical maximum supply voltage of 3.3 volts; electrical minimum supply voltage of 1.8 volts; electrical maximum supply current of 5 milliamps; data interface: 1-Wire serial; minimum data rate of 50 kbps; package: 2 Pin Package; pin 1: power/serial shared; pin 2: ground; minimum ESD Resistance: ±8 kV; security element to prevent cloning: ECDSA signature verification; minimum one-time programmable flash memory for Mfg.: 92 bits; one-time settable values at fab: unique identifier and/or private key for ECDSA security; non-resettable counters: 9 bit counter and/or 16 bit counter; non-resettable fuse bits: 5 bits; scratch pad flash: 32 bit; maximum Length x Width x Height (LxWxH): 3mm x 3mm x 1mm; and/or interface pads: exposed pads for direct interface to spring fingers contacts.

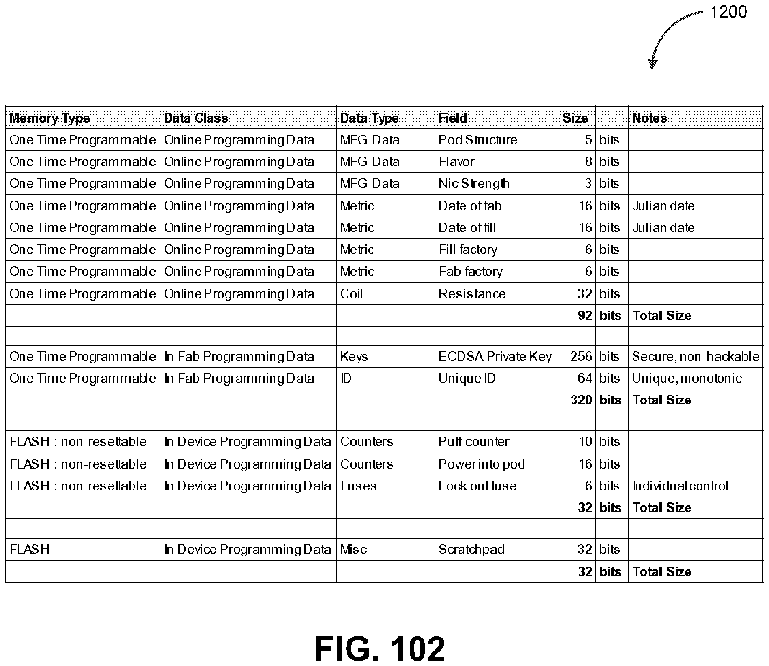

To further illustrate, FIG. 102 depicts a table 1200 illustrating the data fields that may be included in a pod identifier consistent with implementations of the current subject matter. It should be appreciated that a pod identifier consistent with implementations of the current subject matter may include one or more of the data fields shown in table 1200. Moreover, as shown in FIG. 102, a pod identifier consistent with implementations of the current subject matter may include data fields that are set during manufacturing as well as data fields that are set by the vaporizer device during operation.

**Referring** again to FIG. 102, a pod identifier consistent with implementations of the current subject matter may include one or more data fields programmed during manufacturing whose values indicate pod structure, pod flavor, pod strength, date of fabrication, date of filling, filling factory, fabrication factory, and heater coil resistance. Each of the data fields may store one or more bits of data. For instance, pod structure may be stored as a 5-bit value, pod flavor may be stored as an 8-bit value, pod strength may be stored as a 3-bit value, date of fabrication and date of filling may each be stored as a 16-bit value, filling factory and fabrication factory may each be stored as 6-bit values, and heater coil resistance may be stored as a 32-bit value. Alternatively and/or additionally, a pod identifier consistent with implementations of the current subject matter may include one or more data fields whose values correspond to a private key (e.g., a 256-bit Elliptic Curve Digital Signature Algorithm (ECDSA) key) and a unique pod identifier (e.g., a 64-bit value). The authenticity of a pod bearing a pod identifier consistent with implementations of the current subject matter may be determined based on the private key and/or the unique pod identifier included in the pod identifier.

In some implementations of the current subject matter, a pod identifier consistent with implementations of the current subject matter may also include one or more data fields whose values may be set by a vaporizer device inserted with a pod bearing the pod identifier. The values of these data fields may correspond to a puff counter (e.g., a 10-bit value), a power into pod (e.g., a 16-bit value), a lockout fuse (e.g., a 6-bit value), and/or a scratchpad for miscellaneous data (e.g., a 32-bit value). It should be appreciated that the values of at least some of those data values may not be reset including, for example, the puff counter, the power into pod, and the lockout fuse.

By way of non-limiting example, consistent with implementations of the current subject matter as described herein, one or more embodiments may include one or more of the following Pod identifier mechanical attachment to pod guiding principles: must not require surface mount assembly/surface mount technology (SMA/SMT) to PCB or other substrate prior to install; must attach directly to pod by mechanical means; must be mechanically robust to survive high speed assembly; and/or must be packed/ready for high speed insertion. Examples of one or more embodiments of Pod identifier mechanical attachment to pod may include one or more of the following: flat pack with quad-flat-no-leads (QFN) like pads; heat stake and/or glue into cavity; package on a nail; and/or methods to attach, including: heat stake; glue; snap fit; overmold; nail; and/or press.

By way of non-limiting example, consistent with implementations of the current subject matter as described herein, one or more embodiments may include one or more operations of the following Pod identifier manufacturing flow: install onto pod (e.g., robotic and/or automated placement and attachment to pod body; package must be mechanically robust to handle high speed installation); first communication (e.g., electrical test and program first manufacturing information into Pod identifier integrated circuit, must support high speed inline programming for automation); handling and stuff; fill pod; more communication (e.g., post and/or pre-fill programming and lockdown of Pod identifier integrated circuit; must support high speed inline programming at fill operation); handling and stuff and packaging; and/or ship it.

### APPLICATION/CONNECTIVITY.

A vaporizer and/or vaporizer system may include software, firmware or hardware that is separate or separable from the vaporizer and that wirelessly communicates with the vaporizer. For example, applications ("apps") may be executed on a processor of a portable and/or wearable device, including smartphones, smartwatches, and the like, which may be referred to as a personal digital device or optionally just a device (e.g., user device 305 in FIG. 3) that is part of a vaporizer system. These digital devices may provide an interface for the user to engage and interact with functions related to the vaporizer, including communication of data to and from the vaporizer to the digital device or the like and/or additional third party processor (e.g., servers such as the server 307 in FIG. 3). For example, a user may control some aspects of the vaporizer (temperature, dosage, etc.) and/or data transmission and data receiving to and from vaporizer, optionally over a wireless communication channel between first communication hardware of the device and second communication hardware of the vaporizer. Data may be communicated in response to one or more actions of the user (e.g., including interactions with a user interface displayed on the device), and/or as a background operation such that the user does not have to initiate or authorize the data communication process.

User interfaces may be deployed on a digital device and may aid the user in operating the vaporizer. For example, the user interface operating on a digital device may include icons and text elements that may inform the user of various ways that vaporizer settings can be adjusted or configured by the user.

A vaporizer may include or incorporate one or more authentication features. For example, the user interface ("app") may include, for example, PIN-based authentication, biometric authentication (which can include fingerprint based authentication, iris scan based authentication, facial recognition based authentication, and/or the like). Authorization may include age-analysis, such as an estimation or calculation of user age based on analysis of facial features. Authorization may be used to lock/unlock the vaporizer.

The authentication process can be embodied as a feature of an application that is installed and running on a personal digital device capable of communicating data through the use of wired or wireless methods (e.g., as part of a vaporizer system as described herein). The personal digital device (e.g., smartphone) may have an operating system capable of running application(s).

A vaporizer may be rendered inactive after a period of inactivity, for example by entering into a "sleep mode" when there is no usage detected for a predetermined and/or preset period of time. In some implementations of the current subject matter, in order for the vaporizer to be activated, and thereby be capable of being used by the user for the purpose of generating vapor, the user must be authenticated to ensure that the device is being utilized by the intended user, and to prevent unauthorized use, or accidental or unintended activation of the device, or use of the device by an individual not of legal age to ingest the active component, including nicotine or cannabis. Personal identification number (PIN) based authentication may apply a user selected PIN code to authenticate the end use. Alternatively and/or additionally, one or more forms of biometric authentication may be used to authenticate the user and reactivate the vaporizer. For example, a fingerprint based authentication process may authenticate the user. An iris scan based authentication process may use an eye or iris scan, or the like, to authenticate the user. Facial recognition based authentication may use a face scan or image processing algorithm to authenticate the user. Iris scan based authentication and facial recognition based authentication may be particularly useful if the personal digital device has a camera, such as a forward facing camera.

A personal vaporizer may be deactivated following a threshold criteria being met. For example, the vaporizer may be rendered inactive after a period of inactivity. The period of inactivity may be preset and/or selected by the user (e.g., using the control software of running on the personal digital device). Thus, the period of inactivity may be a configurable parameter of the vaporizer. The application software/firmware may include functionality to unlock or activate the vaporizer using authentication, as mentioned above.

An authentication process may be performed. If the authentication process is unsuccessful, the vaporizer may remain deactivated. If the authentication process is successful, the vaporizer may be unlocked and made ready for use.

The vaporizer may include a heating element configured to heat a vaporizable material. The app may be configured to disable and/or lock the vaporizer by disabling power to and/or use of a heater element of the vaporizer. For example, a control system (e.g., via firmware) can be configured to selectively disallow a user from actuating the heater element from certain (e.g., standard heating) actions. In some aspects, the device can be configured to ignore pressure sensor readings and/or other indicia of a user puffing on the device. The app may be configured to provide a notification indicating that the vaporizer has been operationally disabled and/or locked. Additionally or alternatively, the device may be configured to alert the user that the device is locked (e.g., using one or more LEDs, sound, haptics, etc.) upon determining that the user is trying to puff on the device. In some implementations, the vaporizer may be configured such that the vaporizer becomes operational responsive to the vaporizer being within a threshold range of the user device. In some implementations, the vaporizer may be configured such that the vaporizer becomes operational responsive to the vaporizer receiving a signal from the user device. In some implementations, the vaporizer may be configured such that the vaporizer becomes inoperative responsive to the vaporizer receiving a signal from the user device. For example, a user may lock and/or unlock the vaporizer by a user input to the app, such as with Touch identifier.

The vaporizer device may be configured to lock such that key functionality (e.g., vapor production) is disabled to prevent unauthorized parties from using a locked device. In some implementations, the vaporizer device paired to the app, may implement a lock/unlock feature such that a given user may lock the device, thus preventing unauthorized users from unlocking and/or accessing the vaporizer device. The locking feature may be configured with strong security (e.g., encryption, firewall, and/or the like) to prevent defeating the locking functionality through hacking.

The app may be configured to disable and/or lock the vaporizer responsive to the vaporizer being outside of the threshold communication range with the user device. For example, if the vaporizer is beyond the communication range of the user device, the vaporizer may be configured to deactivate vaporizer operation such that the vaporizer is inoperable until returning to communication range with the user device.

The app device may be configured to disable and/or lock the vaporizer responsive to location and/or time parameters, such as how long the vaporizer has been out of range of the user device.

The app may be configured to enable and/or unlock the vaporizer responsive to the vaporizer being within the threshold communication range with the user device. For example, the vaporizer may resume an operational status responsive to being within communication range with the user device.

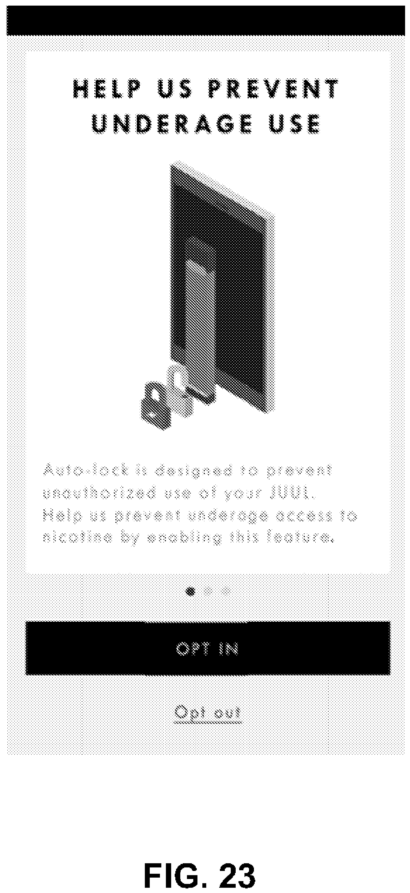

**The** vaporizer may be configured to receive information associated with a first user of a first user device. The vaporizer may be configured to activate and/or unlock vaporizer operation responsive to the vaporizer being communicatively coupled and within a threshold communication range with the first user device associated with the first user. The vaporizer may be configured to deactivate vaporizer operation responsive to the vaporizer being outside of the threshold communication range with the first user device. The vaporizer may be configured to deactivate vaporizer operation responsive to the vaporizer being communicatively coupled with a second user and/or a second user device. For example, if a first user pairs a first vaporizer with the first user device, the first vaporizer may deactivate and/or lock responsive to a second user attempting to pair the first vaporizer with the second user device. FIGs. 23-30 illustrate example user interfaces for tracking reports and other data indicating underage use, retailers, locations, comments, investigations, prevention actions, and/or the like.

Locking the device may be performed by disabling power to a heater element, pressure sensor, or other element of the vaporizer.

In some implementations, the vaporizer device lock feature to lock (e.g., disable) or unlock (e.g., enable) a vaporizer device from a user interface of the user device may be configured to be available when vaporizer device is in communication range of the user device (e.g., the user device being within a threshold range of the vaporizer device). In response to the vaporizer device being locked, the vaporizer device may be configured to disable some or all functionality of the vaporizer device. In response to detecting an attempted inhalation/puff on a locked vaporizer device, the vaporizer device may be configured to display a "locked" LED indication, block airflow, and/or provide another indication that the device is locked. In some aspects, locking the vaporizer device may change the state of a home screen on the user interface such that if the vaporizer device is locked, a "locked" notification is displayed and the user may unlock the vaporizer device from the home screen. The vaporizer device may be configured such that the user may only unlock the vaporizer device via an app logged into that user's account. In some implementations of the current subject matter, the lock and/or unlock features may be available with or without Wi-Fi and or the user/device having data service reception.

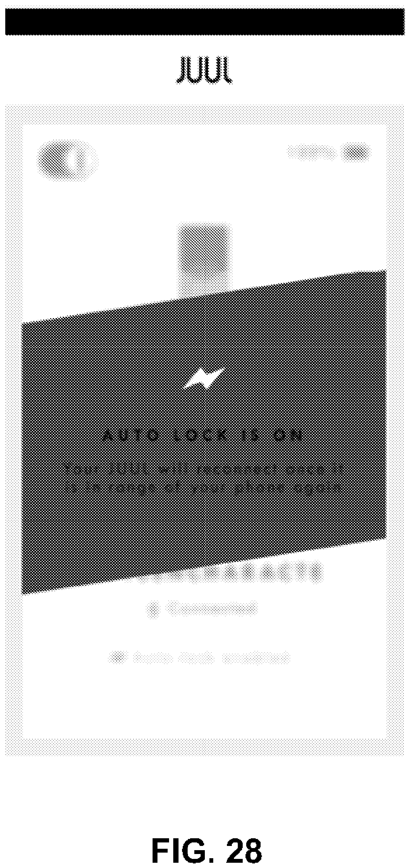

**In** some implementations, the vaporizer device and/or user app may be configured to display a first notification for a locked device that is "in range" (e.g., the user device being within a threshold range of the vaporizer device). In some implementations, the vaporizer device and/or user app may be configured to display a second notification for a locked vaporizer device that is "out of range" (e.g., the user device being outside a threshold range of the vaporizer device), as in FIG. 28. The vaporizer device and/or user app may be configured to display an option for the user to "opt-in" the some or all of "auto-lock" features. For example, the vaporizer device and/or user app may be configured to display a countdown timer for a time-based "auto-locked" vaporizer device that is "in range" (e.g., the user device being within a threshold range of the vaporizer device). In some implementations of the current subject matter, the user may have an option to specify the length of time after which the "auto-lock" is responsive (e.g., a time varying from the default time of 24 hours may be provided). In some implementations, the vaporizer device may be configured to auto-lock a vaporizer device responsive to the vaporizer device changing from an "in range" status to an "out of range" status. In some implementations, the vaporizer device may be configured to auto-lock a vaporizer device responsive to the vaporizer device being "out-of-range" for a defined time period (e.g., 24 hours). In some implementations of the current subject matter, the vaporizer device may be configured to unlock automatically responsive to returning to in-range status. In some implementations, the vaporizer device and/or user app may be configured to display an overlay description of the lock/unlock feature, and/or a picture and/or animated gif representation of the vaporization device being in-range and/or out-of-range.

**FIGs.** 23-30 illustrate example user interfaces that may appear in an app installed on a communication device in communication with a vaporizer (e.g., as part of an "app" or other software on a user's mobile device). The user interfaces of FIG. 23-30 relate to locking and reporting features that may provide benefits in providing data as well as vaporizer-specific controls for preventing unauthorized and/or underage use, purchase, etc. of a vaporizer.

The app screen view of FIG. 23 or a similar approach may be used to prompt a user of a vaporizer to implement a device-locking feature. In one example, this may be provided as an "opt-in" feature such that the vaporizer has a default state of not automatically transitioning to a locked state. Alternatively, the locking feature may require an "opt-out" by the user to disable automatic locking. In still other examples, the auto-locking feature may not be a user-configurable option.

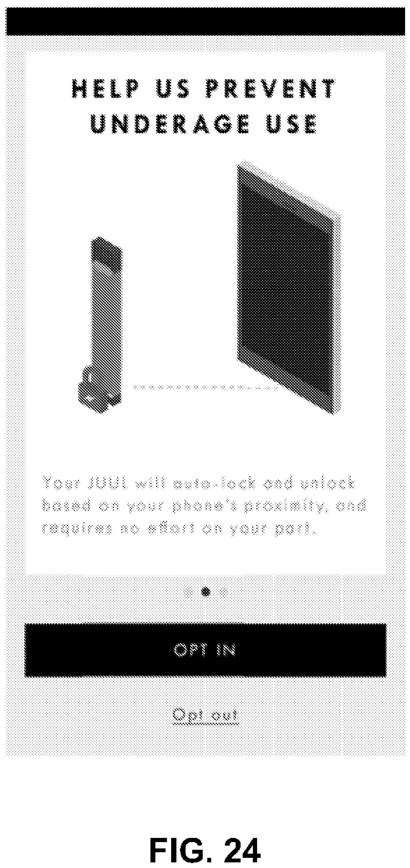

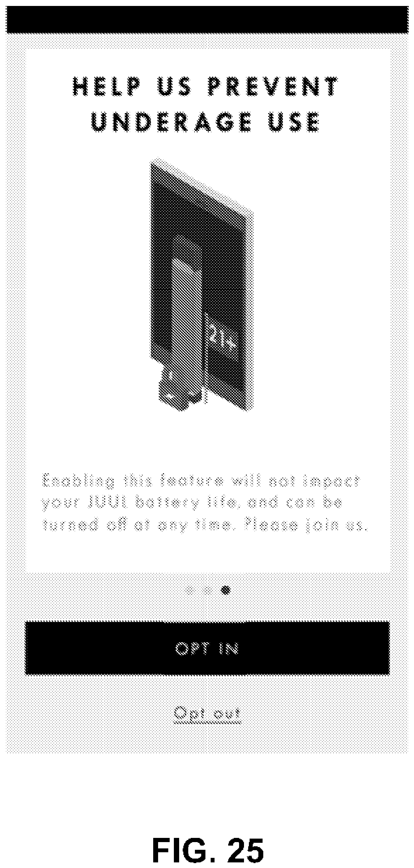

The screen views of FIG. 24 and FIG. 25 show a view that may be presented to the user upon selection of the opt-in feature. This screen may be used to explain that the vaporizer will transition automatically to a locked state if communication between the user's mobile device and the vaporizer does not occur for some period of time longer than a threshold amount of time. Functionally, when this feature is enabled, a controller of the vaporizer (e.g., a microcontroller, PCB, software running on a programmable processor, other computing hardware, etc.) can execute operations that track a duration since a last successful communication with a user's mobile device that has been paired to the vaporizer. If this duration exceeds some threshold value, the vaporizer controller can cause interruption of the normal operation of the vaporizer, for example, by preventing delivery of current to a heating element or otherwise activating an atomizer that causes production of inhalable aerosol.

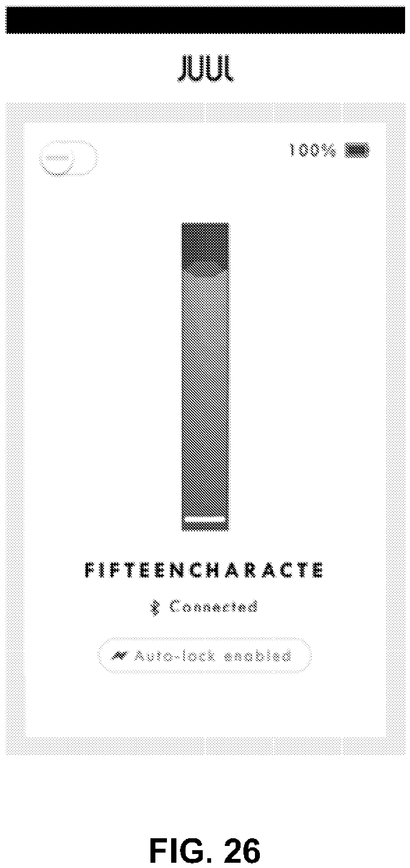

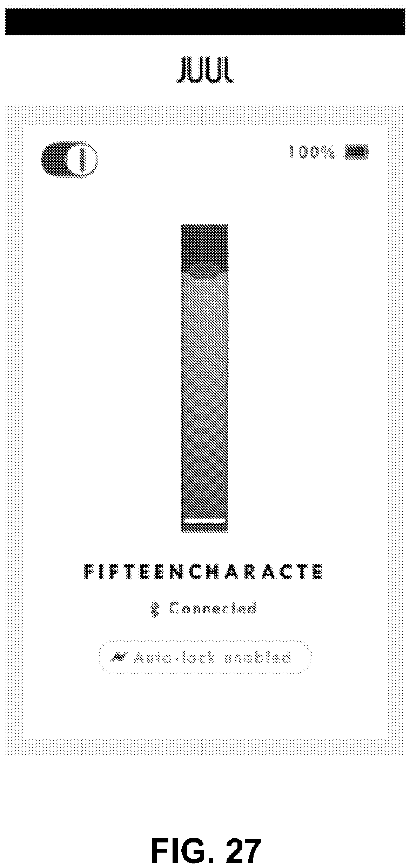

**The** screen views of FIG. 26 and FIG. 27 show a transition from having the auto-locking feature disabled and enabled via activation of a user interface element such as a slider control (upper left corner of the screens in FIGs. 26 and 27). In one example implementation, a user may elect to opt in or opt out of having the auto-lock feature available, for example via the views of FIG. 23-25. At any given time, the user may elect to have the auto-lock feature enabled or disabled for his or her vaporizer using the on/off election shown in FIG. 26 and FIG. 27. Disabling of the feature may be desirable if the user intends to use his or her vaporizer for some period of time when the user's mobile device is not nearby or if the user's mobile device needs to be turned off or otherwise put in a state in which it would not be able to communicate with the vaporizer. In some implementations of the current subject matter, it may be advantageous for the auto-lock disable feature to have a time limit such that the vaporizer controller reverts back to an auto-lock enabled state after some fixed or user-configurable duration of having the auto-lock disabled.

**In** some implementations, the vaporizer device and/or user app may be configured to display a first notification for a locked device that is "in range" (e.g., the user device being within a threshold range of the vaporizer device). In some implementations, the vaporizer device and/or user app may be configured to display a second notification for a locked vaporizer device that is "out of range" (e.g., the user device being outside a threshold range of the vaporizer device), as in FIG. 28. The vaporizer device and/or user app may be configured to display an option for the user to "opt-in" to some or all of "auto-lock" features. For example, the vaporizer device and/or user app may be configured to display a countdown timer for a time-based "auto-locked" vaporizer device that is "in range" (e.g., the user device being within a threshold range of the vaporizer device). In some implementations of the current subject matter, the user may have an option to specify the length of time after which the "auto-lock" is responsive (e.g., a time varying from the default time of 24 hours may be provided). In some implementations, the vaporizer device may be configured to auto-lock a vaporizer device responsive to the vaporizer device changing from an "in range" status to an "out of range" status. In some implementations, the vaporizer device may be configured to auto-lock a vaporizer device responsive to the vaporizer device being "out-of-range" for a defined time period (e.g., 24 hours). In some implementations of the current subject matter, the vaporizer device may be configured to unlock automatically responsive to returning to in-range status. In some implementations, the vaporizer device and/or user app may be configured to display an overlay description of the lock/unlock feature, and/or a picture and/or animated gif representation of the vaporization device being in-range and/or out-of-range.

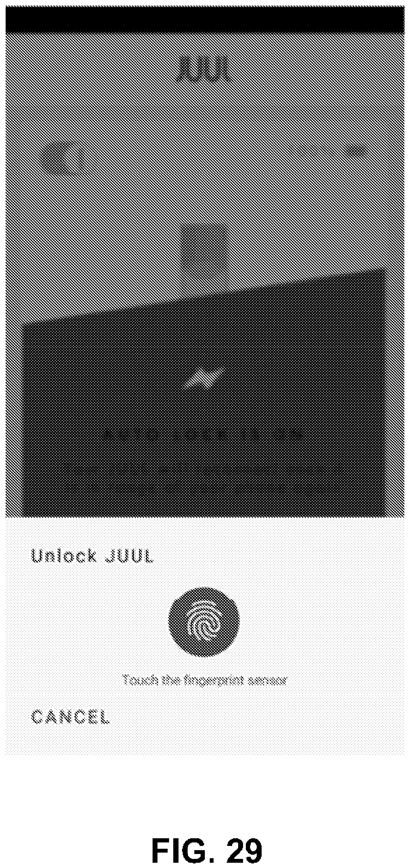

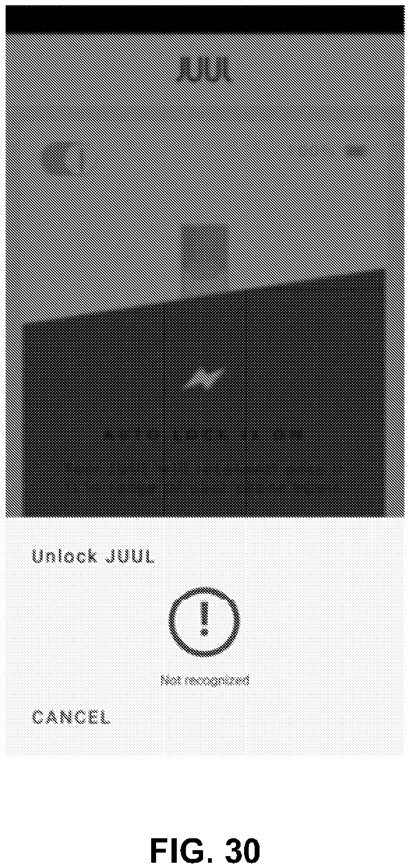

In other words, FIG. 28 shows a screen view that can indicate that the auto-lock is enabled and that the vaporizer is not within range of the mobile device (and is therefore unusable until communication is reestablished between the mobile device and the vaporizer). FIG. 29 shows an optional screen view that can be included to require that a password or some biometric verification (e.g. a fingerprint sensor identifier, facial recognition, etc.) be received by the user's mobile device to re-authorize use of the vaporizer and to thereby cause the mobile device to communicate to the vaporizer controller that operation of the vaporizer should again be allowed. Such a feature could prevent a minor or other unauthorized user from making use of the vaporizer merely by being somewhere close enough to the user's mobile device (e.g., in an adjoining room, etc.) to allow communication between the mobile device and the vaporizer to be re-established. FIG. 30 shows an example of a screen view that can indicate that the proper authorization has not been received such that the vaporizer will remain disabled.

In some implementations, the vaporizer lock feature, to lock (e.g., disable) or unlock (e.g., enable) a vaporizer device from a user interface of the user device, may be configured to be available when the vaporizer is in communication range of the communication device (e.g., the user device being within a threshold range of the vaporizer device). In response to the vaporizer device being locked, the vaporizer device may be configured to disable some or all functionality of the vaporizer device. In various examples, locking the vaporizer may include one or more of disabling power to a heater element, disregarding inputs from a pressure sensor or other switch configured to activate the vaporizer for aerosol generation, etc. In response to detecting an attempted inhalation/puff on a locked vaporizer device, the vaporizer device may be configured to display a "locked" LED indication, block airflow, and/or provide another indication that the device is locked. In some aspects, locking the vaporizer device may change the state of a home screen on the user interface such that if the vaporizer device is locked, a "locked" notification is displayed and the user may unlock the vaporizer device from the home screen. The vaporizer device may be configured such that the user may only unlock the vaporizer device via an app logged into that user's account. In some implementations of the current subject matter, the lock and/or unlock features may be available with or without Wi-Fi and or the user/device having data service reception.

In addition to the above-noted auto-lock features, a vaporizer device may be configured to provide an "Access Feature" to registered app users for account login with or without an age verification. The vaporizer device may optionally be configured such that the Access Feature availability may be linked to the app and/or the user login rather than a specific user mobile device. In some implementations, a user device using the device app with a specific user logged into a user account may be able to unlock/lock a specific device previously locked by that user using another instance of the device app.

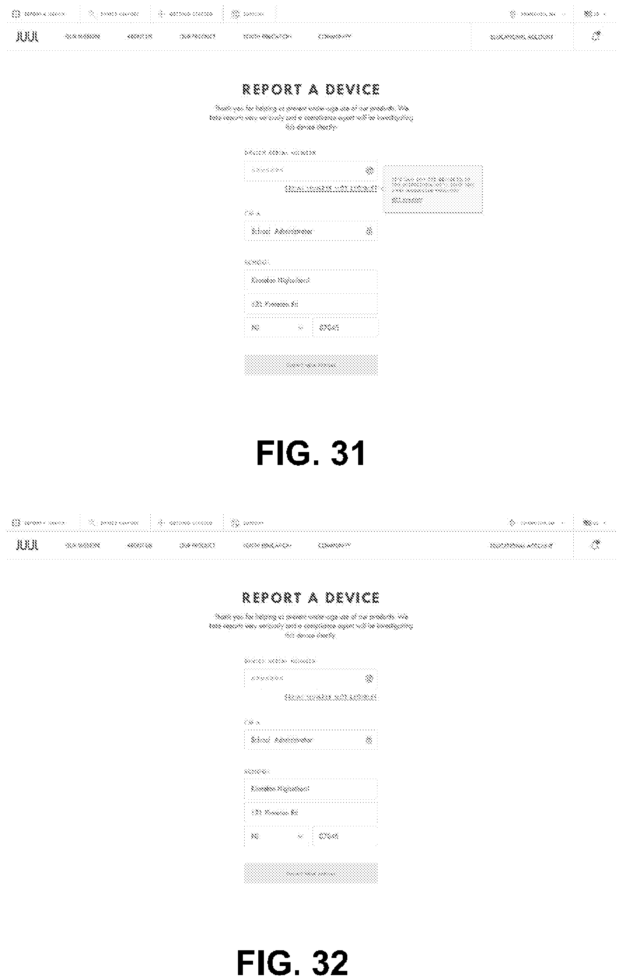

**FIGs.** 31-36 illustrate example user interface screen views that may appear in an app installed on a communication device. The user interface screen views of FIG. 31-36 relate to reporting features that can be used on a mobile device that need not be paired with a vaporizer. It will be understood that while these screen views are shaped and sized consistent with the dimensions of a mobile device such as a smart phone, the indicated user interface functionality may be implemented on any computing device, such as for example a tablet, desktop or laptop devices, etc.

**FIG.** 31 and FIG. 32 show screen views via which a person may report a vaporizer (referred to on the view as a "device" that is being used by an unauthorized user (e.g., a minor). The views allows for entry of a serial number and includes a data entry option (here a pull down or scroll menu, but optionally any kind of input including a free text input) for the reporting person to indicate his or her title or other identifying information. For use of this functionality in a school settings (e.g., if the features are used for interdicting usage of vaporizers but underage users at schools), the title may be "school administrator" or "teacher" or "counselor" or the like. The view also includes fields for entry of identifying information about the school and a "submit" user interface element to allow the entered data to be transmitted to a server for analysis, aggregation, etc. The views may include a user interface element for providing guidance to the user regarding how to find the device serial number and optionally instructions for sending the device to a location where it can be analyzed to determine its provenance.

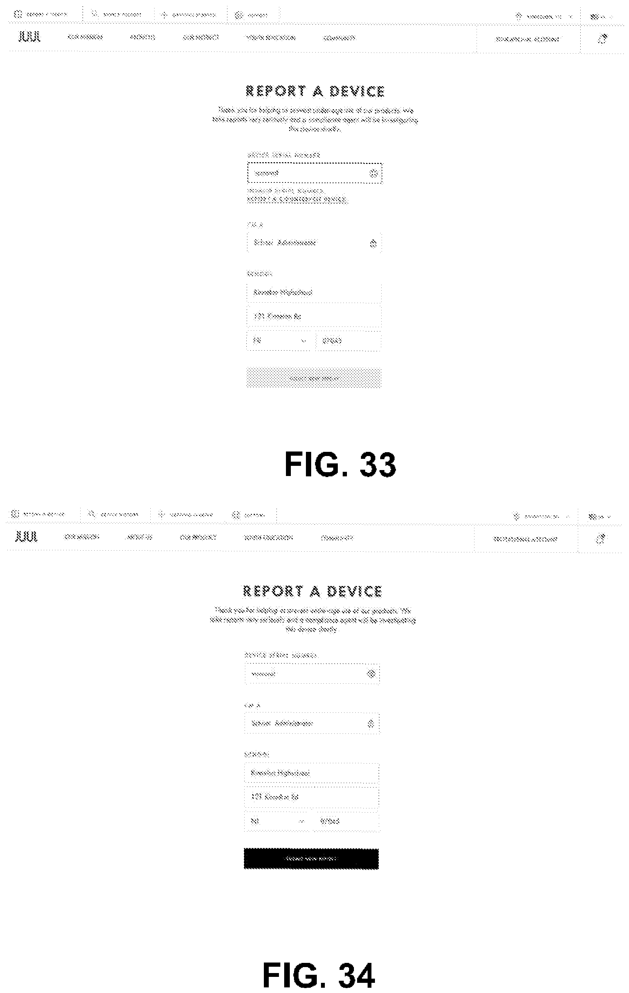

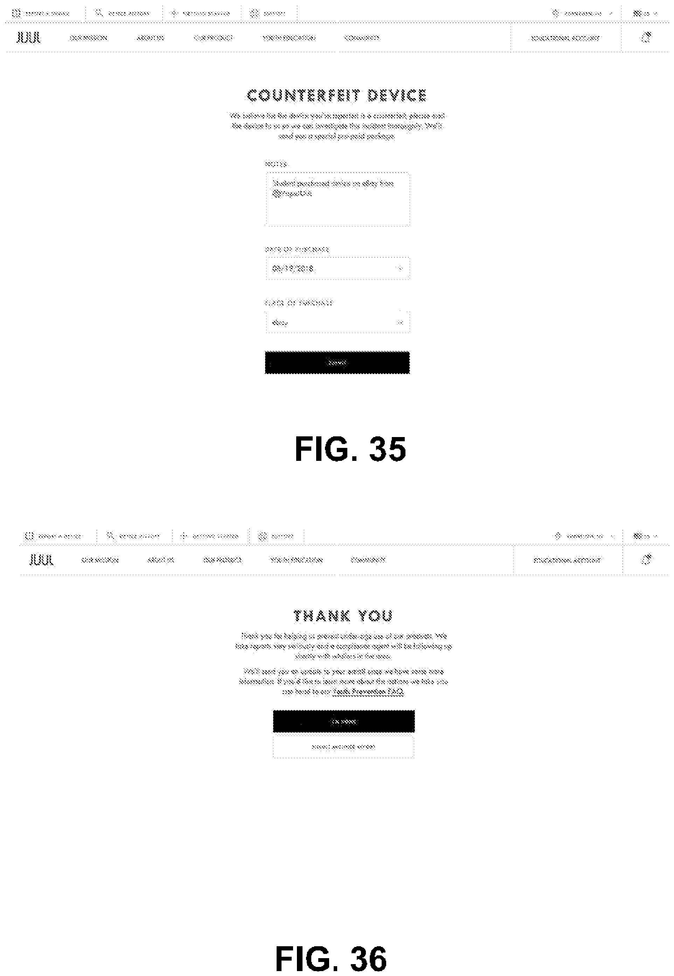

In FIG. 33 and FIG. 34, the screen views show an example of an invalid serial number being entered. Here, the user interface may query the user to double check the serial number and if it is verified as correct relative to the confiscated vaporizer, the user may be prompted to report it as a counterfeit vaporizer, which can trigger other operations. If the device is identified as counterfeit, the screen view of FIG. 35 may prompt the user to enter any further information available, such as a place and date of purchase, etc. and may add a prompt to request that the user send the device top the manufacturer or some other location for analysis and investigation. FIG. 36 is an example of a "thank you" screen view.

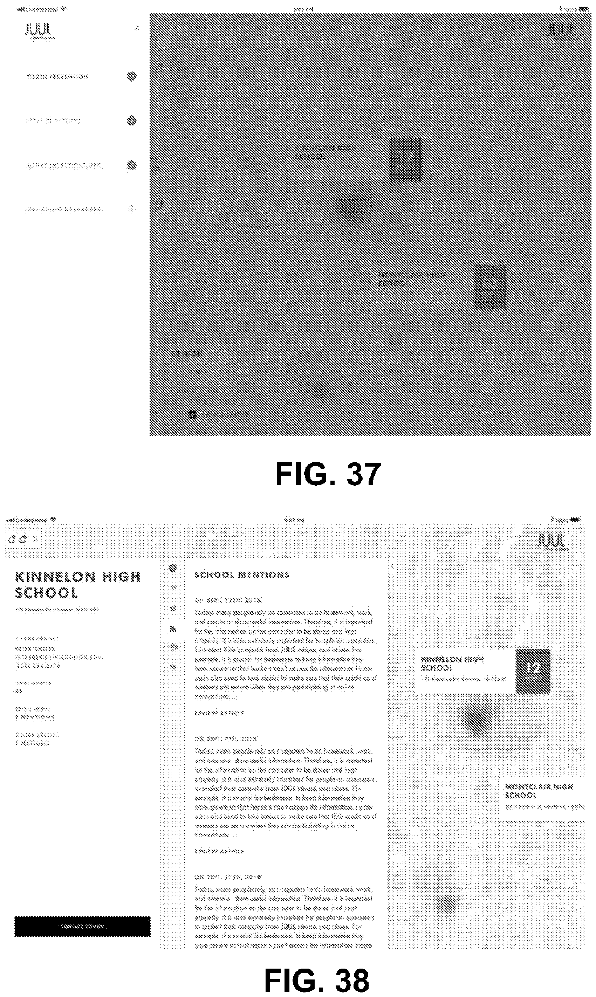

FIG. 37 to 41 show example screen views that may be displayed on any computing device to visually display data outcomes based on data reported via approaches discussed herein as well as other approaches. It will be understood that these screen views may be displayed on any type of computing device.

The screen view of FIG. 37 shows a map view that includes markings of schools with various overlay options allowing a user to select data types to be shown on the map in relation to one or more locations. The overlay can include a heat map type view that illustrates frequencies of different occurrences determined based on data collected. Sources of data for collection may include, for example, school reports (e.g., as could be entered via the above-discussed screen views), retailer data (e.g., number of sales at a given location, tracking information regarding sales sources of confiscated vaporizers, etc.), social media data (e.g., data relating to estimated ages and demographics of social media users discussing vaporizers and/or their use relative to estimated locations of those social media users), secret shopper data (e.g., data on unauthorized or insufficiently authorized sales to undercover investigators who attempt to purchase vaporizers from retail locations, regulatory reports (e.g. from the FDA or the like), and/or the like. The screen view may also include a data insights sub-view that can display information about recently added data, trends, etc. Clicking on a given school location can enable drill-downs on specific data types. Screen views of this type can be used to develop strategies around prevention of vaporizer use by underage users, for example by easily displaying geographic correlations between school confiscations, social media, illicit sales activity, etc.

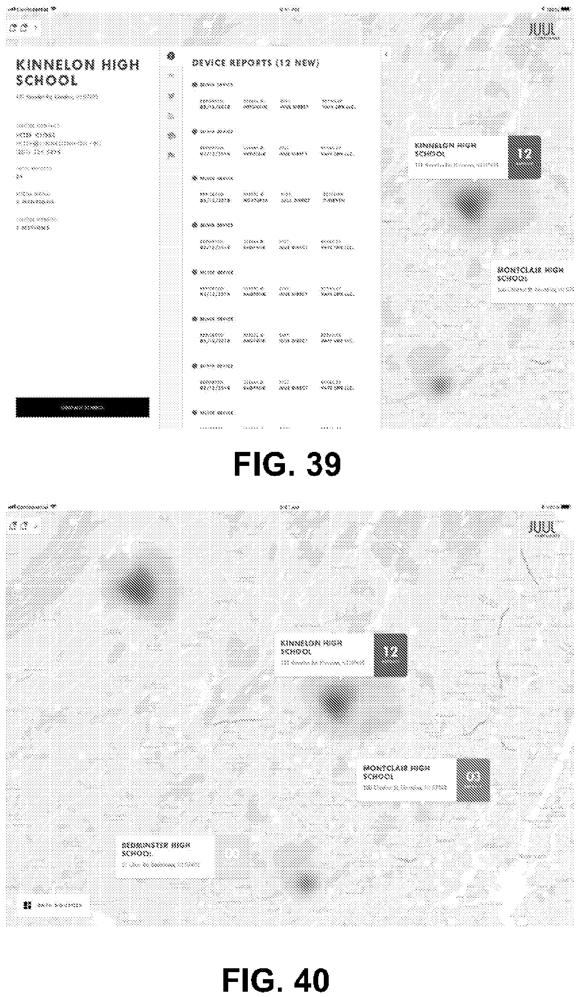

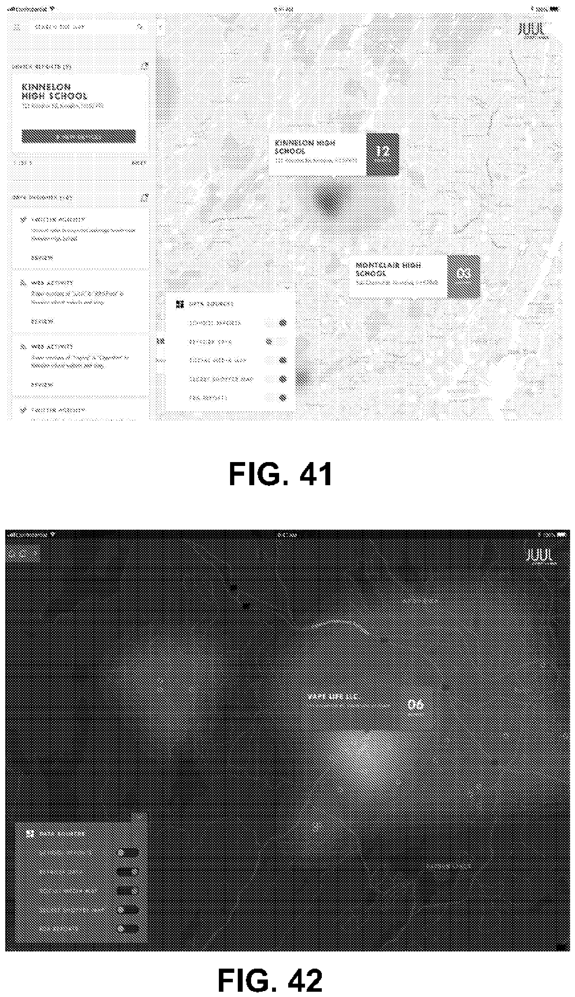

The screen view of FIG. 38 shows an example of a news feed for mentions of a given school in relation to vaporizers and/or underage usage of such devices. The screen view of FIG. 39 shows a summary of confiscated device reports for a selected school location. The screen view of FIG. 40 shows the maps with heat maps but no other data, and the screen view of FIG. 41 shows the maps with highlighted social media information.

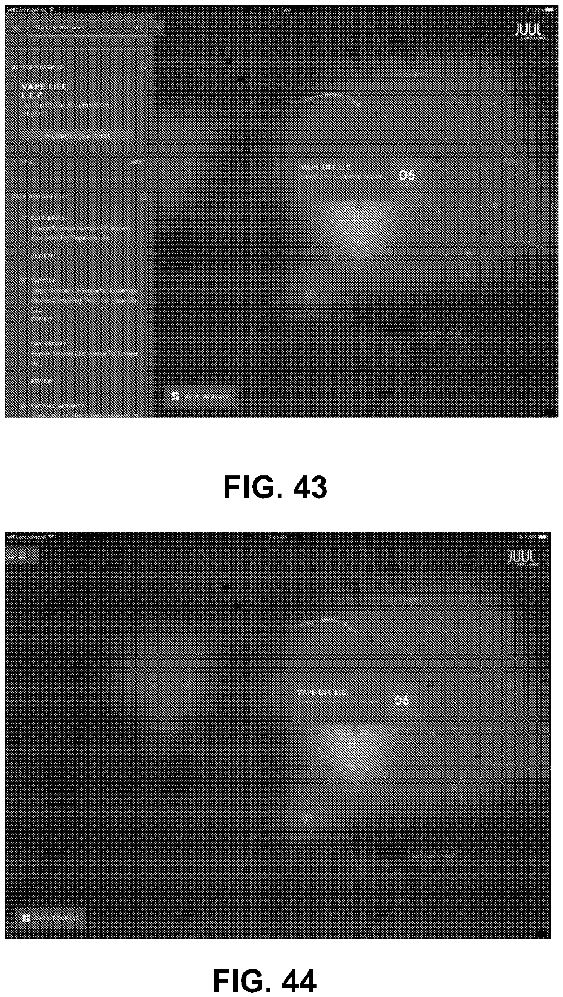

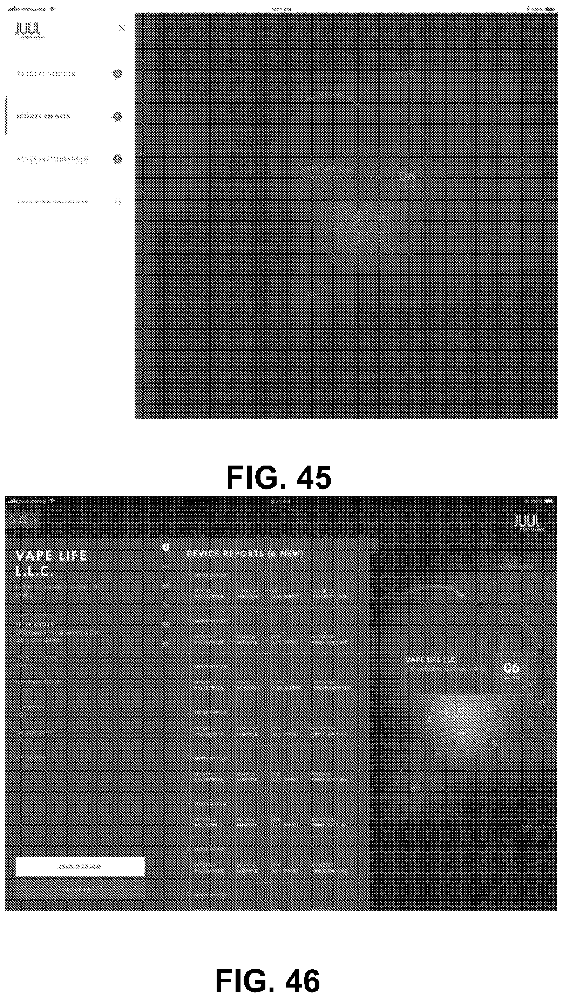

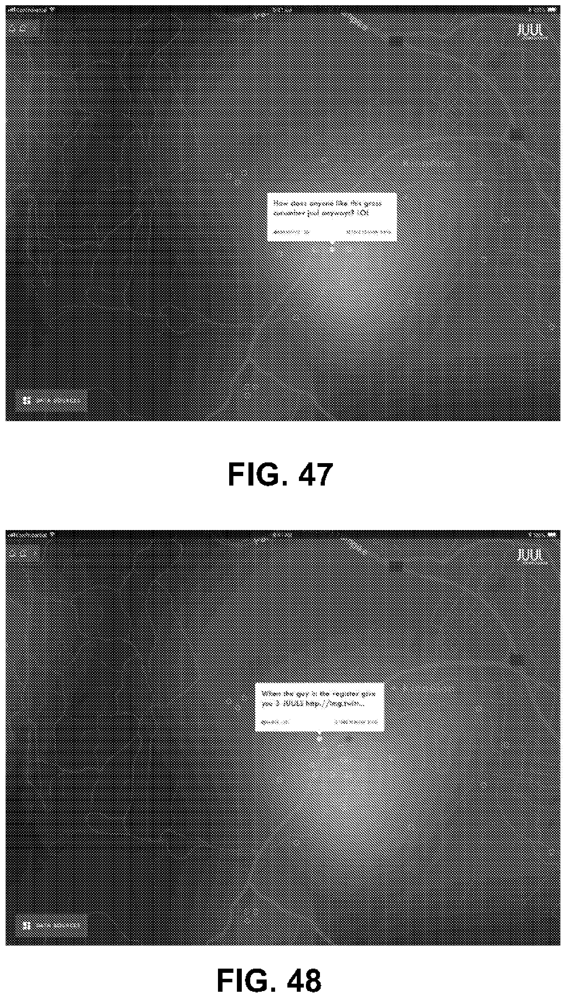

**FIGs.** 42 to 49 show screen views illustrating example features for data-driven functionality around the use of data such as that discussed above in tracking down illicit vaporizer use and/or sales. The data sources control box allows a user to look at data from different sources as location based overlays to the map. In FIG. 42, a fictional retail outlet is highlighted and social media mentions are overlaid. FIG. 43 shows an example of additional data insights related to this fictional retail outlet along with statistics (e.g., 6 confirmed devices that were confiscated having been sold here). FIG. 44 shows the map view without data overlays, FIG. 45 shows an option for drilling down to additional retailer reports, and FIG. 46 shows an example of data in such reports, including specifics on confiscated devices, etc. FIGs. 47-49 show social media data with estimated locations to allow inference of correlations with given retail outlets and other data sources.

In addition to the data sources illustrated above, which can be used with existing vaporizers that may not include connectivity features, other data sources provided by such connected vaporizers can further enrich the capabilities of the current subject matter. For example, geofences may be set up around school locations and/or other places where underage vaporizer use is considered to be problematic. Vaporizers having connectivity features may be detected when they are in such areas to enable mapping of potential illicit usage hotspots. In other examples, an app executable on mobile devices may be provided to teachers or other school employees. Such apps may allow the mobile devices to become mobile detectors of vaporizers that are near the mobile device. Collection of serial number data or other data from such vaporizers may enable better tracking of where vaporizers used by teens and other underage users are originating.

In some implementations of the current subject matter, the vaporizer and/or an affiliated app may have a dashboard style user-interface, in which a user may view one or more metrics indicative of his or her progress over time. These metrics may be generated from or otherwise derived from individual data (e.g., data relating to the user specifically) and/or group data (e.g., data aggregated from multiple users and anonymized. For example, the group data can show as a population of what the mean smoking-vaping switch rate is at any given time since starting to use a vaporizer. The apparatus may provide a view in which the user can select other users to define a group (cohort) based on their starting conditions: e.g., packs per day, age, gender, etc.

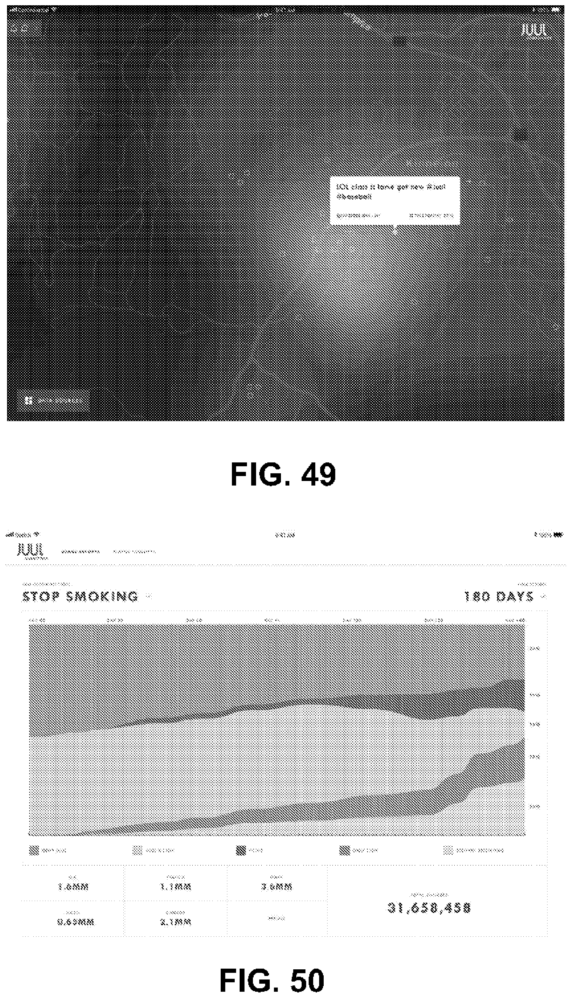

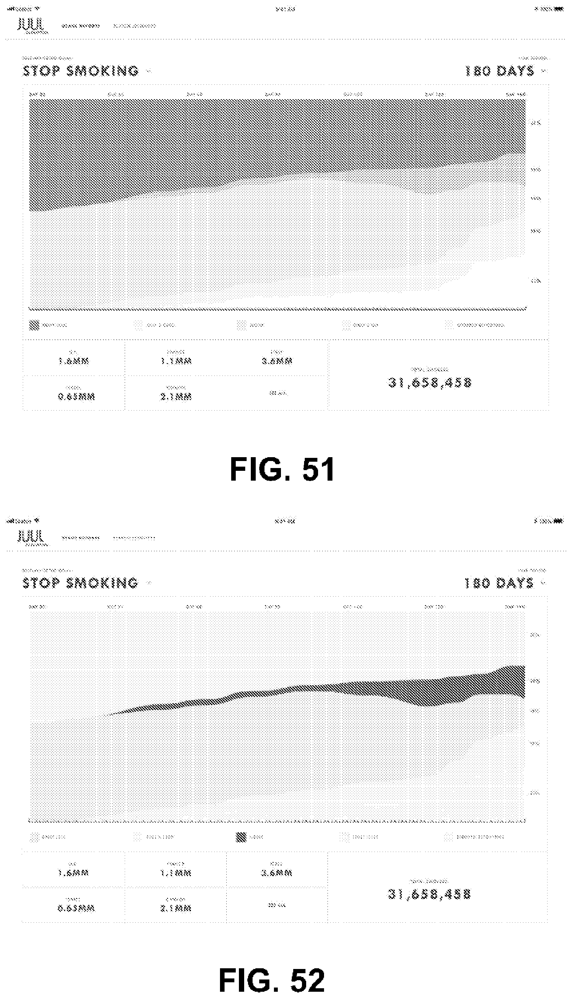

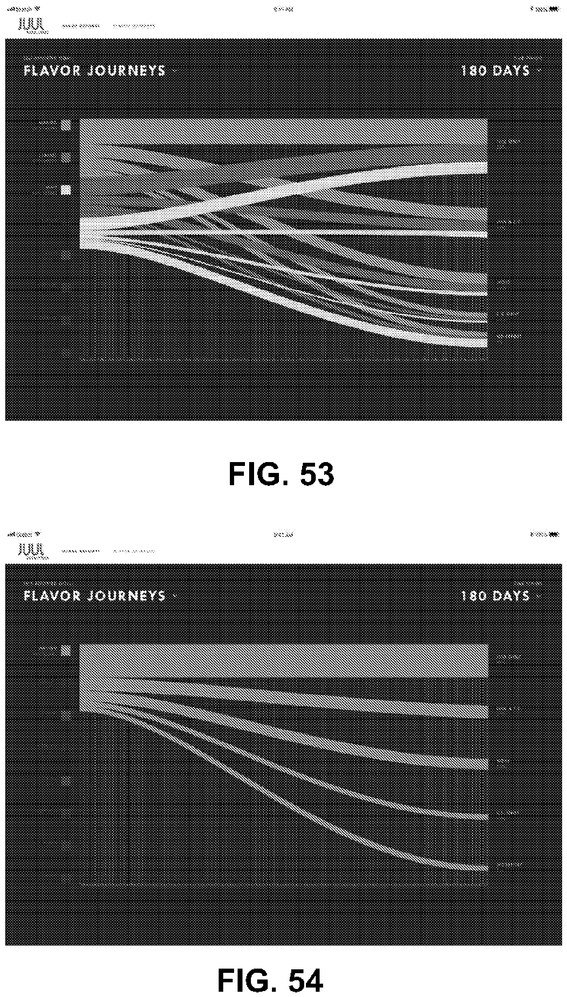

The dashboard may be configured to display different cessation programs and their success rates for certain individuals, groups, sub-groups, and/or demographics. For example, for a certain group (e.g., females 30-39 in Southern California), the dashboard and group data may show that a first cessation program has a 50% success rate while a second cessation program has a 75% success rate. A user may select the second cessation program and see the different operations involved with the cessation program (e.g., nicotine concentrations, flavors, timeline, frequency of use, diet, and/or the like). For example, by tracking flavors and other pod information using the Pod identifier, the vaporizer system may be able to determine and provide recommendations for which flavor profiles, concentrations, vapor consistency, frequency of use, time of use, and/or the like are best suited for an individual given the individual's goal, user profile, group(s) profile(s), past usage, age, gender, and/or the like. If a user strays from a cessation program, the vaporizer system may be configured to provide recommendations for getting back on the cessation program (e.g., counseling, community involvement, groups, products, and/or the like). FIGs. 50-54 illustrate example user interfaces for depicting different data related to cessation metrics on a dashboard.

In some aspects, the aggregated cessation information may be combined with machine learning algorithms to provide improved recommendations based on user interaction and/or received feedback from other users, vaporizer devices, apps, websites, reviews, and/or the like.

The vaporizer device may be configured to provide an "Access Feature" to registered app users for account login with or without an age verification. The vaporizer device may be configured such that the Access Feature availability may be linked to the app and/or the user login rather than a specific user device. In some implementations, a user device using the device app with a specific user logged into a user account may be able to unlock/lock a specific device previously locked by that user using another instance of the device app.

The vaporizer device may be configured such that the Access Function may operate on a user device without Wi-Fi, LTE, or other connectivity to the Internet. The Access Function may be responsive to the device being in Bluetooth Low Energy (BLE) range of the user device and the user being currently logged into the user's account. In such implementations, no request to external servers may be required to unlock or lock the vaporizer device from the app.

In some implementations of the current subject matter, vaporizer device pairing, locking, and/or unlocking may be only accessible through an app logged into the user account linked to that vaporizer device. The vaporizer device may be configured to self-lock after an extended period of non-connectivity with the user's device and/or app. For example, if a vaporizer device has not connected to a paired app within a set window (e.g., 1 second, 24 hours, 7 days, and/or other durations), the vaporizer device may automatically lock to prevent unauthorized use of lost or stolen vaporizer devices.

The vaporizer device may be configured such that the lock feature may persist across power events. Configuration and state data for such feature must be maintained in non-volatile storage on the vaporizer device to survive power-on reset (POR) and/or other reset conditions.

The vaporizer device may be configured such that a locked device cannot be factory reset (Lock Retention Feature), and may provide an indication to the user that the vaporizer device is locked. For example, if a user tries to "factory reset" a locked vaporizer device, the vaporizer device may show the "locked" LED indication, and not undergo reset.

The vaporizer device may be configured such that the Lock Retention Feature includes security sufficient in preventing defeating the locking functionality through hacking. In some implementations of the current subject matter, a shared private key must be used to lock/unlock the vaporizer device. A shared private key may be generated by the app and transmitted to the vaporizer device during a lock request. To unlock the device, the app may be configured to provide a challenge-response authorization to the vaporizer device with the private key to initiate an unlock sequence.

The vaporizer device may be configured to authorize allowed vaporizer devices to link to different user devices owned by the same user account holder. For example, if a user loses her user device, the user may be able to log into the app on her new user device and connect the vaporizer device to the new user device. For a vaporizer device previously paired to another user device and associated with a user account holder, the vaporizer device may be able to pair with new user device responsive to the app's user credentials being the same as the user credentials used to pair the vaporizer device on the previously paired user device.

The vaporizer device may be configured such that authorized users may not have to "shake to pair" (e.g., perform an electronic handshake communication exchange) to the same user device logged into the same user account after first pairing and/or linking to the user account. For example, when a vaporizer device is linked to a user account (with or without an age verification), the vaporizer device may "remember" that pairing until being unlinked from the user account. User credentials may be stored on the vaporizer device, such that the linked app information is retained.

The vaporizer device may be linked and authorized (e.g., tied to an account, with or without an age verification) such that the user may be provided with a specific set of features based on the authorization and/or link. The vaporizer device may be configured such that authorized and authenticated devices may be linked and the user is provided with a specific set (the full set) of features via the app.

The vaporizer device may be configured such that authorized ownership prohibits vaporizer devices owned by another account holder to be linked to another account without device owner explicitly releasing the vaporizer device from the original account, thus making stealing more difficult by communicating that the vaporizer device is paired to another account user. For a vaporizer device previously paired to another user device and associated with a user account, the vaporizer device may only pair with a new user device responsive to the app's user credentials being the same as those used to pair the vaporizer device on the previously paired user device. In some implementations, responsive to the vaporizer device being paired with a first user account and/or a first user device, the vaporizer device may be configured such that it may not be paired with a second user account and/or a second user device.

The vaporizer device may be configured for authorized ownership. For example, if a user attempts to link a vaporizer device paired with a first user account to a second user account, the user interface may be configured to display the name of the vaporizer device and/or the second user (e.g., in case the user accidentally swapped with a friend).

The vaporizer device may be configured to communicatively couple to one user device at a time. For example, the vaporizer device may only be paired and bonded to a single Bluetooth central user device such that subsequent pairings and bondings overwrite previous connections.

The vaporizer device may be configured to pair to the Bluetooth central user device when locked, such that the vaporizer device may be unlocked by any Bluetooth central user device logged into the user's account.

The vaporizer device may be configured such that a vaporizer device linking users may only link a specified number of vaporizer devices per a time period to prevent underage abusing (e.g., for youth prevention device deactivation). For example, matching ecommerce regulations may link maximum of five devices per 90 days (ecommerce purchase limit). The app may be configured to communicate the date after which a user may link another vaporizer device.

The vaporizer device may be configured to "shake to pair" for initial pairing of the vaporizer device to a user account (in order to prevent other vaporizer devices in range from pairing). The vaporizer device may provide an indication that it has been shaken, and is pairable.

The vaporizer device may be configured such that counterfeit vaporizer devices may not be able to connect to the app and/or Cloud during the initial pairing process to a user device. The app may be configured to verify that the vaporizer device is not a counterfeit device prior to allowing the device to be linked to a user account and/or providing any app services (such as firmware updates). Such process may utilize industry standard security procedures to ensure the service is secure and non-hackable.

The vaporizer device may be configured such that genuine vaporizer devices may take measures to only pair and link to genuine manufacturer apps and cloud to ensure security. The vaporizer device may be configured to independently verify that the app and/or cloud being connected to has been provided by the manufacturer and not a third party service to prevent fraud and other non-manufacturer-approved activities. Such process may utilize industry standard security procedures to ensure the service is secure and non-hackable.

The vaporizer device may be configured such that the first pairing and user device linkage (of a non-associated device) must happen when the app has internet access. Internet access may be required for verification of genuine (vs. counterfeit) vaporizer devices.

**The** vaporizer device may be configured such that users may pair additional devices to their account ("add device"), subject to a limit (e.g., of an x quantity of devices over a y length time period). The app may be configured to verify such criteria and provide a verification (or not) notice.

The vaporizer device may be configured to be "factory reset", unless the device is locked. Factory reset may include resetting the vaporizer device to the newly out-of-box state, including clearing the log, and resetting the "Research Mode" of data collection to "Standard Mode". If reset gestures are attempted (e.g., if pod is removed and/or inserted) while the vaporizer device is locked, the vaporizer device may be configured such that the LEDs show the "locked" indication. A user must first unlock the device to enable factory reset. Factory reset gestures may include orientating the device vertically, such that the pod is pointing up, removing the pod, orienting the device such that the pod end is down, inserting the pod, removing the pod a second time, orienting the device with the pod end up, reinserting the pod, and/or the like.

The vaporizer device may be configured such that if a user loses a locked device and releases it from the user account, then finds it again, she may be able to reconnect the device by logging into her user account to resume use. If a device is lost in a locked state, and re-pairing is attempted with the account the device was originally associated with, the device may function as normal and the link to the account may be restored. If the re-pairing is attempted with a different account, the device may remain locked.

The vaporizer device may be configured such that a device that has not been linked to an account (even if it has been non-authorized linked to a user device) may be re-paired and bonded with any user device and any user account, such that the device may be repaired and bonded to the app, no ownership construct is imposed on this link until the device is connected to a vaporizer device user account.

In some implementations, a vaporizer device that has not been linked to another user account may be paired and bonded to a user device and app without requiring a user login for the app (e.g., for new vaporizer devices, where the user has not yet gone through login or authentication). However, the app may be configured to provide reduced feature sets until the user logs in with an existing user account or creates a new user account.

In some implementations, users may be able to unlink a vaporizer device from an associated user account (e.g., if the user would like to give the vaporizer device away, or they have lost the vaporizer device). In one embodiment, a previous user's data (e.g., usage data) may be visible by a new user of the vaporizer device. An account-linked vaporizer device may be released ("unlinked") from that user account, both when in-range and out-of-range, via the app. The vaporizer device may be configured to restore to factory settings, including unlocking the vaporizer device if the vaporizer device is "locked", and wiping the log, but keeping the latest firmware, responsive to an attempt being made to pair the vaporizer device again to an app.

The vaporizer device may be configured such that responsive to the firmware (main/running image) of the vaporizer device being overwritten/updated, the vaporizer device may not function normally (e.g., may not produce vapor). A static LED pattern (or other indication) may be provided to alert the user that the vaporizer device is undergoing an update. In some implementations of the current subject matter, basic vaporizer device function may be suspended responsive to firmware being loaded to microcontroller memory. A static LED pattern (or other indication) may be displayable in the updating state to alert the user that the vaporizer device is functioning and updating firmware.

To prevent a device firmware update from interfering with data logging, prior to a firmware update occurring, a full log may be downloaded and removed from the vaporizer device. The vaporizer device may be configured such that if a connection to peripheral fails (e.g., device goes out of range, app crashes, or user device reboots), responsive to the user device reconnecting within a threshold period of time (e.g., within five minutes), the firmware update may resume from the stopping point.

The vaporizer device may be configured such that image validation safeguards (or other protections) may be implemented to ensure that when newly updated firmware runs on the vaporizer device, there is a failsafe in place configured to revert back to the previous firmware responsive to the new firmware malfunctioning. The vaporizer device may implement a failsafe firmware image bootloader, whereby images may be verified for integrity such that prior to booting new images, old images may be retained as fail-safe backups until new images boot successfully. The bootloader may be configured to implement mechanisms to determine if a firmware image has booted successfully, (e.g., watchdog timers, reset counters, and other means may be utilized to mitigate unwanted behavior and vaporizer device bricking).

The vaporizer device may be configured for background firmware updates such that a seamless, autonomous (e.g., no user intervention required to initiate) firmware update is initiated by the server to maintain updated firmware across connected vaporizer devices. Vaporizer device firmware may be updated automatically (without knowledge or intervention by the user) such that firmware updates are systematically pushed to users to guarantee that new features are pushed out to vaporizer devices, to fix critical bugs, and/or to test new features.

In some implementations of the current subject matter, the vaporizer device may be configured for background firmware updates such that the vaporizer device must wait until 60 minutes (another time period) of in-activity has lapsed prior to initiating a firmware update, thus ensuring the process is as non-disruptive as possible. During periods of inactivity new vaporizer device firmware may be pushed to vaporizer devices, validated, and the main firmware booting image may be updated. Inactivity may be defined by events such as on or all of the vaporizer device charging/on-the-charger, no motion for a certain period, a certain time of day, and an extended period of no puffs. The firmware transfer may be predicated on an adequate connection with the user device.

The vaporizer device may be configured for background firmware updates such that normal vaporizer device behavior may be interrupted while firmware download and update is occurring. In some implementations of the current subject matter, the update process may take between 1-5 minutes. During a background firmware update, if motion is detected or if the vaporizer device is removed from the charger, the vaporizer device may present an LED pattern (or other indication) to notify the user that firmware is updating and normal functionality is not available.

**In** some implementations, the vaporizer device firmware update may be configured to provide an immediate update responsive to a firmware update being available. The update may be displayed on a "HOME" screen of the vaporizer device app user interface. The app may be configured such that the user may be able to "update now" and/or get information about the nature of the update. In some implementations of the current subject matter, a "Top-of-Page" alert on the HOME screen of the app for the currently selected vaporizer device may be displayed, configured to update the vaporizer device firmware by user selection of an "update firmware now" option. Some implementations of the current subject matter may include an overlay (e.g., background grayed) where the user may "update" or "cancel" a firmware update. Responsive to a "cancel" command by the user, the "update firmware" alert may be displayed at a top-of-page location while allowing continued function of other app features. A "learn more" option may be provided, providing the user information about the update. Responsive to selecting "update now", a vaporizer device firmware update page flow may be presented. In some implementations, the vaporizer device may be configured to alert the user when the installed firmware version is out dated. The user may be able to select an option via the user interface to update the vaporizer device firmware automatically (e.g., enable automatic firmware updates).

The vaporizer device may be configured to prevent file corruption during the firmware download process, (which could cause vaporizer device malfunction) and validate image signature to ensure firmware images are not corrupted during the download process. The integrity of the firmware image as downloaded must be verified to ensure vaporizer devices do not run corrupted (e.g., malicious or otherwise) firmware. Algorithms such as Elliptic Curve Digital Signature Algorithm (ECDSA) may be utilized to ensure this feature is mathematically unbreakable.

In some implementations, the vaporizer device may be configured for firmware updates such that at certain times new firmware may be applied to a vaporizer device immediately, thus superseding normal vaporizer device function, to ensure the vaporizer device functions correctly. Such updates may be typically used during vaporizer device linkage (to the user device and/or app) and may be used for critical firmware updates. The vaporizer device may support a mode where a firmware image is downloaded and the main image is updated immediately after receipt of a command. In the immediate update mode, all other vaporizer device functionality is superseded by the update process. In succession, firmware may downloaded from the user device and/or app and an update to the main image may occur.

In some implementations, the vaporizer device may be configured such that during an immediate firmware update, if something goes wrong (e.g., connection to vaporizer device lost, connection to Internet lost, and the like), the app may communicate the error or problem to the user and automatically cancel the update and revert back to the previous vaporizer device state and app user interface.

In some implementations, the vaporizer device may be configured such that the immediate firmware update process may occur as quickly as possible to ensure a positive user experience (e.g., forced image download and main firmware swap process to be fully executed in < 3 minutes or < 1 minute).

In some implementations, the vaporizer device may be configured such that during an immediate firmware update, the app provides a progress/status bar to estimate time remaining for update to complete. In some implementations of the current subject matter, user confirmation is required prior to initiating. An estimated image download time and reflash time of micro, estimate may be closely mapped to actual download times through pre-processing, past history, testing, aggregated data from other devices, and/or the like.

In some implementations, the vaporizer device may be configured for the main image swap to facilitate testing of different firmware versions on the same vaporizer device and/or update main firmware to different image identifier based on reception of command from a Bluetooth central user device. If more than one image is stored on the vaporizer device (internal and/or external flash memory), a method may allow the Bluetooth central user device to initiate an update to a given firmware image stored in one of the vaporizer devices non-volatile storage areas.

In some implementations, to prevent the vaporizer device from bricking during a firmware update (specifically the swap of old and new firmware), the vaporizer device's battery must be at a minimum state-of-charge before updating running firmware. In some implementations of the current subject matter, when updating the running image with the newly downloaded image, the vaporizer device's battery strength must be greater than 25% (or another percentage) or connected to a charger which may be confirmed via the user device and/or and firmware. In some implementations of the current subject matter, to prevent the vaporizer device from bricking during a firmware update process, the user device's battery must be at a minimum state-of-charge before updating running firmware. During an immediate firmware update, the user device battery must be at 25% charged or connected to a charger.

**The** vaporizer device may be configured with strong security measures in place to prevent vaporizer device firmware from being accessible and/or readable by external parties. For example, all local images may be stored in encrypted formats. In some implementations of the current subject matter, implementation must pass National Cybersecurity Center (NCC) and/or other security audit. The vaporizer device and/or cartridge may include a 256-bit private key inside of crypto-chip for military grade security.

In some implementations, usage data may be tied to a user account, such that if a user logs into the app on a different user device (or logs-out then logs back in) the data may be preserved. Usage data may include one or more of vapor experience, goals data (e.g., from user setup, onboarding flow), guided draw results, location history, and/or other usage data.

**In** some implementations, if a user deletes an associated user account, according to General Data Protection Regulation (GDPR), all data associated with that user must be irrevocable unlinked from that user's account in a non-reversible fashion. The user app may be configured to unlink user data, provide user data (e.g., via CSV, and/or the like) per user request, provide the user with terms and conditions pages.

In some implementations, a user may age verify from one of several app locations, resulting in associated updates to the app feature set. An Account Settings page of the app may display "age verified" for the country (or other geographic region) of the user and may include other information associated with the user and/or the account associated with the user. Responsive to age verification updates, enabled features may include checkout, vaporizer device replacement, external webpages, mobile site, and/or other features. Age verification may be required for check-out, vaporizer device replacement, and other features. Age verification may be accessed from one or more of checkout (e.g., shopping), account menu, vaporizer device replacement flow, login, internet connectivity, and/or other app features. A user's age verification status may be reflected in Account Settings. The app may provide an age verification status and for which country the verification applies. The user may be provided an option to age verify from the app. Responsive to an unverified request, an external mobile web page may be provided.

In some implementations, age verification procedures may include verification using database services. In some implementations, a user may be age verified using personal user information such as, for example, social security number, driver's license, identification card, credit history, facial recognition, and/or the like. In some implementations, a user's name and phone number may be verified using a two-factor authentication (e.g., receive code via text message). Other age authentication procedures may include a "passport" feature. For example, a user may create an authorized use identification via the user interface of the user device. When the vaporizer device leaves proximity of the associated user device, the vaporizer device may be configured to disable functionality. Functionality may be re-enabled responsive to returning within a threshold proximity of the associated user device. In some implementations, the vaporizer device may be configured such that the vaporizer device remains enabled responsive to being beyond a threshold proximity of the user device for a limited duration (e.g., once a given time period expires, the vaporizer device may lock).

In some implementations, the vaporizer device may be configured such that activation, via a user interface of a user device, is required prior to use. In some implementations, the vaporizer device may be configured for immediate use after purchase without requiring activation via pairing with a user device for a limited duration. For example, for a time period (e.g., one day, one week, one month, and/or other durations) or a usage amount (e.g., ten puffs, one cartridge, and/or other usage amounts) after purchase, the vaporizer device may be enabled for use by the user, however the vaporizer device may be configured to lock (e.g., disable functionality) responsive to the threshold time period and/or usage amount expiring without registration via the user interface by the user. Registration may include a user age verification process, as described in further detail below.

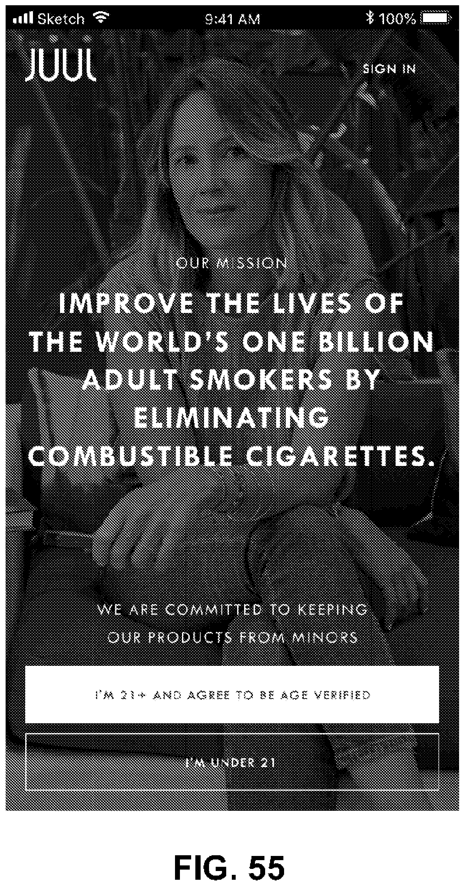

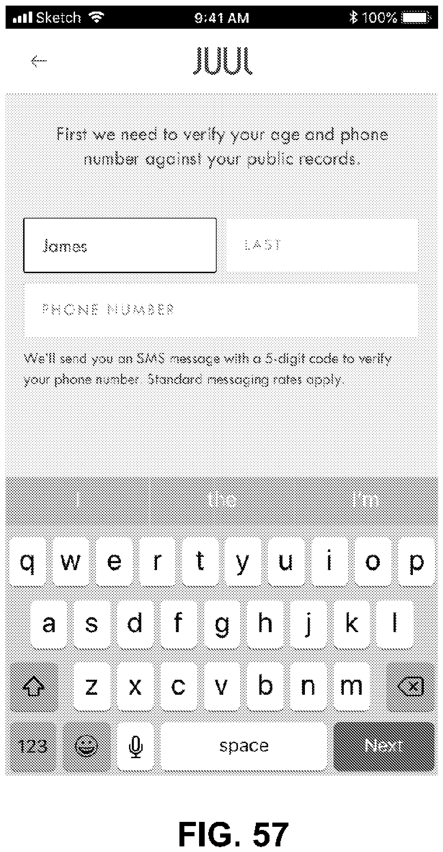

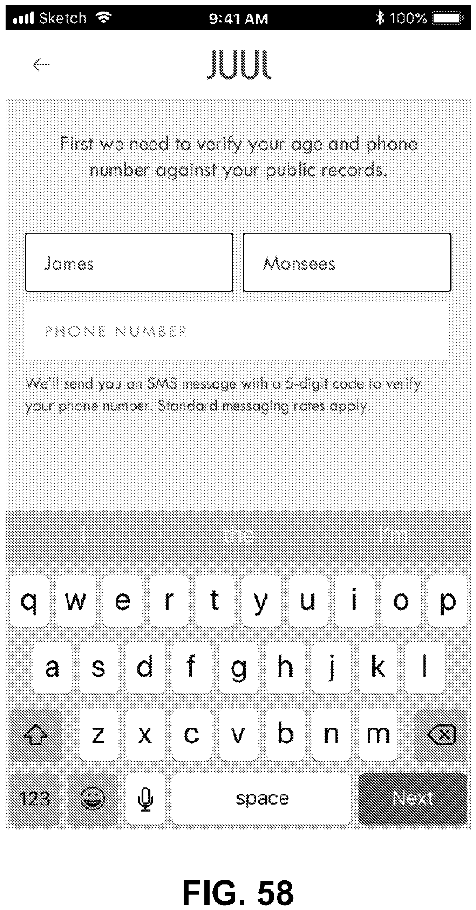

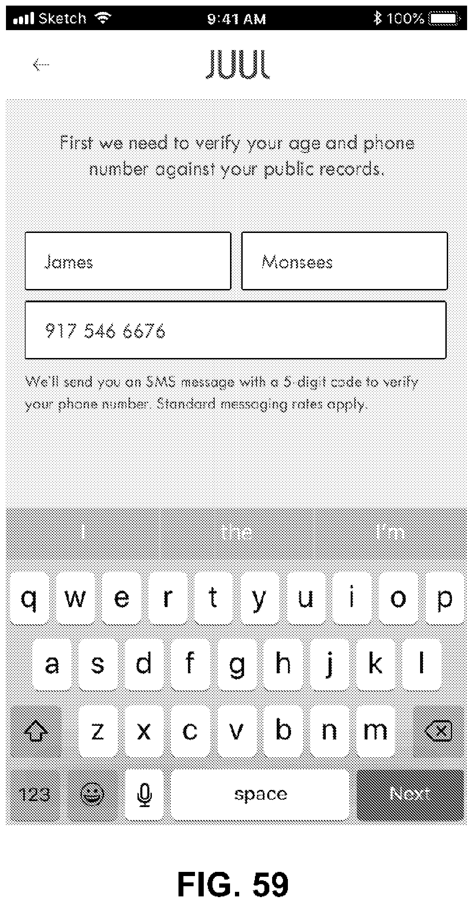

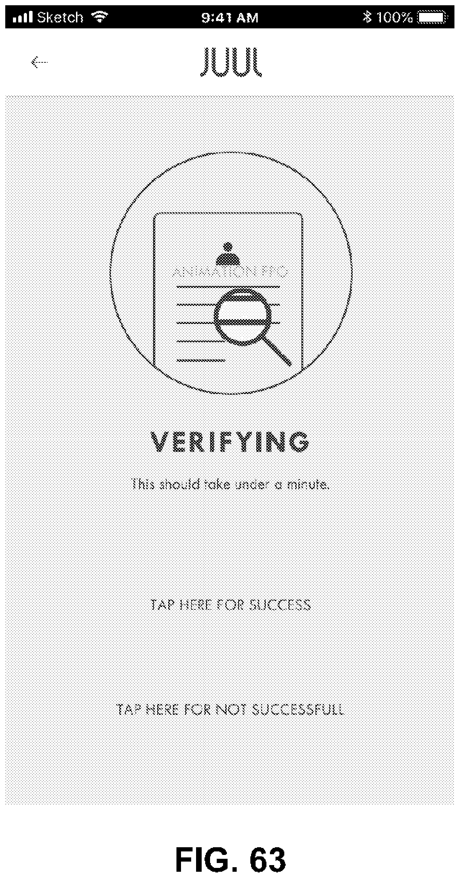

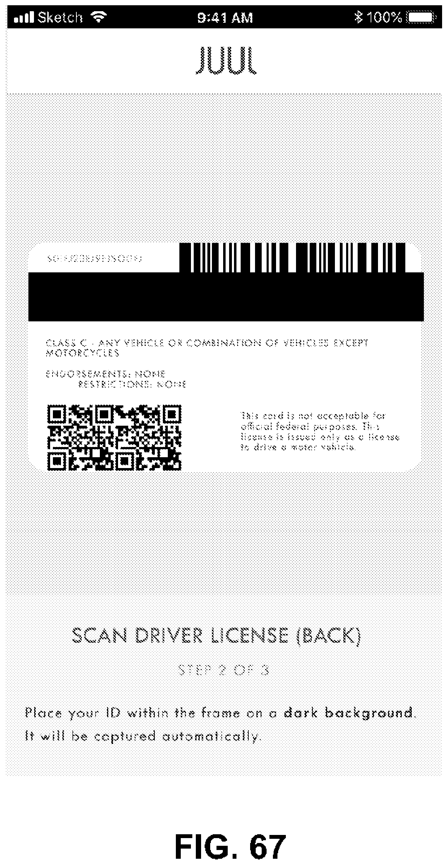

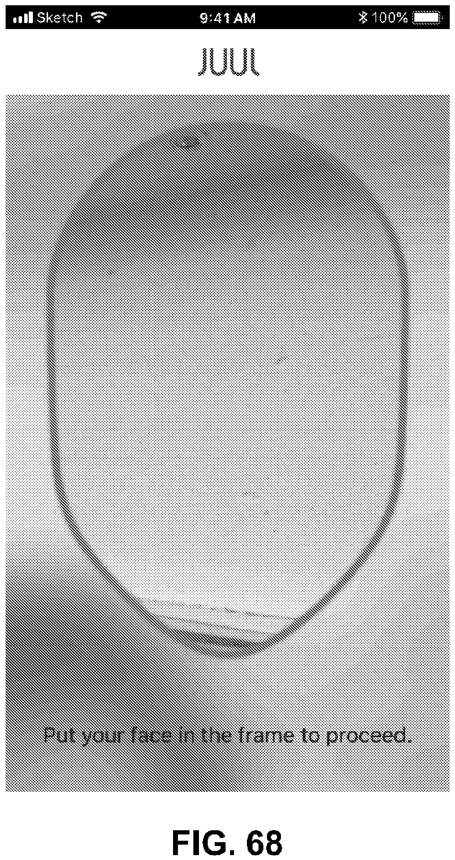

**FIGs.** 55-69 illustrate example user interfaces that may appear in an app installed on a communication device in communication with a vaporizer (e.g., as part of an "app" or other software on a user's mobile device). The user interfaces of FIG. 55-69 relate to age verification features that may provide benefits in providing data as well as vaporizer-specific controls for preventing unauthorized and/or underage use, purchase, etc. of a vaporizer. In one implementation, the vaporizer may be configured to initiate functionality only after successful completion of an age verification process via the user interface. In another implementation, the vaporizer may be configured to disable responsive to the age verification process not being completed within a threshold duration after purchase.

**The** app screen view of FIG. 55 or a similar approach may be used to prompt a user of a vaporizer to implement a device age verification feature. In one example, the user may be prompted to enter the age verification process by agreeing to be age verified. Alternatively, responsive to the user "opting-out" of the age verification process and/or being under a threshold age, the vaporizer may be configured to disable functionality. The threshold age may be based on consumption laws of a user's geographical region and/or other considerations.

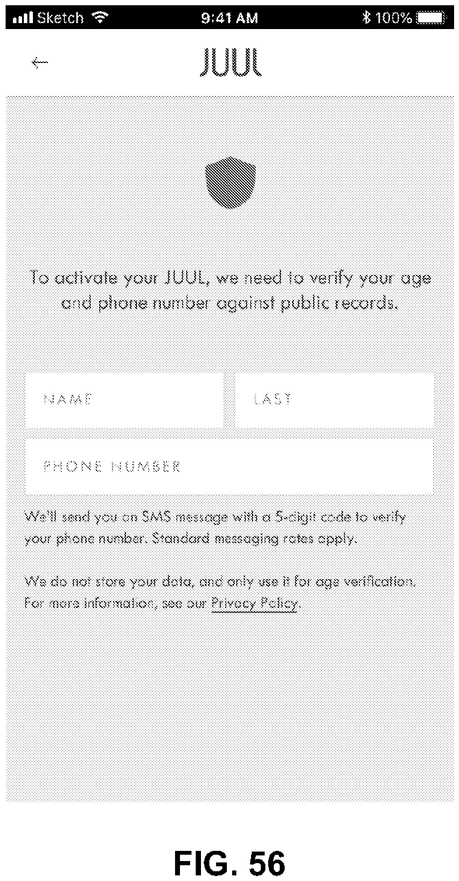

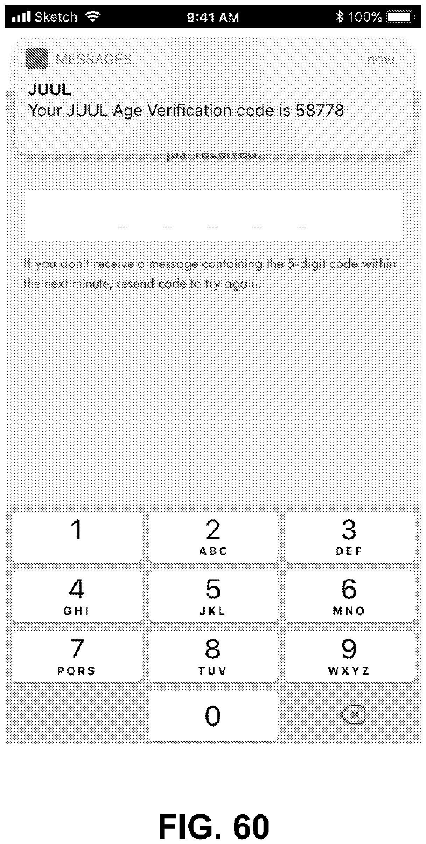

The screen views of FIGs. 56-59 show a view that may be presented to the user upon selection of, and agreement to, the age verification feature. This screen may prompt the user to enter personal user information (e.g., user's name and phone number). In some implementations, other user information may be required such as a social security number, driver's license, identification card, credit history, facial recognition, and/or the like. Responsive to the user inputting the user information, the age verification feature may be configured to verify the user's age using one or more authentication methods. For example, a user's name and phone number may be verified using a two-factor authentication (e.g., receive code via text message). The user may then receive an authentication message containing a unique or "one time use" numeric and/or alphanumeric security code, as shown in FIG. 60.

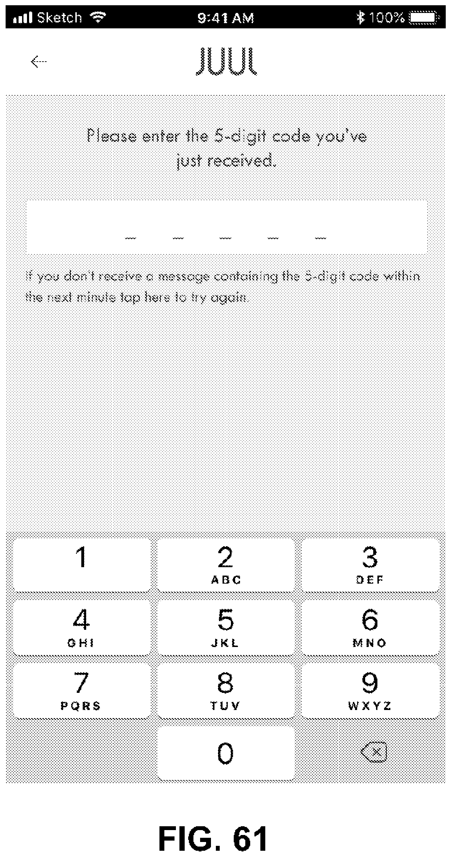

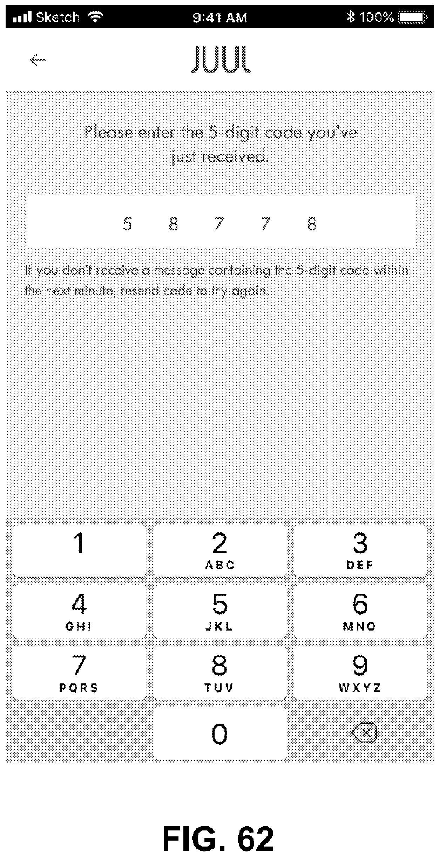

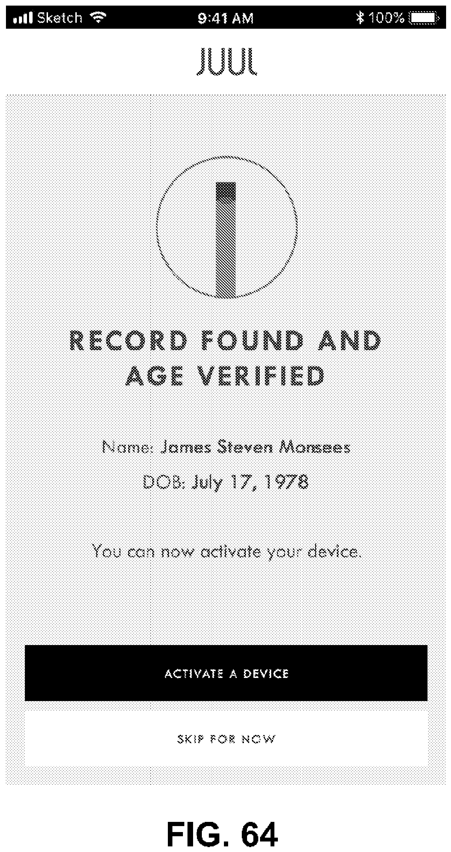

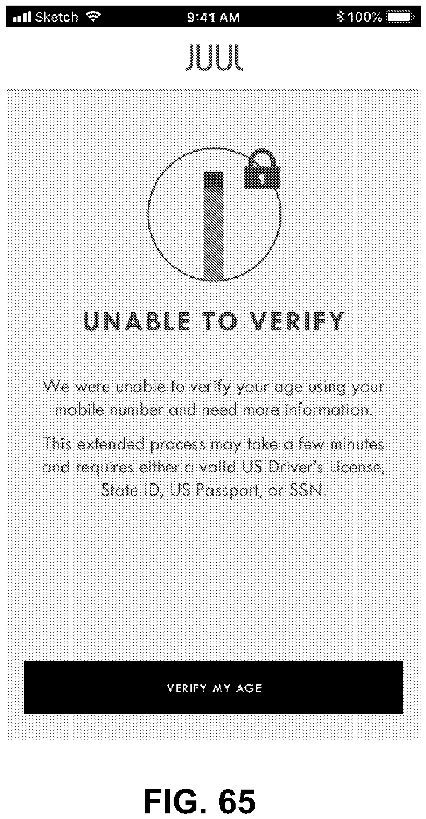

**As** shown in FIGs. 61 and 62, the user may be prompted to enter the security code they received. Once the user has entered the security code, the app screen view of FIG. 55 or a similar approach may be used to communicate that the user information is being verified. User information may be verified using one or more of a third-party verification system, user information database, and/or other verification methods. The duration of the verification process may be displayed (e.g., "under a minute," and/or other durations). Responsive to successful verification of the user information, the user may be notified via the app screen view of FIG. 64 or a similar approach. However, if the user information cannot be verified, the user may be notified via the app screen view of FIG. 65 or a similar approach, and the user may be prompted to provide additional user information to continue the age verification process.

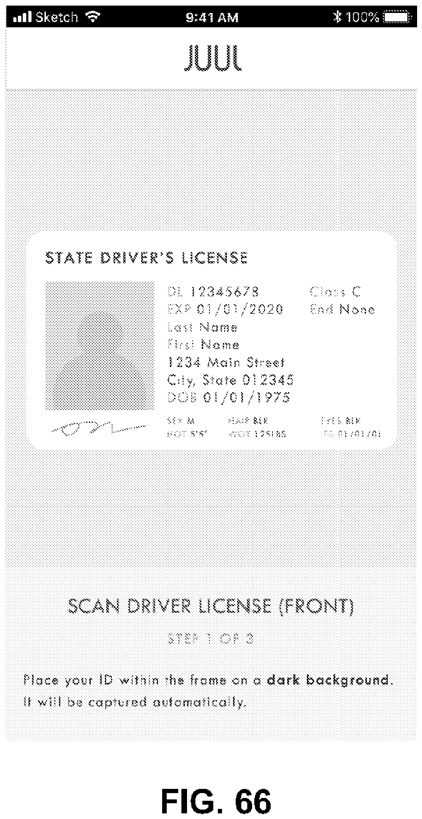

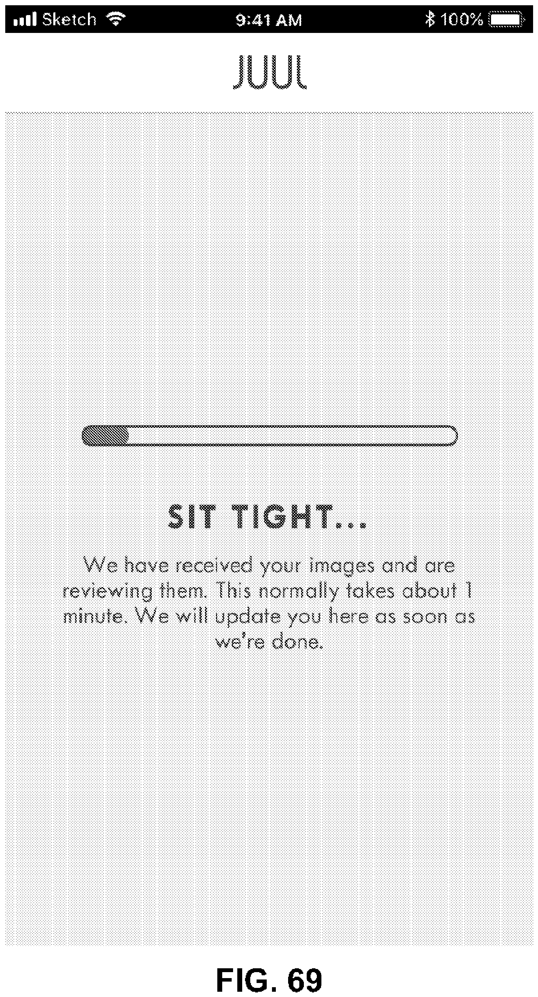

Responsive to an unverified user continuing the verification process, the screen views of FIGs. 66-69, or a similar approach, may be used to prompt the user to provide user information documentation such as a valid driver's license, state identification card, passport, social security number, and/or other information. The app may be configured to access one or more features of the user device, such as a camera feature, to capture, scan, or otherwise document the user's information. In one implementation, facial recognition may be used to verify and authenticate photo identification provided by the user. Responsive to submission of the user information documentation and/or images, the app screen view of FIG. 69 or a similar approach may be used to communicate that the user information is being verified. In some implementations, an estimated duration of verification time and/or a status bar may be displayed. Responsive to successful verification of the user information, the user may be notified via the app screen view of FIG. 64 or a similar approach.

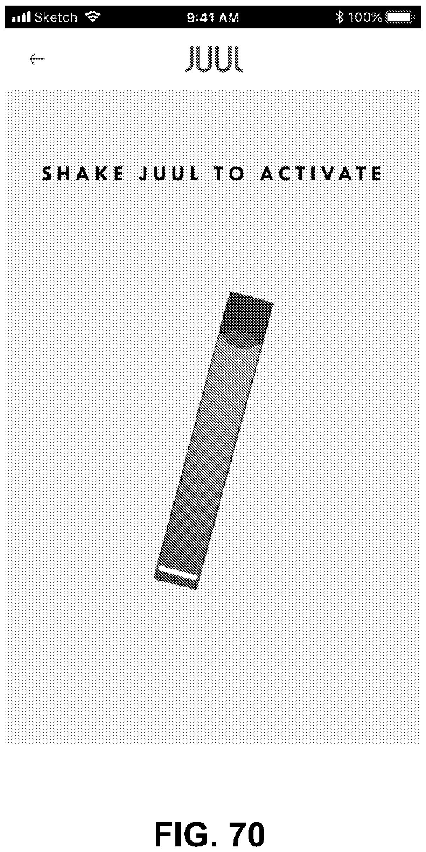

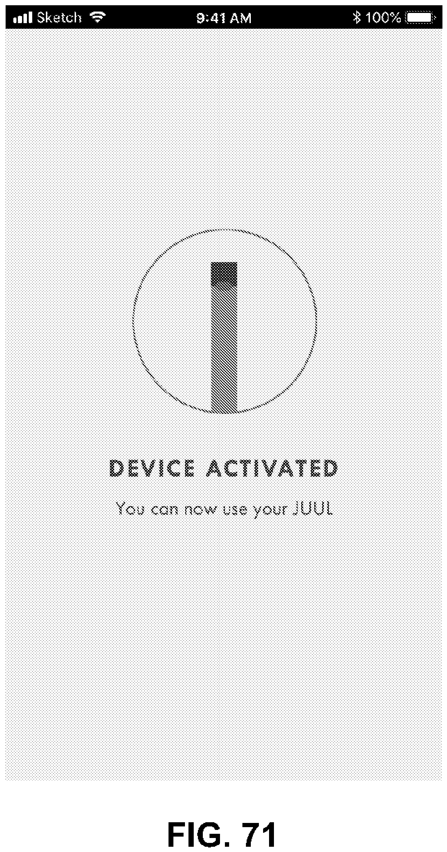

Once the age verification process has been completed, the vaporizer may be configured for activation by prompting, via the app screen view of FIG. 70 or a similar approach, one or more user actions such as shaking the vaporizer, and/or other user inputs. A confirmation of vaporizer device activation may be provided, as shown in FIG. 71.

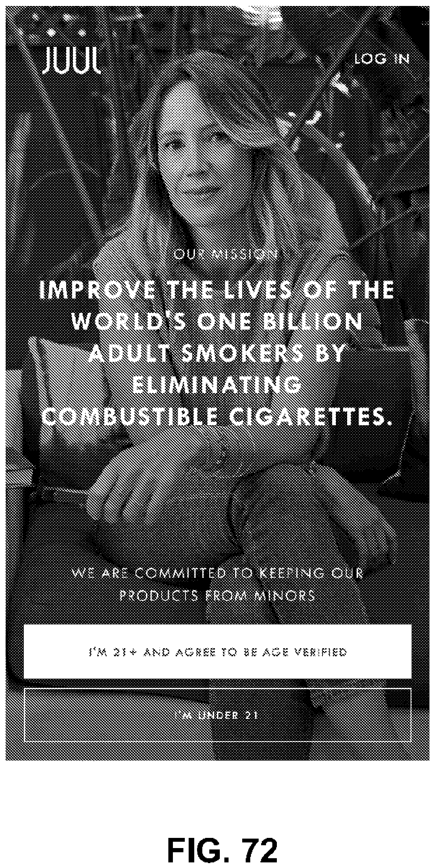

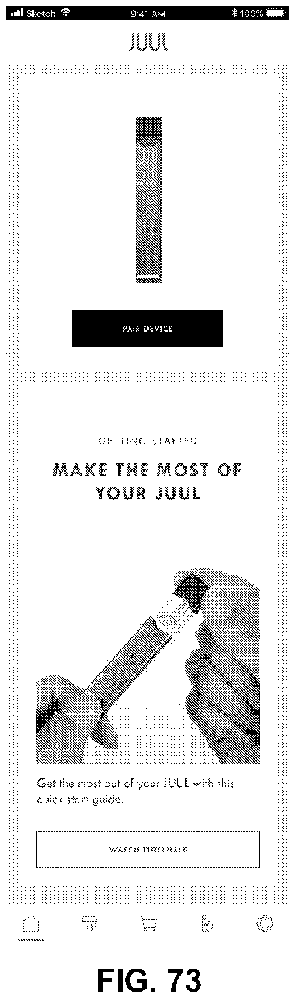

In some implementations of the current subject matter, responsive to a user exiting and returning to the app, a screen view such as shown in FIG. 72 may be provided. A new user may initiate the age verification process or a returning verified user may "Log In" to their associated user account. A logged-in, verified user may then access additional features of the app including a vaporizer device to mobile, or other user device, pairing process as shown in FIG. 73. A quick start guide and/or other on-boarding instructions (e.g., user manuals and/or use tutorials configured to familiarize the user with the vaporizer device) may be provided by the app to a logged-in, verified user. Additional coaching and habit management programs may also be provided, as described further herein. In some implementations, after activation, the device may periodically re-verify in the background with little to no action required by the user. For example, the vaporizer may be required to connect with the user device periodically (e.g., once per week, every two weeks, and/or other durations).

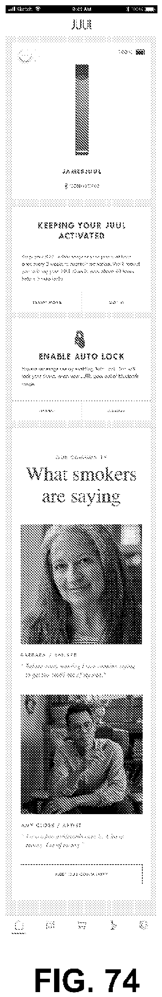

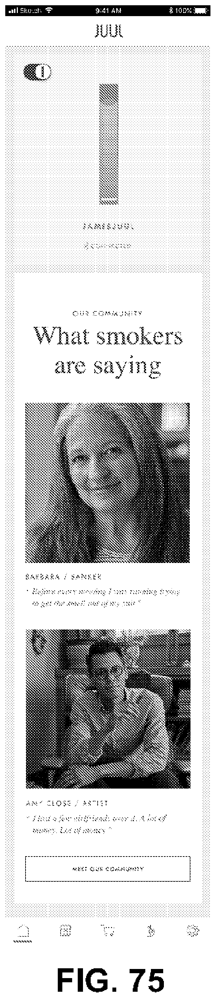

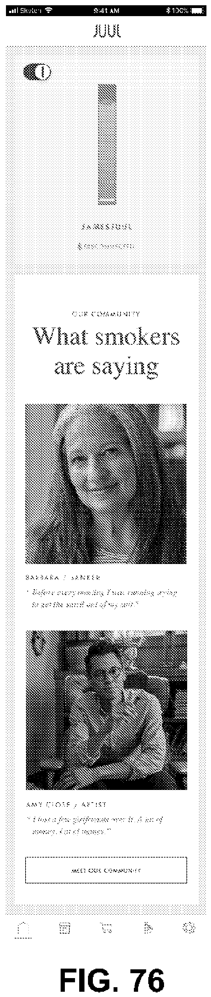

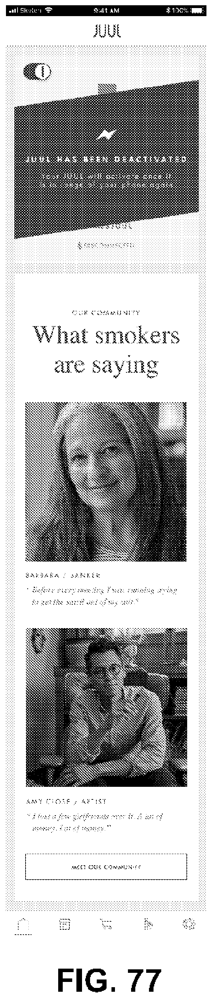

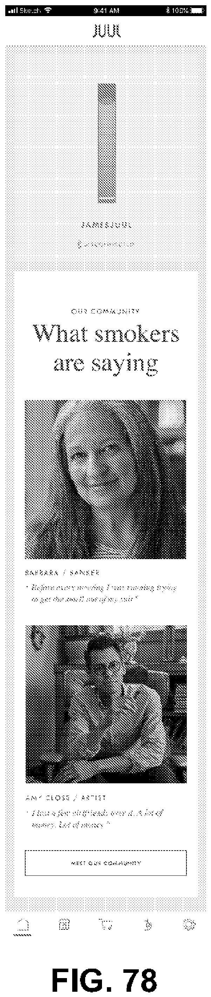

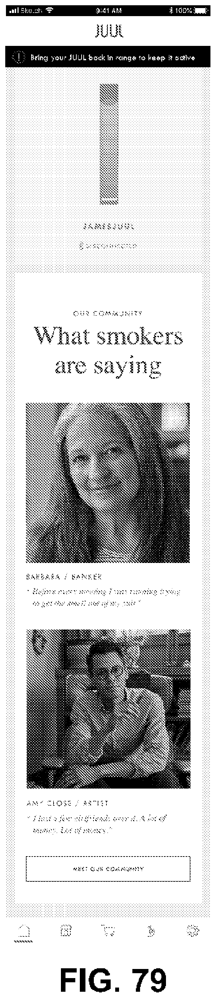

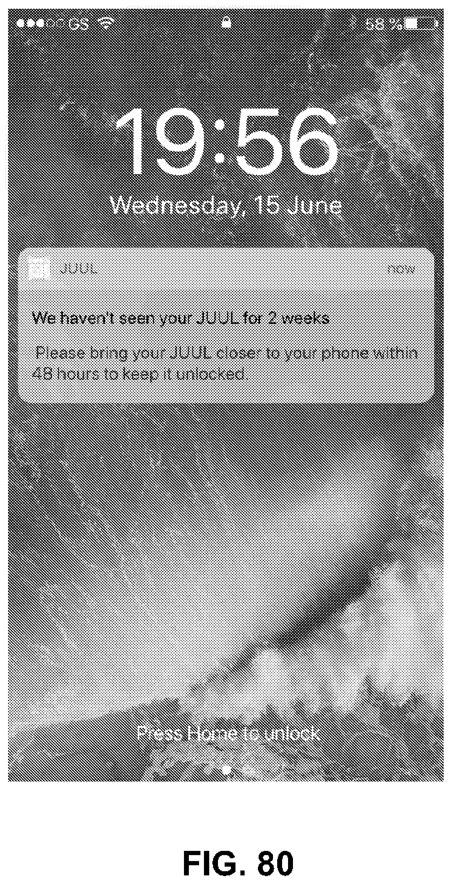

The screen views of FIGs. 74-80 show embodiments of auto-locking features, associated with the age verification feature, configured to disabled and enabled the vaporizer via the user interface, as described in connection with FIGs. 23-30. In some implementations, the age verification process may only be required responsive to insertion of specific cartridge types (e.g., flavored cartridges) into the vaporizer device.

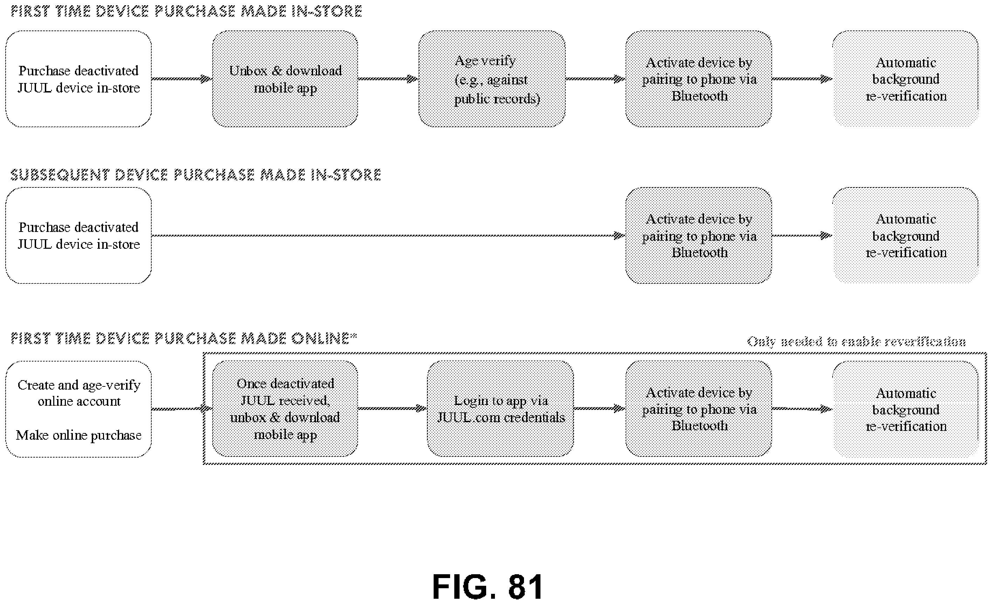

FIGs. 81-83 describe one or more age verification methods for ensuring age-appropriate use of the vaporizer device. As shown in FIG. 81, a first time device purchase made in-store may require one or more of the following operations for age verification and/or activation of the device: (1) purchase deactivated device in-store; (2) unbox and download mobile app; (3) age verify against public records; (4) activate vaporizer device by pairing to a user device via Bluetooth and/or other connection; and/or (5) automatic reverification of device. A subsequent device purchase made in-store may require one or more of the following operations for age verification and/or activation of the device: (1) purchase deactivated device in-store; (2) activate vaporizer device by pairing to a user device via Bluetooth and/or other connection; and/or (3) automatic reverification of device. A first time device purchase made online may require one or more of the following operations for age verification and/or activation of the device: (1) create and age-verify an online account and make online purchase; (2) receive deactivated device, unbox, and download mobile app; (3) log into app using online account credentials; (4) activate vaporizer device by pairing to a user device via Bluetooth and/or other connection; and/or (5) automatic reverification of device.

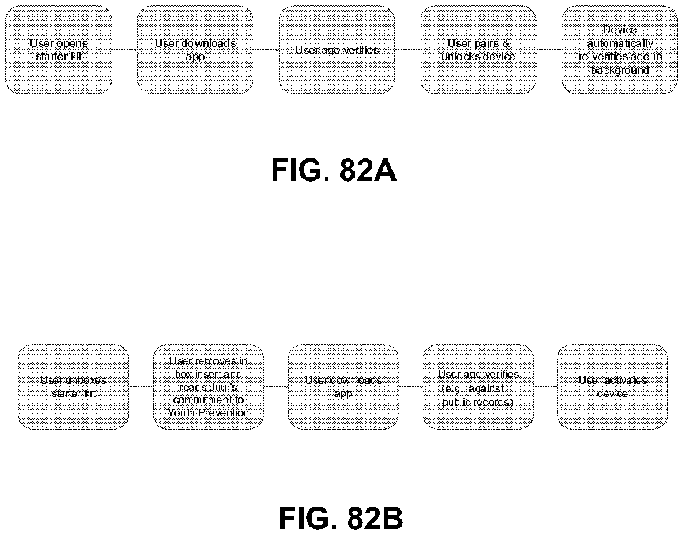

**As** shown in FIG. 82A, another embodiment of an age verification method for ensuring age-appropriate use of the vaporizer device may include one or more of the following operations for age verification and/or unlocking of a vaporizer device: (1) unbox the vaporizer device and/or cartridge(s); (2) download app; (3) age verify; (4) unlock vaporizer device by pairing to a user device via Bluetooth and/or other connection; and/or (5) automatic reverification of device. In yet another embodiment, as shown in FIG. 82B, of an age verification method for ensuring age-appropriate use of the vaporizer device may include one or more of the following operations for age verification and/or unlocking of a vaporizer device: (1) unbox the vaporizer device and/or cartridge(s); (2) read provided Youth Prevention information; (3) download app; (4) age verify against public records; (5) activate vaporizer device by pairing to a user device via Bluetooth and/or other connection.

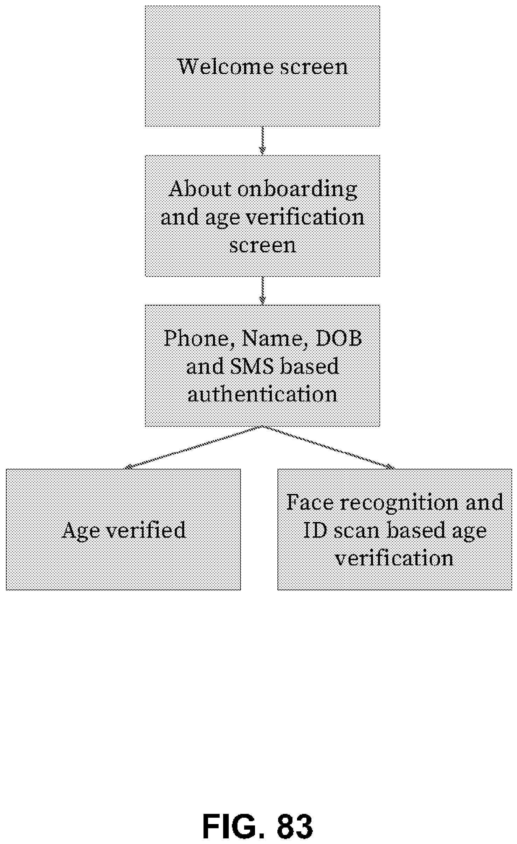

**As** shown in FIG. 83, another embodiment of an age verification method for ensuring age-appropriate use of a vaporizer device may include one or more of the following operations for age verification via a user interface: (1) provide a welcome screen; (2) provide onboarding information and prompt for age verification information; (3) verify user information with authentication; and/or (4a) provide notification of successful age verification; or (4b) require additional age verification information.

After a user has been age verified and their associated vaporizer device is unlocked using one or more of the methods described herein, the user may be required to re-authenticate themselves periodically. Re-authentication may be required (e.g., based on firmware within the vaporizer device) once per day, per a specific number of days, per week, per a specific number of weeks, per month, per a specific number of months, etc. In some implementations, the vaporizer device may require re-authentication once every two weeks. Re-authentication may occur via the use of a user device executing a specific application capable of communicating with the vaporizer device, such as those described herein. For example, re-authentication may require a user to periodically electronically pair (e.g., via Bluetooth) their vaporizer device with a user device through the application. In some aspects, the period of time required for re-authentication may start once the vaporizer device detects that it is no longer paired to the user device, may restart each time the vaporizer device detects that it is paired to the user device, may start regardless of the most recent pairing (e.g., restart based on a specific re-authentication procedure implemented through the execution of the application), and/or the like.

In some implementations, after a user has been age verified using one or more of the methods described herein, the application executed on the user device may store credentials for the user indicating that the user is age-verified (e.g., user account information with a specific value for an "age verified" field associated with the user account). In some implementations, the credentials may be created as part of a registration process that is implemented using the application executed on the user device. In some implementations, the user device may receive the credentials or some portion thereof from a server after an initial account setup and/or age verification of the user. For example, if a user age-verifies themselves using a web browser, a dedicated kiosk, multifactor authentication (e.g., via email, SMS, and/or the like), and/or others methods external to the application executed on the user device, then a server configured for communication with the user device may transmit the credentials or some portion thereof to the user device. In some aspects, a user may only be allowed to (re)authenticate themselves for the purposes of unlocking a user device if the credentials stored on the user device indicate that the user is age-verified. In some aspects, devices purchased using an age-verified user account may be shipped activated, but may still require (re)authentication within a specified period of time.

In some aspects, a user may be restricted from purchasing a specific number of vaporizer device and/or cartridges for use with a vaporizer device within a specific time. For example, in some aspects, a user may be restricted from buying more than one, two, three, etc. devices within a month (e.g., calendar month or rolling based on the last purchase of a vaporizer device). In some aspects, a user may be restricted from buying more than ten, fifteen, twenty sets of cartridges, etc. (e.g., with two, three, four, five, etc. cartridges per set) within a month (e.g., calendar month or rolling based on the last purchase of a set of cartridges). In some implementations, a user's purchases may be tracked through more than one source. For example, a user's aggregate purchases within a specific time may be determined based on data received through user device(s), web browser(s), kiosk(s), retail store(s) (e.g., via point-of-sale systems), online retailer(s), server(s) configured for communication with one or more thereof, and/or the like. In order to track a user's aggregate purchases, the user may be required to utilize an age-verified user account for each purchase.

In order to prevent a user from creating multiple user accounts, a user may be restricted to one account for each set of unique credentials (e.g., unique information that only identifies one person). In order to determine whether a set of credentials is unique, the system (e.g., via a server) may require a user to provide a valid name, date of birth, permanent address, and the last four digits of their social security number. This information can be verified by a third party and/or cross-referenced with publicly available records to confirm the person is of age in their location/jurisdiction. If a user's public records fail to match or they do not wish to provide their social security number, the user may be required to upload or swipe (through a card reader) a valid government-issued identifier for compliance review. In some aspects, a user may be required to verify themselves through multi-factor authentication. For example, in order to create a user account, a user may be required to provide a phone number and then provide the code sent to the phone number before proceeding. In some aspects, a code may only be sent to a phone when the phone number is known to be associated with a person of legal age for purchase of a vaporizer device. In some aspects, a SIM card associated with the phone number may be verified and a user may only be permitted to use a code sent to a phone number when the SIM card is verified (e.g., when the SIM card is associated with the phone number provided). Additionally or alternatively, a user may be required to upload or swipe (through a card reader) a valid government-issued identifier and scan their face through a facial-recognition interface (e.g., provided through execution of an application on the user device being used for account creation). In order to prevent a user from using multiple user accounts from different users, the user may be required to verify themselves each time they use a user account for a purchase, such as through electronic verification of an identifier (e.g., driver's license), facial recognition, and/or the like.

In some implementations, a kiosk or other device may be configured for device activation. For example, a kiosk may be configured to receive user input to age verify a user according to the methods described herein. Once the user is age verified, the kiosk may provide the user with a receipt having a code (e.g., barcode, QR code, numerical value, alphanumeric string, and/or the like) for presentation to a store clerk. The store clerk may scan or input the code into a system that indicates what the user may purchase prior to allowing the store to sell vaporizer devices or cartridges to a user. In some aspects, the kiosk may be connected (e.g., physically, electronically, and/or in communication with) to a vending machine with vaporizer devices and/or cartridges. Once the user is age verified and makes a purchase, the vending machine may dispense the purchase to the user.

**In** some aspects, vaporizer devices stored in the vending machine may be deactivated and/or require authentication (e.g., via one or more of the device-pairing methods described herein) before a user may use the vaporizer device. In some aspects, the vaporizer device may not be configured for wireless communication with a user device. Accordingly, such vaporizer devices may be prevented from activation based on information stored on the device, such as a register (e.g., 1 bit) in the vaporizer device. In order to activate the device, a user may be required to place the device into an interface in communication with the kiosk. After the user is age verified and the vaporizer device is placed into the interface, the kiosk may be configured to change the value of the register to unlock the device. In some implementations, the interface can include a cradle and/or cable with an electronic interface capable of communicating with the vaporizer device through an interface built into the vaporizer device (e.g., USB or other data communication interface, such as one or more pins). Once the device is unlocked, the serial number or other unique identifier associated with the vaporizer device, a date of activation, a date of purchase, and/or the like may be associated with the user account for tracking purposes. Although a kiosk is described, any device capable of communicating with the device without the use of wireless communications may be used.

### Activation System for Connecting Vaporizer Device

In some implementations of the current subject matter, a vaporizer device may be configured to ensure age-appropriate purchasing and/or use of the vaporizer device. For example, vaporizer devices distributed to retailers for in-store purchase by consumers may be sold in a locked or disabled state. A first time device purchase made in-store may require age verification and/or an initial setup of the device prior to use. An activation system may be provided such that after purchase of a vaporizer device, a user may use the activation system on-site to activate the vaporizer device responsive to successful completion of a security verification provided by the activation system.

In some implementations, an activation system may be provided for vaporizer device activation, such as at a retail store. For example, the activation system may be configured to receive input from a user purchasing a vaporizer device and verify the user according to one or more methods described herein. The activation system may include a user device. The user device may be an electronic kiosk such as a self-service terminal, tablet, smartphone, personal computer, and/or the like. For example, the user device may be a commercially used, interactive kiosk configured to unlock a vaporizer device responsive to an eligible user inputting user information via a touchscreen, trackball, computer keyboard, pushbutton, and/or other input devices configured for communication with the user device. Alternatively and/or additionally, the activation system may be coupled with and/or an integrated part of a point-of-sale (POS) system.

The activation system may include one or more of a user device and a dock coupled with the user device. The dock may be further configured to receive and couple with a vaporizer device, thereby communicatively coupling the vaporizer device and the user device. For example, the dock may provide a mechanical coupling between the vaporizer device and the user device that secures the vaporizer device to at least a portion of the user device (e.g., a perimeter of the user device, a front surface of the user device, a back surface of the user device, and/or the like). Alternatively and/or additionally, the dock may provide an electrical coupling and/or an optical coupling between the vaporizer device and the user device such that the vaporizer device and the user device are able to exchange data signals. For example, the dock may provide, to the vaporizer device, direct and/or indirect access to a serial port and/or a parallel port on the user device. Alternatively and/or additionally, the dock may include an adaptor that allows a first type of port on the vaporizer device to couple with a second type of port on the user device.

**The** activation system may include a security control incorporated in an application executed on the user device in communication with the dock and/or the vaporizer device. For example, the application executing the security control on the user device in communication with the dock and/or the vaporizer device can receive an identifier of the vaporizer device and determine whether a security setting is included in a user profile or other setting associated with the vaporizer device. The user interface may be presented on the user device that is part of the activation system, such as a handheld device, tablet, laptop, desktop, interactive kiosk, etc., operating control logic. Control logic or other software functionality for providing these features may include a user interface, and may provide input/output and analysis capability for modulating operation of the vaporizer device. Examples for the first communication hardware of the user device and/or the second communication hardware of the vaporizer device are described above. Such a feature can be used to require that a user identity verification be entered at the user device in communication with the dock and/or vaporizer device to cause the vaporizer device to unlock prior to use of the vaporizer device.

**The** activation system may communicatively couple to the vaporizer device via a wired and/or wireless connection. For example, in some implementations, the activation system may be configured to transmit a firmware upload from the user device to the vaporizer device when the vaporizer device is coupled with the dock, which in turn couples the vaporizer device with the user device. The dock may include a 5-pin connector configured to align with and couple to a 5-pin connector of a vaporizer device to enable communication between the vaporizer device and the dock and/or the user device. Responsive to a user successfully completing security verification at the user device, the user device may transmit a firmware upload to the vaporizer device, which enables or activates the vaporizer device for consumer use.

In some implementations of the current subject matter, the 5-pin connector of the vaporizer device and/or the dock may include two pins configured for charging, and three pins configured for a serial connection. Alternatively and/or additionally, the dock may include a wired connection configured to couple to one or more ports on the user device including, for example, a universal serial bus (USB) port (e.g., USC-A, USB-B, USB-C, mini-USB, micro-USB, USB 3, and/or the like), a lightning connector, and/or the like. According to some example embodiments, instead of and/or in addition to a wired connection, the activation system may be configured to enable the user device to be communicatively coupled with the vaporizer device via a wireless connection such as, for example, a Bluetooth connection and/or the like.

**The** dock may include a receptacle. At least one end of the receptacle may be open in order to receive the vaporizer device while an opposite end of the receptacle may include a connector (e.g., a 5-pin connector, USB port, and/or the like) that couples with a corresponding connector on the vaporizer device. Coupling the vaporizer device with the dock may include inserting the vaporizer device into the dock. The dock may include one or more mechanisms for retaining at least a portion of the vaporizer device inside the dock including, for example, snap-fit, friction-fit, magnets, and/or the like. Furthermore, the dock may be affixed to the user device using one or more of a snap-fit coupling, an adhesive, and/or the like.

In some implementations of the current subject matter, the connector may be built into a user device such as a tablet case, and/or adhered to the back of a tablet. As described in further detail below, the dock may be configured to retain coupling with the vaporizer device by magnetic force, tensile force, and/or other mechanisms while the vaporizer device is communicating with the user device. For example, the 5-pin connector may include a magnet configured to retain the placement of the vaporizer device while coupled with the dock. Alternatively, the dock may include a spring component configured to retain the vaporizer device. A user may insert the vaporizer device into the dock, which may provide a stable connection with the user device while the user completes the security verification and/or firmware unlock of the vaporizer device. One or more components of the activation system may be configured to couple with an external power source to provide charging to one or both of the user device and/or the vaporizer device.

**To** achieve a consistent connection between a vaporizer device and the dock, the dock may include a spring-loaded contact configuration that can withstand repeated connections between a vaporizer device and the dock. The spring-loaded contact design may include a spring configured to retain the position of the vaporizer device while the vaporizer device is being housed by the dock. The vaporizer device and/or the spring-loaded contact design of the dock may be configured to provide consistent tension between the vaporizer device and the dock to ensure stable contact and superior electrical signal integrity between the vaporizer device electrical contact pins and the dock electrical contact pins.

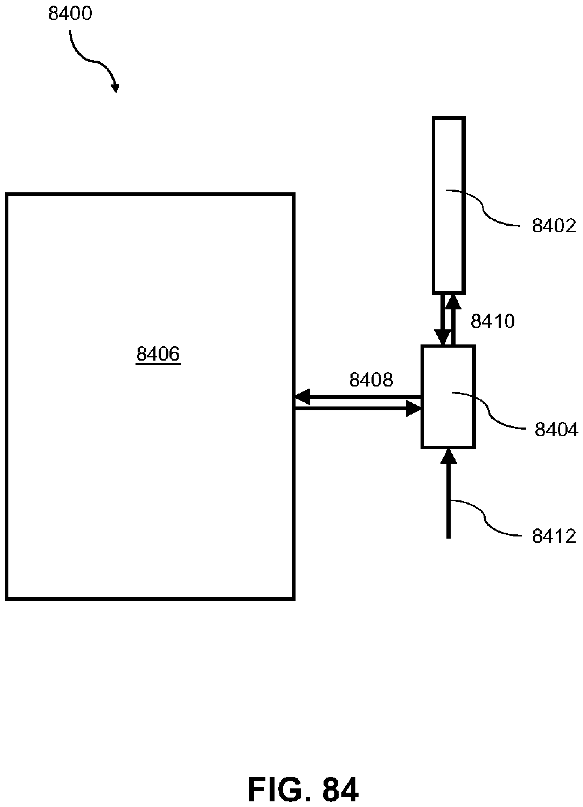

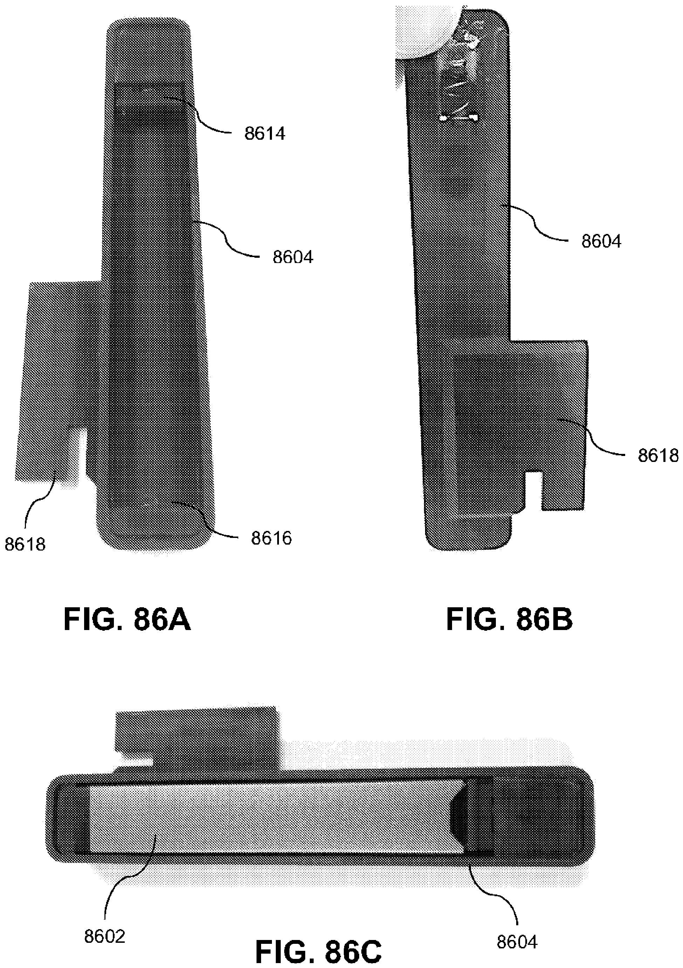

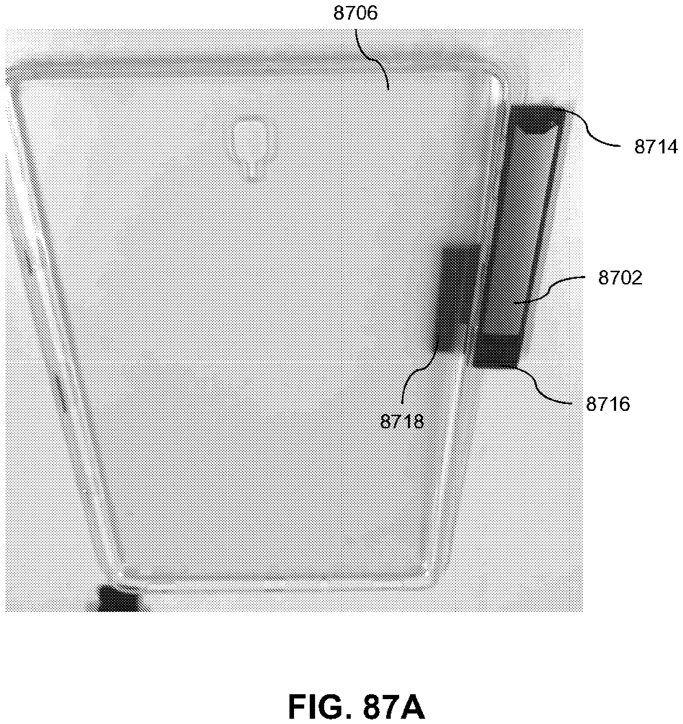

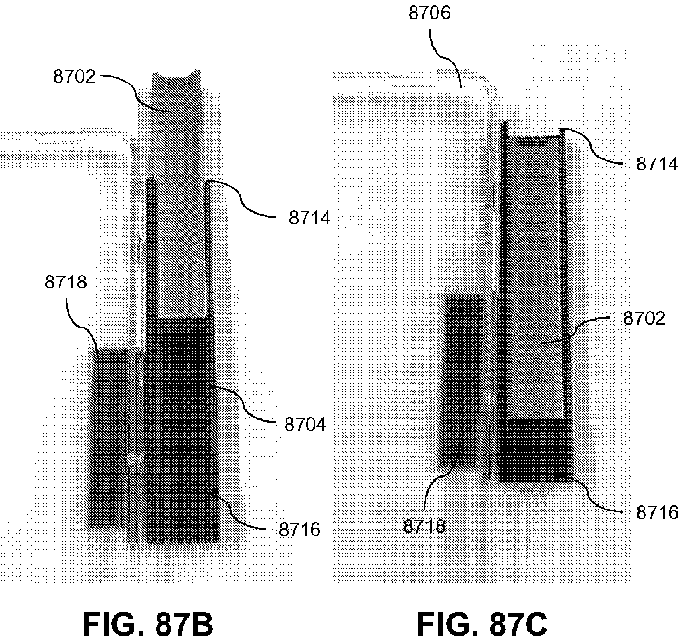

FIG. 84 illustrates a block diagram of an activation system 8400 for a vaporizer device 8402. The activation system 8400 may include one or more of a user device 8406, a dock 8404, and/or the vaporizer device 8402. The vaporizer device 8402 may be configured to couple with the dock 8404. In a first embodiment, coupling may include insertion of the vaporizer device 8402 into the dock 8404 by sliding a connection end of the vaporizer device 8402 into the dock 8404 from an open end of the dock 8404, (e.g., a first side of the dock), as shown in FIGs. 87A-87C. The dock 8404 may hold the vaporizer device 8402 in place using magnetic coupling. In another embodiment, the vaporizer device 8402 may be coupled with the dock 8404 by inserting a connection side of the vaporizer device 8402 into a connection side of the dock 8404. The dock 8404 may include a spring-loaded contact configured to hold the vaporizer device 8402 in place by tension, such that the spring compresses as the vaporizer device 8402 is inserted into the dock 8404. A top end of the vaporizer device 8402 may then be inserted, (e.g., snapped into place) into the top end of the dock 8404, as shown in FIGs. 86A-86C.

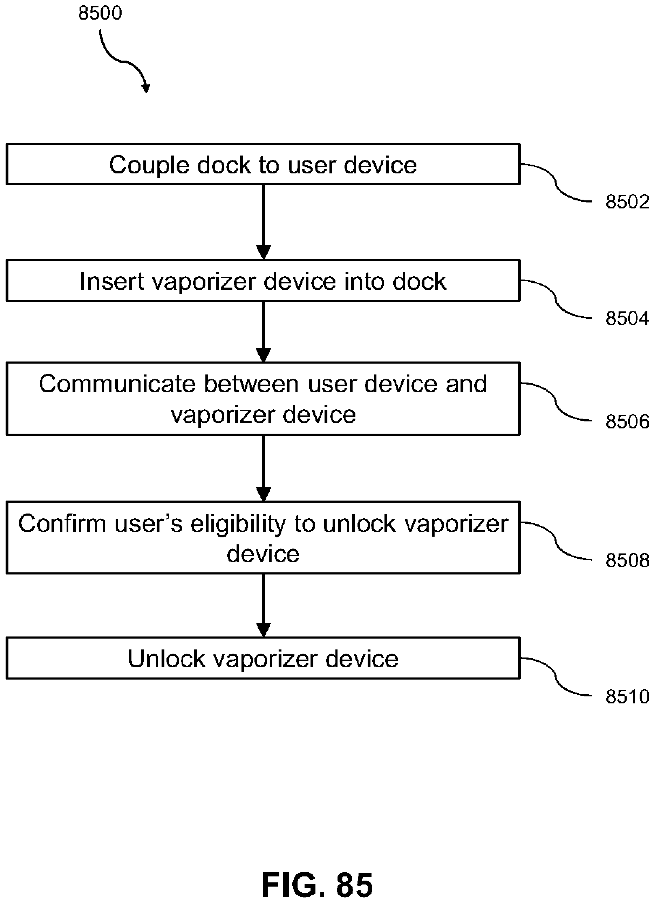

**The** dock 8404 may be configured to couple with the user device 8406. The dock 8404 may be coupled to the user device 8406 though a wired connection such as by a USB-C port, or maybe coupled wirelessly such as though a Bluetooth connection. The user device 8406 may be configured to transmit power and/or data to the dock 8404 by way of a connection 8408. Likewise, the dock 8404 may be configured to transmit power and/or data to the vaporizer device 8410 by way of a connection 8410. Power from an external source may be transferred to one or more of the dock 8404, the vaporizer device 8402, and/or the user device 8406 by a connection 8412.FIG. 85 shows a process flow chart 8500 illustrating features of a method consistent with one or more implementations of the current subject matter. It will be understood that other implementations may include or exclude certain features. At 8502, the dock 8404 may be coupled to the user device 8406. At 8504, the vaporizer device 8402 may be inserted into the dock 8404. At 8506, the user device 8406 may communicate with the vaporizer device 8402. At 8508, user device 8406 may prompt the user to confirm the user's eligibility (e.g., age verification), to unlock the vaporizer device 8402 and enable use. At 8510, responsive to a user successfully completing eligibility verification, the vaporizer device 8402 may be unlocked for use.

FIGs. 86A-86C illustrate an embodiment of a dock 8604. The dock 8604 may include a spring end 8614 and a connection end 8616. The spring end 8614 may be configured to retract to allow for the insertion of a vaporizer device 8602. The connection end 8616 may include one or more connection terminals configured to align and couple with one or more connection terminals of the vaporizer device 8602. The dock 8604 may include a user device attachment 8618 configured to attach to a user device and/or a case enclosing the user device.

FIGs. 87A-87C illustrate another embodiment of a dock 8704. A vaporizer device 8702 may be configured to slidably couple with the dock 8704 such that a connection end of the vaporizer device 8702 may slide into an open end 8714 of the dock 8704. Responsive to the vaporizer device 8702 being fully inserted into the dock 8704, one or more connection terminals at the connection end of the vaporizer device 8702 may align and couple with one or more connection terminals of the dock 8704 at a connection end 8716 of the dock 8704. The dock may include a user device attachment 8718 configured to attach to a user device 8706 and/or a case enclosing the user device 8706.

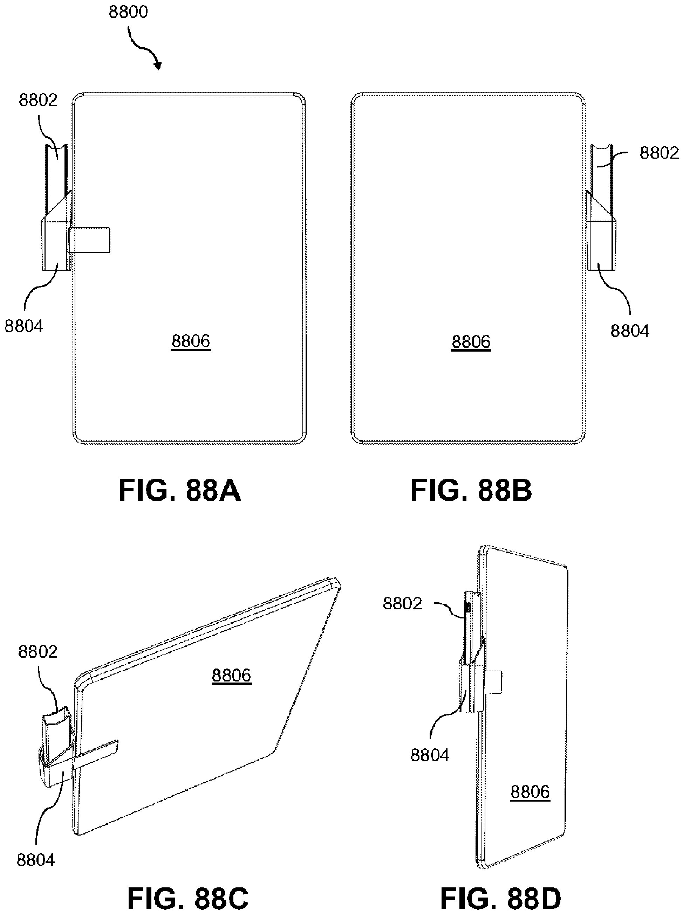

**FIGs.** 88A-88D illustrate back, front, top, and side perspective views, respectively, of an embodiment of an activation system 8800, consistent with implementations of the current subject matter. The activation system 8800 may include a vaporizer device 8802 configured to insert into a dock 8804. The dock 8804 may be configured to couple with a user device 8806.

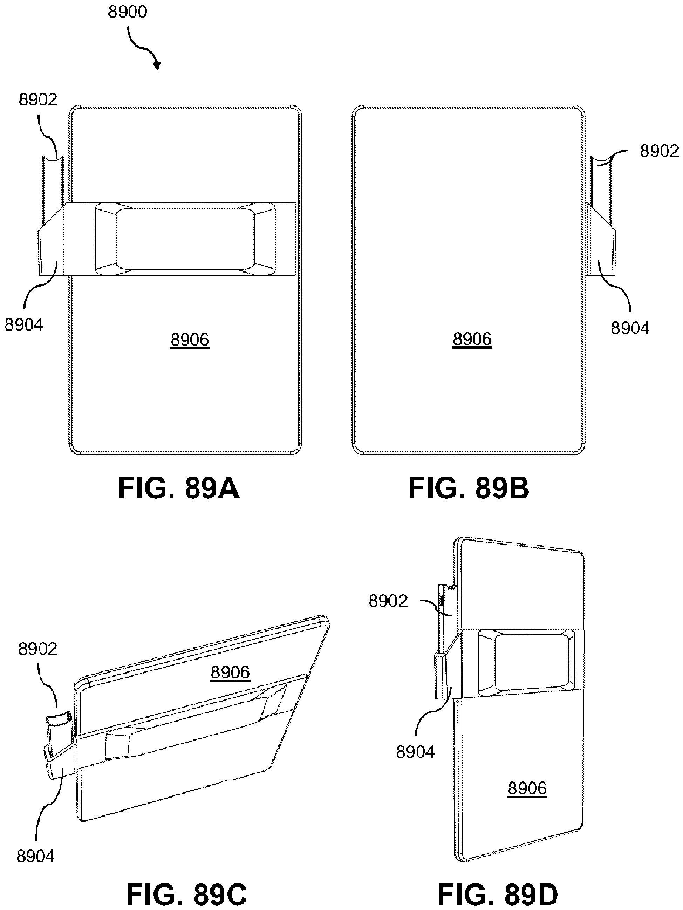

FIGs. 89A-89D illustrate back, front, top, and side perspective views, respectively, of an embodiment of an activation system 8900, consistent with implementations of the current subject matter. The activation system 8900 may include a vaporizer device 8902 configured to insert into a dock 8804. The dock 8904 may be configured to couple with a user device 8906.

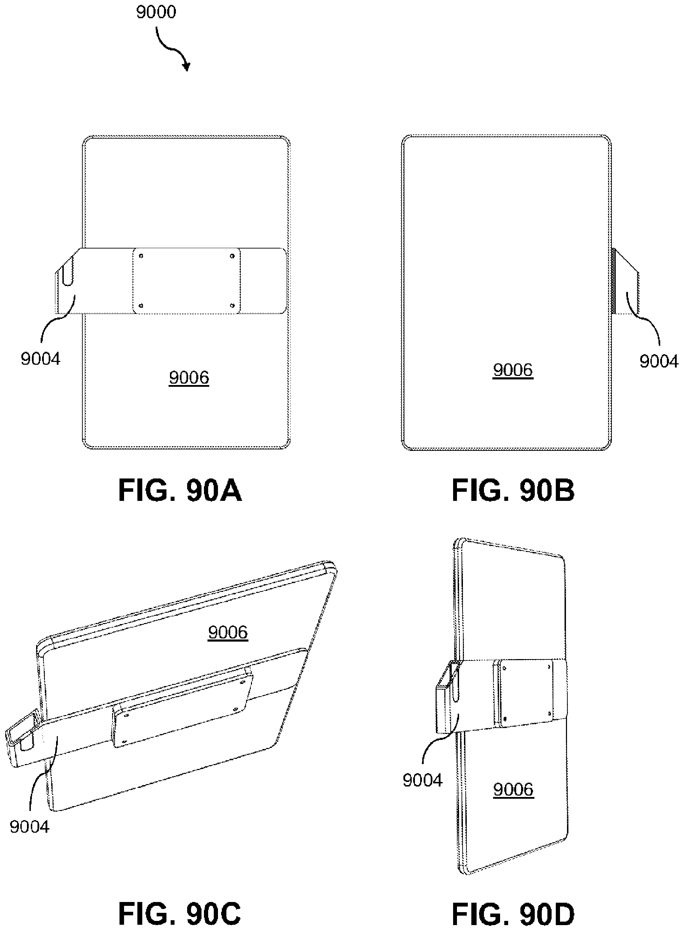

**FIGs.** 90A-90D illustrate back, front, top, and side perspective views, respectively, of an embodiment of an activation system 9000, consistent with implementations of the current subject matter. The activation system 9000 may include a vaporizer device configured to insert into a dock 9004. The dock 9004 may be configured to couple with a user device 9006.

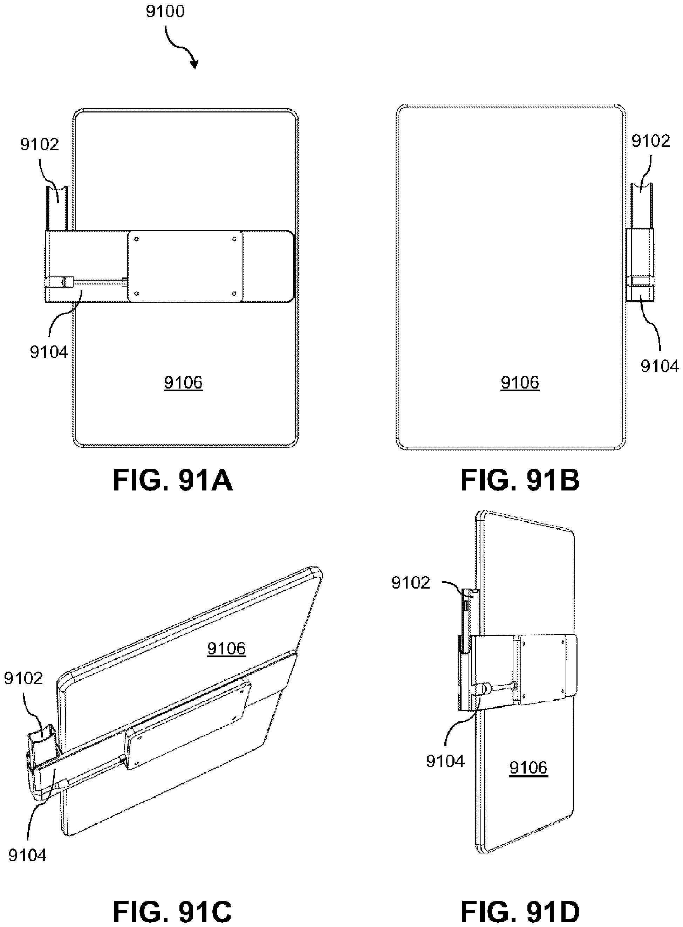

**FIGs.** 91A-91D illustrate back, front, top, and side perspective views, respectively, of an embodiment of an activation system 9100, consistent with implementations of the current subject matter. The activation system 9100 may include a vaporizer device 9102 configured to insert into a dock 9104. The dock 9104 may be configured to couple with a user device 9106.

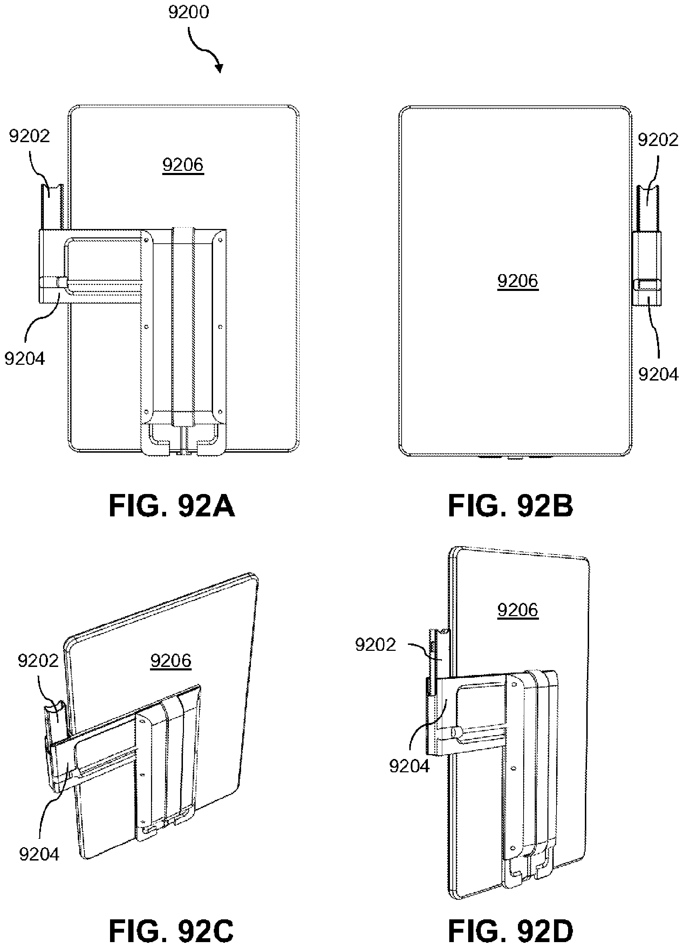

**FIGs.** 92A-92D illustrate back, front, top, and side perspective views, respectively, of an embodiment of an activation system 9200, consistent with implementations of the current subject matter. The activation system 9200 may include a vaporizer device 9202 configured to insert into a dock 9204. The dock 9204 may be configured to couple with a user device 9206.

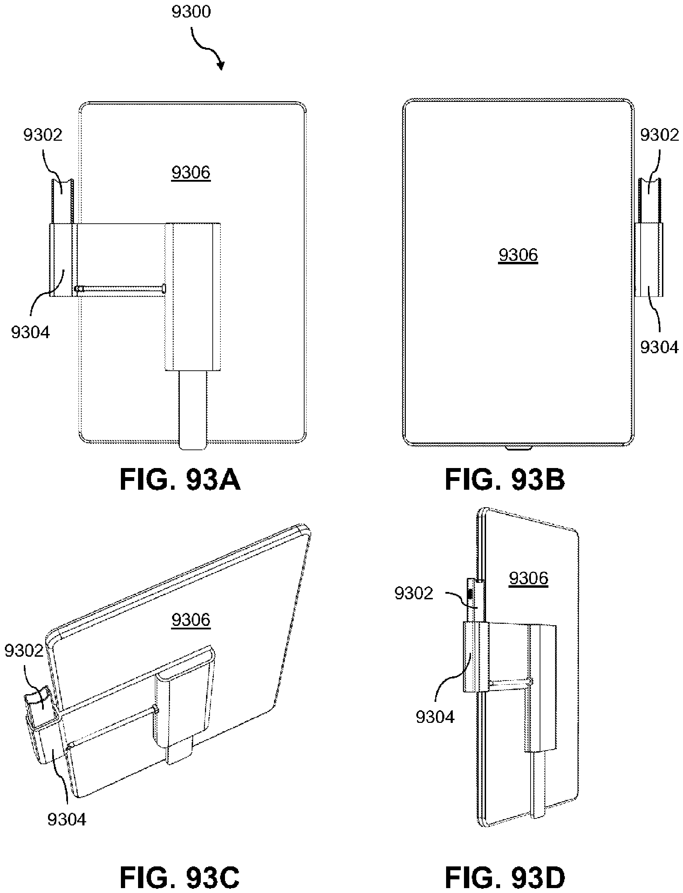

**FIGs.** 93A-93D illustrate back, front, top, and side perspective views, respectively, of an embodiment of an activation system 9300, consistent with implementations of the current subject matter. The activation system 9300 may include a vaporizer device 9302 configured to insert into a dock 9304. The dock 9304 may be configured to couple with a user device 9306.

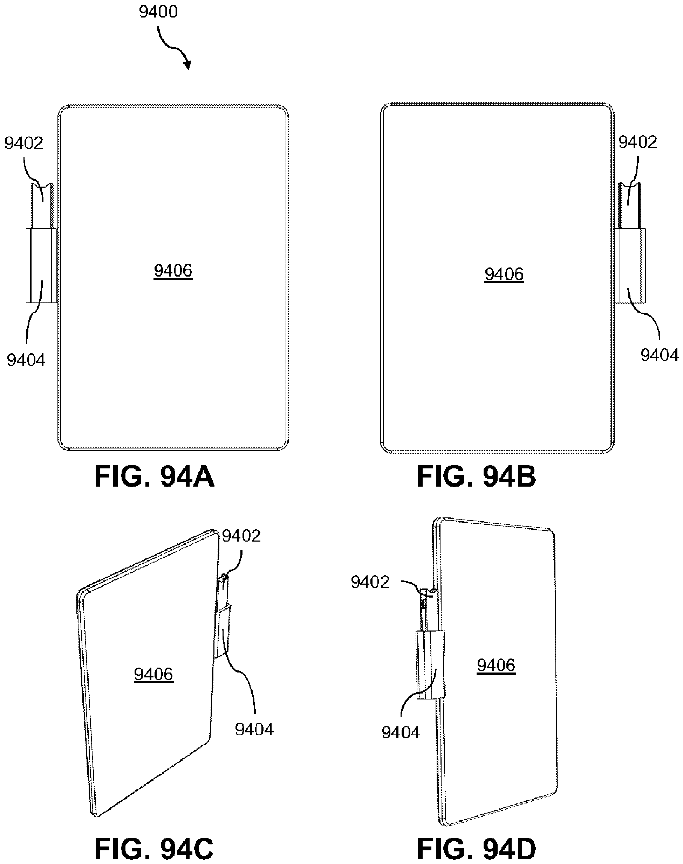

FIGs. 94A-94D illustrate back, front, top, and side perspective views, respectively, of an embodiment of an activation system 9400, consistent with implementations of the current subject matter. The activation system 9400 may include a vaporizer device 9402 configured to insert into a dock 9404. The dock 9404 may be configured to couple with a user device 9406.

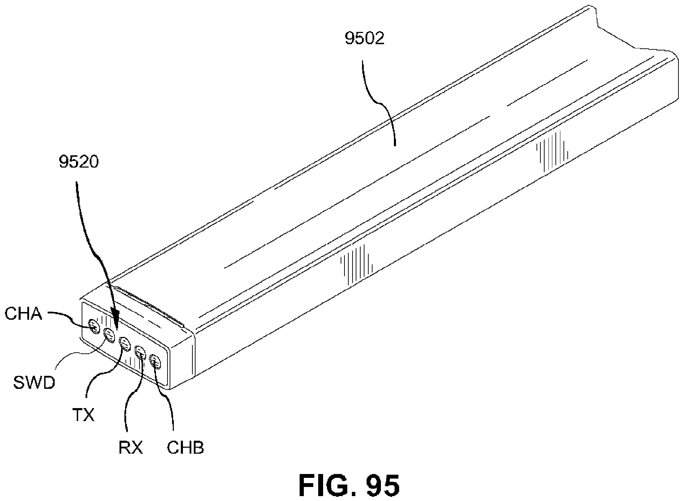

FIG. 95 illustrates an example of a vaporizer device having a 5-pin connector. The pins 9520 may include a CH_A pin, a SWDIO pin, a TX pin, a RX (SWDCLK) pin, and a CH_B pin. TheCH_A pin and the CH_B pin may provide input to a bridge rectifier for reversible charging of the vaporizer device. The TX pin and the RX pin may respectively serve as the transmit line and the receive line for establishing a serial communication with the vaporizer device. In the example of the vaporizer device shown in FIG. 95, the signal on the RX line may be multiplexed with a SWCLK signal. The signal on the SWDIO line and the SWCLK signal may be used for debugging the vaporizer device. For example, the SWCLK signal may be a clock signal from a host controlling the debugging of the vaporizer device while the SWDIO pin may be a bidirectional data pin that communicates input and output data for the debugging of the vaporizer device.

In some aspects, a user may be permitted to purchase vaporizer devices and/or cartridges beyond a set limit but the vaporizer devices and/or cartridges may be held until the expiration of the current period of time during which the user is above the set limit. For example, if a user is restricted from buying more than two vaporizer devices per month and the user attempts to buy a third vaporizer device within the same month (calendar month or rolling month based on the purchase of the first vaporizer device), then the vaporizer device may be held until the month is over. When the month is over, the vaporizer device may be released to the user (e.g., auto-shipped). Additionally or alternatively, a user may be limited to a quantity of activations per a specified time period (e.g., two activations per month). Activations may be tracked by a server configured for communication with a plurality of devices configured for vaporizer device activations (e.g., user devices executing dedicated application and/or the like). In an example implementation, if a user is restricted from activating more than two vaporizer devices per month and the user attempts to activate a third vaporizer device within the same month (calendar month or rolling month based on the activation of the first vaporizer device), then the device configured for vaporizer device activation may not allow the user to activate the device until the month is over. The device may notify the user that they have exceeded their limit of activations and/or provide the user with information indicating when they will be able to activate the vaporizer device. In the event a user returns a device, the user's account may be credited with an additional activation within the specific time period(s).

**In** some aspects, users may be restricted from purchasing and/or activating a specific number of vaporizer devices per year in addition to being restricted from purchasing and/or activating a specific number of vaporizer devices per month. For example, a user may be prevented from purchasing and/or activating more than two vaporizer devices per month and more than ten devices per year.

**In** some implementations, when a user purchases or activates a vaporizer device using a user account, a serial number, MAC address, or other unique identifier associated with the vaporizer device, a date of activation, a date of purchase, and/or the like may be associated with the user account for tracking purposes. In the event a user account is determined to be associated with improper activity (e.g., providing vaporizer devices to minors, shipping vaporizer device to other jurisdictions, and/or the like), then the user account may be blocked/prevented from making additional purchases or activations.

**Age** verification may also be correlated with location information to determine whether the user satisfies an age threshold. For example, the vaporizer and/or application may receive global positioning system (GPS) information for identifying a location of the vaporizer and/or application. In some aspects, the age threshold may be based on a geographic location such as a particular country, state, city, county, and/or the like. If the age threshold has changed based on the location of the vaporizer and/or application, the vaporizer and/or application may re-authenticate the user based on the updated age threshold. In some aspects, the requirements to satisfy age verification may additionally or alternatively be based on GPS information. For example, based on a determined GPS location, a user may be prompted to supply specific documents for age verification sufficient for identification based on the jurisdiction covering the GPS location, such as either a driver's license or passport, only a passport, or the like.

Performing such multi-factor authentication with proximity detection may reduce the likelihood of underage and/or unauthorized use of the vaporizer. Additionally, correlating proximity and/or location information with age verification and/or identification information may allow more flexibility to preventing vaporizer operation in designated areas.

The vaporizer device may be configured to receive vaporizer device settings from the user via the app. Vaporizer device settings may include changing the vaporizer device name. The user account may be configured to store the vaporizer device settings of a user, such that if the user logs into the user account on a new user device, the user's previous settings may be preserved. Vaporizer device settings preserved by the user account may include brightness, lock state, low battery alert, vaporizer device name, and/or other settings. A user account may be configured to unlink a vaporizer device from the user account. By way of non-limiting example, responsive to user selection of "unlink vaporizer device," a prompt may be provided such as "Are you sure you want to unlink <JOHN's DEVICE> from your account? The vaporizer device may be reset to factory settings, and may be linked to any other user's account." Responsive to a "Yes" selection by the user, the vaporizer device may be unlinked. Responsive to a "No" selection by the user, unlinking may not remove usage data from user's account, may remove all location data, and/or may remove vaporizer device from location features.

Additionally, vaporizer device settings may include vaporizer device warranty and/or registration status. Responsive to an unregistered vaporizer device (e.g., when vaporizer device is not linked to an account because the user is not logged into an account), display of the warranty registration page may be provided such that the vaporizer device information is provided and the user is prompted to create or login to a user account. In some implementations of the current subject matter, the app may be configured such that a user may create a new account and/or log in to an existing account using existing Google, Facebook, and/or other account login information.

**In** some implementations, a battery level of the vaporizer device may be displayed on the user device without the vaporizer app being enabled. For example, a 'battery service' may be configured to display the battery level of the vaporizer device as an icon via the user interface of the user device. Such vaporizer device information may be displayed responsive to the vaporizer device being within a threshold range of the user device.

The vaporizer device may be configured to provide a low battery alert. For example, the user may select via the user interface to receive a push notification responsive to the battery reaching a threshold battery level (e.g., 20% battery level). In some implementations of the current subject matter, the low battery alert may be provided by one or more LED(s). The low battery feature may be provided via the vaporizer device settings of the user interface, which may accessible from a vaporizer device card (e.g., accessible from gear on card). In some implementations of the current subject matter, the low battery feature may be enabled responsive to the app being enabled on the user device. The user may turn on/off the low battery alert feature. In some implementations of the current subject matter, the low battery feature may be enabled responsive to the vaporizer device be in-range of the user device. In some implementations of the current subject matter, the vaporizer device does not need to be in range to opt in to the low battery feature, however the feature may only be enabled on the vaporizer device once the vaporizer device is within range. Responsive to the vaporizer device being out of range, the low battery feature may be displayed on the user interface as disabled. Responsive to a user attempting to enable the low battery feature for a vaporizer device out of range, the user may receive a notification to return within range of the vaporizer device. In some implementations of the current subject matter, push notifications from the user interface must be enabled on the user device. The user may adjust the threshold battery level or the manner of notification of the low battery notification feature via the vaporizer device settings of the user interface.

A vaporizer may perform onboard data gathering, data analysis, and/or data transmission methods. As mentioned, a vaporizer having wired or wireless communication capability may interface with digital consumer technology products such as smart phones, tablet computers, laptop/netbook/desktop computers, wearable wireless technologies such as "smart watches," and other wearable technology such as Google "Glass," or similar through the use of programming, software, firmware, GUI, wireless communication, wired communication, and/or software commonly referred to as application(s) or "apps." A wired communication connection can be used to interface the vaporizer to digital consumer technology products for the purpose of the transmission and exchange of data to/from the vaporizer from/to the digital consumer technology products (and thereby also interfacing with apps running on the digital consumer technology products.) A wireless communication connection can be used to interface the vaporizer to digital consumer technology products for the transmission and exchange of data to/from the vaporizer from/to the digital wireless interface. The vaporizer may use a wireless interface that includes one or more of an infrared (IR) transmitter, a Bluetooth interface, an 802.11 specified interface, and/or communications with a cellular telephone network in order to communicate with consumer technology.

A vaporizer may include a microcontroller system. The microcontroller system may control the function of the vaporizer system and/or facilitate the transfer and/or retention of specific data with an external host (e.g., cell phone, computer terminal, and/or the like) via a wireless (e.g., Bluetooth Low Energy (BLE)) and/or hardwired interface. An antenna system may be used for transferring data to and from the microcontroller system. The software and/or firmware of the microcontroller system may be remotely upgradable.

A vaporizer may be configured to perform onboard data gathering, data analysis, and/or data transmission. The data may include one or more of puff characteristics, charge events, device health, error events, accelerometer readings, motion detection, and/or other data associated with the vaporizer device. Puff characteristics may include ore or more of a puff start time, puff length, average power, minimum power, maximum power, rise time, overshoot, deviation from set point, average draw strength, minimum draw strength, maximum draw strength, temperature rise time, vaporizer device orientation, and/or other puff characteristics. For example, the average draw strength may be determined by a pressure differential. Charge events may include use of a battery charger, time on charger, and/or type of charge used (e.g., stand-up charger or charging case). A state of charge flow may be calculated after a puff and/or in increments. The state of charge flow may be determined for a loaded voltage, such as when the battery is connected, and/or for an unloaded voltage, such as when the battery is not connected. Device health may include one or more of number of puffs per battery charge, resistance baseline, resistance rise time, vaporizer device double-tap, orientation of device, pressure sensor readings, altitude measurement, ambient temperature, and/or other vaporizer device health characteristics. For example, the vaporizer device orientation, vaporizer device double-tap, and/or other data may be determined using an accelerometer. The vaporizer device may be configured to communicate error events. Error events may include one or more of accelerometer lockup, pressure sensor error (e.g., "can't read"), pressure sensor error (e.g., "bad data"), **LED** sensor (e.g., "can't read/write"), charger circuit (e.g., "can't communicate with charger" or "battery fault"), battery fatigue, and/or other error events.

**The** vaporizer device may be configured with sufficient data capacity to key lifetime states and counters, have a useful store of error data for on malfunctioning return merchandise authorization (RMA) devices, in the absence of any device, app pairing (e.g., one week of heavy use), and/or have meaningful amount of prior usage data available to a user for usage tracking app feature (e.g., a minimum of three weeks). The vaporizer device may be configured to collect data on overall device lifetime stats and error codes counters (e.g., total puffs, drops, and/or errors). For example, the vaporizer device may be configured to collect high-density data associated with an n quantity of puffs that is sufficiently verbose for diagnostics (e.g., 7 days x 200 puffs per day for 97% of users = 2,800). Alternatively and/or additionally, the vaporizer device may also be configured to collect low-density data associated with an m quantity of additional puffs (e.g., three weeks of heavy use days) that is sufficient to detect changes and/or patterns in device usage and frequency (e.g., timestamped usage patterns, puffs, and/or puff size). The vaporizer device may be configured to collect data without interrupting vapor production and/or without degrading device performance.

**The** vaporizer device may be configured to measure and control display of daily/weekly/monthly usage via the user interface. The user interface may be configured to display "average puffs per cigarette [or pod]" based on a measurement of inhalations on the vaporizer device by the user. The vaporizer device may be configured to measure and differentiate between a small, medium, and/or a large inhalation and covert that measurement into a standardized measurement for display to the user (e.g., large inhalation = 2 puffs, small inhalation = 1/2 puff, and the like). The user interface may be configured to convert units of inhalation from "puffs" into another unit. The user interface may be configured to display usage information such as average puff size, puffs per day, peak consumption times, and/or the like.

The vaporizer device may be configured to prevent flash memory writes from impacting device performance (e.g., NRF52 internal flash memory erase and write cause device to halt normal operation, worst case timing is out of bounds for puff latency). The vaporizer device may be configured for a shipping mode whereby the device enters an ultra-low power sleep mode at factory to preserve battery life, as a means of archiving requirement that device be usable out of box for majority of users. The vaporizer device may be configured to wake from ultra-low power sleep mode responsive to a pod being inserted for the first time. Responsive to first pod insertion, the vaporizer device may be configured to pair to a phone or other user device. On subsequent pairing the pod must be removed.

The vaporizer device may be configured to remotely configure devices between different "modes" of data collection and/or storage. Each mode may be categorized by one or more of data types collected, rate at which data is captured and/or stored, actions responsive to the device running out of memory, and/or other categories. Mode categorization may enable different data collection for standard device function and/or research purposes, where data syncing may happen at a more frequent cadence and different data may be valuable. Research mode may be exited with standard factory reset. Strong security may prevent accidental entry into research mode such that a user can only go into "research mode" by explicit action of the manufacturer and/or customer service team (e.g., by invitation of authorized research / beta testing team).

The vaporizer device may be configured to enable remote update of data mode characteristics by the vaporizer device (data types collected at which frequency), based on implementation of new features and new learnings of which data is most valuable.

The vaporizer device may be configured to remotely configure devices to a mode of data collection and/or storage appropriate for research purposes using a "Research Mode". The Research Mode may entail collecting a different set of fields and/or a higher rate of data storage and logging, which may be required for logging within-puff data (as opposed to "per-puff data", as required for Standard Data Mode). For example, within-puff logging may include ~20 hz rate per puff. Device data captured in research mode may be referenced via a "Device Data: Types" tab.

The vaporizer device may be configured to capture a specified set of data, at a specified rate, from a specified population of users. Changing the data collected by this population may be achieved remotely (by the manufacturer) without requiring a firmware update at the vaporizer device. For example, updates to the data types collected for all devices in a particular batch of devices may occur responsive to an issue with that batch of devices being discovered. A device in research mode may be configured such that the user may be able to create an 'experiment' with a given population of devices. By way of non-limiting example, in an experiment, the user may be required to follow operations such as: 1. Create or register the population of participants/devices in the experiment, (which may be based on batch, user geo, user characteristics, or the like); 2. Define the data types and rates at which they will be collected; 3. Define the term and/or termination of the experiment; 4. Define where the data is directed for storage, or how the data is tagged to segment experimental data from production data; 5. Define what happens when device memory is exhausted (e.g., determining if the data is overwritten or if the experiment was stopped); 6. Test the experiment on a local test device prior to full roll-out; and/or 7. "Start" the formal experiment with subjects, remotely via the server (e.g., "Cloud").

The vaporizer device may be configured such that the default mode of data collection for the vaporizer device is a "Standard Mode". Standard mode may be characterized by a specific set of collected data fields, rate of data storage and/or logging, and/or action upon full device memory. Device data captured in this mode may be referenced via a "Device Data: Types" tab.

The vaporizer device may be configured such that while in a first mode (e.g., Standard Mode), the device may retain, without loss, device health data including overall device lifetime stats and error codes counters (e.g., total puffs, drops, errors, and the like), "high-density" data associated with an n quantity of the most recent puffs that is sufficiently verbose for diagnostics (e.g., 7 days x 200 puffs / day for 97% of users = 2,800), and "low-density" data associated with an m quantity of the next most recent puffs that is sufficiently verbose for detecting changes and/or patterns in device usage and frequency (e.g., timestamped usage patterns, puffs, and/or puff size). It should be appreciated that the "high-density" data and/or the "low-density" data may be stored in a circular buffer such that older data may be overwritten with newer data when the buffer reaches maximum capacity.

The vaporizer device may be configured such that while in a second mode (e.g., Research Mode), device health data including overall device lifetime statistics and error code counters (e.g., total puffs, drops, errors), may not be lost due to memory limits while all other data retention and/or override processes upon reaching data storage limits may be be subject to the specifics of a corresponding experiment as specified, for example, by the researcher. For example, an experiment may be stopped and the vaporizer device may be reverted from the second mode (e.g., research mode) back to the first mode (e.g., standard mode). In response to the change in operation mode, data stored at the vaporizer device may be compressed while older data present in the circular buffer may be overwritten. The vaporizer device may be configured with strong security and/or other prevention measures to prevent a consumer from accessing a certain operation modes (e.g., Research Mode).

The vaporizer device may be configured with storage to ensure that firmware updates do not impact and/or destroy any logged data. For example, the device may require that all logged data be transferred to device prior to update and/ or partition the data storage for logging and/or firmware updates such that one process is unlikely to impact/impede/destroy the other process, and for improved testability and/or quality control of each process. Data stored may remain unmodified during firmware updates and firmware updates gated by pushing data to cloud. Memory blocks for data storage may be lockable during firmware upgrades to prevent corrupting stored device data and statistics.

The vaporizer device may be configured such that data storage is designed to ensure flash memory regions are not burnt out (rendered unusable) by too many writes to that region. For example, 18 month device lifetime of heavy usage and heavy syncing. Data store must implement wear leveling or other techniques to ensure specific flash memory regions aren't burnt out flash memory sectors should be wear leveled and precautions taken to ensure wear is even during repetitive write events.

The vaporizer device may be configured such that logging data never impedes normal device functionality (e.g., vapor production) for all modes, across all time periods. The vaporizer device may also be configured for RMA. For example, if device is RMA-ed, product development/research must be able to pull all existing data off the device (not requiring Bluetooth), whether or not the data has been synced to the cloud.

To maximize likelihood and/or frequency of usage data upload, the vaporizer device may be configured for automatically and/or opportunistically uploading device data in the background, such that direct action on the part of the user is not required. The vaporizer device may be configured such that data logged to the device is uploaded such that normal device functionality remains in effect. The vaporizer device may be configured such that as downtime and user device and/or app connectivity permits, data from the device is uploaded in chunked form until the device data buffer is clear, connectivity is lost, or higher priority device functionality supersedes the data upload.

The vaporizer device may be configured for streaming (real-time) data upload for certain data types to facilitate features like onboarding draw training, usage measurement, sessioning, and/or the like. Streaming data uploads may be configured for certain sensor data states such as differential pressure to facilitate app visualizations.

For even greater user privacy and anonymity, the vaporizer device may be configured such that advertising beacon packet identifier info may be both (1) anonymized per device per associated user account and (2) changing, so that it is not constant and thus more easily associable. When the feature is enabled/disabled the advertising payload data should be updated or rolled to a new 'code'. The vaporizer device may be configured with peripheral to broadcast advertising packet (e.g., iBeacon or the like) for use in determining proximity of user device and/or app to the device. Advertisement frequency may be balanced with user experience (e.g., how long must the user wait to ring the device when searching for it, level of accuracy of the GPS location, or the like) and the battery draw. For example, the vaporizer device may be configured to send advertising packets at a frequency that is lower than a maximum frequency (e.g., no more than one packet every 5 seconds) and/or greater than a minimum frequency (e.g., at least one packet every 8 seconds).

The vaporizer device may be configured to maintain log of last known location(s) of connection (e.g., reception of advertising packet) for providing user a point on the map where the device was last "seen", responsive to the user being logged in and device being linked to the user's account.

The vaporizer device may be configured for location with sound such that when the device is in range and connected to the app (on any user device with login credentials logged in), the app may be configured to trigger/ring a beeper of the device associated with the user account (or provide any other notification). The vaporizer device may be configured with security to prevent an unassociated app and/or user account from triggering the beeper feature such that the security is unhackable by penetration testers and must require a secure connection to device to initiate beeping.

The vaporizer device may be configured such that the location feature is usable on user device without Wi-Fi, LTE, or other connectivity to the Internet, and may be responsive to the peripheral being in Bluetooth range of the user device and the app being logged into the user's account. Such in-range connection and beeper function may be independent of external server requests.

The vaporizer device may be configured to be located via a user interface map. The user interface may be configured to display a last known location of the vaporizer, and a time the vaporizer device was last detected at that location. A vaporizer device that is out-of-range may be displayed with a first notification, whereas a vaporizer device that is in-range may be displayed with a second notification. For example, the user interface may provide information on a vaporizer device in-range in a different size, color, and/or shape than a vaporizer device that is out-of-range. In-range vaporizer devices may be displayed with a first color and/or graphic via the map. In some implementations of the current subject matterimplementations of the current subject matter, the user may zoom in and/or out and navigate around the map. For example, the default location and zoom level of the map may be set such that the vaporizer device of interest is displayed. Alternatively and/or additionally, other information may be provided for a vaporizer device, including: NAME of vaporizer device, DISTANCE (0.# or # mi) and TIME last connected, displayed in either: - X minutes ago (if < 60 minutes ago) - "Today at XX:XX" (if 12:00am - now) - "Yesterday at XX:XX" (if 12am - 11:59pm yesterday) - "DAY at XX:XX" (if < 7 days ago, where DAY is day of week) - MMM DD at XX:XX - and/or the like.

A vaporizer can interface (e.g., communicate) with digital consumer technology products and with apps as a way of relaying information and data to add additional functionality.

The vaporizer may be configured to emit a signal responsive to a prompt communicated by the user device. The signal may include one or both of an audible signal or a visual signal, such as a sound emitted by a speaker or an illumination of light emitted by a light-emitting diode (LED). For example, an LED disposed on the vaporizer body may illuminate responsive to the vaporizer being successfully paired with the user device.

The vaporizer device may include a user interface. By way of non-limiting example, an x quantity of LEDs may be positioned on one face of the device to provide a user interface. In other embodiments, an x quantity of white LEDs may be positioned linearly, perpendicular to long device dimension on the wide face, evenly spaced and centered, on endcap near aluminum body to endcap junction, and/or other placements. In addition, the vaporizer device may include one or more different coloredLEDs proximal to one more of the x quantity of LEDs for indication of LOCK and/or error codes. The vaporizer device may be configured for differentiation between LED and non-LED sides of device, such as a front and back of device (side with and without LEDs) can be visually differentiated. The vaporizer device may be configured such that the LED brightness is sufficient for LEDs to be visible in daylight, outdoors under high noon sun. While certain colors and number of LEDs are described herein, other combinations of colors and number of LEDs are also within the scope of the application.

**The** user interface may be configured to adjust and/or customizer vaporizer device settings. For example, the user may adjust LED brightness via a slider (e.g., continuous scale) from a default level. The vaporizer device may be configured such that brightness updates, and/or other user customizations, of the vaporizer device may be applied in real-time as the slider is moved, responsive to the vaporizer device being within a threshold range of the user device.

The vaporizer may include one or more sensors. Information associated with the vaporizer may include information received by the one or more sensors. The one or more sensors may include an airflow sensor configured to measure an airflow level through the vaporizer. The airflow sensor may include a coil used as hot wire anemometer. Airflow may be responsive to the user drawing air through the vaporizer via an opening in a mouthpiece of the vaporizer. The user device may be configured to receive sensor information that indicates the airflow level through the vaporizer provided by the user. In some aspects, airflow measurements can be used to increase the level of vapor being delivered to the user. For example, with harder draws, more power can be provided to the device and/or heater so that a user gets more vapor instead of a binary on/off mode which occurs if a pressure differential threshold is met. Vapor delivery may be modulated based on a pull/draw strength. The user device may be configured to present within a user interface a graphical representation of the airflow level. The user device may be configured to present within the user interface an instruction to the user responsive to the airflow level being determined. For example, the user interface may prompt the user to modify the airflow level provided by the user with a guided walkthrough and/or a game. Additionally, vapor delivery may be responsive draw strength (adjusting power based on pressure), dependent on what is detected about the pod (e.g., flavor, concentration, remaining puffs, and/or the like).

The vaporizer may be configured to adjust one or more elements of the vaporizer responsive to a use of the vaporizer by a user. For example, the vaporizer may be configured to adjust the power to the heating element of the vaporizer responsive to a threshold pressure level provided by the user. For example, the vaporizer may adjust an output level of vaporizable material responsive to a threshold airflow level provided by the user. In some implementations, the threshold pressure level, threshold airflow level, and/or other threshold levels may be configured to be adjustable. The user device may be configured to provide a notification to the user responsive to use of the vaporizer by the user. For example, an alert may be presented to the user to prevent initial overuse.

The user device may be configured to receive input from a user. For example, the user device may be configured to receive information about a user's smoking history, vaporizer usage history, goals, and/or other user information. In some aspects, the device can be used to capture information about when a user takes an action other than a puff (e.g., detect a user tapping the device twice to record when the user is going to smoke a cigarette, tapping three times when the user has a cig craving, etc.). In some aspects, a user may additionally or alternatively input this information into the app. This captured information can be fed back into the app (e.g., via Bluetooth) so that the information can be recorded and recommendations around switching and nicotine cessation programs can be provided based on any recorded data (including usage of the device and the additional information) and/or usage patterns determined therefrom. In some aspects, a recommendation can include a cessation plan based on the data and/or patterns that is implemented using the app and the device (e.g., by locking the device at certain times based on the plan).

The user device may be configured to provide via the user interface instructions to the user responsive to being communicatively coupled with a vaporizer. For example, an interactive quick-start guide may be presented.

The user device may be configured to disable the vaporizer responsive to a programmed time reaching a threshold level. For example, timed sessions.

The vaporizer may be configured to operate at one or more power levels. For example, the vaporizer may be configured to operate in a low power mode such as during onboarding.

The user device may be configured to process data received from the vaporizer to make a determination. The user device may be configured to provide an indication to the user via a graphical user interface. For example, the user device may be configured to provide live readings (e.g., based on pressure readings from the pressure sensor) along with recommendations to the user (e.g., puff more/less). In some implementations, the user device may be configured to set a goal range and require the user to hold the pressure within one or more ranges for a period of time.

The vaporizer device may be configured for vapor delivery near "instant" time to puff, as perceived by consumer from device sleeping mode responsive to device having been moved recently. For example, a first puff latency may be <150 milliseconds from standby. The vaporizer device may be configured for vapor delivery near "instant" time to puff, as perceived by consumer between puffs when device is awake or when device has been moved recently. For example, a second puff latency may be <50 ms from run (within 10 seconds of first puff). The vaporizer device may be configured for vapor delivery such that responsive to a user stopping applying vacuum (e.g., stopping inhalation) to the pod mouthpiece, the device "instantly" stops producing vapor. For example, when the user stops puffing, the device may stop heating within 50 ms.

**The** vaporizer device may be configured to improve false positive (inadvertent) and false negative pressure sensor triggers to improve vapor delivery consistency and battery life. For example, improved pressure sensor placement and/or sealing to improve repeatability may be achieved by minimizing the need to compensate for "motion juice" and/or by increasing signal by ensuring tight seals between pod cavity and differential sensor. The vaporizer device may be configured for vapor delivery such that vapor production is not disrupted by normal device activities (e.g., data transfer, data logging, and charging). Vapor production may be disrupted responsive to a forced (user-initiated) firmware update.

The power settings of the vaporizer may be set and/or specified to modulate or configure the activation power delivered to the heating element(s) as well as modulating or configuring the parameters of the heating element(s) being energized in relation to the time to peak activation or "warm up" or "ramp", and/or the time of maximum or peak activation, and/or the time of the heating element being deactivated or the "cool down" to effect and modulate vapor and/or aerosol strength, vapor and/or aerosol density, vapor and/or aerosol volume, vapor and/or aerosol flavor, vapor and/or aerosol temperature, and/or similar vapor and aerosol characteristics of the vapor or aerosol generated by the vaporizer. In an embodiment, the power settings of the vaporizer may be set and/or specified such that the user can make setting adjustments to the vaporizer to maximize battery life. In this case, the vaporizer may resultantly operate at lower power output to preserve the maximum number of cycles that can be sustained per battery charge cycle. Conversely the power settings of the vaporizer may be set and/or specified such that the user can maximize performance in relation to the power output of the device per cycle.

Cartridge-related settings of the vaporizer can be based on information about the cartridge, including liquid components and/or formulation, or similar such that the information relating to the liquid may be vaporized or aerosolized. The liquid related settings of the vaporizer can have predetermined as well as user configurable settings to modulate, configure, adjust or otherwise configure the device activation parameters. In an embodiment, settings related to user specific environmental configurations can be made such that the vaporizer optimizes heating element activation and activation parameters to optimize performance based on ambient temperature, humidity, and/or altitude. For example, the vaporizer may have configurations such as cold weather or warm weather settings, humidity settings, and/or altitude settings.

A vaporizer may be configured (programmed) with time based settings, such as for example, user specific temporal configurations such as the user preferring higher active component delivery per inhalation at specific times of the day. A vaporizer can be configured such that the vaporizer delivers dosages of an active component based on the time of day. For example, the vaporizer can be configured such that the dosage delivered to the user is highest, or at maximum value (or similar) in the evening and is held at a lower delivered dose per inhalation, or minimum value (or similar) earlier in the day. The user can program these settings (and others described herein) based on personal preference.

Taste and/or flavor related settings of the vaporizer can minimize, maximize, and or modulate functional effects of the taste and/or flavor component of the vapor product. For example, the vaporizer can be configured to activate in such a way that the flavor delivered from the vapor or aerosol is minimized, maximized, or modulated over the period of an inhalation. Some components of the liquid being vaporized that may contribute to the flavor characteristics of the vapor or aerosol may be more profound, more prevalent, or more substantial when the vaporizer is activated with higher temperature ranges being generated by the heating element than when lower temperature ranges are being generated by the heating element (within the range of temperatures that the heating element may operate in order to generate a vapor or aerosol for inhalation by the user). For example, the user may set the vaporizer to perform for maximal, minimal, moderate, or another interim value of flavor for the vapor or aerosol product. The vaporizer may modulate the heating element activation cycle accordingly.

Functional effect-related setting of the vaporizer can minimize, maximize, or modulate the functional effects related to pharmacodynamics and pharmacokinetics of an active ingredient or drug component of the vapor or aerosol product. For example, the vaporizer can be configured to activate in such a way that the active component or drug delivered from the vapor or aerosol is minimized or maximized in terms of target tissue or organ delivery. Particle size may be modulated. A user may be using a vaporizer for the delivery of nicotine as the active or drug component in the vapor or aerosol. It may be desirable for (or by) the user to have an option for more rapid delivery of the nicotine to the bloodstream-such as after a period of not having nicotine (when the user's urge or craving is likely to be elevated). Alternatively, at times it may be desirable for (or by) the user to have a slower absorption of nicotine into the blood stream such as at times when: (i) the user's craving or urge is low, (ii) when the user wants to have a more prolonged period of time before they have the urge or craving for nicotine-such as prior to going to sleep, or an event where they will be unable to use the device for dosing or administration of the nicotine. The vaporizer settings relating to the activation of the device and the temperature of the heating element and heating element activation characteristics may be modulated such that, for example, at lower temperature activation the particle size of the drug component is larger than at times of a higher temperature activation of the heating element. Thus, by modulating the input of thermal or heat power inputted into the vaporization chamber by the heating element to volatize or vaporize the liquid containing the active component(s) or drug(s), the characteristics of the vapor or aerosol in relation to the particle size of the active component(s) or drug(s) can be wholly or partially modulated by the user. These settings can also be used by the user or healthcare provider (or similar) to reduce dependence on the active component(s) or drug(s) such as nicotine. This transition can also be used in conjunction with nicotine dosage reduction for reducing or mitigating the user's nicotine dependence or addiction.

**An** app may receive alerts and notifications associated with the vaporizer. These alerts and notifications can include, for example: battery life status, battery condition data (such as number of battery cycles), and battery "health" (such that the user can be notified, as desired, to the current and "real time" overall condition of the vaporizer internal battery(ies)).

The vaporizer may be configured to communicate a battery level and/or cartridge usage of the vaporizer and/or cartridge to the app. The vaporizer may be configured to communicate a battery level alert to the app responsive to the battery level of the vaporizer being within a threshold battery level. The vaporizer may include one or both of a speaker or one or more indicator lights. The vaporizer may be configured to audibly or visually alert a user responsive to the battery level of the vaporizer being within a threshold battery level.

The app may be configured to store a record of vaporizer battery utilization over time. The app may be configured to determine a pattern of vaporizer battery use by a user based on the record of vaporizer battery utilization over time. The app may be configured to provide an estimated time to being within a threshold battery level. The estimated time to being within a threshold battery level may be determined based on a user's record of vaporizer battery utilization over time. The app may be configured to provide a notification to the user to charge the vaporizer battery based on the estimated time to being within a threshold battery level. For example, a notification may alert the user to a pattern of greater vaporizer battery utilization on Friday nights and prompt the user with a recommendation to charge the battery prior to Friday night. In some aspects, the app may recommend changing a cartridge (or having a spare cartridge nearby) based on the liquid level and usage patterns.

The vaporizer device may be configured for fast device charging. For example, 50% in 15 minutes, 80% in 25 minutes, and/or 90% device charge in 60 minutes. The vaporizer device may be configured to disable or shutdown the vapor function during charging. For example, the vaporizer device may be configured to have no vapor production while charging. The vaporizer device may be configured to track the lifespan of the battery. The vaporizer device may be configured to take automatic action, alert the user, and/or provide battery information to customer service in case of battery fatigue. The vaporizer device may be configured to provide accurate state-of-charge (SOC) information to the device user interface and/or the app. The battery level may be reported as remaining puffs. The time to full charge while charging may be reported in meaningful units. The battery charge time to full may be reported and/or approximated in minutes.

The vaporizer device may include a dock charger optimized for laptop charging use (e.g., USB-A male, stand-up magnetic charger). The vaporizer device may include a key chain loop to allow for carrying of charger as separate component (e.g., on USB-A cap). In one embodiment, the charger should be able to be separated from the keychain loop, such that it can be removed from keys for charging. In another embodiment, the charger may be configured to withstand being put on metal keyring loop multiple (e.g., 20) times without breaking or excessive scratching / destruction.

The vaporizer device may be configured such that dock LEDs may be sufficiently visible while device is coupled to a charger, in order to clearly see charge state and status (% charge). The vaporizer device may be configured such that the LEDs are not obstructed while the device is coupled to the charger. The vaporizer device may be configured such that dock Bluetooth range for device when in charger is sufficient for automatic firmware updates where phone is in same room (e.g., Bluetooth range 10-15 ft. all directions).

The vaporizer device may be configured such that the charger fit may be designed for "on-the-go", (e.g., in purse, in car) non-vertical orientation and non-stationary charging scenarios. For example, the device may be charged in purse with external battery and/or may be used in car when USB-A port is partially obstructed. The vaporizer device may be configured such that the LEDs may be sufficiently visible while device is coupled to the charger, in order to clearly see charge state and status (% charge). For example, the LED illumination level is visible when viewed outside in sunshine while device magnetically connected to charger.

The vaporizer device may be configured such that the charger can be cleaned with a Q-tip (e.g., pogo pins may be accessed by a Q-tip). For example, pogo pins may be reached by Q-tip dipped in isopropyl alcohol (ISO) or another cleaner, the charger won't be damaged by ISO, and/or the charger won't be damaged by ISO-covered Q-tip being rubbed inside with some force every month for 12 months. The vaporizer device may be configured such that the Bluetooth range for device when in charger is sufficient for automatic firmware updates in most cases where phone is in same room (e.g., Bluetooth range 10 ft. in all directions).

The vaporizer device may be configured to differentiate between different types of chargers ("adapters"), such as charging case and nightstand adapters, whereby different events will be passed to analytics, allowing for different LED behaviors depending on the charger. The vaporizer device may be configured to detect and/or differentiate between a standard laptop adaptor, charging case, "bed stand" charger, and/or portable charging cable. The vaporizer device may be configured to adjust LED behavior according to which charger type is used. For example, brighter LEDs may be used for charging case charging and/or dimmer LEDs that fade-out may be used for nightstand charging. The vaporizer device may be configured to emit a sound responsive to the device coupling with a charger accessory, indicating the device is successfully charging. The sound may be "pleasant" or delightful, at an appropriate volume, when "Power Good" signal is received by the device. The sound feature may be disable via the app.

The vaporizer device may be configured to provide an LED indication responsive to pod insertion and/or removal. The LED indication may include an animation that indicates a pod has been successfully inserted and/or removed from the device. The LED indication may include delight features such as an "Easter egg"

(e.g., single persistence of vision (POV) example, game, or the like) initiated by user via the app. The vaporizer device may be configured to indicate active/fast charging such that when the device is plugged in and charging the LED indication indicates that the device is actively charging and display a level of current charge. The vaporizer device may be configured to provide a charge complete LED indication (e.g., an indication for when the device on charger is fully charged and ready for use).

The vaporizer device may be configured to display a battery state-of-charge (SOC) LED indication providing a current level of charge. The vaporizer device may be configured to display an LED indication responsive to forced and/or background firmware update indicating the update has started and/or is in-progress. A static indication may be used when a user-initiated (immediate) over-the-air (OTA) firmware update is in progress. LED interactions may not display for opportunistic/background firmware downloads. The vaporizer device may be configured to provide an LED indication responsive to a forced firmware update being completed. Additionally, the user app may be configured to display an indication for a successful firmware update. The vaporizer device may be configured to provide an LED indication when actively in Bluetooth pairing mode. Pairing mode may be entered into responsive to sustained, strong shaking of the device. The vaporizer device may be configured to provide an LED indication and/or sound responsive to successful Bluetooth pairing. Additionally, the user app may be configured to display an indication of successful pairing.

**The** vaporizer device may be configured to provide an LED indication responsive to inhalation on the device by a user. The vaporizer device may be configured to provide an LED indication responsive to an inhalation, incorporating feedback on strength of inhalation. The LED indication may indicate the strength (e.g., flow rate) of the inhalation.

Responsive to being in the "lock mode", the vaporizer device may be configured to provide a signal to alert the user that the device is locked. The vaporizer device may be configured to provide an indication that the device is in the lock mode responsive to one or more of an inhalation on the device, a tap on the device to query battery level, and/or inserting or removing a pod. The indication may include a locked animation, battery level animation, LED animation, sound, and/or the like.

The vaporizer device may be configured to reset to factory settings, including clearing of the log, responsive to a combination of gestures that is CS communicable and user executable. In one embodiment, the combination of factory reset gestures may include orientating the device vertically, such that the pod is pointing up, removing the pod, orienting the device such that the pod end is down, inserting the pod, removing the pod a second time, orienting the device with the pod end up, and reinserting the pod. Factory reset may not be achieved when device is locked. Responsive to factory reset gestures being attempted on a locked device, the device may display a locked animation, and the user must first unlock the device to enable factory reset.

The vaporizer device may be configured to initiate pairing with a user device responsive to paring gestures, such as a strong shake of the device for an extended duration. In some implementations, to prevent pairing mode from initiating during shipping, a pod must be inserted into the device to enter pairing mode. The vaporizer device may be configured to display state-of-charge (SOC) information. The SOC information may include a battery level. The SOC information may be displayed on LEDs using an accelerometer. The vaporizer device may be configured to display SOC information responsive to tapping the middle or bottom of the device shell.

The vaporizer device may be configured to adjust the sound emission, such that the user may enable low-volume auxiliary sound for device events including one or more of pairing, locking, charger coupling, and/or the like. For example, low volume may be 25 db. The low volume sound may have different tone sound options and/or multi-tone tune.

The vaporizer device may be configured to enable low-volume auxiliary sound for Bluetooth pairing and/or unpairing. The vaporizer device may be configured to enable low-volume auxiliary sound responsive to device being locked or unlocked via the app. The vaporizer device may be configured to enable low-volume auxiliary sound to indicate that the device is charging when connected to charger. The vaporizer device may be configured to trigger low volume (e.g., 25 db), different-tone sound options, and/or multi-tone tune.

A vaporizer and/or an associated application (app) running on a digital consumer technology product (e.g., a device that forms or is part of a vaporizer system as described above) may share data with a manufacturer, manufacturer affiliate, or other entity (retailer, healthcare provider, supplier, marketing entity, etc.). A vaporizer and/or an associated application may gather, receive, log, store, transmit, extrapolate, and/or the like, anonymous or user specific usage data-such as frequency of use. A vaporizer and/or an associated application can gather, receive, log, store, transmit, extrapolate, and/or the like, user specific usage data such as activation cycle characteristics, such as duration of activations and user specified activation settings (if applicable.) A vaporizer and/or an associated application can gather, receive, log, store, transmit, extrapolate, and/or the like, user specific demographic information. A vaporizer and/or an associated application can gather, receive, log, store, transmit, extrapolate, and/or the like, user specific socioeconomic information. A vaporizer and/or an associated application can gather, receive, log, store, transmit, extrapolate, and/or the like, user specific information. A vaporizer and/or an associated application can gather, receive, log, store, transmit, extrapolate, and/or the like, user specific feedback information. A vaporizer and/or an associated application can gather, receive, log, store, transmit, extrapolate, and/or the like, user specific demographic information. A vaporizer and/or an associated application can gather, receive, log, store, transmit, extrapolate, and/or the like, user specific feedback information using surveys, polls, and the like, and/or data analytics.

A vaporizer and/or an associated application can gather, receive, log, store, transmit, extrapolate, and/or the like, anonymous and/or user specific usage and/or reliability data such as device errors or malfunctions. A vaporizer and/or an associated application can gather, receive, log, store, transmit, extrapolate, and/or the like, user specific usage and/or reliability data such as requests for warranty services, repairs, and or replacements, etc. A vaporizer and/or an associated application can gather, receive, log, store, transmit, extrapolate, and/or the like, user specific customer satisfaction data such as requests for technical support. A vaporizer and/or an associated application can gather, receive, log, store, transmit, extrapolate, and/or the like, user specific sales lead data such as requests for product information. A vaporizer and/or an associated application can gather, receive, log, store, transmit, extrapolate, and/or the like, user specific usability data such as requests for usage instructions. A vaporizer and/or an associated application can gather, receive, log, store, transmit, extrapolate, and/or the like, user specific information such as requests for information on product features or functions. A vaporizer and/or an associated application can gather, receive, log, store, transmit, extrapolate, and/or the like, user specific marketing data such as requests for information on purchasing a vaporizer and/or acquiring a vaporizer by way of a prescription from a physician or healthcare provider.

The vaporizer may be configured to detect device anomalies such as heater performance, temperature of resistive heating element, battery fatigue, power output, pressure sensor, accelerometer, topography analysis, and/or the like.

The vaporizer device may be configured to update firmware on the line or accessed for troubleshooting. For some RMA-ed devices, data ports may be needed for hard data transfer of device logs (not via BLE). One method of accomplishing the hard data transfer may be through a universal asynchronous receiver-transmitter (UART) protocol, accessible without disassembling device. Another method for data transfer may be using the JTAG standard on end caps if resistors are stuffed on a PCB.

The user device may be configured to provide information to the user via the graphical user interface. For example, the user device may be configured to perform or recommend actions to the user such as alerting the user with a suggestion to take certain actions to increase lifespan of the vaporizer (e.g., clean it, factory reset, perform a diagnostic to determine whether new one is needed, change pod, etc.). The user device may be configured to transmit an order for a replacement device responsive to the vaporizer diagnostics reaching a threshold level. The user device may be configured to collect data on reliability issues of the vaporizer that may be analyzed improve performance and/or reliability of the vaporizer.

The vaporizer device may be configured to provide an LED indication responsive to a device error. For example, LEDs may indicate device error states that will allow the user or customer support to troubleshoot device without using the app. For secondary errors, the app may be configured to provide more detail on device errors. The vaporizer device may be configured to provide an LED indication when there's a pod error. For example, LEDs may indicate pod error states that will allow the user or customer support to troubleshoot pod errors without using the app. For secondary errors, the app may provide more detail on pod errors.

The user interface may be configured to detect an error from the vaporizer device and communicate an action to the user to remedy the error. Examples of actions may include initiating a factory reset, remove and/or reinsert pod, start return merchandise authorization (RMA) process, and/or enable internet connectivity. In some implementations of the current subject matter, a library of LED error codes with animated gifs and recommended user actions may be provided for display. In some embodiment, a user may troubleshoot a vaporizer device (non-interactive) using a support website.

The user device may be configured to provide customer support integration, E-commerce purchasing and full integration, referral programs (e.g., discounts), location-based store locator, and/or other services. For example, if a user is out of or low on a specific flavor of pods and the user is near a store with mango pods in stock, then a recommendation can be provided or an order can be place for replacement pods.

The vaporizer device may include charging contacts configured to improve charge contacts (device) cleanability. For example, device charge contacts can be cleaned to bring the device from malfunctioning to working without a tool (e.g., wiped with finger, flush design, or the like), in case of material obstruction to charge connection. The vaporizer device may include a charging interface convenient magnetic connection. The vaporizer device may be configured to be charged via stand up laptop charging adapter, with an on-the-go fit charger. The vaporizer device may be charging case compatible (e.g., auto-alignment in charge case such that the charging connection occurs whenever the device is in the charge case).

The vaporizer device may be configured such that device to pod connection/contact area may withstand cleaning with Q-tip (e.g., ten instances around the pod cavity perimeter without damage to contacts or gasket seal). The vaporizer device may be configured such that the device to pod connection/contact area may have no loss of function after washing with 10 mL of 90% isopropyl alcohol.

A vaporizer and/or an associated application can gather, receive, log, store, transmit, extrapolate, and/or the like, vaporizer data indicating misuse or abuse of the vaporizer. A vaporizer and/or an associated application can gather, receive, log, store, transmit, extrapolate, and/or the like, vaporizer and/or use data and/or data transmission features that can be used to locate the vaporizer. The vaporizer and/or an associated application can gather, receive, log, store, transmit, extrapolate, and/or the like, data and/or data transmission features that can be used to locate the vaporizer if it is lost or stolen. A vaporizer, via an associated application, can gather, receive, log, store, transmit, extrapolate, and/or the like, notifications regarding product recalls or similar issues and/or inform the user of such recalls or issues. A vaporizer, via an associated application, can gather, receive, log, store, transmit, extrapolate, data sharing, and/or the like, notifications regarding manufacturer terms and conditions (e.g., cartridge manufacturer) and/or inform the user of such terms and conditions, and/or receive approval of such terms and conditions from the user.

A vaporizer, via an associated application running on a device that is part of a vaporizer system, can gather, receive, log, store, transmit, extrapolate, data share, and/or the like, data from a network that may be used to identify, contact, or connect with other users of vaporizers, and may, via an associated application, gather, receive, log, store, transmit, extrapolate, data share, and/or the like, data from a network that may be used to identify, contact, or connect with other users within the network. The vaporizer may select and/or authorize the sharing of all or some of the data gathered, received, logged, stored, transmitted, extrapolated, shared, or the like by the vaporizer, or gathered directly from the user using applications associated with the vaporizer. A vaporizer may select and/or authorize the sharing, via a network, of all or some of the data gathered, received, logged, stored, transmitted, extrapolated, shared, or the like by the vaporizer, or gathered directly from the user using applications associated with the vaporizer. The network may comprise social media. The social media membership may comprise a user's family. The social media membership may comprise a user's friends. The social media membership may comprise a support group or similar (e.g., quit smoking group). The social media membership may comprise a third-party service, company, organization (e.g., church), other users of the vaporizer, or the like.

A vaporizer, and/or an associated application can gather, receive, log, store, transmit, extrapolate, and/or the like, data useful to perform software configuration of the device and or the device application(s). A vaporizer and/or an associated application can gather, receive, log, store, transmit, extrapolate, and/or the like, data useful or required to perform software configuration of the vaporizer and/or the associated application(s).

A vaporizer and/or an associated application can render the vaporizer inactive and unable to be used, as mentioned above. For example, a vaporizer and/or an associated application can render the vaporizer inactive and unable to be used if a malfunction or similar has occurred. A vaporizer and/or an associated application can render the vaporizer inactive and unable to be used until the authorized user enters a Personal Identification Number (PIN) using the application which then activates the vaporizer. A vaporizer and/or an associated application can render the vaporizer inactive and unable to be used until the authorized user has a biometric identifier that when recognized or confirmed or verified or similar, using the application, activates the vaporizer. As discussed above, unauthorized use of a vaporizer and/or an associated application can be prevented by using **PIN** and/or unique biometric identifier. A vaporizer and/or an associated application can save device data and personal settings for individual users so that more than one user may use the vaporizer. A vaporizer and/or an associated application can save device data and personal settings to be saved for individual users where the settings for device data and personal settings for different users can be applied to the vaporizer and the intended user through the application. The user may select their saved configurations for a vaporizer and the respective device will operate under that user selected configuration. A vaporizer and/or an associated application can have the ability for the user or users to have one or more of user settings and/or configurations that are saved and can be selected by users. A vaporizer and/or an associated application can have the ability to allow saved user settings and personal settings or configurations to be shared by the user through the application and/or an associated network. A vaporizer and/or an associated application can allow other user settings and/or configurations to be shared with the user through the application or an associated network.

A vaporizer and/or an associated application can facilitate, prompt, or the like, a user to rate (such as through common methods such a 1-10 where "10" is the best, or 1-5 "stars" where "5" stars is the best) their vaporizer, vaporizer configurations, cartridge (e.g., particular flavor or brand of cartridges, etc.), or the like. A vaporizer and/or an associated application can facilitate, prompt, or the like, the user to rate other user configurations. A vaporizer and/or an associated application can share and access a database of user configurations that may or may not have ratings and be able to access the user configurations through the application and download user configurations for use in the user's own device. A vaporizer and/or an associated application can have the ability to share and access a database of user configurations that may or may not have ratings and be able to access the user configurations through the application and upload their user configurations for use in other users' devices.

A vaporizer and/or an associated application can share user data with the manufacturer, manufacturers subsidiaries, manufactures agents, or a third party for generating user profiles based on user specific usage data, demographic data, socioeconomic data or similar. A vaporizer and/or an associated application can have the ability to utilize user data shared with the manufacturer, manufacturer's subsidiaries, manufacturer's agents, or a third party to determine specific user profiles.

A vaporizer and/or an associated application can allow, facilitate, authorize, confirm or similar the sharing of data between the associated application and other application(s) that may be installed or a component of the user's personal digital device. A vaporizer and/or an associated application can have the ability to authorize or allow data gathering, receiving, logging, storing, transmission, extrapolation or similar for the purpose of the device or associated application sending error codes or error reports to the manufacturer, manufacturer's subsidiaries, manufacturer's agents, or a third party for the purpose of addressing problems with device performance or function.

A vaporizer and/or an associated application can have the ability to use methods of data transmission such as wireless and wired technologies. A vaporizer and/or an associated application can include features (e.g., software-based buttons or controls and/or physical input devices or controls) that enable user control of the functionality, features, configurations etc. of a vaporizer and/or an associated application using various features of the application referred to as configurations or settings.

Settings can include, but are not limited to: device manufacturer data sharing settings; usage, system, device, and operational data settings; software configuration and firmware updating settings; healthcare system data sharing settings; retailer and/or consumer facing data settings; device access settings; multiple user settings; usage profile settings; settings related to integration with other applications; error code and troubleshooting settings; settings related to methods of communication; and/or the like

The application can be used to provide information on trouble shooting the device in the event of a performance issue or malfunction. The application can be used to provide safety information relating to the device or to the user.

The systems, controller, and functions described above may be implemented with or executed by one or more computer systems. The methods described herein may be stored on a computer readable medium.

### DOSE CONTROL.

A vaporizer and/or vaporizer system may include dose control and/or dose metering. In general, dose control is described in U.S. patent application no. 14/960,259, filed on December 4, 2015, and herein incorporated by reference in its entirety.

**As** described above, a vaporizer and/or a device that is part of a vaporizer system as defined above may include a user interface (e.g., including an app or application software) that may be executed on a device in communication, which may be configured to determine, display, enforce and/or meter dosing. For example, a vaporizer may have a "unit dose" mode/indicator that is displayed on the vaporizer and/or an application. The unit dose could be changed by the connected application and/or by directly controlling the vaporizer. For example, a user may want to go from 1mg nicotine per dose to 2mg of nicotine per dose.

The dose unit may be programmable. For example, a user may program a dose based on previous (recorded) use; e.g., the user may press a "start" button on the app, take enough puffs until satisfied, and then press "stop" on the app. In addition, the user may input user-specific data that may be helpful in determining and/or metering dosing. For example, the user may input body weight, gender, and any other relevant data. Such info can be used for adjusting dose of therapeutic drugs such as pain killer, sleep aid, etc. accordingly.

**As** mentioned, in some implementations of the current subject matter, the vaporizer and/or app running on a device that is connected (or connectable) to the vaporizer may record use or operation of the device and may play back this use later. In general, the vaporizer or app may record a first operational parameter (e.g., temperature setting, ramp time to heat, etc.) and a second use parameter (e.g., number of puffs, cumulative dose, use time, etc.), may store the recorded operational parameter and use parameter as a use profile, may associate the recorded use profile with a control, button, icon, etc., and may program the device operation based on the use profile, so that the operational parameter is modified automatically as the actual operational parameter tracks with the recorded operational parameter.

For example, the user may record a use profile including the number of puffs (e.g., draw events, inhalations, etc.) between changes in the temperature, as well as the temperature so that this use profile may be replayed later, e.g., by selecting a button or other indicator associated with the recorded/programmed use profile. In some implementations of the current subject matter, the vaporizer and/or app may record the temperature and one or more second use parameters, such as one or more of: puff time (duration), puff count (number of puffs), energy applied to vaporizable material (e.g., cumulative joules of energy), dosage/exposure, etc. Playback may be indexed on any of the recorded use parameters such as the number of puffs, cumulative duration of puffing, cumulative power applied, cumulative dose, etc. and may set or modify the operational parameter (e.g., applied vaporization temperature, power applied, etc.) of the vaporizer to the recorded temperature to match the recorded and/or programmed temperature as the vaporizer is operated, so that the same use profile will be followed. For example, a user may record a use profile while operating the device at a first temperature (e.g., 150°C) for 5 draws (puffs), then increasing the temperature to 180°C for five more puffs, then increasing the temperature to 200°C for 10 puffs. The recorded operational profile may be stored on the vaporizer, app, or some other connected memory, and associated with a control (e.g., icon, graphic, text, button, etc.) on the vaporizer, app and/or a remote processor or memory. The recorded operational profile may then be played back, e.g., by selecting an icon (or button, control, text, etc.) on the app or vaporizer that has been associated with the recorded/programmed profile. During playback, the vaporizer may wait until the same or a similar operational parameter (e.g., puffs, time of use, applied power, dose, etc.) is matched or exceeded and may control the heater based on the recorded profile. In the example above, the recorded operational profile may be played back later by pressing the icon; the vaporizer and/or app may compare the use parameter (number of puffs, etc.) to the current operation of the vaporizer and may adjust the operational parameter accordingly to match the use profile.

**The** user device may be configured to measure and record the amount of vaporizable material used over a time period, such as in a day. The user device may be configured to measure and record for presentation to the user puff information associated with use of the vaporizer. Puff information may include the number of puffs, size of puffs, nicotine consumption, amount of vaporizable material, cigarette equivalents (e.g., based on puffs, nicotine of specified or average cigarette, etc.), fraction of pod and/or the like.

**The** user device may be configured to limit use of the vaporizer based on time. The user device may be configured to provide an alert responsive to reaching a threshold level of use. The user device may be configured to disable the vaporizer responsive to a user reaching a threshold level of vaporizer use. The threshold level of use may be configured to adjust over time based on a user's goals. The user device may be configured to present the user with recommendations based on usage data to help the user meet goals. For example, progressive lowering of usage targets may be provided to help a user who wants to meet usage goals. Patterns in usage can be used to recommend tricks to meeting goals (e.g., when you don't vape before 10am, you vape 50% less, so don't vape before 10am).

**The** user device may be configured to process data received from the vaporizer to make a determination. The user device may be configured to provide information to the user via the graphical user interface. For example, the user device may be configured to provide Daily/Weekly/Monthly observations to determine patterns, award badges for meeting goals, generate reports comparing a user's usage over time to themselves or others.

**The** user device may be configured to provide information to the user via the graphical user interface. The user device may be configured to provide an option to divide usage into discreet units (e.g., sessioning). Furthermore, the user device may be configured to provide the user with a selection of different measurement units as well as tracking time units (e.g., daily, weekly, monthly, and/or the like). For example, a user may choose to view daily, weekly, and/or monthly usage based on nicotine consumption as indicated weight (e.g., milligrams and/or the like), a quantity of equivalent cigarettes, quantity of pods, and/or the like. In some aspects, a user can be provided with information on usage based on discreet units as they are met.

**The** user device may be configured to provide information to the user via the graphical user interface. For example, the user device may be configured to provide the user an anonymous competition with other users.

In some implementations, the vaporizer may be configured to remotely sample different data from the device. As described herein, the data may include one or more of a unique identification associated with the vaporizer, a location of the vaporizer, a battery level of the vaporizer, a temperature of the vaporizer, a pressure reading through the vaporizer, an operational status of one or more components of the vaporizer, a usage amount of the vaporizer by the user, a measure of output by the vaporizer, a measure of time between usages by the user, a comprehensive usage profile of the vaporizer by the user, and/or other information associated with the vaporizer. The vaporizer may include a vaporizer cartridge configured to contain a vaporizable material. The vaporizer may be configured to remotely sample different data from the vaporizer cartridge. The cartridge data may include a level of vaporizable material in the cartridge, a flavor associated with the vaporizable material, or a nicotine level of the vaporizable material, age of pod, whether pod is faulty, whether pod configured to deliver high or low levels of vapor, smooth/bold formulation, and/or the like.

The vaporizer device may be configured such that at least one LED indicates limited sessioning feedback with more robust sessioning data available in the app. The vaporizer device may be configured such that the at least one LED provides sessioning feedback to the user.

The use profile may be recorded, or it may be programmed, or both (e.g., a recorded use profile may be modified by a user on the vaporizer and/or app, etc.).

In some examples, dose (e.g., cumulative dose) may be the use parameter that is monitored. In some implementations of the current subject matter, dose may be calculated as described in U.S. patent application no. 14/960,259, filed on 12/4/2015, previously incorporated by reference in its entirety. The cumulative dose may be stored for transmission and/or display. Further, the dose may be used to control operation of the vaporizer.

In one example of a nicotine dose control, the user could set a target cap for how much nicotine he/she wants in a day. In some implementations of the current subject matter, the device won't lock the user out from having more, but it will notify if a target has been exceeded. Alternatively, the device may lock the user out.

In some implementations, upon the app or vaporizer recognizing the cartridge, relevant and/or customized dosing information may be provided. For example, in one instance a comparison may be provided to alert a user of how a new cartridge compares in strength to other previously-used cartridges, providing the user with helpful information to control the amount consumed (e.g., by equating a dose across different strengths). Additionally, user preferences and behaviors may be used to enable the app or vaporizer to recommend a suggested dose. Such recommendations may also be tailored to create a customized experience based on other factors, such as day of the week, time of day, etc.

### MONITORING - HEALTH and CESSATION.

A vaporizer and/or applications running on a device that is part of a vaporizer system consistent with implementations of the current subject matter may also be configured to monitor usage for a digital health regimen, and/or smoking cessation, etc. For example, similar to weight loss monitoring devices, a vaporizer or an app or both may be useful for people who want to reduce nicotine consumption, and/or keep track of how much nicotine consumed within a certain amount of time. For example, the vaporizer and/or app may be configured to allow cigarette-vaporizer dual users to log in how many cigarettes they consume and compare the total amount of HPHCs and nicotine they get on different days when they use different combinations.

The app and/or vaporizer may also provide additional motivation by providing messaging such as reporting how much of X compound is consumed, and may show how much money the former smoker is saving by reducing or eliminating smoking. This would be most relevant for nicotine, although it may be used for other substances as well. In some implementations of the current subject matter, the user may enter their usual price per pack of cigarettes, which may be used as the baseline. Based on dosage monitoring by the device, the vaporizer and/or app may report on savings relative to how much the user otherwise smokes.

In some implementations of the current subject matter, the app may also allow a user to log other health related activities, such as from a fitness app, and/or may suggest correlations between nicotine or THC usage and alcohol consumption, heart rate, blood pressure, workout time or weight changes, etc. For example, a user may enter a preferred unit dose (using presets, or estimated/recorded/programmable data as described above), and a dosage interval or total daily target. The vaporizer and/or app may then lock out after each dosage, and an alert may pop up on a user computing device (e.g., phone, smartwatch, tablet, etc.) when it's time for a next dosage, and the vaporizer automatically unlocks for this next dosage. This could be used as a user-elected reduction approach (step-down or cessation), or to maintain a prescribed therapeutic regimen (e.g., X mg of agent every Y hours, not to exceed Z mg / day).

In some implementations of the current subject matter, the vaporizer and/or an affiliated app may have a dashboard style user-interface, in which users can log on and tabulate their progress over time. Data may be some based on individual and/or group data. For example, the group data can show as a population of what the mean smoking-vaping switch rate is at any given time since starting to use a vaporizer. The apparatus may provide a view in which the user can select other users to define a group (cohort) based on their starting conditions: e.g., packs per day, age, gender, etc.

The dashboard may be configured to display different cessation programs and their success rates for certain individuals, groups, sub-groups, and/or demographics. For example, for a certain group (e.g., females 30-39 in Southern California), the dashboard and group data may show that a first cessation program has a 50% success rate while a second cessation program has a 75% success rate. A user may select the second cessation program and see the different operations involved with the cessation program (e.g., nicotine concentrations, flavors, timeline, frequency of use, diet, and/or the like). For example, by tracking flavors and other pod information using the Pod identifier, the vaporizer system may be able to determine and provide recommendations for which flavor profiles, concentrations, vapor consistency, frequency of use, time of use, and/or the like are best suited for an individual given the individual's goal, user profile, group(s) profile(s), past usage, age, gender, and/or the like. If a user strays from a cessation program, the vaporizer system may be configured to provide recommendations for getting back on the cessation program (e.g., counseling, community involvement, groups, products, and/or the like). FIGs. 50-54 illustrate example user interfaces for depicting different data related to cessation metrics on a dashboard.

In some aspects, the aggregated cessation information may be combined with machine learning algorithms to provide improved recommendations based on user interaction and/or received feedback from other users, vaporizer devices, apps, websites, reviews, and/or the like.

### USER PREFERENCES.

In some implementations of the current subject matter, the vaporizer and/or an affiliated app may be customized based on user preferences, and may provide reminders (including for recreational users). For example, in some implementations of the current subject matter, the apparatus may save preferences for cartridges (e.g., "pods") of different strains and strength that may be preferred by the user. The app and/or vaporizer may save preferences for different use cases (e.g., 'going for a hike', 'bedtime', etc.).

In conjunction with cartridge sensing (as described above), in any of the embodiments described herein, the vaporizer and/or app may also or alternatively suggest one or more use profiles (e.g., heating profiles). For example, based on the type of cartridge and/or based on user input on the type of vaporizable material (strain, concentration, etc.) even in embodiments not including cartridge detection, the vaporizer and/or app may suggest a use profile (e.g., "Other users enjoy this strain with profile X", or "Other users enjoy this strain at an initial temperature of 155°C").

### DEVICE CONTROL AND CUSTOMIZATION.

**As** mentioned above, the vaporizer may be controlled in part by user input to an affiliated app. For example, particular aspects of the vaporizer that may be controlled may include changing a temperature set-point, for example to allows users to get less vapor if they need to be less conspicuous. This may also allow the user to reduce harshness and active ingredient consumption per puff.

The app may also provide a more precise indication of battery level beyond what is displayed on the vaporizer. For example, during charging, the app may indicate time remaining.

As mentioned above, the app may also provide firmware updates to the vaporizer.

A vaporizer and/or a device that is part of a vaporizer system may use received signal strength indicator (rssi) to help a user locate a lost vaporizer. In addition, the app may allow the user to cause the vaporizer to vibrate, flash and/or emit sound(s) as an alarm, including for helping to locate a misplaced apparatus. For example, a temperature change, vibration or flash lights may also be the indicator of whether the vaporizer is hiding nearby. In some implementations of the current subject matter, the vaporizer may also help locate a misplaced phone when connected via changing LED colors depending on the distance between the vaporizer and the phone.

An app may be configured to determine whether a vaporizer is within a communication range of the user device. The communication range may be determined based on the range of a Bluetooth (BL), Bluetooth Low Energy (BLE), and/or the like between the user device and the vaporizer. In some implementations, geolocation methods may be used to determine distance, location, and/or range such as satellite navigation (e.g., GPS), radio frequency (RF), multilateration (MLAT), radionavigation, and/or the like. The vaporizer may be configured to emit a signal responsive to a prompt communicated by the app and/or user device. The signal may include one or both of an audible signal or a visual signal, such as a sound emitted by a speaker or an illumination of light emitted by a light-emitting diode (LED). For example, if the vaporizer has been misplaced in a location proximate to the user device, the user may activate a "call function" of the vaporizer, prompting the vaporizer to emit a sound that is audible through the room, lights, haptics, and/or the like.

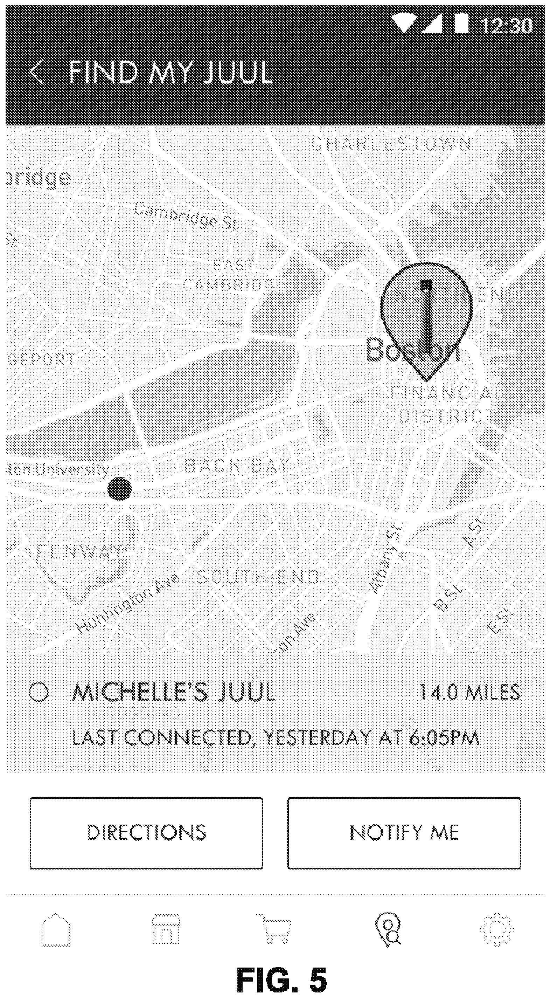

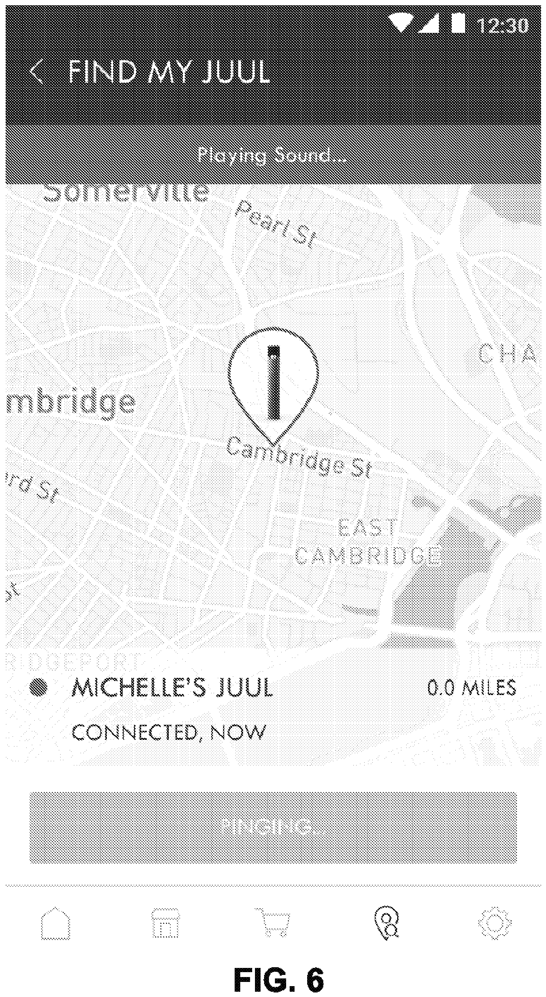

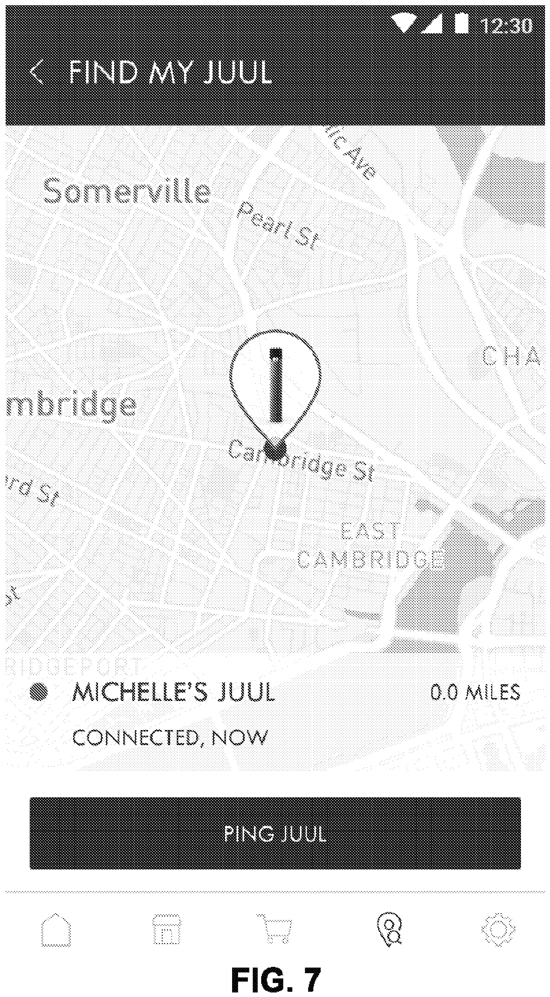

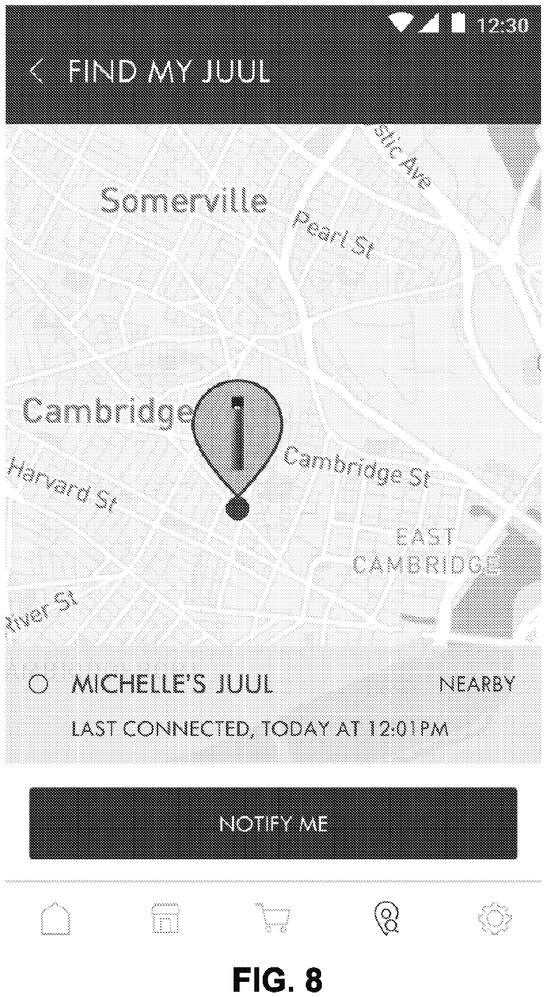

FIGs. 5-8 The app may be configured to store time and location information of the vaporizer while within a threshold range of the user device. For example, if the vaporizer is out of range of the user device, the time and location of the vaporizer being previously in range of the user device may be determined. For example, the app may be configured to determine the time and location the user device was last within range of the vaporizer. The app may be configured to present a map of the current and/or last paired location of the vaporizer via a graphical user interface.

One or more network devices may be configured to receive, by one or more processors, information associated with the vaporizer, communicate the received information associated with the vaporizer to the app, and determine a unique identification associated with the vaporizer. Network devices may include user devices of other vaporizer users. The app may be configured to determine whether the vaporizer is within a communication range of the one or more network devices. The vaporizer may be configured to emit a signal responsive to a prompt communicated by the network devices. For example, if the vaporizer has been misplaced in a location beyond range of a user device, one or more network devices may receive a "lost device" notification and the misplaced vaporizer may emit a signal responsive to being within the communication range of one or more of the network devices. The network devices may be configured to transmit location information to the user device responsive to the vaporizer being located. The vaporizer may be configured to disable and/or lock responsive to a prompt communicated by the network devices.

The vaporizer device may be configured for connectivity via an antenna. The vaporizer device may have a Bluetooth (other communication) range sufficient for the location feature (e.g., "Find-my-Device") and/or youth prevention beacon efficacy within a large room. The vaporizer device may be configured to be located in all directions with non-liquid interference (e.g., stuck in sofa cushion). The vaporizer device may be configured with a Bluetooth Low Energy (BLE) range of 50 feet and/or 25 feet. The vaporizer device may be configured to sync to a phone or user device currently on a user's person responsive to being held tightly in the hand of the user. The vaporizer device may be configured with a BLE range of 6 feet when held in a user's hand without skin contacting above the antenna. The vaporizer device may be configured to sync data to a phone or user device in a user's possession while the device is charging nearby (e.g., desk, car, and/or bedside). The vaporizer device may be configured to be located using the vaporizer device location feature within room-range while charging, but not gating. The vaporizer device may be configured with a BLE range of 15 feet and/or 25 feet in all directions while on a charger. Other BLE ranges are possible for the different configurations described herein.

The vaporizer device may be configured with a variable advertise rate based on motion for battery savings. Location features (e.g., "Find-my-Device") beacon mode may consume an amount of idle battery capacity. To reduce power consumption, the rate of advertising may be reduced for devices that are actively moving and/or increased for devices that are stationary.

The vaporizer device may be configured to provide an LED indication responsive to the location feature (e.g., "Find-my-Device") being activated. For example, LED animation may accompany sound when the location feature is activated to improve find-ability.

The vaporizer device may be configured to emit a sound responsive to the location feature (e.g., "Find-my-Device") being initiated by the user. The sound may be audible within one room with ambient (e.g., office) noise. Additionally, the sound may be audible if lodged in sofa cushions. By way of non-limiting example, the sound or buzzer volume may be an x quantity of decibels measured from a x distance (logged in free space). In an embodiment, the sound may be a pulsing, single-tone sound. In another embodiment, the sound may be "pleasant" or delightful.

The vaporizer device may be configured to be located without internet connectivity (out-of-range find). For example, find-by-map feature may be disabled and/or cache the location on the map so it can be used offline.

To preserve user privacy and anonymity, Bluetooth signal may not be detectable as a specific vaporizer device name (e.g., "BOB'S DEVICE"). Further, advertising beacon packet identifier info may be anonymized per device per associated user account to prevent third parties from identifying users with location feature (e.g., "Find-my-Device") enabled. App and device may be configured to maintain rolling list of advertising payloads to prevent third party tracking or other nefarious invasions of user privacy.

The vaporizer device may be configured such that the location feature (e.g., "Find-my-Device") may be turned on or off. In some implementations of the current subject matter, responsive to the feature being disabled, advertising information may be present without location information. The user interface may be configured to provide a selection to enable/disable the location feature. Such configuration may be maintained in non-volatile storage on device to survive power-on-reset or other reset conditions. In some implementations of the current subject matter, the location feature (e.g., "Find-my-Device") may only be available for registered app users (e.g., account login).

The vaporizer device may be configured such that location feature (e.g., "Find-my-Device") may be linked to the app and user login rather than to a specific user device, in order to enable all of the functionality when a user logs into the app on a (different) user device not linked to the user's vaporizer device. Any user device with the user app installed with a specific user logged into their account may be able to: 1. access last location of linked-to-account devices (map function); 2. recognize when a linked-to-account device is in range of the new logged-in user device, based on receiving advertising packets from lost device in range of user device; 3. connect to lost devices in range and turn on beeper (or other notification).

A vaporizer and/or an app may be used to adjust LED brightness and color of the vaporizer. For example, for vaporizers with multiple LEDs, a user may download personalized indicator patterns to the device. In addition to making the vaporizer feel more personalized, this may have enhanced utility as it may make it easy to identify which vaporizer belongs to a particular owner.

In some implementations of the current subject matter, the temperature of the vaporizer may be adjusted by using a graphical user interface that allows both gross and precise control of the vaporizer temperature with a single finger. For example, a graphical user interface (GUI) may include a display of the temperature visually indicating the current temperature and/or target temperature of the vaporizer; this temperature may be adjusted up or down (within a range).

### ANTI-THEFT/PARENTAL LOCK/CHILD-PROOFING.

**Any** of the devices described herein may include a device lock, as mentioned above. For example, the app and or vaporizer may authenticate to a mobile device using encryption, as an anti-counterfeit mechanism. A similar scheme may be used to tie the vaporizer to the owner's mobile communications device (e.g., phone, smartwatch, pad, etc.), such that if stolen the device is disabled to prevent others from using it. In some implementations of the current subject matter, the vaporizer may connect periodically to the mobile communications device to verify.

The vaporizers described herein may also include parental lockout (e.g., child-proofing). For example, a device could be 'locked' for parents who want to make sure their children will not use the device. For parental lockout, in addition to Bluetooth or other relatively long range communications, the apparatus may also implement a near-field communications (NFC) tag on the vaporizer. NFC readers are built into many smartphones. One feature of NFC is that it only works in very short range. This would make unlocking very easy - you just tap the phone against the vaporizer. NFC tags are extremely cheap and small and may be used in addition to, or instead of, other wireless communication modes, such as Bluetooth. NFC could be used to implement some of the other features described above.

The vaporizer device may include a youth prevention feature configured to lock out the device vapor production function responsive to an encounter with a youth prevention beacon device. For example, a vaporizer device with a youth prevention feature enabled may be shut down (e.g., vapor production disabled) for 30 minutes (or another time period) when the vaporizer device comes within range of a youth prevention beacon device. The youth prevention feature may be configured with security for device shutdown. Security measures may be implemented to ensure nefarious parties cannot arbitrarily exploit the youth prevention shutdown feature to otherwise impede or disrupt services for active users.

**In** some implementations of the current subject matter, the youth prevention device's ability to act upon a vaporizer device may be dependent on the age verification status of the vaporizer device. For example, a registered and age-verified vaporizer device may be "invisible" from youth prevention beacons such that a registered and age-verified vaporizer device may not be subject to shut-down when the vaporizer device comes within a threshold distance of a youth prevention beacon. Youth prevention features may be enabled by default (e.g., after device reset) but may change and/or update when a user age verifies. A vaporizer device connected with the app where the user is age verified, may be opted out of youth prevention device programs (for a specific, limited number of devices - limited by the number of devices that may be associated with a user account). A youth prevention advertising shutdown mode may include strong security to prevent the hacking and disabling of youth prevention features by third parties.

The vaporizer device may be configured such that responsive to a user unlinking the vaporizer device from the user's age-verified account, the youth prevention device features may be reactivated. The vaporizer device may be configured such that the security protocols to prevent hacking may not be disabled. As such, the youth prevention feature may only be deactivated with a shared secret challenge or other security/authentication measure.

The vaporizer device may be configured to minimize battery impact of youth prevention features by providing low-power advertising for detection by youth prevention beacon devices. The vaporizer device may be configured, by default, to broadcast an advertisement with specific vaporizer device information, manufacturer information, and/or user information for reception by youth prevention beacons. Youth prevention beacons may be configured to monitor and record the broadcast advertisement such that administrators may identify underage users and provide counseling services.

The vaporizer device may be configured such that if a user loses their vaporizer device that was previously authenticated (and thus not subject to youth prevention features), then releases the device from their account, the device may be factory reset to include enablement of the youth prevention features. Youth prevention features may be optionally disabled by the beacon responsive to a user relinking the device to a different account. If a lost (un-linked) device is re-paired to a user app with an age verification, the device may be factory reset and youth prevention features may be enabled again, unless the device is locked.

It should be appreciated that the youth prevention feature is one example of location based vaporizer device control. As such, in some implementations of the current subject matter, the vaporizer device may be configured to respond to other types of beacons. For example, beacon devices may be set up around the perimeter of a public building to trigger the changes in the behavior of vaporizer devices that come within the a threshold distance of the public building (e.g., shut-down the vaporizer devices, adjust strength of vapor, output alerts, and/or the like). Furthermore, it should be appreciated that location based controls may be implemented using other mechanisms instead of and/or in addition to beacons including, for example, location services of paired user devices, geo-fencing, and/or the like.

In some implementations, the vaporizer device may be configured for authentication in connection with the hardware beacons and application beacons described herein. For example, the user device may be prompted when the vaporizer device is located within a communication range of a hardware beacon and/or an application beacon. In some aspects, the hardware and/or application beacons can be implemented in high-risk areas for under-age or unauthorized use (e.g., schools, playgrounds, youth centers, etc.). In other aspects, authentication may include proximity detection based on location information. For example, the user device and/or vaporizer device may receive GPS, or other location information, indicating that the vaporizer device and/or user is within a proximity threshold of certain location (e.g., schools, playgrounds, youth centers, etc.). If the vaporizer device is within the proximity threshold, the vaporizer device may lock or the user device may be configured to lock the vaporizer device. In some aspects, the user may re-authenticate in order to unlock the vaporizer device within the proximity threshold. In other aspects, the user may be restricted from unlocking or operating the vaporizer device within the proximity threshold.

In addition to locking the device, the youth prevention features and/or the app may be configured to receive inputs from a user reporting that a vaporizer device was lost, stolen, that the vaporizer device was used by an underage individual, and/or the like. The user may also report retailers suspected of selling to minors, locations where underage use is suspected, and/or the like. The user may provide any other relevant information in a field of the user interface (e.g., counterfeit, location, retailer, serial number, Pod identifier, individuals, and/or the like). FIGs. 31-36 illustrate example user interfaces for reporting such information.

Such reported information may be combined, aggregated and analyzed to track and determine where unauthorized and/or unwanted use of the vaporizer device is occurring and what individuals and/or entities are involved. For example, after receiving a threshold number of reports associated with a certain retailer or a certain location, the vaporizer system may be configured to disable pods sold from the retailer over a given time period, send a warning to the retailer, and/or take any other remedial action. In some aspects, the disabling and data aggregation may be performed by one or more servers in communication with the app, the user device, and/or the vaporizer device.

The vaporizer system may also combine the reported data with information obtained from individual vaporizer devices across a population, information regarding users and user profiles, usage profiles, user accounts, social media accounts, websites, crime reports, and/or the like. The combined information may be presented on a dashboard, or other user interface, on a user device and/or app. The dashboard may be accessed by administrators, parents, police, security to monitor underage use, unauthorized use, counterfeit products, and/or the like. For example, the vaporizer system may retrieve information from a school reporting underage use of vaporizer devices. The vaporizer system may correlate that information with information from social media (e.g., Tweets, Facebook posts, hashtags, etc.) associated with underage use (e.g., social media accounts mentioning vaporizers, pod flavors, usage, locations, retailers, and/or the like). This combined data may be further analyzed to find trends, patterns, and/or indicators of underage use. By tracking and tracing underage youth to the source, schools, parents, retailers, manufacturers may take action, initiate programs, and/or the like to prevent underage use.

Retailers may also have access to a dashboard indicating reports of underage use associated with products sold at the retailer and/or its affiliates (e.g., a serial number, a distributor or an employee). The dashboard may include a map or graphic showing a location where the reports occurred, the data source for the reports, a number of reports, a time of the report, a reputation of a data source, other reports filed by a user or data source, social media posts, comments associated with a report, and/or the like. FIGs. 37-49 illustrate example user interfaces for tracking reports and other data indicating underage use, retailers, locations, comments, investigations, prevention actions and/or the like.

### GPS FOR LOCATOR, ORDERING, AND SOCIAL NETWORKING.

**Any** of the apparatuses described herein (e.g., vaporizers and/or an affiliated app) may include location services (GPS).

For example, a user buying cartridges for the vaporizer directly from a source may use an app to understand exactly how many cartridges that the user has and how many they have left. A retailer may use this information to offer the user to auto-order more when they are running low.

In any of the apparatuses described herein, the app and/or the vaporizer may include a GPS or may communicate with a GPS to determine location of the vaporizer. Locational information may be used to tell a user the closest retailer to buy more cartridges, to use location service for delivery, to order through a smart phone (e.g., usage tracker combined with auto-refill), and/or to inform the user of relevant local legislation about e-cig and cannabis use.

Locational information may also be used to link a vaporizer to a particular store, for example a store at which the vaporizer is purchased. By associating the purchase with a physical store location or point-of-sale, the store can be offered incentives based on the original purchase and/or subsequent purchases. Additionally, the store can be identified as a preferred store for the user and automatic updates relating to the store can be provided to the user through, for example, use of the app (e.g., special promotions, new devices, new cartridges, and the like). To link the store with the purchased vaporizer, physical beacon devices may be installed at the store (e.g., at the register or at a display). The vaporizer may be configured to listen for beaconing information, and once this information is detected (e.g., at the register when the vaporizer is being purchased), the association of the vaporizer with the store may be made.

Locational information may also be used to disable vaporizers that are determined to be positioned at or located in one or more areas in which vaporizer use is not permitted. For example, particular areas or zones may be established, and if a vaporizer enters such an area, or comes within a predefined range of the area, the vaporizer may be automatically disabled or disabled after an alert is given. Such areas may include, for example, a defined perimeter around schools or within particular locations (such as stores) that do not allow use of vaporizer. Additionally, specific locations in which vaporizer use is not permitted may be set up by one or more individuals (e.g., an individual's house). To establish the areas/zones/locations, physical beacon devices may be installed to identify the areas/zones/locations. When a vaporizer is within range of the beacons, the vaporizer would fail to turn on or would turn off. Alternatively, geo-fencing can be used to establish the areas/zones/locations in which use of vaporizers is not permitted. With a vaporizer paired to a user's phone or mobile device, or by utilizing location services of the vaporizer, the vaporizer can be disabled when it is within any of the defined geo-fenced areas/zones/locations.

The vaporizer device may include a youth prevention feature. In some implementations of the current subject matter, behavior of the vaporizer device may be altered when in range of a beacon. For example, peripheral behavior may be altered when the vaporizer device comes within Bluetooth range of a youth prevention beacon device. Proximity to the youth prevention beacon device may trigger, in the vaporizer device, one or more peripheral responses including, for example, immediate device locking (heater coil off), device locking after expiration of timer, and/or visual indicators (LEDs) of device locking.

In addition, any of the vaporizers and apps described herein may be used to enhance the social experience of the user, including for interaction with other users, and communication with a particular user.

In some implementations of the current subject matter, the vaporizer and/or app may profile users and tell them how they compare to others. For example, the vaporizer and/or app may indicate what percentile a user's nicotine/THC consumption fall into and/or may recommend strains (cartridges) based on user behavior (e.g., 'We noticed that you are mostly using your vaporizer at night. Other people who use at night prefer this strain.').

The vaporizer or app may also include access to forums or chat areas where users may trade tips, and areas where physicians can discuss various topics.

In some instances, the vaporizer and/or app may allow forming of communities or groups among vaporizer users. Through use of the app, users may be presented with an option to join or create one or more groups. Or groups may be created for a particular geographic area. The groups may allow users to vote (e.g., on preferred cartridges or other topics of interest), obtain data or statistics related to a use of certain devices or flavors, and/or data or statistics on a number of overall users in a particular area (such as a given city or zip code). In some instances, certain identifying characteristics of users may be kept anonymous for safety and/or privacy reasons.

In general, any of these apparatuses may permit users to engage in games either by gamification of usage or by including games that may be played by users (including multiple users) unrelated to vaporization of material. For example, gamification of usage (including purchasing of new components such as cartridges) may include awarding points, prizes, etc. and the creation of teams for switching or the like. Games may include the use of the accelerometer or other sensors in the apparatus that may be transmitted wirelessly to an app and/or to another user's vaporizer or app (e.g., directly or via a remote server) to permit game interaction.

The vaporizers and/or apps described herein may also facilitate sponsorships, for example, allowing a user to sign a friend or family member up, pay the cost for a vaporizer, and have it sent to them or even delivered immediately (e.g., by bike messenger). This may be used to provide incentives with sponsors for switching from traditional cigarettes to vaporizers and/or reward use (presumably in place of use of traditional cigarettes), e.g., if you stick with it you get prizes (e.g., gift cards, etc.).

Any of the apparatuses described herein (including the vaporizers and any affiliated apps) may also be used to collect and analyze user data. This may allow the vaporizer producers, providers and retailers to get to know users better, including understand where when and how they are using the vaporizer. Knowing where and when a consumer is using a vaporizer may allow better marketing to users and may improve the design for future products.

The vaporizers and apps described herein may also facilitate communication between the manufacturer and/or retailer and the consumer (user). For example, by interacting with consumers while they are using the product, there may be opportunities to encourage direct sales. Thus, for example an app may say: "If my calculations are correct, it looks like you only have one cartridge left in your pack. Would you like to buy another?"

The vaporizers and apps described herein may also have enhanced anti-counterfeit components, including registration (e.g., through use of the app) of the vaporizer and/or app. In some implementations of the current subject matter, the vaporizer could have a similar encryption handshake with the app and/or the charging dock.

In addition, the vaporizers and/or the app may permit or include device diagnostics. For example, the vaporizer and/or app may monitor component level failures (e.g., pressure sensor, battery, pogo pins, etc.), and may potentially identify a broken device in the field and ship warranty replacement without the need to return a device to customer service. This may also permit the faster collection of data on common problems to be used for rolling changes and future designs. For example, diagnostic information can be collected from various devices and submitted for analysis. The diagnostic and other operational information can be submitted through the app and stored at a central server, thus allowing for such information to be routinely updated without requiring it to be stored on the devices.

Moreover, the vaporizers and/or app may automatically send manufacturing level information (serial number, etc.), which may later be associated with the diagnostic and/or operational information of a particular device. Such information may also be associated with the location in which the device was sold (using the beaconing information as described above, for example). In some instances, the manufacturing level information is sent with the point-of-sale information to create a record for a particular vaporizer. Subsequent diagnostic information may later be added to the record. Additional information may include device lifeline, date of sale, purchase date, each without requiring information from a user. The collected information can be used in a variety of ways, such as future interactions with the user from the store (e.g., facilitating conversation between the store and the user, auto-subscription purchases, and/or delivery service).

Calibration data may be stored on a cartridge used with a vaporizer, transmitted to the vaporizer, and provided (via the app for example to a central server) for storing and analysis. For example, such information may include strains, concentrations, and the like. The communication between the cartridge and the vaporizer in which it is used allows for suggestions and recommendations, for example, to be provided to the user. For example, the communicated information may be provided and analyzed to determine other types of cartridges that may be of interest (based on, for example, use information collected from other devices or known similarities/effects). The user may then be provided, via the app, with customized suggestions and recommendations.

### DATA RECORDER

A vaporizer system may include a data recorder, which may be deployed at a user device communicatively coupled with a vaporizer device and/or a cloud server communicatively coupled with the user device. The data recorder may be configured to receive, from one or more vaporizer devices, high frequency (approximately 250 hertz or 250 samples per second) metrics at indeterminate intervals. For enhanced user privacy, the data received at the data recorder may be anonymized such that data from a vaporizer device are not associated with the corresponding user's personal identity.

The data recorder may be configured to log data at a target sampling rate (e.g., n quantity samples per unit of time). For example, the data recorder may generate, output, and/or store a log including by adding one or more samples of data to the log at the target sampling rate such that log includes an n quantity samples per time unit. Each sample of data added to the log may be determined based on one or more samples of data received from a vaporizer device. It should be appreciated that the data recorder may receive data from multiple sources including multiple components within a single vaporizer device (e.g., heater, pressure sensor, and/or the like) and/or multiple vaporizer devices. Moreover, the target sampling rate may be adjustable based on a variety of factors including, for example, the application associated with the logged data, the profile of the user associated with the vaporizer device, and/or the like. For instance, the target sampling rate for a user with a cessation goal may be higher than the target sampling rate of a mere recreational user. The target sampling rate for diagnostic data may also be higher than the target sampling rate for behavioral data.

The data recorder is configured to log data at a target sampling rate (e.g., n quantity samples per unit of time) that is less than the rate (e.g., m quantity of samples per minutes) at which data arrives at the data recorder. That is, the data samples added to the log may be associated with a different time base than the incoming data samples received at the data recorder. As such, in some implementations of the current subject matter, the data recorder may be configured to reconcile the difference between the target sampling rate and the rate at which the data recorder receives data from the vaporizer device.

**In** order to achieve the target sampling rate, the data recorder may be configured to log some but not all of the data samples received at the data recorder. For example, the data recorder may log a first data sample if the value of the first data sample is different from one or more previous data samples in the log by a threshold value. However, the data recorder may omit a second data sample if the value of the second data sample is not different from one or more previous data samples in the log by the threshold value. Alternatively and/or additionally, the data recorder may summarize data that is received at a rate exceeding the target sampling rate. For instance, the data recorder may aggregate multiple samples of the incoming data such that data is added to the log at the target sampling rate which, as noted, is less than the rate of the incoming data.

In some implementations of the current subject matter, the data received at the data recorder may include multiple types of measurements from the vaporizer device. The data recorder may receive different types of measurements at a different frequency. Moreover, the data recorder may be configured to log different types of measurements at a different target sampling rate. For example, the data recorder may receive, from the vaporizer device, heater data (e.g., temperature measurements) at a first rate and pressure data (e.g., pressure measurements) at a second rate. Moreover, the data recorder may log the heater data at a first target sampling rate and the pressure data at a second target sampling rate.

In some implementations of the current subject matter, the data recorder may be configured to log data samples over a specified length and/or period of time. Moreover, the target sampling rate may be adjusted based on the intended use of the data as requested, for example, by the app paired with the vaporizer device. For example, the target sampling rate at the data recorder may be increased in order to obtain sufficient data for performing diagnostics at the vaporizer device. Adjusting the target sampling rate may change the rate at which the data recorder logs data samples and the quantity of data samples available for analysis. Nevertheless, it should be appreciated that the data recorder may be configured to log data at a target sampling rate that is a multiple of the rate at which data arrives at the data recorder. For instance, if the data recorder receives heater data at a rate of 100 hertz, the data recorder may log the heater data at a target sampling rate of 50 hertz, 33.3 hertz, 25 hertz, 10 hertz, and/or the like. The target sampling rate may not exceed the rate at which data arrives at the data recorder. Moreover, it should be appreciated that the data arriving at the data recorder may form a series of events, each of which including one or more types of measurements including, for example, heater data, pressure data, and/or the like.

In some implementations of the current subject matter, the data recorder may be configured to perform multiple levels of summarization including, for example, bulk data summarization, sample summarization, and/or the like. The data recorder may perform sample summarization in order to down sample the data received at the data recorder, thereby reconciling the difference between the rate at which data (e.g., heater data, pressure data, and/or the like) arrive at the data recorder and the target sampling rate at which data is being logged by the data recorder. Accordingly, sample summarization may include generating one sample of data added to the log by at least applying, to multiple samples of the data received at the data recorder, a mathematical operation (e.g., mean, median, minimum, maximum, mode, range, and/or the like). For instance, if data is arriving at the data recorder at a rate of 200 hertz but the target sampling rate is 50 hertz, each sample of data added to the log may correspond to a mean, medium, minimum, maximum, mode, and/or range of four samples of data received at the data recorder. The result of performing sample summarization on time-series data (e.g., a sequence of successive data samples) may be a sequence of data samples forming another time-series data that has been down sampled to include a few quantity of data samples than in the original time series data.

Alternatively and/or additionally, the data recorder may perform bulk data summarization to one or more types of measurements received at the data recorder in order to generate one or more additional metrics including, for example, a temperature rise time, a temperature overshoot, a deviation from temperature set point, a maximum temperature, a minimum temperature, a maximum pressure, a minimum pressure, and/or the like. It should be appreciated that the result of bulk summarization may be a sequence of data samples forming a time-series data (e.g., temperature differential, pressure differential, and/or the like) or single, event-specific data point.

In some implementations of the current subject matter, the data recorder may be configured to determine a variety of metrics including, for example, puff characteristics, charge events, device health data, error events, and/or other data associated with the vaporizer device. Puff characteristics may include single data per event, time series data, and/or other data. Single data per event may include one or more of a puff start time, puff length, average power, minimum power, maximum power, temperature rise time, temperature overshoot, deviation from set point, average draw strength, minimum draw strength, maximum draw strength, temperature baseline value, vaporizer device orientation, and/or other puff characteristics. For example, the average draw strength may be determined by a pressure differential. Time series data may include deviation from set point, coil power, coil temperature, draw strength, battery loaded voltage, unloaded voltage, and/or other data.

In some implementations of the current subject matter, device health data may include one or more of charging data, error conditions, and/or other data. Charging data may include single data per event and/or periodic metrics. Single data per event may be configured such that the data will be sent to the recorder at the end of the charging cycle. Single data per event may include one or more of a charge start time (recorded by begin event command in metrics), time on charger, battery level at beginning of charge cycle, battery level at end of charge cycle, and/or other data. Periodic metrics may include one or more of altitude measurement, ambient temperature, device double-tap occurrence, and/or other data. Error conditions may be configured to be logged to a "critical log" section, which is not located in the spare image slot. The error events may be reported asynchronously, and may be configured as individual events in the metrics library. Error conditions may include one or more of accelerometer lockup, pressure sensor error (e.g., "can't read"), pressure sensor error (e.g., "bad data"), LED sensor (e.g., "can't read/write"), charger circuit (e.g., "can't communicate with charger" or "battery fault"), battery fatigue (0-100), and/or other error events.

In some implementations of the current subject matter, data received at the data recorder may be passed to one or more handler functions. For example, upon receiving a data sample a heater temperature measurement, the data recorder may pass the data sample to a first handler function configured to update, based on the data sample, a temperature rise time, a temperature overshoot, a deviation from temperature set point, a maximum temperature, a minimum temperature, a maximum pressure, a minimum pressure, and/or the like. The data sample may also be passed to a second handler function configured to down sample the incoming data including by applying, to a sequence of data samples including the data sample, a mathematical operation such as, for example, mean, median, minimum, maximum, mode, range, and/or the like. Once a data sample has been processed by the handler functions, the data recorder may discard the data sample instead of storing the data sample in a buffer. Moreover, the data recorder may be configured to perform running calculations, for example, by updating a stored value (e.g., mean, median, minimum, maximum, mode, range, and/or the like) based on each incoming data sample instead of storing multiple data samples in a buffer to perform periodic bulk calculations.

As noted, the data samples received at the data recorder may be associated with one or more events at a vaporizer device. In some implementations of the current subject matter, the vaporizer device may include a communication module configured to send, to the data record, a start command indicating the start of an event, one or more data samples associated with the event, and a stop command indicating the the end of the event. One or more faults may occur at the vaporizer device where the communication module fails to communicate the stop command at the end of an event and/or issues the start command for an event prior to the cessation of a preceding event. As such, the data recorder may observe a fault handling protocol. For example, the receipt of a start command indicating the start of an event may trigger a timeout period. The data recorder may terminate the event if data recorder does not receive a stop command indicating the end of the event upon the expiration of the timeout period. Alternatively and/or additionally, the data recorder may be configured to determine when multiple start commands are received for the same event. The data recorder may not initiate an event based on a start command if the data recorder had already initiated the same event in response to another start command.

In some implementations of the current subject matter, the data logged by the data recorder may be backed up, for example, to flash storage. The backup of the log may be locked. However, the data recorder may continue to add data samples to the log even while the backup of the log is locked.

In some implementations of the current subject matter, the vaporization system may be configured to implement one or more thread safety measures in the collection and processing of data samples from the vaporizer device. For example, separate threads may be deployed to collect different types of measurements. The data samples collected by a thread may be may be passed, to the data recorder, via a pointer to one or more memory blocks (e.g., structs) storing the data samples. The data recorder may avoid comingling data samples collected by different threads when performing summarization (e.g., bulk data summarization, sample summarization, and/or the like), thereby obviating the need for locking or synchronization. As such, the data recorder may perform summarization on a single type of measurements at a time.

For example, a first thread may be configured to collect heater data (e.g., observed temperature, set-point temperature, and/or the like) and a second thread may be configured to collect pressure data (e.g., ambient pressure, air path pressure, and/or the like). The heater data and the pressure data may be passed to the data recorder via a pointer to the respective memory blocks storing the heater data and the pressure data. To avoid comingling data samples collected by different threads, the data recorder may be configured to perform summarizations requiring only a single type of measurement. For example, the data recorder may perform sample summarization on heater data and the pressure data separately in order to down sample, to the target sampling rate, the heater data and the pressure data received at the data recorder. Alternatively and/or additionally, the data recorder may perform bulk data summarization to determine one or more additional metrics. For instance, the data recorder may perform bulk data summarization to determine temperature rise time (a single, per-event metric), observed temperature (a time series metric), deviation from a temperature set-point (a time series metric), a pressure differential (a time series metric), a maximum differential pressure (a single, per-event metric), a minimum differential pressure (a single, per-event metric), and/or an average differential pressure (a single, per-event metric). When determine a metric based on the heater data collected by the first thread, the data recorder may exclude pressure data collected by the second thread to avoid comingling data samples collected by different threads.

In some implementations of the current subject matter, In some implementations of the current subject matter, the logs generated by the data recorder may be sent to a user device such that an app installed on the user device may generate, based at least on the logs, one or more data presentations. For example, the data presentation may provide a visual representation (e.g., in the form of a bar graph, a line graph, and/or the like) of usage (e.g., quantity of puffs) over different time periods (e.g., day, week, month, and/or the like).

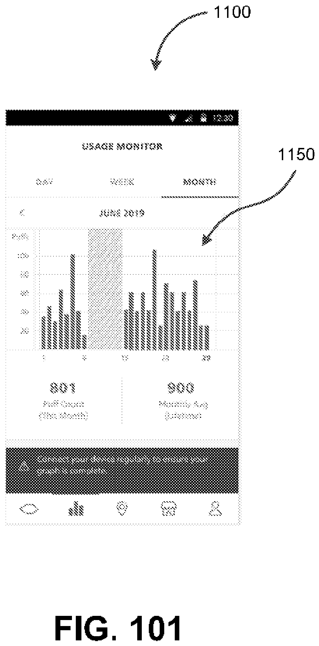

In some implementations of the current subject matter, the user device may be configured to detect when the log includes missing data including by indexing the logs received at the user device. For example, upon receiving a batch of logs from the cloud server, the user device may mark the last log index associated with the batch of logs. A subsequent request for additional logs may include the index of the last entry in the last log received from the cloud server. If the cloud server is unable to return a corresponding log or if the cloud server returns a log whose index is greater than the marked index, the user device may determine that at least some portions of the log at the cloud server may have been overwritten. When generating the one or more data presentations, the user device may include one or more indicators for the missing data. To further illustrate, FIG. 101 depicts an example of a user interface 1100 consistent with implementations of the current subject matter. As shown in FIG. 101, in a bar graph 1150 showing daily puff count over a certain time period (e.g., week, month, and/or the like), the bars corresponding to days for which data is available may be shown in one color while the bars corresponding to days for which data is missing may be shown in a different color and/or may be grayed out.

the vaporizer device may be configured to provide device health data, for example, to the data recorder. The vaporizer device may be configured to ensure that "Device Health Data" lifetime stats and error codes most useful for failure analysis and troubleshooting, is stored and accessible even in cases where the user never syncs their data to the cloud. Device Health Data may be collected in all modes (e.g., research and standard modes). Such data may survive factory resets, full battery death, firmware updates, and/or changes in device ownership (account linkage). "Health Data" may include one or more of errors such as a counter of error codes (Pareto chart), list of most recent errors as space permits (finite circular buffer), lifetime stats (counters) of data such as a count of charges, count of puffs, count of pod insertions, and/or the like. Data types may be listed in a DATA TYPES tab. Time series list of error codes may be implemented in the "Health Data" log space, not the (usage) logging log space.

The vaporizer device may be configured such that association device data created prior to user pairing device to the app will never be associated with the user, but will be gathered as an anonymous statistic. For example, if a user pairs her device to the app, and then links the device to her account at a later date, only the usage that occurred after pairing the device to the app will be associated to the user's account. This prevents the manufacturer from gathering data without terms and conditions approval (terms and conditions obtained with app download). Such embodiments prevent prior device owners' usage to be viewed by a subsequent owner. By way of non-limiting example, if a user obtains a vaporizer device at a first time *t*₁ (e.g., January 1), downloads the app and pairs the device with the app at a second time *t*₂ (e.g., January 15), then links the app to the user's account at a third time *t*₃ (e.g., January 31), the usage data that is linked to the user and thus accessible to the user may include usage data from the second time *t*₂ onwards but may exclude usage data preceding the second time *t*₂ (e.g., usage data from January 1 and January 14).

The vaporizer device may be configured such that responsive to a device being paired to the app, but not linked to a user account, the data produced by the device will anonymously be collected and uploaded to a device Cloud (e.g., a server or remote server network), with device identifier for use by the manufacturer. The unlinked device data may be appended with device identifier and noted as anonymous data.

The vaporizer device may be configured such that accessing the vaporizer device user data employs strong security and/or encryption, and cannot be accessed by any other apps or third-parties without the user's explicit consent. In an embodiment, when data is linked to a user account, access/security for the linkage of user and/or usage is extremely secure. For example, hashed user-identifier may be appended to data to prevent user's usage data from being compromised.

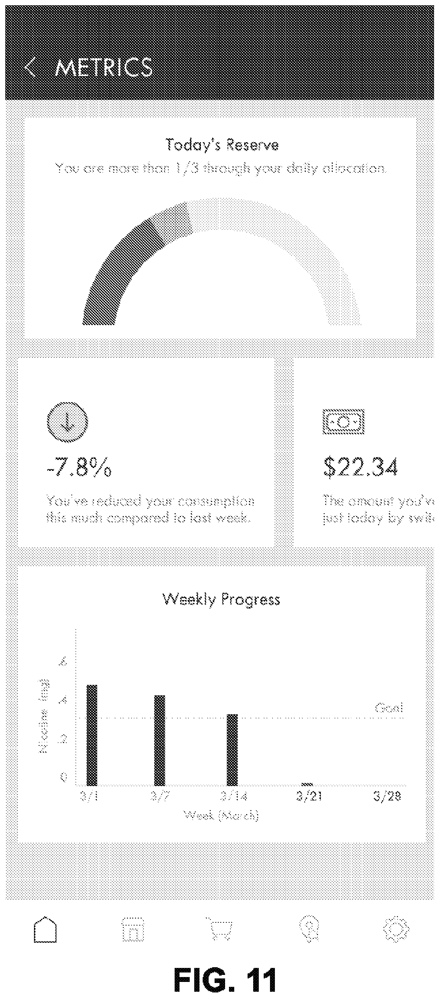

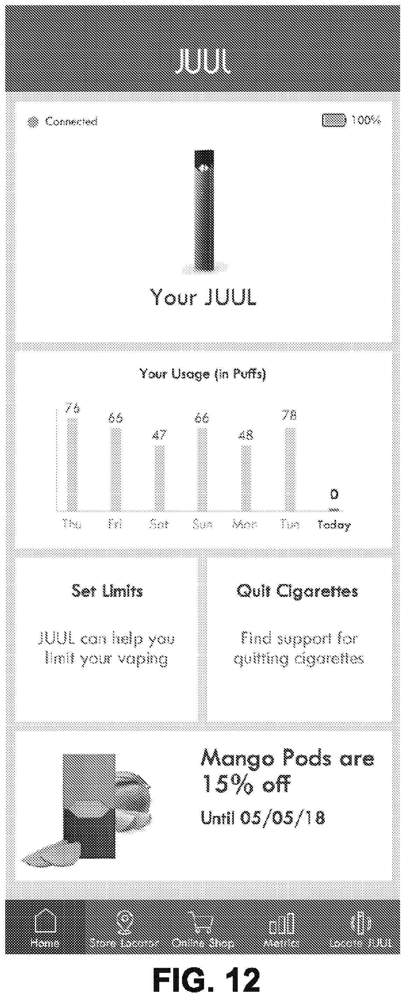

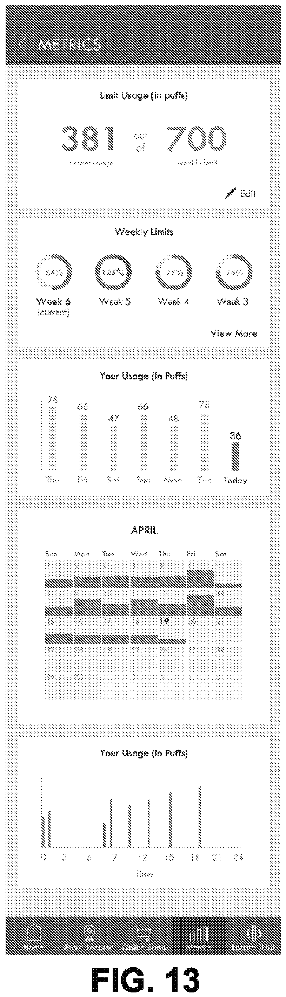

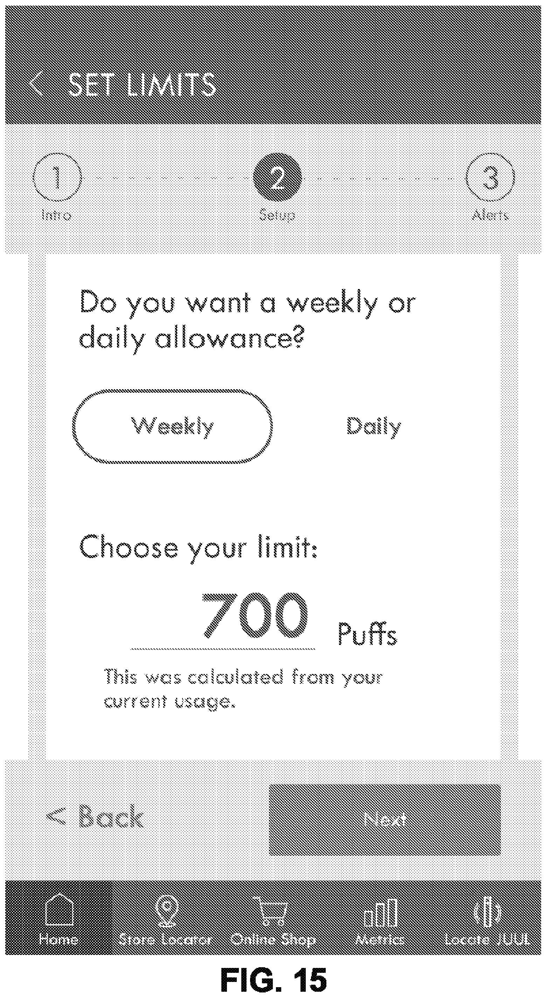

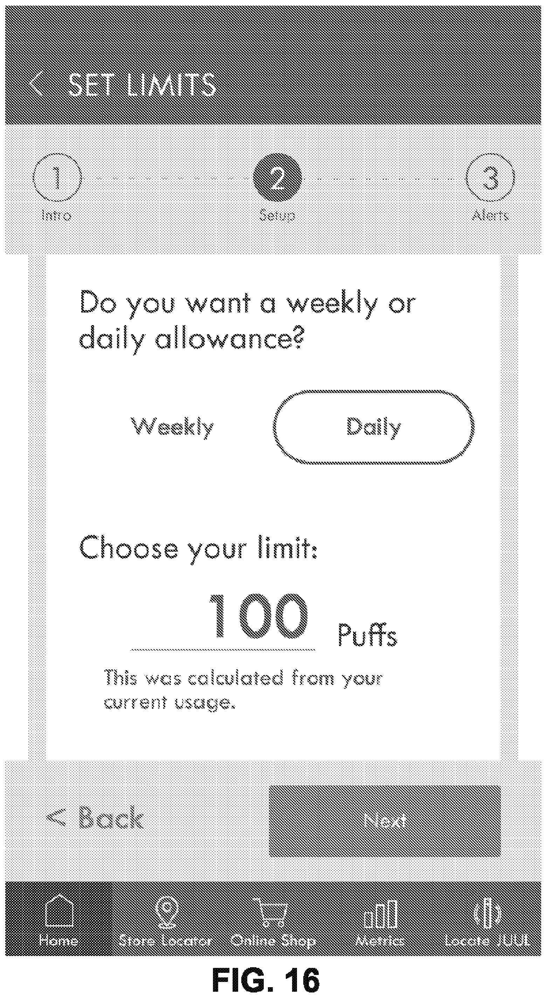

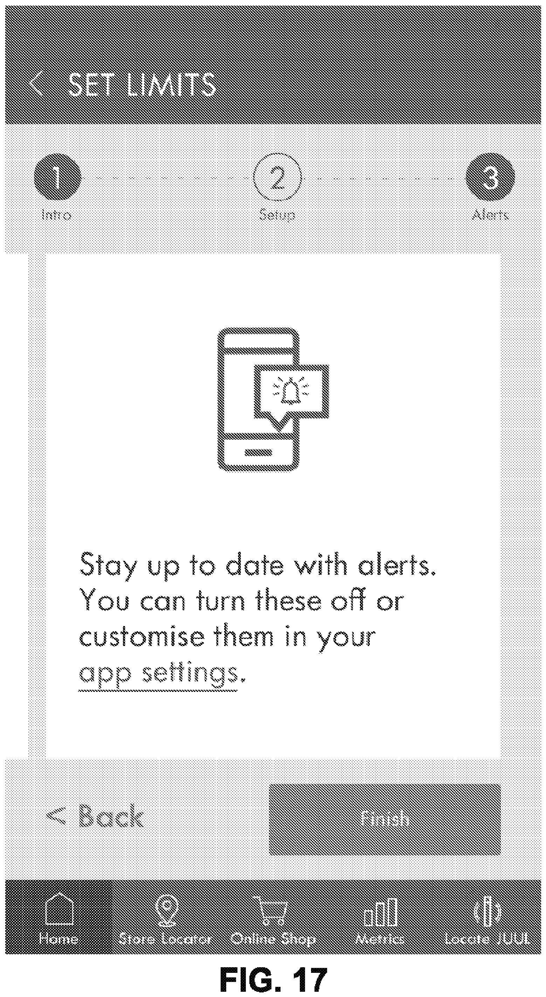

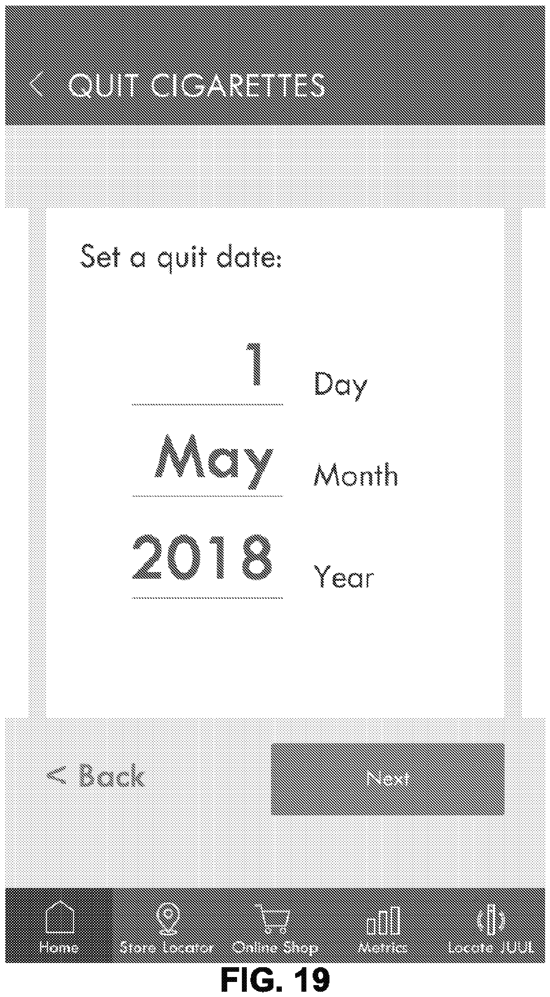

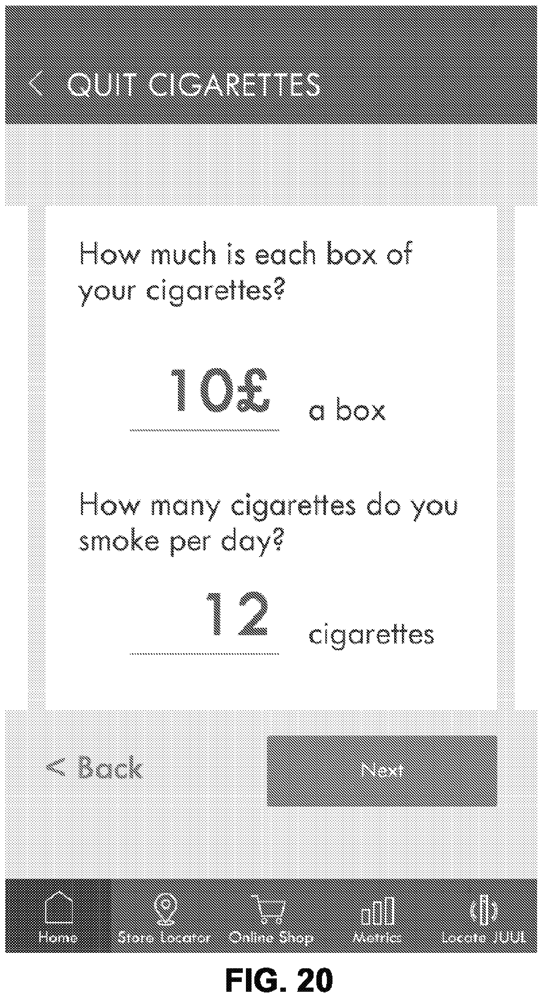

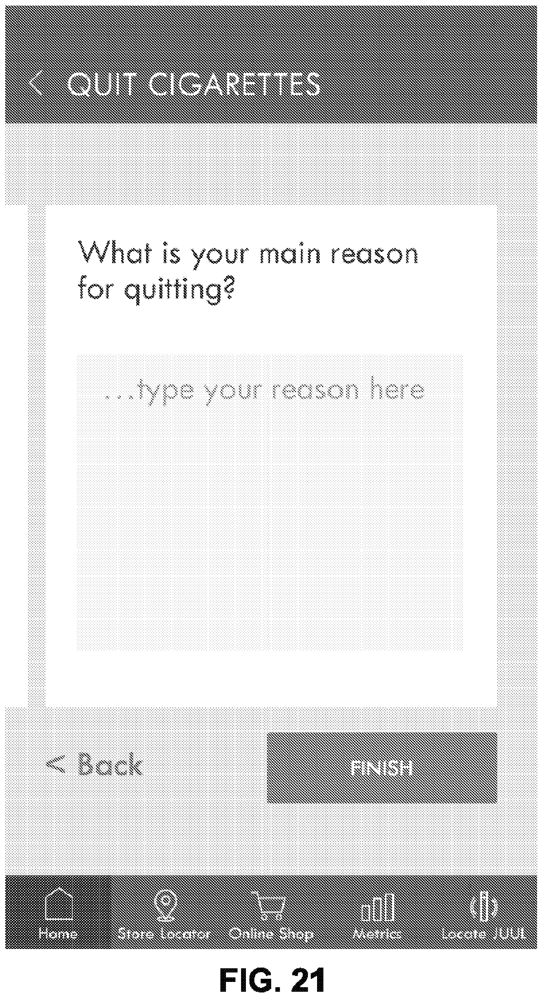

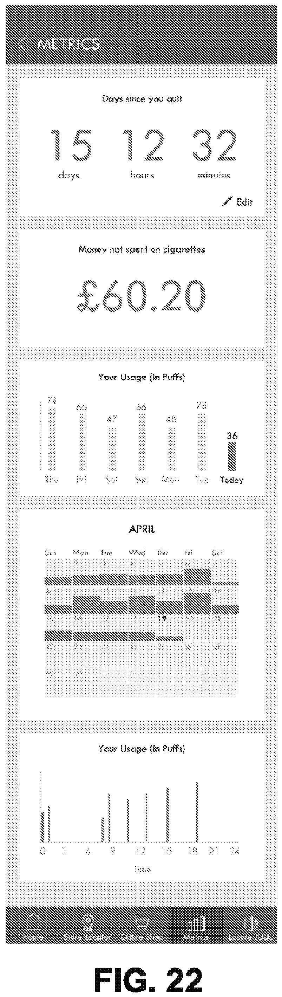

Examples of application software with many of the features described herein for use with one or more vaporizers are described with reference to FIGs. 5 to 22. FIGs. 5-22 show a user interface (UI) for an application (app) that may be used with a vaporizer as described herein, including an initial security control and/or authorization protocol for accessing a vaporizer and/or affiliated vaporizer data analysis, data collection and data processing systems, including the app itself. Any of the security features described above, including biometric and other data, may be incorporated.

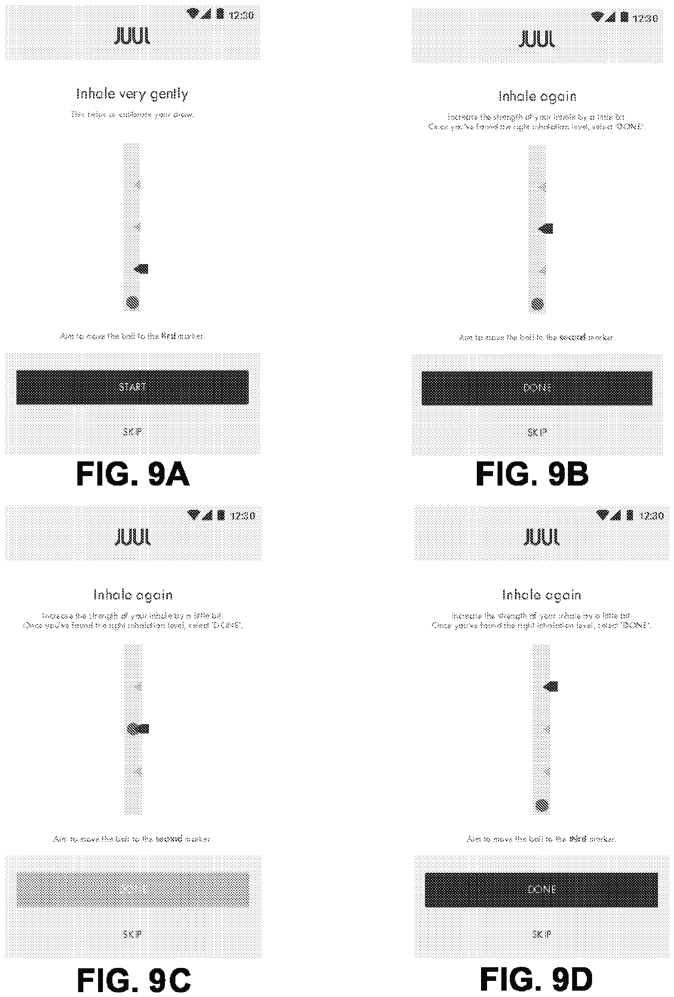

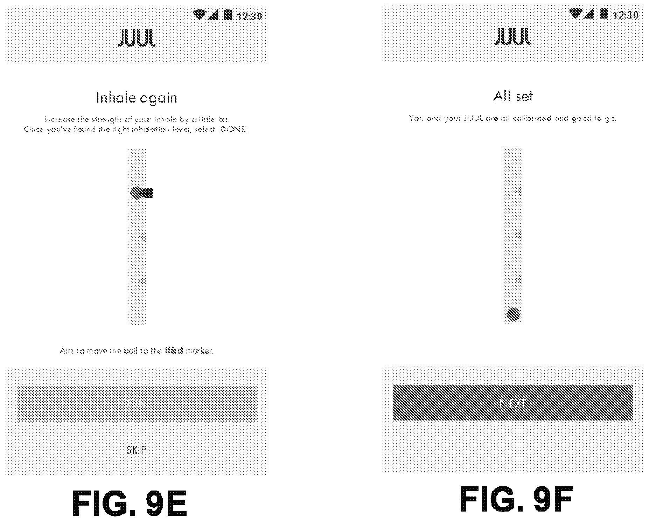

FIGs. 9A-9F illustrate features of exemplary user interfaces for an application that may be used with a vaporizer consistent with implementations of the current subject matter. FIG. 9A illustrates an onboarding mode such that the vaporizer device may be configured to adjust the heater to a first mode which may be a lower power mode allowing the user to be trained on how to adjust a puff pressure to ease into use of the vaporizer. Additionally, in accordance with implementations of the current subject matter, a temperature can be selected to be used for the vaporizer session. The temperature may be selected to adjust the strength of vapor being produced (i.e., higher temperatures may produce a stronger vapor). The selection of the temperature will affect the session size. For example, a higher temperature will result in a faster session for a selected session size compared to a lower temperature for the same session size.

Preset temperature settings can be chosen based on desired outcomes. For example, one such setting may initiate a temperature boost when puffing and an auto cool down when not puffing; while another setting may gradually ramp up the temperature. Some preset settings may more aggressively affect temperature and thus vapor production than others.

**In** general, any of the vaporizers described herein may estimate, measure, and/or predict the amount of vapor and/or material (including active ingredients) in the vapor that can be delivered to a user. For example, the apparatuses described herein may be used to determine and/or control dosing of the vaporizable material. For example, the current subject matter includes vaporizers and methods of using such vaporizers for accurate and controlled dose delivery.

Vaporizer devices are typically intended as, and usually are, an effective replacement for traditional combustible cigarettes. Smokers of traditional combustible cigarettes often turn to vaporizer devices as a substitute in an attempt to reduce or eliminate consumption of traditional combustible cigarettes. However, not all smokers that try a vaporizer device or e-cigarette find it to be an acceptable replacement. Some smokers that try a vaporizer device report first interactions that are irritating or otherwise disagreeable, including for example coughing and/or a lack of receiving the same satisfaction as a traditional combustible cigarette. Learning how to use a vaporizer device as an effective substitute for traditional combustible cigarettes can take users some time and is often done through trial and error, often taking place over the course of a week.

There is a need to provide vaporizer device puff coaching to the user in some form to provide guidance on how to use the vaporizer device to enable a more satisfying initial experience. Inhalation, also referred to as a draw or puff, coaching is useful during the first few puffs on the vaporizer device.

**Puff** coaching can be interactive or static. Various types of interactive puff coaching can be used. For example, human coaching whether in-person or remotely through video conferencing or the like, or automated puff coaching based on user/usage feedback.

Static puff coaching can be provided through the use of an interactive interface to coach through first puffs using a static instruction/tutorial. In other words, the user interacts with the interface to select the pertinent section of the instructions or tutorial.

Interactive human coaching can include puff coaching in-person with a designated human coach. The coach can have access to live device data. Such puff coaching can be provided through the use of an interactive interface to coach through the first several puffs. An interactive interface to coach the user through first several puffs can be performed using live feedback. Such feedback to the user can be directly from the vaporizer device itself or from an app running on a computing device communicating with the vaporizer.

**In** an example embodiment, interactive human coaching can include puff coaching by a remotely located live human coach via video conferencing. The coach can have access to live vaporizer device data. Such feedback data may be supplied by the device or app.

In an example embodiment, interactive puff coaching can be automated. The mechanism for automation can include implementation using a computer programs, which can also be referred to as programs, software, software applications, applications, apps, components, or code, executed on a processor or other computing device. Such puff coaching apps can be included as part the vaporizer device itself. For example, a puff coaching app can be included as machine instructions in the memory of the vaporizer device, which can be run by the vaporizer device processor.

In another example embodiment, an automated puff coaching app can be installed on a convergent computing device (e.g., smartphone, tablet computing device, personal computer, or the like). The vaporizer device and convergent computing device can communicate, for example via Bluetooth Low Energy (BLE) protocols or another suitable communications protocol, so that data and control signaling can be passed back and forth (e.g., the vaporizer and computing devices can be paired). In the afore mentioned example embodiment, the user of the vaporizer device can provide feedback to the puff coaching app using a vaporizer device interface, an app interface - such as a graphical user interface, or any combination thereof. Similarly, the user of the vaporizer device can receive feedback from the puff coaching app using a vaporizer device interface (e.g., sounds, lights, etc.), an app interface - such as a graphical user interface, or any combination thereof.

For example, the automated coaching using an app running on a paired computing device can provide graphical feedback to the user showing the strength of the most recent puff. The vaporizer device can provide feedback to the app, including providing information to characterize the puff. Because the vaporizer device can include multiple sensors, such as a pressure or airflow sensor that senses a user's draw or puff, the controller of the vaporizer device can send the sensed puff data to the app running on the paired convergent device, which can display that puff information in a graphical or other form to the user.

In another example embodiment, the app includes a graphical display showing a graph of the inhale flow rate through the vaporizer device. The app can also include a graphical display including a line representing the optimal inhale flow rate as a goal for the user to deliver the best results. The user inhales on the vaporizer device and views his or her inhale flow rate in real time. The app coaches the user to adjust the inhale flow rate to keep it steady along the line. Such an example embodiment sets up a game-like scenario for coaching vaporizer device inhaling technique.

In another example embodiment, the app can provide feedback to the vaporizer device to adjust the vaporizer device's control parameters based on user's puff grading in the app. The app can send control messages to engage the vaporizer device to beep, flash LEDs, vibrate, disable the heating element, etc. The vaporizer device can provide feedback to user (e.g., beeps, LEDs flashes, heater disable at a threshold, vibrations, etc.), whether or not such control signals are sent from the app or the vaporizer device controller.

The user can provide feedback to the puff coaching app. For example, the user can interface with the app GUI and grade a puff based on satisfaction or dissatisfaction (e.g., smoothness or mellowness versus harshness). Multiple GUI interface embodiments to collect this information in different ways from the user via the app are possible. Such information can include feedback on harshness, satisfaction, cough, buzz, etc.

Also the user can provide feedback to the vaporizer device. Similar to the user providing feedback to the puff coaching app via the computing device, actions on the vaporizer device can provide feedback. For example, sound and/or movement, such as that associated with coughing, can be sensed using a sensor coupled with the user device an accelerometer, a microphone, and/or the like. Other action can be sensed as well, for example pod-insert connections, physical button, capacitive-touch button, etc.

The app can be used to identify user usage patterns (e.g., multiple consecutive puffs within a short time period, harder puff draw, etc.) to automatically adjust the vaporizer device controls to give the user a more preferred experience. Machine learning on the behavior patterns and interactions with the device (e.g. cough detection, adjustments in the user's flow rate, puff duration, between puff intervals, etc.) can be used. A feedback control loop on the vaporizer device can be used to handle updating vaporizer device parameters/thresholds to personalize vaporizer performance to the user preferences. These parameters can be automatically adjusted based on the patterns discovered in the machine learning algorithm such that no direct user input needed.

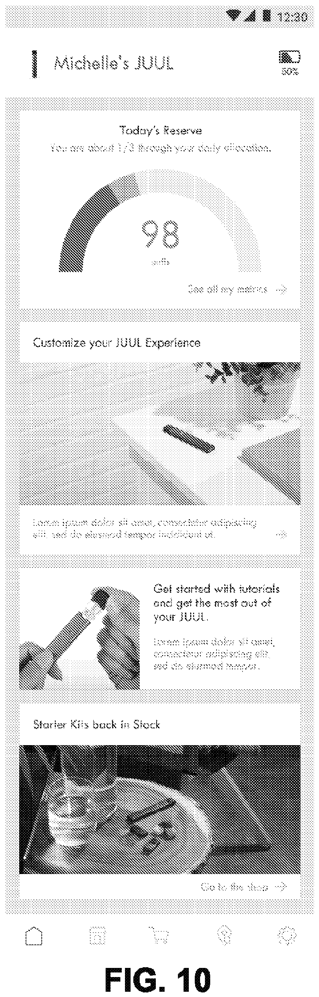

FIGs. 10-13 illustrate features of exemplary user interfaces for an application that may be used with a vaporizer to collect usage data. User interfaces may be deployed on a digital device and may aid the user in operating the vaporizer. For example, the user interface operating on a digital device may include icons and text elements that may inform the user of various ways that vaporizer settings can be adjusted or configured by the user. In this manner (or in others consistent with the current subject matter) information about a vaporizer can be presented using a user interface displayed by the communication device. Icons and/or text elements may be provided to allow a user to see information about vaporizer status, such as battery information (charge remaining, vapor draws remaining, time to charge, charging, etc.), cartridge status (e.g., type of cartridge and vaporizable material, fill status of cartridge, etc.), and similar device status.

A vaporizer may perform onboard data gathering, data analysis, and/or data transmission methods. As described above, a vaporizer and/or a device that is part of a vaporizer system as defined above may include a user interface (e.g., including an app or application software) that may be executed on a device in communication, which may be configured to determine, display, enforce and/or meter dosing.

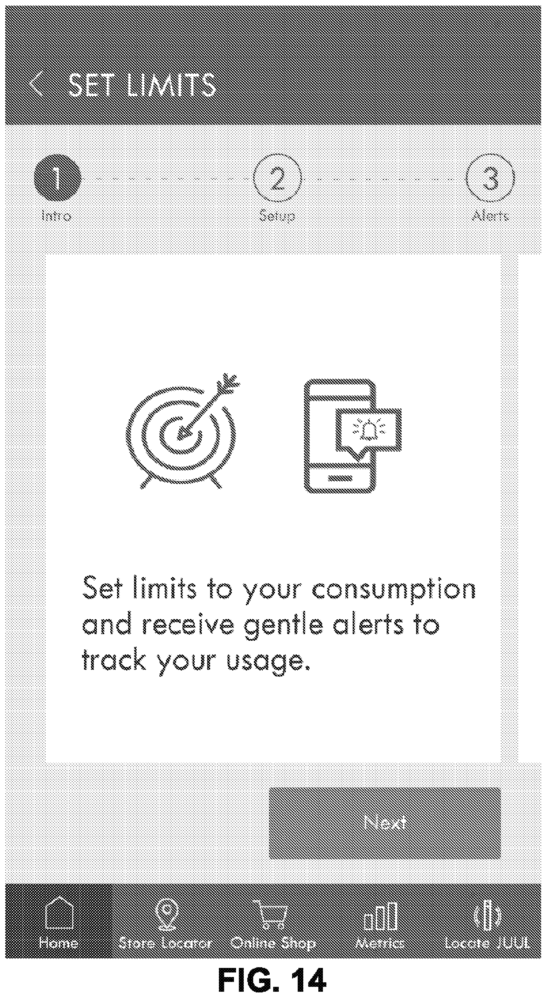

FIGs. 14-17 illustrate features of exemplary user interfaces for an application that may be used with a vaporizer to set usage limits. A vaporizer and/or vaporizer system may include "session" control and/or session metering. In some aspects, a user may find it desirable to monitor and/or control consumption of the vaporizable material. Such monitoring and/or control can beneficially allow a user to adjust an amount of vaporizable material available over a certain time period or session, a total time allowed for using the vaporizer, a time period between vaporizer sessions, other consumption settings to meet the needs of the user, and/or the like.

For example, in accordance with implementations of the current subject matter, various preset session configurations may be established to control a session for a user. These preset session configurations may be displayed to a user on a user interface, allowing for a user to select a desired session. The preset session configurations may relate to session size, where session size refers to size of the dose of vaporizable material. In accordance with implementations of the current subject matter, session size is based on the amount of power used to produce vapor from the vaporizable material.

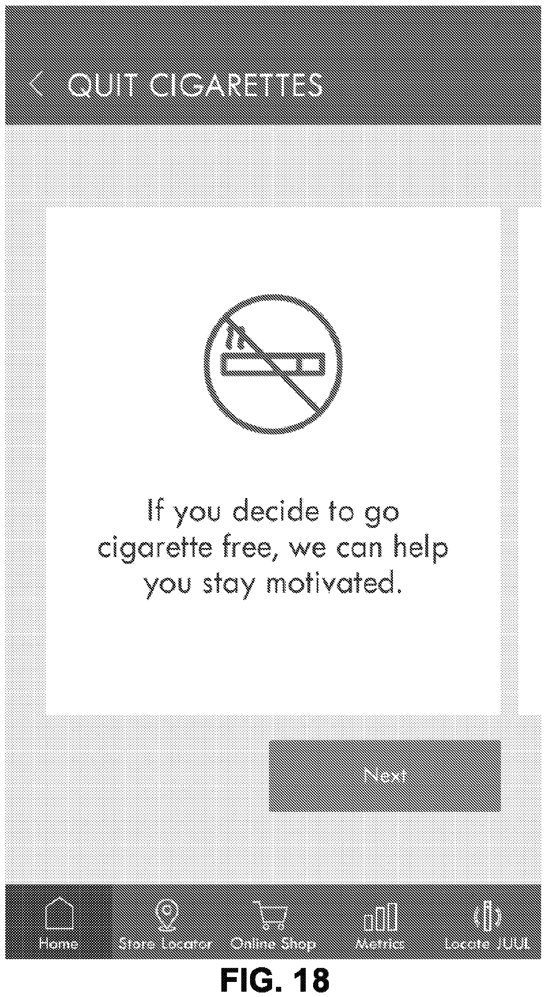

FIGs. 18-22 illustrate features of exemplary user interfaces for an application that may be used with a vaporizer to manage usage. According to some aspects, available session sizes may include 25 percent, 50 percent, 75 percent, 90 percent, or 100 percent of a daily, weekly, or monthly usage limit. Other descriptive terms or identifiers (e.g., symbols or the like) could also be used, and the implementations described herein are not limited to the specific terms describing the session size.

In certain examples, the vaporizable material can be heated without combustion to vaporization for inhalation delivery at a temperature range of, e.g., about 100°C (e.g., for water-based carriers, e.g., about 100°C , 105°C, 110°C, 120°C, 130°C, 140°C, 150°C, 160°C, 170°C, etc.; for ethanol-based formulations, e.g., about 50°C, about 60°C, about 70°C, about 80°C, etc.) to about (e.g., below) the temperature at which the active ingredient thermally decomposes (e.g., less than about 150°C, 160°C, 170°C, 180°C, 190°C, 200°C, 210°C, 220°C, 230°C, 240°C, 250°C, 260°C, 270°C, 280°C, 290°C, 300°C, etc.).

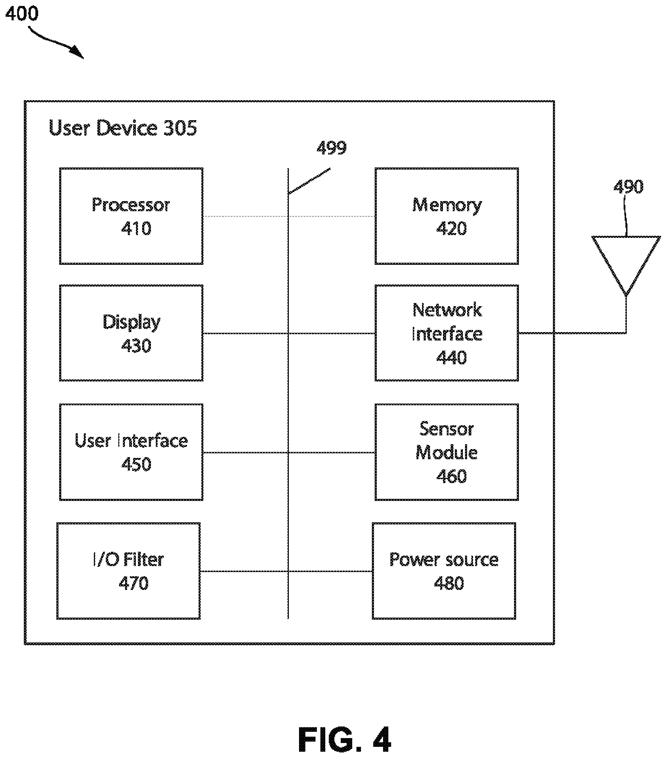

FIG. 4 illustrates an example user device 305, which may be used to implement one or more of the described features and/or components, in accordance with some example implementations. User device 305 may perform one or more of the processes described herein. For example, user device 305 may be used to execute an application providing for user control of a vaporizer in communication with user device 305 and to provide an interface for the user to engage and interact with functions related to the vaporizer, in accordance with some example implementations.

**As** illustrated, user device 305 may include one or more processors such as processor 410 to execute instructions that may implement operations consistent with those described herein. User device 305 may include memory 420 to store executable instructions and/or information. Memory 420 may include solid-state memory, solid-state disk drives, magnetic disk drives, or any other information storage device. In some aspects, the memory 420 may provide storage for at least a portion of a database. User device 305 may include a network interface 440 to a wired network or a wireless network, such as the network described with reference to FIG. 3. In order to effectuate wireless communications, the network interface 440, for example, may utilize one or more antennas, such as antenna 490.

User device 305 may include one or more user interfaces, such as user interface 450. The user interface 450 can include hardware or software interfaces, such as a keyboard, mouse, or other interface, some of which may include a touchscreen integrated with a display 430. The display 430 may be used to display information, such as information related to the functions of the vaporizer, provide prompts to a user, receive user input, and/or the like. In various implementations, the user interface 450 can include one or more peripheral devices and/or the user interface 450 may be configured to communicate with these peripheral devices.

In some aspects, the user interface 450 may include one or more of the sensors described herein and/or may include an interface to one or more of the sensors described herein. The operation of these sensors may be controlled at least in part by a sensor module 460. The user device 305 may also comprise an input and output filter 470, which can filter information received from the sensors or other user interfaces, received and/or transmitted by the network interface 440, and/or the like. For example, signals detected through the sensors can be passed through the filter 470 for proper signal conditioning, and the filtered data may then be passed to the sensor module 460 and/or processor 410 for validation and processing (e.g., before transmitting results or an indication via the network interface 440). The user device 305 may be powered through the use of one or more power sources, such as power source 480. As illustrated, one or more of the components of the user device 305 may communicate and/or receive power through a system bus 499.

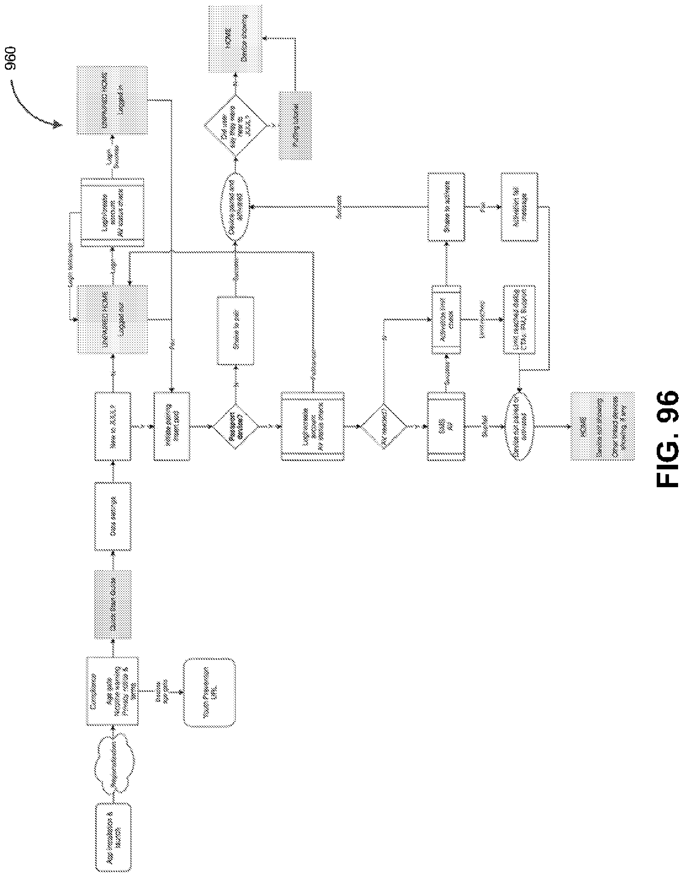

FIG. 96 depicts a flowchart illustrating an initial setup process 960 for a vaporizer device consistent with implementations of the current subject matter. Referring to FIGS. 3 and 96, the process 960 may be performed by the user device 305 via, for example, an app that is downloaded to and installed on the user device 305. The user device 305 may be communicatively coupled with the vaporizer device 100 and the remote server 307. According to some implementations of the current subject matter, the user device 305 may perform the process 960 in order to activate the vaporizer device 100.

Referring again to FIG. 96, the initial setup process 960 may include installing and launching, on the user device 305, an app. Upon launch, the app may be configured to perform regionalization based on a location of the user device 305, which may be determined, for example, based on an IP address of the user device 305, a geolocation (e.g., GPS coordinates) of the user device 305, and/or the like. Regionalization may be performed in order to identify the resources that are relevant to the location of the user device 305 such as, for example, language, legal texts, policies, and/or URLs of regional websites (e.g., online stores, forums, support groups, and/or the like). Accordingly, the results of the regionalization may at least determine the contents of the compliance page displayed to the user by the app. For example, the app may display an age gate (e.g., must be 18 or older to enter), a nicotine warning, and/or a privacy notice and terms based on the location of the user device 305.

In some implementations of the current subject matter, the app may be configured to perform a pairing between the user device 305 and the vaporizer device 100. As shown in FIG. 96, a user may initiate the pairing process by at least inserting a pod into the vaporizer device 100. FIG. 96 shows that the user may be required to create an account and/or log into an existing account in order to continue the pairing process. The creation of the account and subsequent logins may include verifying an age of the user and/or an age verification status check. The pairing process may continue once the user is able to successfully login into the account. It should be appreciated that to create an account and/or to log into an existing account, the user device 305 may communicate with the remote server 307. For example, the user device 305 may make one or more application programming interface (API) calls to the remote server 307 to retrieve, add, and/or update data associated with the user (e.g., user identifier, age verification status, and/or the like).

The vaporizer device 100 may be a first type of device (e.g., non-passport device) that may be activated without being linked to an account. Accordingly, in some implementations of the current subject matter, the vaporizer device 100 may be activated upon being successfully paired with the user device 305. Once paired with the user device 305, the app may provide a puffing tutorial to the user if the user is indicated as a new user.

**Alternatively,** the vaporizer device 100 may be a second type of device (e.g., passport device) whose activation requires being linked to an account. Accordingly, the user may be required create an account and be logged into the account in order to continue the process 960 to activate the vaporizer device 100. As shown in FIG. 96, upon creating and logging into the account, the user may be required to perform age verification if the user device 305 determines, based on an age verification status associated with the account, that the user has not completed age verification. As noted, age verification may include a variety of techniques to verify an identity and an age of the user including, for example, multi-factor authentication, biometric authentication, image recognition, and/or the like. In addition to age verification, the user's account may track a total quantity of active vaporizer devices that is associated with the user by being linked to the account. The tracking may be performed based on identifiers that are unique to each user (e.g., biometrics) and/or a combination of multiple identifiers for each user in order to prevent the user from using multiple identifiers to evade the activation limit. The vaporizer device 100 may not be activated if the user device 305 determines, based on account data retrieved from the remote server 307, that the user has reached a limit for active vaporizer devices (e.g., by having already activated an x quantity of vaporizer devices within a y quantity of time). Thus, as shown in FIG. 96, when the vaporizer device 100 is the second type of device (e.g., passport device), the activation of the vaporizer device 100 may be contingent upon the user successfully completing age verification and the user not having exceeded the limit for active vaporizer devices.

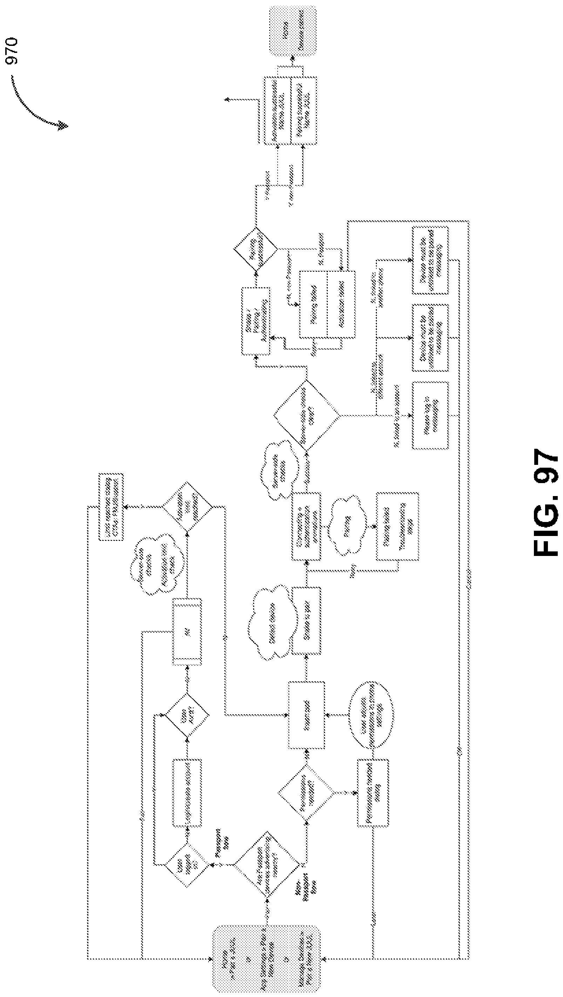

FIG. 97 depicts a flowchart illustrating a process 970 for pairing a vaporizer device with a user device consistent with implementations of the current subject matter. Referring to FIGS. 3 and 97, the process 970 may be performed by the user device 305 via, for example, an app that is downloaded to and installed on the user device 305. The user device 305 may perform the process 970 in order to be paired with the vaporizer device 100.

In some implementations of the current subject matter, the vaporizer device 100 may be a first type of vaporizer device (e.g., a non-passport device) that may be activated without being linked to an account or a second type of vaporizer device (e.g., a passport device) that must be linked to an account in order to be activated. The operations that are performed in order to pair the vaporizer device 100 with the user device 305 may be determined based on whether the vaporizer device 100 is the first type of vaporizer device (e.g., a non-passport device) or the second type of vaporizer device (e.g., a passport device). For example, as shown in FIG. 97, if the user device 305 determines that the vaporizer device 100 is the first type of vaporizer device, the user device 305 may begin pairing with the vaporizer device 100 without determining whether the user has created and logged into an account. Some operating systems (e.g., Android) may require location services to be enabled in order to turn on Bluetooth low energy (BLE). As such, FIG. 97 shows that the user device 305 may prompt the user to enable location services (e.g., grant permission for location services) before continuing the pairing process.

Alternatively, if the user device 305 determines that the vaporizer device is the second type of vaporizer device, the user device 305 may prompt the user to create an account and/or log in to an existing account. Once the user creates and logs into an account, the user device 305 may further determine the age verification status of the user, for example, by querying the remote server 307. As noted, age verification may include a variety of techniques to verify an identity and an age of the user including, for example, multi-factor authentication, biometric authentication, image recognition, and/or the like. In addition to age verification, the user's account may track a total quantity of active vaporizer devices that is associated with the user by being linked to the account. Thus, the pairing process may not continue if the user device 305 determines, based on account data retrieved from the remote server 307, that the user has reached a limit for active vaporizer devices (e.g., by having already activated an x quantity of vaporizer devices within a y quantity of time).

In some implementations of the current subject matter, the pairing process for the first type of vaporizer device and the second type of vaporizer device may continue with the user inserting a pod into the vaporizer device 100. The pairing process may include a "shake to pair" process in which the user device 305 and the vaporizer device 100 perform an electronic handshake communication exchange in order to establish a wireless connection (e.g., Bluetooth low energy) between the user device 305 and the vaporizer device 100. Furthermore, as shown in FIG. 97, the pairing process may include one or more checks at the remote server 307 in order to determine whether the vaporizer device 100 is already linked to a current account, a different account, and/or a user device other than the user device 305. According to some implementations of the current subject matter, the vaporizer device 100 may be linked to a single account and a single user device. As such, if the vaporizer device 100 is already linked to the user's account, the user device 305 may prompt the user to log in to the account instead of continuing with the pairing process. Alternatively and/or additionally, if the user device 305 determines that the vaporizer device 100 is linked to another account and/or another user device, the user device 305 may prompt the user to unlink the vaporizer device 100 the other account and/or the other user device before continuing the pairing process.

Unlinking the vaporizer device 100 from one account and/or relinking the vaporizer device 100 to a different account may cause firmware on the vaporizer device 100 to clear one or more existing logs including, for example, system faults, puff logs, charger events, and/or the like. Moreover, the unlinking and/or the relinking may cause the firmware to reset vaporizer device 100 to factory settings including, for example, by resetting lock timeout to a default value, resetting device name to a default value, and/or the like. In some implementations of the current subject matter, if the vaporizer device 100 is unlinked when the vaporizer device 100 is not within communication range of the user device 305, the resetting may take place upon subsequent attempts to connect to the vaporizer device 100.

In some implementations of the current subject matter, the user device 305 may make a threshold quantity of attempts to pair with the vaporizer device 100, whether the vaporizer device 100 is the first type of vaporizer device (e.g., non-passport vaporizer device) that may be activated without being linked to an account or the second type of vaporizer device (e.g., a passport vaporizer device) that requires being linked to an account in order to be activated. It should be appreciated that a variety of factors may contribute to a failure of the pairing process including, for example, the removal of the pod from the vaporizer device 100 during the pairing process. The vaporizer device 100 may also fail to pair with the user device 305 if the vaporizer device 100 and/or the user's account is locked. Once the user device 305 is successfully paired with the vaporizer device 100, the user device 305 may display, to the user, an indication of the successful pairing and/or activation. Moreover, the user device 305 may prompt the user to give a name to the vaporizer device 100. If the user opts to skip naming the vaporizer device 100, the user device 305 may be configured to assign a default name (e.g., "JUUL C1") to the vaporizer device 100.

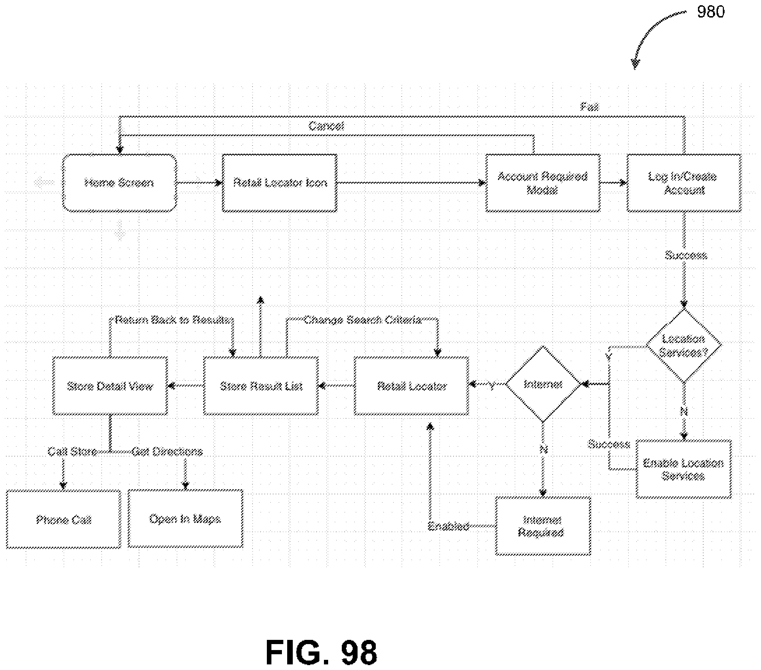

**FIG.** 98 depicts a flowchart illustrating a process 980 for locating a retailer consistent with implementations of the current subject matter. Referring to FIGS. 3 and 98, the process 980 may be performed by the user device 305 via, for example, an app that is downloaded to and installed on the user device 305. The process 980 may be performed in order to identify one or more retailers that are within a search area. It should be appreciated that the search area may be defined in a variety of different manners including, for example, by setting a search radius. Moreover, the user device 305 may perform the process 980 in order to identify a variety of locations that may be of interest to the user including, for example, smoking areas, non-smoking areas, zones in which the vaporizer device 100 is subject to shut-down, and/or the like.

Referring to FIG. 98, a user may initiate the process 980 by at least selecting, on a home screen of the app, a locator icon. In some implementations of the current subject matter, the user may be required to create an account and be logged into the account in order to use the locator feature. Accordingly, FIG. 98 shows the user may be required to successfully create an account and log into the account before the process 980 may continue. For example, once the user device 305 determines that the user has successfully created an account and is logged into the account, the user device 305 may determine whether the user has enabled location services. The availability of the locator feature may be contingent upon the user having enabled location services on the user device 305. As such, the process 980 may not continue unless the user enables location services. Moreover, use of the locator feature may also require an active connection to the Internet (e.g., via a WiFi access point, cellular data services, and/or the like). For instance, FIG. 98 shows that the user may be required to enable Internet before the user is able to search for a retailer (or one or more other locations of interest).

In some implementations of the current subject matter, the user is able to modify the search criteria associated with the search. Examples of search criteria may include distance relative to a current location of the user device and/or a specified location, operating hours (e.g., currently open, extended hours, and/or the like), type of retailer (e.g., authorized third party dealers, company-owned stores, and/or the like), and/or available products (e.g., specific pod flavors and/or strengths). The result of the search may be a list of retailers that have been prioritized based on one or more of the search criteria. Referring again to FIG. 98, the user may select, via the app, one or more specific retailers from the result list. In response to the user selecting a retailer from the result list, the app may be configured to display a detailed view of the retailer that includes, for example, an address, a contact information, operating hours, accepted payment methods, and/or the like. The app may provide the user with an option to call the retailer directly, view the location of the retailer in a map view, and/or acquire directions to the retailer (e.g., by launching a navigation app on the user device 305).

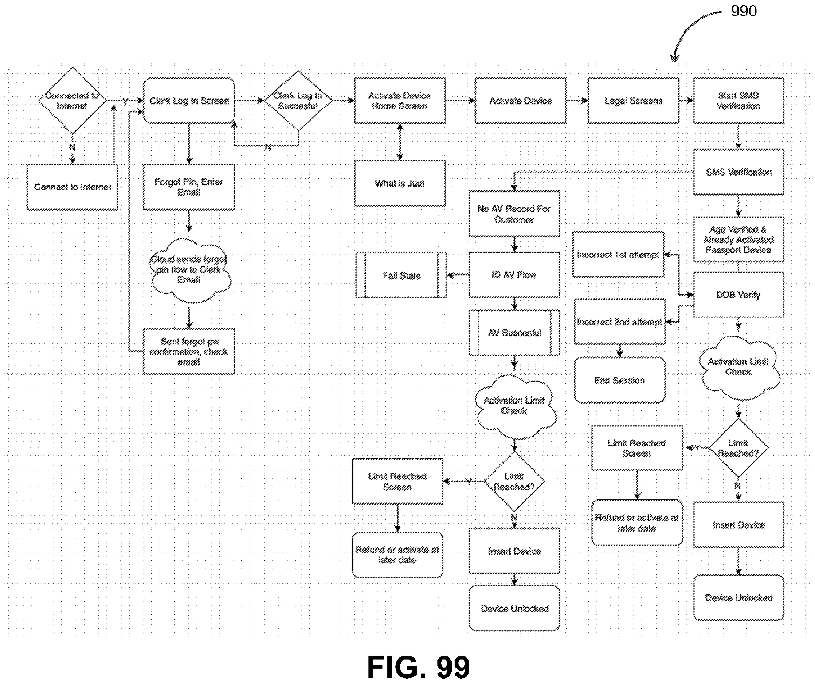

FIG. 99 depicts a flowchart illustrating an in-store activation process 990 consistent with implementations of the current subject matter. Referring to FIGS. 84 and 99, the process 990 may be performed by the user device 8406 in order to activate the vaporizer device 8402. As noted, the user device 8406 may be part of the activation system 8400, which may be deployed at one or more retailers to enable a user to activate the vaporizer device 8402.

Referring to FIG. 99, to user device 8406 may require an active Internet connection (e.g., via a WiFi access point, cellular data service, and/or the like) in order to perform the in-store activation of the vaporizer device 8402. Accordingly, the process 990 may include the user device 8406 connecting to the Internet before an administrative user (e.g., a store clerk) is able to log in, for example, based on a identifier (e.g., email address, username, and/or the like) and a password or pin. Once the administrative user is successfully logged in, the user device 8406 may display an activation home screen from which a user can choose to navigate to an information page (e.g., "What is JUUL?") or a device activation page. As shown in FIG. 99, after displaying one or more legal screens and/or receiving the required input from the user (e.g., agreement to user terms and conditions), the user device 8406 may start an age verification process that includes verifying an identify and an age of the user. For example, FIG. 99 shows that the age verification process may include multi-factor authentication of the user's telephone number (e.g., code sent by short message service (SMS) to that telephone number).

**In** some implementations of the current subject matter, the user device 8406 may determine the age verification status of the user by at least querying a remote server such as, for example, the remote server 307. If the user has already been age verified and have activated another vaporizer device linked to the user's account, the user device 8406 may prompt the user to enter the date-of-birth (DOB) associated with the account in order to continue the activation process 990. Alternatively, if the user has not been age verified, the process 990 may continue with the user device 8406 performing age verification. For instance, the user device 8406 may perform age verification based on a search of public records using the user's personal information including, for example, name, address, social security number, and/or the like. Alternatively and/or additionally, the user device 8406 may perform age verification based on a comparison of one or more live images of the user and an image of the user's photo identification (e.g., driver's license, passport, and/or the like).

Once the user device 8406 is able to successfully verify the age of the user, the user device 8406 may continue the activation process 990 by at least determining whether the user has reached an activation limit, for example, by having already activated an x quantity of vaporizer devices within a y quantity of time. The user device 8406 may determine whether the user has reached the activation limit by at least querying a remote server such as, for example, the remote server 307. As shown in FIG. 99, the user device 8406 may activate the vaporizer device 8402 if the user device 8406 determines that the user has not exceeded the activation limit. For example, the vaporizer device 8402 may be communicatively coupled with the user device 8406 by being inserted into the dock 8404. Once the vaporizer device 8402 and the user device 8406 are communicatively coupled, the user device 8406 may unlock the vaporizer device 8402. However, if the user device 8406 determines that the user has exceeded the activation limit, the user device 8406 may prompt the user to activate the vaporizer device 8402 at a later date or return the vaporizer device 8402 for a refund.

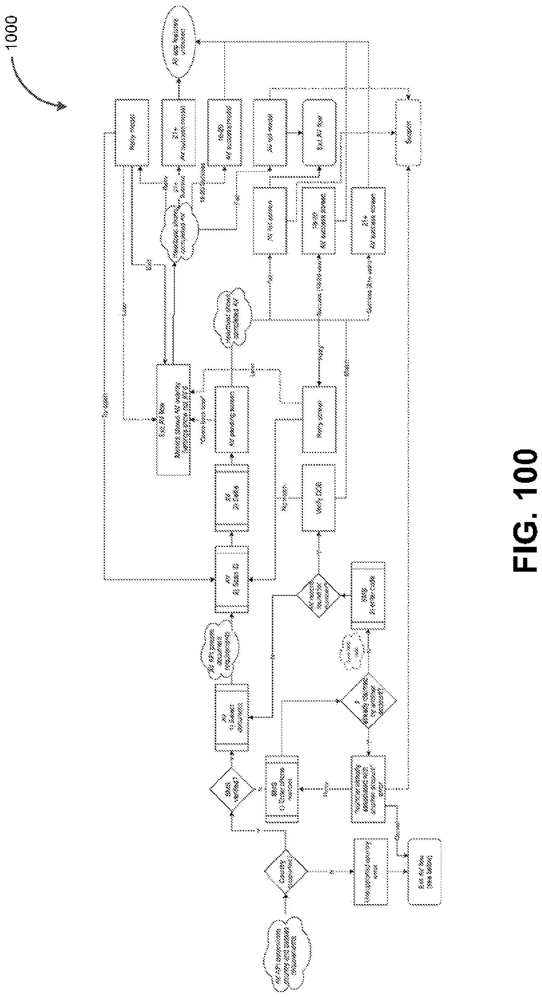

FIG. 100 depicts a flowchart illustrating a process 1000 for age verifying a user consistent with implementations of the current subject matter. Referring to FIGS. 3, 84, and 100, the process 1000 may be performed by the user device 305 to age verify a user as part of activating the vaporizer device 100. However, it should be appreciated that the process 1000 may be performed by the user device 8406 as part of an in-store activation of the vaporizer device 8402.

Referring to FIG. 100, the process 1000 may be location specific. For example, the process 1000 may be performed in some countries but not others. Accordingly, the user device 305 may terminate the process 1000 if the user device 305 determines that the user device 305 is located in a country where the age verification process is not supported. Alternatively, if the user device 305 determines that it is located in a country where the age verification process is supported, the user device 305 may continue the age verification process by at least performing multi-factor authentication to verify an identity of the user. As shown in FIG. 100, multi-factor authentication may include prompting the user to enter a telephone number and authenticating the user's telephone number by at least sending, to that telephone number, a short messaging service (SMS) message including a code that the user must then enter. As shown in FIG. 100, a telephone number may be linked with a single account. As such, the user device 305 may terminate the age verification process 1000 if the user device 305 determines that the same telephone number is already associated with another account.

Once the user device 305 is able to verify the user's telephone number, the process 1000 may continue with the user device 305 determining the age verification status of the user. The user device 305 may determine the user's age verification status by at least querying the remote server 307 based on the user's telephone number. If the user's age verification status indicates that the user has already been age verified, the user device 305 may prompt the user to enter the user's date-of-birth (DOB) to complete the age verification process. As shown in FIG. 100, if the user is already age verified, the age verification process 100 may be completed upon the user correctly entering the user's date-of-birth. The completion of the age verification process 100 may unlock one or more features on the app.

Alternatively, if the user device 305 determines that the user has not been age verified, the user device 305 may continue the age verification process 1000 by prompting the user for an identification document such as, for example, a photo identification of the user. In the example age verification process 1000 shown in FIG. 100, the user device 305 may capture a first image of the identification document and capture a second image (e.g., selfie) of the user. The first image of the identification document and the second image of the user may be sent to the remote server 307 for further verification. For example, the remote server 307 may apply one or more image recognition algorithms in order to determine whether the first image of the identification document matches the second image of the user. However, it should be appreciated that the verification of the first image of the identification document and the second image of the user may also be performed locally at the user device 305.

In the example of the age verification process 1000 shown in FIG. 1000 where the image verification is offloaded to the remote server 307, the user device 305 may receive, from the remote server 307, periodic heartbeat messages indicating a status of the verification. If the user device 305 fails to receive a heartbeat message within a threshold time period or receives a heartbeat message indicating a failure of the verification, the user device 305 may terminate the age verification process 1000. Alternatively, if the user device 305 receives a heartbeat message indicating a success of the verification, the user device 305 may notify the user of the successful age verification. Furthermore, as noted, the user device 305 may unlock one or more app features in response to the user successfully completing age verification.

When a feature or element is herein referred to as being "on" another feature or element, it can be directly on the other feature or element or intervening features and/or elements may also be present. In contrast, when a feature or element is referred to as being "directly on" another feature or element, there are no intervening features or elements present. It will also be understood that, when a feature or element is referred to as being "connected", "attached" or "coupled" to another feature or element, it can be directly connected, attached or coupled to the other feature or element or intervening features or elements may be present. In contrast, when a feature or element is referred to as being "directly connected", "directly attached" or "directly coupled" to another feature or element, there are no intervening features or elements present.

Although described or shown with respect to a given example, the features and elements so described or shown can apply to other implementations of the current subject matter. It will also be appreciated by those of skill in the art that references to a structure or feature that is disposed "adjacent" another feature may have portions that overlap or underlie the adjacent feature.

Terminology used herein is for the purpose of describing particular embodiments and implementations only and is not intended to be limiting. For example, as used herein, the singular forms "a", "an" and "the" are intended to include the plural forms as well, unless the context clearly indicates otherwise. It will be further understood that the terms "comprises" and/or "comprising," when used in this specification and in the claims, specify the presence of stated features, steps, operations, elements, and/or components, but do not preclude the presence or addition of one or more other features, steps, operations, elements, components, and/or groups thereof.

In the descriptions above and in the claims, phrases such as "at least one of" or "one or more of" may occur followed by a conjunctive list of elements or features. The term "and/or" may also occur in a list of two or more elements or features. Unless otherwise implicitly or explicitly contradicted by the context in which it used, such a phrase is intended to mean any of the listed elements or features individually or any of the recited elements or features in combination with any of the other recited elements or features. For example, the phrases "at least one of A and B;" "one or more of A and B;" and "A and/or B" are each intended to mean "A alone, B alone, or A and B together." A similar interpretation is also intended for lists including three or more items. For example, the phrases "at least one of A, B, and C;" "one or more of A, B, and C;" and "A, B, and/or C" are each intended to mean "A alone, B alone, C alone, A and B together, A and C together, B and C together, or A and B and C together." Use of the term "based on," above and in the claims is intended to mean, "based at least in part on," such that an unrecited feature or element is also permissible.

Spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if a device in the figures is inverted, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly. Similarly, the terms "upwardly", "downwardly", "vertical", "horizontal" and the like are used herein for the purpose of explanation only unless specifically indicated otherwise.

Although the terms "first" and "second" may be used herein to describe various features/elements (including steps), these features/elements should not be limited by these terms, unless the context indicates otherwise. These terms may be used to distinguish one feature/element from another feature/element. Thus, a first feature/element discussed below could be termed a second feature/element, and similarly, a second feature/element discussed below could be termed a first feature/element without departing from the teachings provided herein.

Throughout this specification and the claims which follow, unless the context requires otherwise, the word "comprise", and variations such as "comprises" and "comprising" means various components can be co-jointly employed in the methods and articles (e.g., compositions and apparatuses including device and methods). For example, the term "comprising" will be understood to imply the inclusion of any stated elements or steps but not the exclusion of any other elements or steps.

**As** used herein in the specification and claims, including as used in the examples and unless otherwise expressly specified, all numbers may be read as if prefaced by the word "about" or "approximately," even if the term does not expressly appear. The phrase "about" or "approximately" may be used when describing magnitude and/or position to indicate that the value and/or position described is within a reasonable expected range of values and/or positions. For example, a numeric value may have a value that is +/- 0.1% of the stated value (or range of values), +/- 1% of the stated value (or range of values), +/- 2% of the stated value (or range of values), +/-5% of the stated value (or range of values), +/- 10% of the stated value (or range of values), etc. Any numerical values given herein should also be understood to include about or approximately that value, unless the context indicates otherwise. For example, if the value "10" is disclosed, then "about 10" is also disclosed. Any numerical range recited herein is intended to include all sub-ranges subsumed therein. It is also understood that when a value is disclosed that "less than or equal to" the value, "greater than or equal to the value" and possible ranges between values are also disclosed, as appropriately understood by the skilled artisan. For example, if the value "X" is disclosed the "less than or equal to X" as well as "greater than or equal to X" (e.g., where X is a numerical value) is also disclosed. It is also understood that the throughout the application, data is provided in a number of different formats, and that this data, represents endpoints and starting points, and ranges for any combination of the data points. For example, if a particular data point "10" and a particular data point "15" are disclosed, it is understood that greater than, greater than or equal to, less than, less than or equal to, and equal to 10 and 15 are considered disclosed as well as between 10 and 15. It is also understood that each unit between two particular units are also disclosed. For example, if 10 and 15 are disclosed, then 11, 12, 13, and 14 are also disclosed.

Although various illustrative embodiments are described above, any of a number of changes may be made to various embodiments without departing from the teachings herein. For example, the order in which various described method steps are performed may often be changed in alternative embodiments, and in other alternative embodiments one or more method steps may be skipped altogether. Optional features of various device and system embodiments may be included in some implementations of the current subject matter and not in others. Therefore, the foregoing description is provided primarily for exemplary purposes and should not be interpreted to limit the scope of the claims.

One or more aspects or features of the subject matter described herein can be realized in digital electronic circuitry, integrated circuitry, specially designed application specific integrated circuits (ASICs), field programmable gate arrays (FPGAs) computer hardware, firmware, software, and/or combinations thereof. These various aspects or features can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device. The programmable system or computing system may include clients and servers. A client and server are generally remote from each other and typically interact through a communication network. The relationship of client and server arises by virtue of computer programs running on the respective computers and having a client-server relationship to each other.

These computer programs, which can also be referred to programs, software, software applications, applications, components, or code, include machine instructions for a programmable processor, and can be implemented in a high-level procedural language, an object-oriented programming language, a functional programming language, a logical programming language, and/or in assembly/machine language. As used herein, the term "machine-readable medium" refers to any computer program product, apparatus and/or device, such as for example magnetic discs, optical disks, memory, and Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor. The machine-readable medium can store such machine instructions non-transitorily, such as for example as would a non-transient solid-state memory or a magnetic hard drive or any equivalent storage medium. The machine-readable medium can alternatively or additionally store such machine instructions in a transient manner, such as for example, as would a processor cache or other random access memory associated with one or more physical processor cores.

To provide for interaction with a user, one or more aspects or features of the subject matter described herein can be implemented on a computer having a display device, such as for example a cathode ray tube (CRT) or a liquid crystal display (LCD) or a light emitting diode (LED) monitor for displaying information to the user and a keyboard and a pointing device, such as for example a mouse or a trackball, by which the user may provide input to the computer. Other kinds of devices can be used to provide for interaction with a user as well. For example, feedback provided to the user can be any form of sensory feedback, such as for example visual feedback, auditory feedback, or tactile feedback; and input from the user may be received in any form, including, but not limited to, acoustic, speech, or tactile input. Other possible input devices include, but are not limited to, touch screens or other touch-sensitive devices such as single or multi-point resistive or capacitive trackpads, voice recognition hardware and software, optical scanners, optical pointers, digital image capture devices and associated interpretation software, and the like

The examples and illustrations included herein show, by way of illustration and not of limitation, specific embodiments in which the subject matter may be practiced. As mentioned, other embodiments may be utilized and derived there from, such that structural and logical substitutions and changes may be made without departing from the scope of this disclosure. Such embodiments of the inventive subject matter may be referred to herein individually or collectively by the term "invention" merely for convenience and without intending to voluntarily limit the scope of this application to any single invention or inventive concept, if more than one is, in fact, disclosed. Thus, although specific embodiments have been illustrated and described herein, any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

### ASPECTS

1. A system, comprising:
   at least one data processor; and
   at least one memory storing instructions, which when executed by the at least one data processor, cause the at least one data processor to perform operations comprising:
      receiving a first usage data associated with a first user interacting a first vaporizer device; and
      determining, based at least on the first usage data, a first recommendation for the first user interacting with the first vaporizer device and/or a second vaporizer device.
2. The system of aspect 1, wherein the first usage data includes a flavor of a vaporizable material in a cartridge inserted into the first vaporizer device, a strength of the vaporizable material, a quantity of the vaporizable material remaining in the cartridge, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs.
3. The system of aspect 2, wherein the first usage data further includes a user input indicating a smoothness of a vapor drawn by the one or more puffs.
4. The system of aspect 3, wherein the user input includes a motion and/or a sound associated with a user coughing, tapping the vaporizer device, shaking the vaporizer device, and/or moving the vaporizer device in a specific pattern.
5. The system of any of aspects 2-4, wherein the first recommendation includes the flavor and/or the strength of the vaporizable material based at least on the flavor and/or the strength of the vaporizable material being associated with a lower frequency of puffs, a lower total dosage of the active ingredient delivered, and/or a longer length of time between two or more successive puffs than another flavor and/or strength of the vaporizable material.
6. The system of any of aspects 2-5, wherein the first recommendation includes the timing of the one or more puffs based at least on the timing of the one or more puffs being associated with a lower frequency of puffs, a lower total dosage of the active ingredient delivered, and/or a longer length of time between two or more successive puffs than another timing of the one or more puffs.
7. The system of any of aspects 1-5, wherein the at least one data processor is further caused to perform operations comprising:
   determining that the first user is similar to a second user; and
   determining, based at least on the first usage data, a second recommendation for a second user interacting with a third vaporizer device.
8. The system of aspect 7, wherein the first user and the second user are determined to be similar based at least on one or more attributes associated with each of the first user and the second user, and wherein the one or more attributes include demographics, preferences, and/or cessation goals.
9. The system of aspect 8, wherein the first user and the second user are determined to be similar by at least applying a clustering algorithm configured to identify, based on the one or more attributes associated with each of the first user and the second user, one or more groups of similar users.
10. The system of any of aspects 8-9, wherein the second recommendation includes a flavor of a vaporizable material in a cartridge inserted into the first vaporizer device, a strength of the vaporizable material, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs.
11. The system of any of aspects 1-10, wherein the first usage data includes a first type of data having a first sampling rate and a second type of data having a second sampling rate.
12. The system of aspect 11, wherein the at least one data processor is further caused to perform operations comprising:
   performing sample summarization to generate, based on a first plurality of data samples comprising the first type of data and/or a second plurality of data samples comprising the second type of data, one or more data samples having a third sampling rate that is lower than the first sampling rate and the second sampling rate; and
   storing, in a log, the one or more data samples having the third sampling rate.
13. The system of aspect 12, wherein the third sampling rate is determined based at least on whether the one or more data samples comprises behavioral data or diagnostic data.
14. The system of any of aspects 12-13, wherein the third sampling rate is determined based at least on the first user having a goal to transition from combustible cigarettes to the vaporizer device, reduce a use of combustible cigarettes, and/or reduce a use of the vaporizer device.
15. The system of any of aspects 11-14, wherein the at least one data processor is further caused to perform operations comprising:
   performing bulk summarization to generate, based on a first plurality of data samples comprising the first type of data, a metric, the metric being generated based on the first plurality of data samples collected by a single thread, the generating of the metric further excluding a second plurality of data samples collected by another thread.
16. The system of aspect 15, wherein the metric comprises a temperature rise time, an observed temperature, a deviation from a temperature set-point, a pressure differential, a maximum differential pressure, a minimum differential pressure, and/or an average differential pressure.
17. The system of any of aspects 1-16, wherein the at least one data processor is further caused to perform operations comprising:
   generating a user interface configured to display, at a user device associated with the first user, the first recommendation.
18. The system of any of aspects 1-17, wherein the first recommendation is further generated based on a usage pattern for combustible cigarettes, and wherein the usage pattern includes a brand of combustible cigarettes, a type of the combustible cigarettes, and/or a quantity of the combustible cigarettes consumed by the first user.
19. The system of aspect 18, wherein the first recommendation includes a strength of vaporizer material in a cartridge inserted into the first vaporizer device, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs that deliver, to the first user, a same quantity of the active ingredient as the combustible cigarettes consumed by the first user.
20. The system of any of aspects 1-19, wherein the first usage data is received from a user device coupled with the first vaporizer device.
21. A computer-implemented method, comprising:
   receiving a first usage data associated with a first user interacting a first vaporizer device; and
   determining, based at least on the first usage data, a first recommendation for the first user interacting with the first vaporizer device and/or a second vaporizer device.
22. The method of aspect 21, wherein the first usage data includes a flavor of a vaporizable material in a cartridge inserted into the first vaporizer device, a strength of the vaporizable material, a quantity of the vaporizable material remaining in the cartridge, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs.
23. The method of aspect 22, wherein the first usage data further includes a user input indicating a smoothness of a vapor drawn by the one or more puffs.
24. The method of aspect 23, wherein the user input includes a motion and/or a sound associated with a user coughing, tapping the vaporizer device, shaking the vaporizer device, and/or moving the vaporizer device in a specific pattern.
25. The method of any of aspects 22-24, wherein the first recommendation includes the flavor and/or the strength of the vaporizable material based at least on the flavor and/or the strength of the vaporizable material being associated with a lower frequency of puffs, a lower total dosage of the active ingredient delivered, and/or a longer length of time between two or more successive puffs than another flavor and/or strength of the vaporizable material.
26. The method of any of aspects 22-25, wherein the first recommendation includes the timing of the one or more puffs based at least on the timing of the one or more puffs being associated with a lower frequency of puffs, a lower total dosage of the active ingredient delivered, and/or a longer length of time between two or more successive puffs than another timing of the one or more puffs.
27. The method of any of aspects 21-26, further comprising:
   determining, based at least on one or more attributes associated with each of the first user and a second user, that the first user is similar to the second user, the one or more attributes including demographics, preferences, and/or cessation goals; and
   determining, based at least on the first usage data, a second recommendation for a second user interacting with a third vaporizer device.
28. The method of aspect 27, wherein the first user and the second user are determined to be similar by at least applying a clustering algorithm configured to identify, based on the one or more attributes associated with each of the first user and the second user, one or more groups of similar users.
29. The method of any of aspects 21-28, wherein the first recommendation is further generated based on a usage pattern for combustible cigarettes, wherein the usage pattern includes a brand of combustible cigarettes, a type of the combustible cigarettes, and/or a quantity of the combustible cigarettes consumed by the first user, and wherein the first recommendation includes a strength of vaporizer material in a cartridge inserted into the first vaporizer device, a timing of one or more puffs on the first vaporizer device, a strength of the one or more puffs, a duration of the one or more puffs, a frequency of the one or more puffs, a total dosage of an active ingredient delivered with the one or more puffs, and/or a length of time between two or more successive puffs that deliver, to the first user, a same quantity of the active ingredient as the combustible cigarettes consumed by the first user.
30. A non-transitory computer readable medium storing instructions, which when executed by at least one data processor, result in operations comprising:
   receiving a usage data for associated with a first user interacting a first vaporizer device; and
   determining, based at least on the usage data, a first recommendation for the first user interacting with the first vaporizer device and/or a second vaporizer device, and/or a second recommendation for a second user interacting with a third vaporizer device.
31. A system, comprising:
   a first vaporizer device;
   a user device communicatively coupled with the first vaporizer device; and
   a remote server, the remote server comprising at least one data processor, and at least one memory storing instructions, which when executed by the at least one data processor, cause the at least one data processor to perform operations comprising:
      receiving, from the user device, a usage data for associated with a first user interacting the first vaporizer device; and
      determining, based at least on the usage data, a first recommendation for the first user interacting with the first vaporizer device and/or a second vaporizer device, and/or a second recommendation for a second user interacting with a third vaporizer device.
32. An apparatus, comprising:
   means for receiving, from the user device, a usage data for associated with a first user interacting the first vaporizer device; and
   means for determining, based at least on the usage data, a first recommendation for the first user interacting with the first vaporizer device and/or a second vaporizer device, and/or a second recommendation for a second user interacting with a third vaporizer device.
33. A system, comprising:
   at least one data processor; and
   at least one memory storing instructions, which when executed by the at least one data processor, cause the at least one data processor to perform operations comprising:
      receiving a first data including one or more puff characteristics, the one or more puff characteristics determined base at least on a first puff on a vaporizer device; and
      determining, based at least on the first data, an adjustment to the one or more puff characteristics.
34. The system of aspect 33, wherein the one or more puff characteristics include a strength of a puff, a duration of a puff, and/or a quantity of time between two or more successive puffs.
35. The system of any of aspects 33-34, wherein the one or more puff characteristics comprises a mean, a median, a maximum, a minimum, a mode, and/or a range of one or more characteristics associated with the first puff and a second puff on the vaporizer device.
36. The system of any of aspects 33-35, wherein the adjustment is further determined based on a difference between the one or more puff characteristics and one or more optimal puff characteristics.
37. The system of aspect 36, wherein the at least one data processor is further caused to perform operations comprising:
   output, to a user, an indication of the difference between the one or more puff characteristics and the one or more optimal puff characteristics.
38. The system of aspect 37, wherein the indication is output to the user by at least generating a graphic user interface configured to display the indication.
39. The system of any of aspects 37-38, wherein the indication is output to the user using one or more light emitting diodes (LEDs), sounds, and/or haptic feedback.
40. The system of any of claims 37-39, wherein the one or more optimal puff characteristics are determined based at least on a flavor, a concentration, and/or a quantity of vaporizable material remaining in a cartridge inserted in the vaporizer device.
41. The system of aspect 40, wherein the at least one data processor is further caused to perform operations comprising:
   determining the flavor, the concentration, and/or the quantity of vaporizable material remaining in the cartridge by at least reading an identifier associated with the cartridge, the identifier being encoded in a pattern and/or a circuit.
42. The system of any of aspects 33-41, wherein the at least one data processor is further caused to perform operations comprising:
   receiving a second data including a user feedback associated with at least the first puff; and
   determining, further based on the second data, the adjustment to the one or more puff characteristics.
43. The system of aspect 42, wherein the user feedback includes a user input indicating a smoothness of a vapor drawn by the first puff.
44. The system of aspect 43, wherein the at least one data processor is further caused to perform operations comprising:
   generating a user interface configured to receive, from a user, the user input indicating the smoothness of the vapor drawn by the first puff.
45. The system of any of aspects 42-44, wherein the user input includes a motion associated with a user coughing, tapping the vaporizer device, shaking the vaporizer device, and/or moving the vaporizer device in a specific pattern.
46. The system of any of aspects 42-45, wherein the user input includes a sound associated with a user coughing, tapping the vaporizer device, shaking the vaporizer device, and/or moving the vaporizer device in a specific pattern.
47. The system of any of aspects 33-46, wherein the at least one data processor is further caused to perform operations comprising:
   generating a user interface configured to display, to a user, the adjustment to the one or more puff characteristics.
48. The system of any of aspects 33-47, wherein the first data is received from the vaporizer device via a wireless communication link.
49. A computer-implemented method, comprising:
   receiving a first data including one or more puff characteristics, the one or more puff characteristics determined base at least on a first puff on a vaporizer device; and
   determining, based at least on the first data, an adjustment to the one or more puff characteristics.
50. The method of aspect 49, wherein the one or more puff characteristics include a strength of a puff, a duration of a puff, and/or a quantity of time between two or more successive puffs.
51. The method of any of aspects 49-50, wherein the one or more puff characteristics comprises a mean, a median, a maximum, a minimum, a mode, and/or a range of one or more characteristics associated with the first puff and a second puff on the vaporizer device.
52. The method of any of aspects 49-51, wherein the adjustment is further determined based on a difference between the one or more puff characteristics and one or more optimal puff characteristics.
53. The method of aspect 52, further comprising:
   outputting, to a user, an indication of the difference between the one or more puff characteristics and the one or more optimal puff characteristics.
54. The method of aspect 53, wherein the indication is output to the user by at least generating a graphic user interface configured to display the indication.
55. The method of any of aspects 53-54, wherein the indication is output to the user using one or more light emitting diodes (LEDs), sounds, and/or haptic feedback.
56. The method of any of aspects 52-55, wherein the one or more optimal puff characteristics are determined based at least on a flavor, a concentration, and/or a quantity of vaporizable material remaining in a cartridge inserted in the vaporizer device.
57. The method of aspect 56, further comprising:
   determining the flavor, the concentration, and/or the quantity of vaporizable material remaining in the cartridge by at least reading an identifier associated with the cartridge, the identifier being encoded in a pattern and/or a circuit.
58. The method of any of aspects 49-57, further comprising:
   receiving a second data including a user feedback associated with at least the first puff; and
   determining, further based on the second data, the adjustment to the one or more puff characteristics.
59. The method of aspect 58, wherein the user feedback includes a user input indicating a smoothness of a vapor drawn by the first puff.
60. The method of aspect 59, wherein the at least one data processor is further caused to perform operations comprising:
   generating a user interface configured to receive, from a user, the user input indicating the smoothness of the vapor drawn by the first puff.
61. The method of any of aspects 58-60, wherein the user input includes a motion associated with a user coughing, tapping the vaporizer device, shaking the vaporizer device, and/or moving the vaporizer device in a specific pattern.
62. The method of any of aspects 58-61, wherein the user input includes a sound associated with a user coughing, tapping the vaporizer device, shaking the vaporizer device, and/or moving the vaporizer device in a specific pattern.
63. The method of any of aspects 49-62, wherein the at least one data processor is further caused to perform operations comprising:
   generating a user interface configured to display, to a user, the adjustment to the one or more puff characteristics.
64. The method of any of aspects 49-63, wherein the first data is received from the vaporizer device via a wireless communication link.
65. A non-transitory computer readable medium storing instructions, which when executed by at least one data processor, result in operations comprising:
   receiving a data including one or more puff characteristics, the one or more puff characteristics determined base at least one or more puffs on the vaporizer device; and
   determining, based at least on the data, an adjustment to the one or more puff characteristics.
66. A system, comprising:
   a vaporizer device;
   a user device communicatively coupled with the vaporizer device; and
   a remote server, the remote server comprising at least one data processor, and at least one memory storing instructions, which when executed by the at least one data processor, cause the at least one data processor to perform operations comprising:
      receiving a data including one or more puff characteristics, the one or more puff characteristics determined base at least one or more puffs on the vaporizer device; and
      determining, based at least on the data, an adjustment to the one or more puff characteristics.
67. An apparatus, comprising:
   means for receiving a data including one or more puff characteristics, the one or more puff characteristics determined base at least one or more puffs on the vaporizer device; and
   means for determining, based at least on the data, an adjustment to the one or more puff characteristics.
68. A system, comprising:
   at least one data processor; and
   at least one memory storing instructions, which when executed by the at least one data processor, cause the at least one data processor to perform operations comprising:
      capturing a first image of an identification document of a user;
      capturing a second image of the user; and
      unlocking, in response to a match between the first image and the second image, a vaporizer device, the unlocking of the vaporizer device includes enabling one or more functionalities of the vaporizer device that are disabled while the vaporizer device is in a locked state.
69. The system of aspect 68, wherein the at least one data processor is further caused to perform operations comprising:
   detecting, at the vaporizer device, an insertion of a cartridge; and
   in response to the insertion of the cartridge, generating a user interface configured to display, to the first user, a prompt to capture the first image and/or the second image.
70. The system of aspect 69, wherein the user interface is further generated in response to determining that the cartridge contains a controlled substance.
71. The system of aspect 70, wherein the cartridge is determined to contain the controlled substance by at least reading an identifier associated with the cartridge, and wherein the identifier is encoded in a pattern and/or a circuit.
72. The system of any of aspects 68-71, wherein the at least one data processor is further caused to perform operations comprising:
   determining whether the vaporizer device is associated with another user; and
   unlocking the vaporizer device further in response the vaporizer device not being associated with another user.
73. The system of aspect 72, wherein the at least one data processor is further caused to perform operations comprising:
   in response to the vaporizer device not being associated with another user, linking the vaporizer device to the user by at least creating an association between a device identifier of the vaporizer device and a user identifier of the user.
74. The system of aspect 73, wherein the at least one data processor is further caused to perform operations comprising:
   receiving, from the vaporizer device, data that is anonymized by at least being associated with the device identifier of the vaporizer device but not the user identifier of the user.
75. The system of any of aspects 68-74, wherein the at least one data processor is further caused to perform operations comprising:
   determining whether the user is associated with a threshold quantity of activated vaporizer devices; and
   unlocking the vaporizer device further in response to the user not being associated with the threshold quantity of activated vaporizer devices.
76. The system of any of aspects 68-75, wherein the first image and the second image are received from a user device coupled with the vaporizer device, and wherein the unlocking of the vaporizer device includes sending, to the user device, a private key for unlocking the vaporizer device.
77. The system of any of aspects 68-76, wherein the one or more functionalities of the vaporizer device include a vaporization of a vaporizable material in a cartridge inserted in the vaporizer device.
78. The system of any of aspects 68-77, wherein the unlocking of the vaporizer device further prevents the vaporizer device from entering a locked state when the vaporizer device and/or a user device communicatively with the vaporizer device are determined to be in one or more specified zones.
79. The system of aspect 78, wherein the one or more specified zones are defined by a range of a wireless beacon and/or a geo-fence.
80. The system of any of aspects 68-79, wherein the at least one data processor is further caused to perform operations comprising:
   determining whether an age indicated by the identification document of the user exceeds a threshold value; and
   unlocking the vaporizer device further in response to the age indicated by the identification document of the user exceeding the threshold value.
81. The system of aspect 80, wherein the threshold value is determined based at least on a location of the vaporizer device and/or a user device communicatively coupled with the vaporizer device.
82. The system of any of aspects 68-81, wherein the matching is performed at a remote server, and wherein the unlocking is triggered in response to receiving, from the remote server, an indication of the match between the first image and the second image.
83. A computer-implemented method, comprising:
   capturing a first image of an identification document of a user;
   capturing a second image of the user; and
   unlocking, in response to a match between the first image and the second image, a vaporizer device, the unlocking of the vaporizer device includes enabling one or more functionalities of the vaporizer device that are disabled while the vaporizer device is in a locked state.
84. The method of aspect 83, further comprising:
   detecting, at the vaporizer device, an insertion of a cartridge; and
   in response to the insertion of the cartridge, generating a user interface configured to display, to the first user, a prompt to capture the first image and/or the second image.
85. The method of aspect 84, wherein the user interface is further generated in response to determining that the cartridge contains a controlled substance.
86. The method of aspect 85, wherein the cartridge is determined to contain the controlled substance by at least reading an identifier associated with the cartridge, and wherein the identifier is encoded in a pattern and/or a circuit.
87. The method of any of aspects 83-86, further comprising:
   determining whether the vaporizer device is associated with another user; and
   unlocking the vaporizer device further in response the vaporizer device not being associated with another user.
88. The method of aspect 87, further comprising:
   in response to the vaporizer device not being associated with another user, linking the vaporizer device to the user by at least creating an association between a device identifier of the vaporizer device and a user identifier of the user.
89. The method of aspect 88, further comprising:
   receiving, from the vaporizer device, data that is anonymized by at least being associated with the device identifier of the vaporizer device but not the user identifier of the user.
90. The method of any of aspects 83-89, further comprising:
   determining whether the user is associated with a threshold quantity of activated vaporizer devices; and
   unlocking the vaporizer device further in response to the user not being associated with the threshold quantity of activated vaporizer devices.
91. The method of any of aspects 83-90, wherein the first image and the second image are received from a user device coupled with the vaporizer device, and wherein the unlocking of the vaporizer device includes sending, to the user device a private key for unlocking the vaporizer device.
92. The method of any of aspects 83-91, wherein the one or more functionalities of the vaporizer device include a vaporization of a vaporizable material in a cartridge inserted in the vaporizer device.
93. The method of any of aspects 83-92, wherein the unlocking of the vaporizer device further prevents the vaporizer device from entering a locked state when the vaporizer device and/or a user device communicatively with the vaporizer device are in one or more specified zones.
94. The method of aspect 93, wherein the one or more specified zones are defined by a range of a wireless beacon and/or a geo-fence.
95. The method of any of aspects 83-94, wherein the at least one data processor is further caused to perform operations comprising:
   determining whether an age indicated by the identification document of the user exceeds a threshold value; and
   unlocking the vaporizer device further in response to the age indicated by the identification document of the user exceeding the threshold value.
96. The method of aspect 95, wherein the threshold value is determined based at least on a location of the vaporizer device and/or a user device communicatively coupled with the vaporizer device.
97. The method of any of aspects 83-96, wherein the matching is performed at a remote server, and wherein the unlocking is triggered in response to receiving, from the remote server, an indication of the match between the first image and the second image.
98. A non-transitory computer-readable medium storing instructions, which when executed by at least one data processor, result in operations comprising:
   capturing a first image of an identification document of a user;
   capturing a second image of the user; and
   unlocking, in response to a match between the first image and the second image, a vaporizer device, the unlocking of the vaporizer device includes enabling one or more functionalities of the vaporizer device that are disabled while the vaporizer device is in a locked state.
99. A system, comprising:
   a vaporizer device;
   a remote server; and
   a user device communicatively coupled with the vaporizer device, the user device comprising at least one data processor, and at least one memory storing instructions, which when executed by the at least one data processor, cause the at least one data processor to perform operations comprising:
      capturing a first image of an identification document of a user;
      capturing a second image of the user; and
      in response to receiving, from the remote server, an indication of a match between the first image and the second image, unlocking the vaporizer device, the unlocking of the vaporizer device includes enabling one or more functionalities of the vaporizer device that are disabled while the vaporizer device is in a locked state.
100. An apparatus, comprising:
   means for capturing a first image of an identification document of a user;
   means for capturing a second image of the user; and
   means for unlocking, in response to a match between the first image and the second image, a vaporizer device, the unlocking of the vaporizer device includes enabling one or more functionalities of the vaporizer device that are disabled while the vaporizer device is in a locked state.
101. A system, comprising:
   at least one data processor; and
   at least one memory storing instructions, which when executed by the at least one data processor, cause the at least one data processor to perform operations comprising:
      determining whether a vaporizer device is within a communication range; and
      in response to determining that the vaporizer device is within the communication range, triggering, at the vaporizer device, one or more outputs.
102. The system of aspect 101, wherein the vaporizer device is determined to be within the communication range based at least on one or more beacon messages advertised by the vaporizer device.
103. The system of any of aspects 101-102, wherein the one or more outputs include an audio indicator, a visual indicator, and/or a haptic indicator.
104. The system of any of aspects 101-103, wherein the at least one data processor is further caused to perform operations comprising:
   in response to determining that the vaporizer device is outside of the communication range, generating a user interface displaying a last location where the vaporizer device is determined to be within the communication range.
105. The system of aspect 104, wherein the user interface displays a map including an indication of the last location where the vaporizer device is determined to be within the communication range.
106. A computer-implemented method, comprising:
   determining whether a vaporizer device is within a communication range; and
   in response to determining that the vaporizer device is within the communication range, triggering, at the vaporizer device, one or more outputs.
107. The method of aspect 106, wherein the vaporizer device is determined to be within the communication range based at least on one or more beacon messages advertised by the vaporizer device.
108. The method of any of aspects 106-107, wherein the one or more outputs include an audio indicator, a visual indicator, and/or a haptic indicator.
109. The method of any of aspects 106-108, wherein the at least one data processor is further caused to perform operations comprising:
   in response to determining that the vaporizer device is outside of the communication range, generating a user interface displaying a last location where the vaporizer device is determined to be within the communication range.
110. The method of aspect 109, wherein the user interface displays a map including an indication of the last location where the vaporizer device is determined to be within the communication range.
111. A non-transitory computer readable medium storing instructions, which when executed by at least one data processor, result in operations comprising:
   determining whether a vaporizer device is within a communication range;
   in response to determining that the vaporizer device is within the communication range, triggering, at the vaporizer device, one or more outputs.
112. A system, comprising:
   a vaporizer device; and
   a user device communicatively coupled with the vaporizer device, the user device comprising at least one data processor, and at least one memory storing instructions, which when executed by the at least one data processor, cause the at least one data processor to perform operations comprising:
      determining whether the vaporizer device is within a communication range of the user device;
      in response to determining that the vaporizer device is within the communication range of the user device, triggering, at the vaporizer device, one or more outputs.
113. An apparatus, comprising:
   means for determining whether a vaporizer device is within a communication range;
   means for responding to determining that the vaporizer device is within the communication range by at least triggering, at the vaporizer device, one or more outputs.
114. An apparatus, comprising:
   a receptacle configured to receive a vaporizer device;
   a first coupling configured to secure the vaporizer device inside the receptacle to a user device; and
   a second coupling configured to provide a data connection between the vaporizer device inside the receptacle and the user device.
115. The apparatus of aspect 114, wherein the first coupling secures the vaporizer device inside the receptacle to a perimeter, a front surface, and/or a back surface of the user device.
116. The apparatus of any of aspects 114-115, wherein the first coupling comprises a friction-fit coupling, a snap-fit coupling, a magnetic coupling, and/or an adhesive coupling.
117. The apparatus of any of aspects 114-116, wherein the second coupling provides access to a serial port and/or a parallel port on the user device.
118. The apparatus of any of aspects 114-117, wherein the second coupling comprises an adaptor configured to allow a first type of port on the vaporizer device to couple with a second type of port on the user device.
119. The apparatus of any of aspects 114-118, wherein the second coupling comprises a pin connector and/or a universal serial bus (USB) port.
120. The apparatus of any of aspects 114-119, wherein the receptacle includes one or more retention mechanisms configured to retain the vaporizer device inside the receptacle.
121. The apparatus of aspect 120, wherein the one or more retention mechanisms include snap-fit, friction-fit, a magnet, and/or an adhesive.
122. An apparatus, comprising:
   means for receiving a vaporizer device;
   means for securing the vaporizer device inside the receiving means to a user device; and
   means for providing a data connection between the vaporizer device inside the receiving means and the user device.

## Claims

1. A computer-implemented method, comprising:
capturing a first image of an identification document of a user;
capturing a second image of the user; and
unlocking, in response to a match between the first image and the second image, a vaporizer device (100), the unlocking of the vaporizer device (100) includes enabling one or more functionalities of the vaporizer device (100) that are disabled while the vaporizer device (100) is in a locked state.

2. The method of claim 1, further comprising:
detecting, at the vaporizer device (100), an insertion of a cartridge (52); and
in response to the insertion of the cartridge (52), generating a user interface (1030; 1032; 1036) configured to display, to the user, a prompt to capture the first image and/or the second image.

3. The method of claim 2, wherein the user interface (1030; 1032; 1036) is further generated in response to determining that the cartridge (52) contains a controlled substance.

4. The method of claim 3, wherein the cartridge (52) is determined to contain the controlled substance by at least reading an identifier (28) associated with the cartridge (52), and wherein the identifier (28) is encoded in a pattern and/or a circuit.

5. The method of any of claims 1-4, further comprising:
determining whether the vaporizer device (100) is associated with another user; and
unlocking the vaporizer device (100) further in response the vaporizer device (100) not being associated with another user.

6. The method of claim 5, further comprising:
in response to the vaporizer device (100) not being associated with another user, linking the vaporizer device (100) to the user by at least creating an association between a device identifier (28) of the vaporizer device (100) and a user identifier (28) of the user.

7. The method of claim 6, further comprising:
receiving, from the vaporizer device (100), data that is anonymized by at least being associated with the device identifier (28) of the vaporizer device (100) but not the user identifier (28) of the user.

8. The method of any of claims 1-7, further comprising:
determining whether the user is associated with a threshold quantity of activated vaporizer devices (100); and
unlocking the vaporizer device (100) further in response to the user not being associated with the threshold quantity of activated vaporizer devices (100).

9. The method of any of claims 1-8, wherein the first image and the second image are received from a user device (305) coupled with the vaporizer device (100), and wherein the unlocking of the vaporizer device (100) includes sending, to the user device (305) a private key for unlocking the vaporizer device (100).

10. The method of any of claims 1-9, wherein the one or more functionalities of the vaporizer device (100) include a vaporization of a vaporizable material in a cartridge (52) inserted in the vaporizer device (100).

11. The method of any of claims 1-10, wherein the unlocking of the vaporizer device (100) further prevents the vaporizer device (100) from entering a locked state when the vaporizer device (100) and/or a user device (305) communicatively with the vaporizer device (100) are in one or more specified zones,
wherein in particular the one or more specified zones are defined by a range of a wireless beacon and/or a geo-fence.

12. The method of any of claims 1-11, wherein the method further comprises:
determining whether an age indicated by the identification document of the user exceeds a threshold value; and
unlocking the vaporizer device (100) further in response to the age indicated by the identification document of the user exceeding the threshold value.

13. The method of claim 12, wherein the threshold value is determined based at least on a location of the vaporizer device (100) and/or a user device (305) communicatively coupled with the vaporizer device (100).

14. The method of any of claims 1-13, wherein the matching is performed at a remote server, and wherein the unlocking is triggered in response to receiving, from the remote server, an indication of the match between the first image and the second image.

15. A system, comprising:
a vaporizer device (100);
a remote server; and
a user device (305) communicatively coupled with the vaporizer device (100),
the user device (305) comprising at least one data processor, and at least one memory storing instructions, which when executed by the at least one data processor, cause the at least one data processor to perform the method of any of claims 1-14.
